# EUROPEAN PATENT SPECIFICATION

(11) **EP 4 502 108 B1**
(45) Date of publication and mention of the grant of the patent: **26.08.2026**
(21) Application number: 24191332.6
(22) Date of filing: 29.07.2024
(51) Int. Cl.: C09K 19/30, C09K 19/34, C09K 19/12, C09K 19/04

(54) **LIQUID CRYSTAL MEDIUM**
FLÜSSIGKRISTALLINES MEDIUM
MILIEU CRISTAL LIQUIDE

(30) Priority: 31.07.2023 WO PCT/CN2023/110272
(43) Date of publication of application: 05.02.2025
(73) Proprietor: Merck Patent GmbH, 64293 Darmstadt (DE)
(72) Inventor: Wang, Jing, SHANGHAI, 201206 (CN); Lee, Hee-Kyu, 17956 Pyeongtaek (KR); Laut, Sven, 64293 Darmstadt (DE)
(74) Representative: Merck Patent Association

(56) References cited:
- EP-A1- 3 763 802
- EP-A1- 4 166 628

## Description

The present invention relates to liquid-crystalline (LC) media having positive dielectric anisotropy and to liquid-crystal displays (LCDs) containing these media, especially to displays addressed by an active matrix and in particular to LC displays of the TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is generated substantially perpendicular to the substrates and the liquid-crystal layer.

Besides these modes, there are also electro-optical modes that utilise an electric field which is substantially parallel to the substrates or the liquid-crystal layer. For example, WO 91/10936 discloses a liquid-crystal display in which the electric signals are generated in such a way that the electric fields have a significant component parallel to the liquid-crystal layer, and which has since then become known as in-plane switching IPS) display. The principles of operating such a display are descried, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications but also for mobile phones and tablet PC's and the like. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the so-called HB-FFS mode. One of the unique features of the HB-FFS mode in contrast to the traditional FFS technology is that it enables higher transmittance which allows operation of the panel with less energy consumption.

Liquid-crystal compositions which are suitable for LCDs and especially for FFS and IPS displays are known in prior art, for example, from EP 4 166 628 A1, EP 3 763 802 A1, JP 07-181 439 (A), EP 0667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the liquid crystals according to the invention can also advantageously be used in displays having other known addressing means.

Both the IPS and the FFS technology have certain advantages over other LCD technologies, such as, for example, the vertical alignment (VA) technology, e.g., a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times. The contrast can be improved by a higher transmittance in the bright state and a better dark state. One solution to improve the dark state is to lower the scattering parameter of the LC mixture by developing mixtures with a higher K_{Avg}., but this normally has the drawback of reduced response time.

It was observed that a high brightness in displays like those of the HB-FFS mode can be achieved by using liquid-crystalline media having positive dielectric anisotropy and also having an increased dielectric constant ε_{⊥} perpendicular to the longitudinal axes of the liquid-crystalline molecules. This can be achieved by adding a limited amount of liquid-crystalline compounds with negative dielectric anisotropy, which have high ε_{⊥} properties, to the liquid-crystalline medium whilst maintaining a positive dielectric anisotropy of the entire medium. However, the addition of compounds with high ε_{⊥} has some drawbacks. For example, this can lead to higher values of the rotational viscosity γ₁, and consequently to higher values of the ratio γ₁ /K₂₂ of the rotational viscosity γ₁ and the elastic constant K₂₂ for twist deformation, which leads to higher response times. Since K₂₂ is approximately proportional to the elastic constant K₁₁ for splay deformation (the value of K₂₂ is typically about half the value of K₁₁), this can easily be determined by measuring γ₁ and K₁₁.

Another disadvantage is that the reliability (VHR) of HB-FFS mixtures can be worse compared to conventional FFS mixtures.

The invention has the object of providing liquid-crystalline media, preferably for FFS and IPS displays, in particular for HB-FFS displays, but also for TN, positive VA or STN displays, and in particular for active-matrix displays like those addressed by TFTs, which do not exhibit the disadvantages indicated above or only do so to a lesser extent, and in particular to provide a medium that enables a display with improved contrast preferably without deterioration of other display parameters.

To solve the problem, the present invention provides a liquid-crystalline medium according to claim 1.

Advantageous embodiments of the invention are subject of the dependent claims or can also be taken from the description.

The present invention relates to a liquid-crystal medium with positive dielectric anisotropy, comprising
a) one or more compounds of formula I 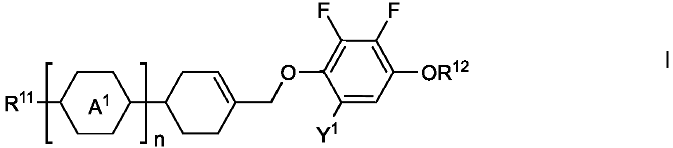 in which
   - R¹¹, R¹²: identically or differently, denote a straight chain alkyl radical having 1 to 12 C atoms or a branched alkyl radical having 3 to 12 C atoms, where one or more CH₂ groups in these radicals may each be replaced, independently of one another, by 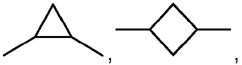 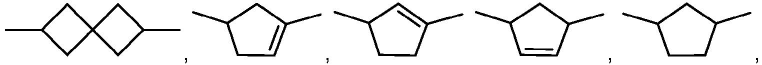 -C≡C-, -CF₂O-, -OCF₂-, -CH=CH-, -O-, -CO-O- or -O-CO- in such a way that O atoms are not linked directly to one another, and in which, in addition, one or more H atoms may be replaced by halogen, preferably alkyl having 1 to 7 C atoms or alkenyl having 2 to 7 C atoms, denotes 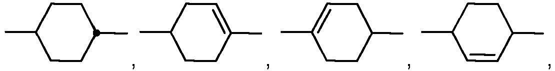 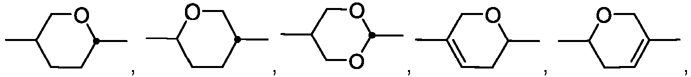 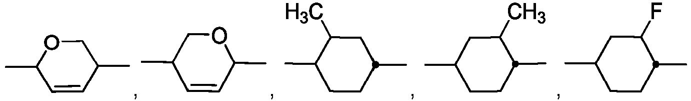 or preferably 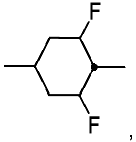 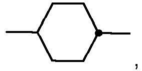
   - Y¹: denotes H or CH₃, preferably H,
   - n: is 0 or 1, preferably 1
   - v: is 1, 2, 3, 4, 5, or 6;
   and
b) one or more compounds selected from the group of compounds of the formulae II and III 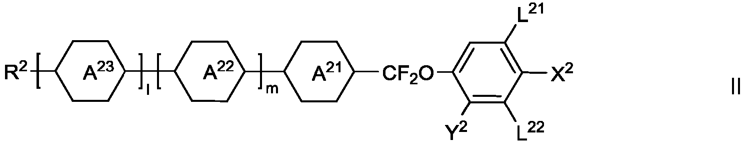 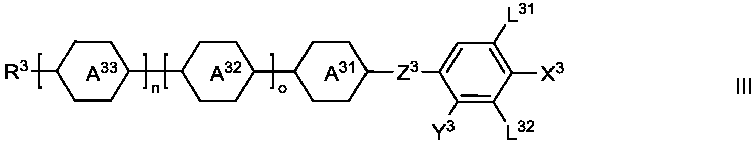 in which
   R² and R³ have the meanings given above for R¹¹, preferably denote alkyl having 1 to 7 C atoms or alkenyl having 2 to 7 C atoms, 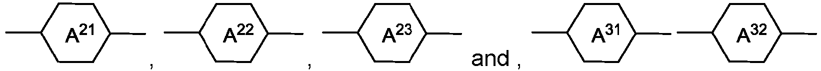 and 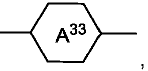 independently of one another denote 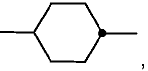 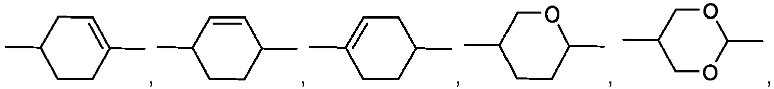 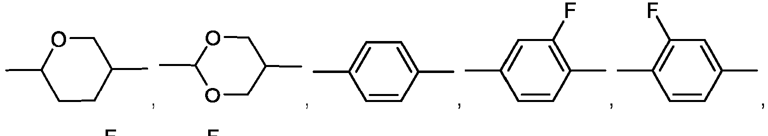 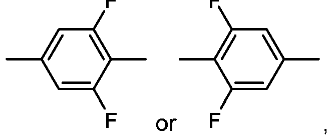
   L²¹, L²², L³¹ and L³² independently of each other, denote H or F,
   Y² and Y³ identically or differently, denote H or CH₃, preferably H,
   X² and X³ independently of each other, denote halogen, halogenated alkyl or halogenated alkoxy with 1 to 3 C-atoms or halogenated alkenyl or halogenated alkenyloxy with 2 or 3 C-atoms, preferably F, Cl, CF₃, OCF₃ or OCHF₂, more preferably For OCF₃,
   Z³ denotes -CH₂CH₂-, -CF₂CF₂-, -COO-, *trans-* -CH=CH-, trans-CF=CF-, -CH₂O- or a single bond, preferably a single bond, and
   l, m, n and o are, independently of each other, 0 or 1.

The combination of compounds of formula I with compounds of formula II and/or III, enables liquid-crystalline media that show a moderately positive dielectric anisotropy and at the same time an increased dielectric constant ε_{⊥} perpendicular to the longitudinal axes of the liquid-crystalline molecules, while maintaining a low rotational viscosity and a low value of the ratios of γ₁ /K₂₂ and γ₁ /K₁₁. This enables liquid-crystal displays, especially of the HB-FFS, FFS and IPS mode, with high brightness and transmission and fast response times. In addition, a higher average elastic constant (K_{Avg}.) can be achieved while keeping all other relevant physical properties, which leads to a lower scattering parameter which improves the dark state of a display and therefore, improves the contrast.

In particular, the low-temperature stability (LTS) of the medium according to the invention is remarkably high. The medium is sufficiently stable at temperatures as low as -40°C which is why the medium is particularly suitable for mobile applications, for example in automotive applications.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS and IPS displays based on dielectrically positive liquid crystals.

The liquid-crystal media according to the present invention are likewise suitable for use in liquid-crystal displays of the FFS, HB-FFS and IPS mode, based on dielectrically positive liquid crystals, and polymer stabilised variants thereof, for large size TV applications.

The invention further relates to the use of a liquid-crystalline medium as described above and below for electro-optical purposes, in particular for the use in liquid-crystal displays, shutter glasses, LC windows, 3D applications, preferably in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays, very preferably in FFS, HB-FFS, IPS, PS-HB-FFS and PS-IPS displays.

The invention further relates to an electro-optical liquid-crystal display containing a liquid-crystalline medium as described above and below, in particular a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display, preferably a FFS, HB-FFS, IPS, PS-HB-FFS or PS-IPS display.

Herein, an alkyl radical and/or an alkoxy radical is taken to mean straight-chain or branched or cyclic alkyl. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

Herein, branched alkyl is preferably isopropyl, s-butyl, isobutyl, isopentyl, 2-methylbutyl, 2-methylhexyl or 2-ethylhexyl.

As used herein, cyclic alkyl is taken to mean straight-chain or branched alkyl or alkenyl having up to 12 C atoms, preferably alkyl having 1 to 7 C atoms, in which a group CH₂ is replaced with a carbocyclic ring having 3 to 5 C atoms, very preferably selected from the group consisting of cyclopropylalkyl, cyclobutylalkyl, cyclopentylalkyl and cyclopentenylalkyl, wherein alkyl is straight chain alkyl having 1 to 5 C atoms.

Herein, oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

Herein, alkenyl, i.e. an alkyl radical in which one CH₂ group has been replaced by -CH=CH- , may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

Herein, an alkyl or alkenyl radical which is at least monosubstituted by halogen, is preferably straight-chain, and halogen is preferably F or CI. In the case of polysubstitution, halogen is preferably F. The resultant radicals also include perfluorinated radicals. In the case of monosubstitution, the fluorine or chlorine substituent may be in any desired position, but is preferably in the ω-position.

Herein, a mono- or polyfluorinated alkyl or alkoxy radical having 1, 2 or 3 C atoms or a mono- or polyfluorinated alkenyl radical having 2 or 3 C atoms is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably F or OCF₃, furthermore CF₃, OCF=CF₂, OCHF₂ or OCH=CF₂.

Preferred compounds of formula I are selected from the following sub-formulae: 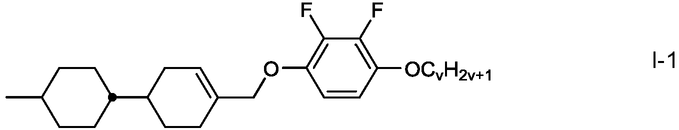 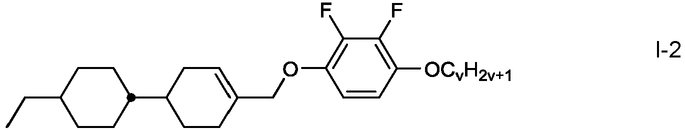 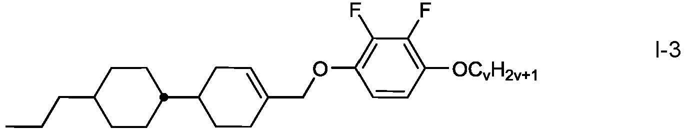 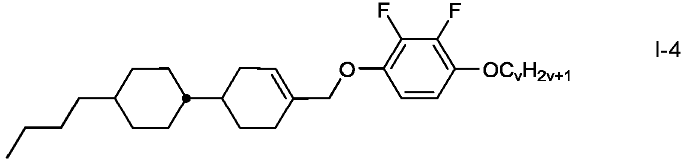 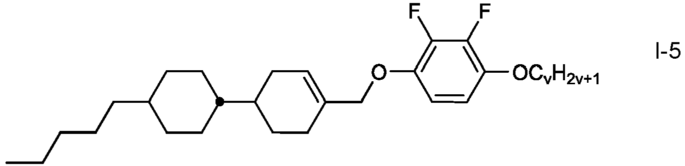 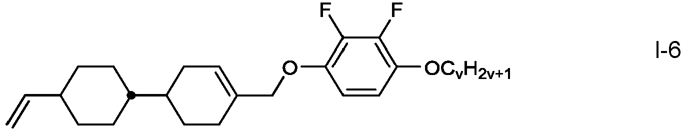 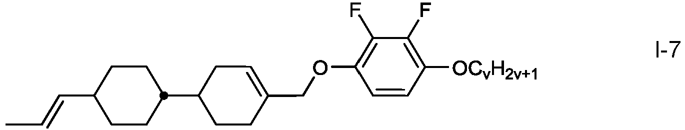 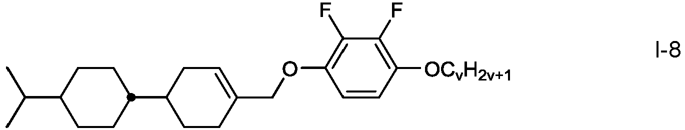 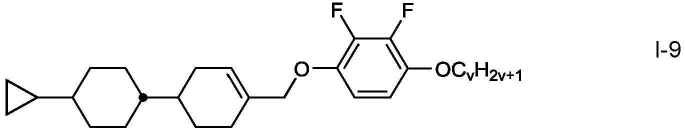 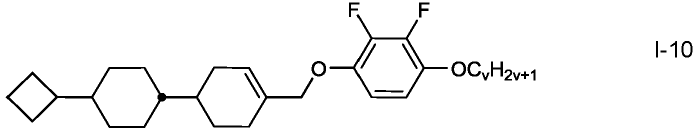 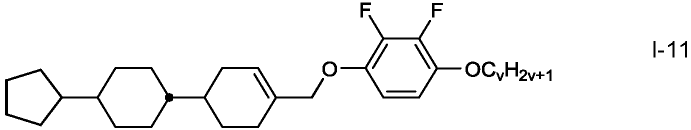 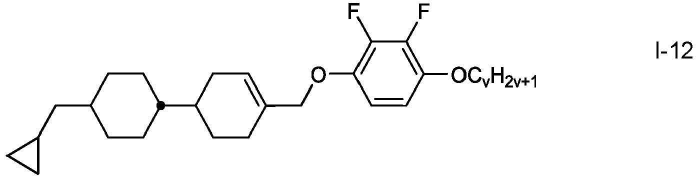 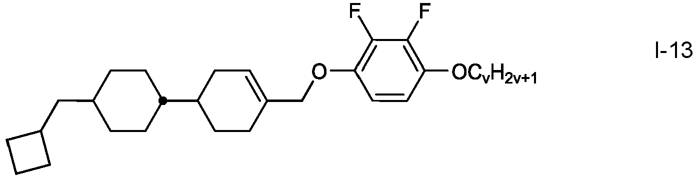 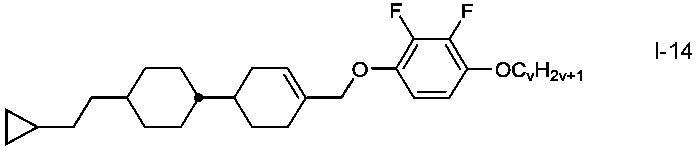 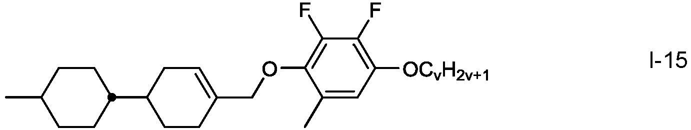 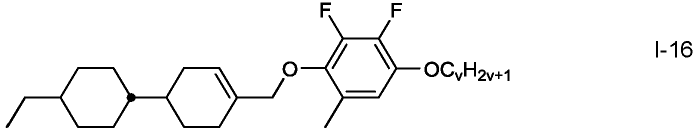 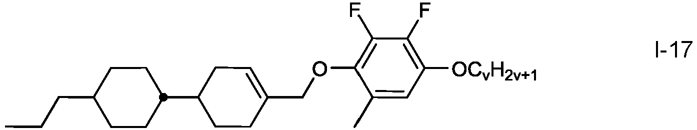 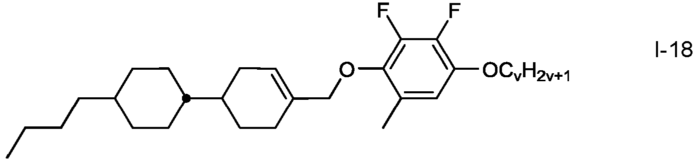 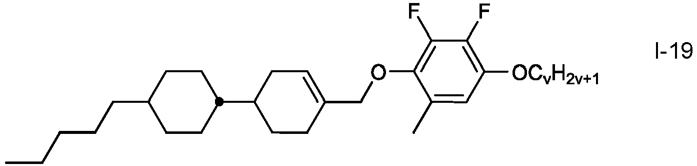 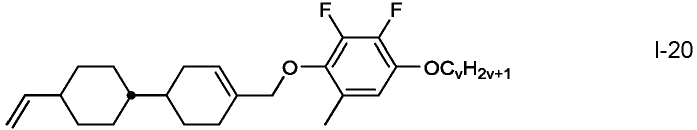 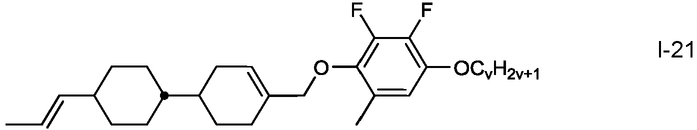 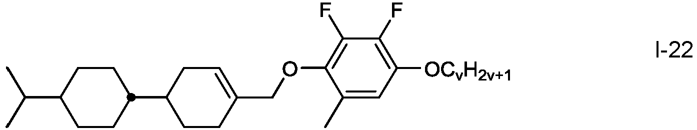 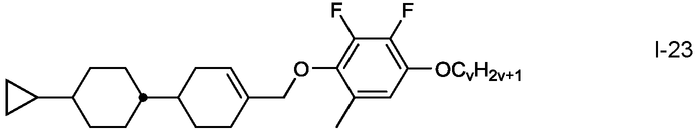 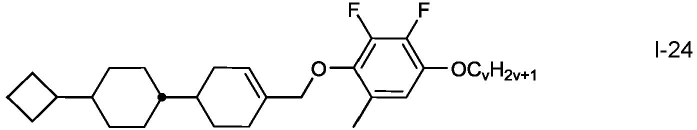 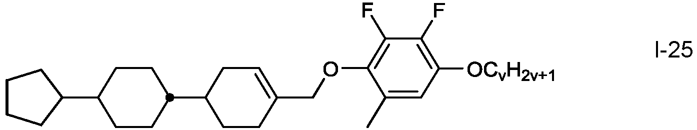 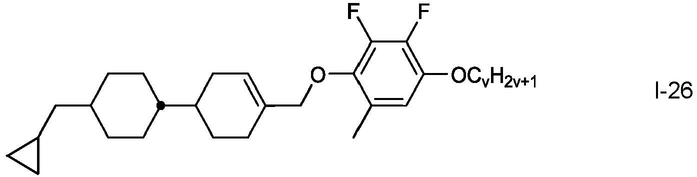 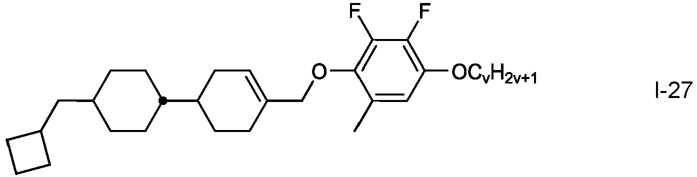 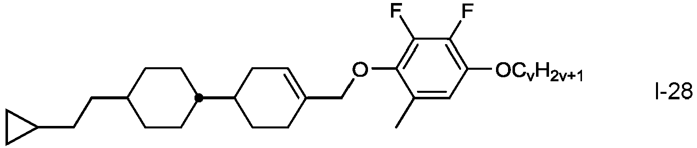 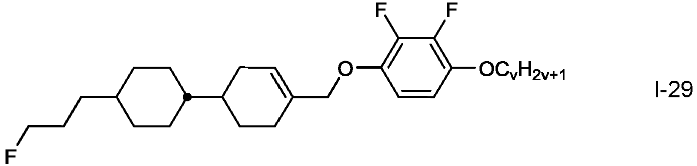 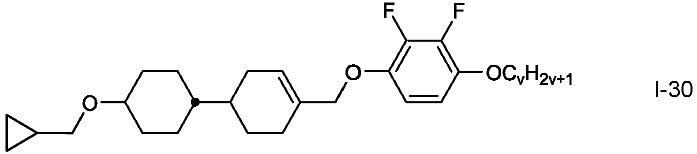 in which v is 1, 2, 3, 4, 5, or 6.

Very preferred compounds of formula I are the compounds I-1 to I-14.

In a preferred embodiment, the medium comprises one or more compounds of formula IA 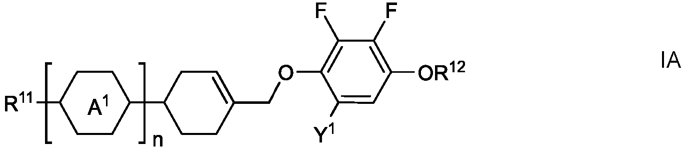 in which
R¹² denotes 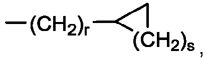 in which r is 0, 1, 2, 3, 4, 5 or 6, and s is 1, 2 or 3, preferably 1, and the other occurring groups and parameters have the meanings given above under formula I.

Preferred compounds of formula IA are the compounds IA-1 to IA-14.

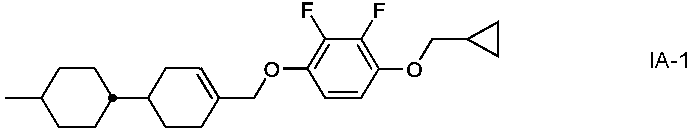

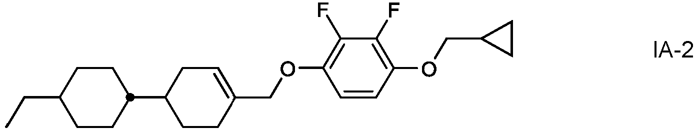

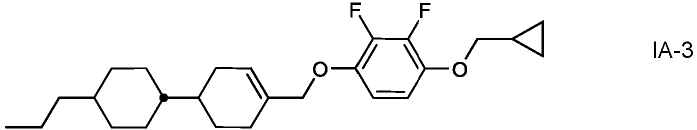

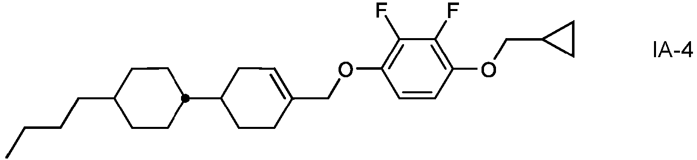

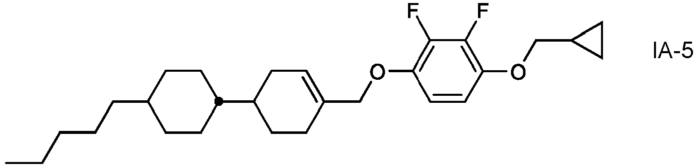

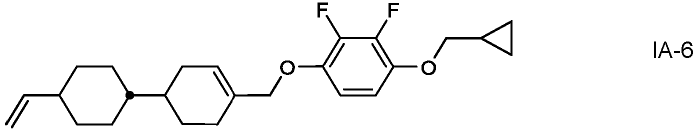

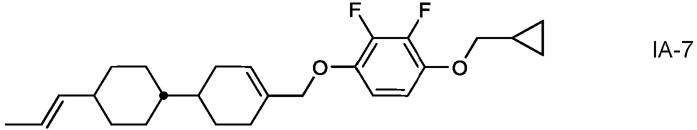

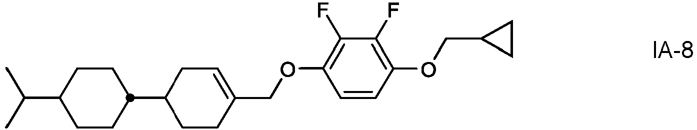

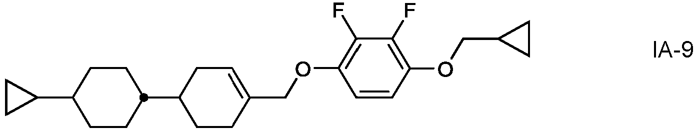

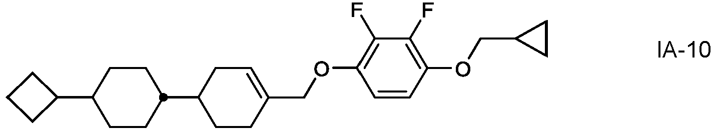

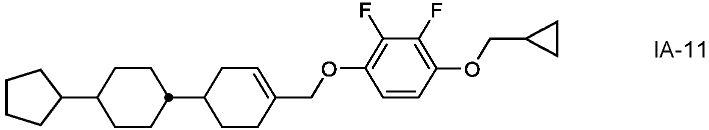

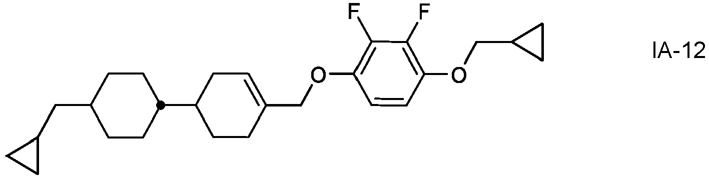

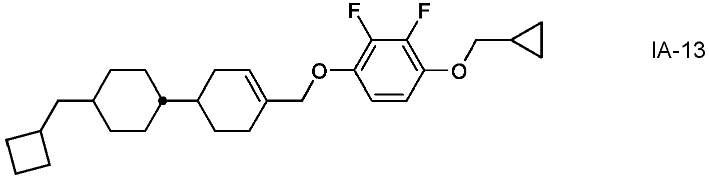

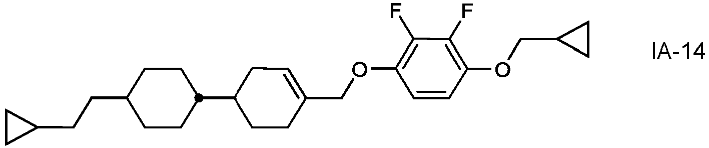

Preferably, the medium comprises one or more compounds of formula II, preferably selected from the group of compounds of formulae II-1 to II-3, very preferably from the group of compounds of the formulae II-1 and II-3 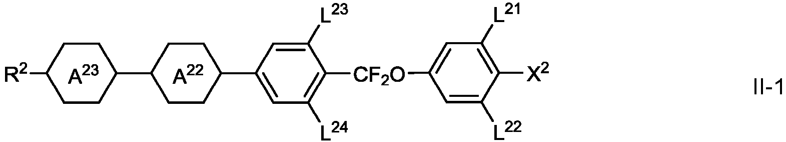 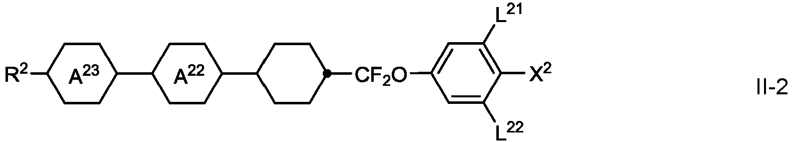 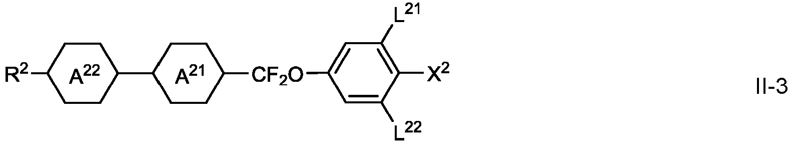 in which the occurring groups have the respective meanings given under formula II above and in formula II-1 the radicals L²³ and L²⁴ denote, independently of each other and of the other parameters, H or F and in formula II-2 preferably 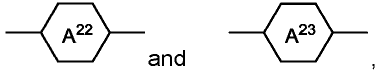 independently of each other, denote

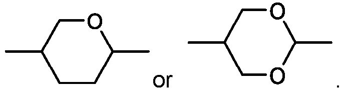

In formulae II-1, II-2 and II-3, L²¹ and L²² or L²³ and L²⁴ are preferably both F.

In another preferred embodiment in formulae II-1 and II-2, all of L²¹, L²², L²³ and L²⁴ denote F.

The compounds of formula II-1 are preferably selected from the group of compounds of the formulae II-1a to II-1h 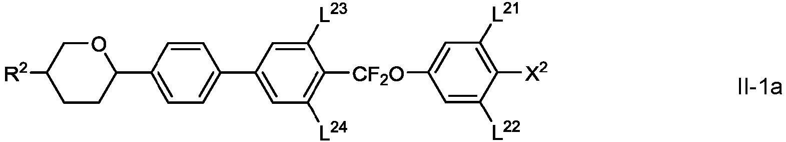 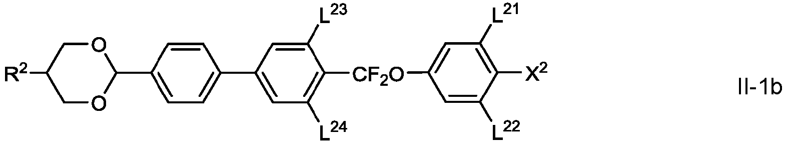 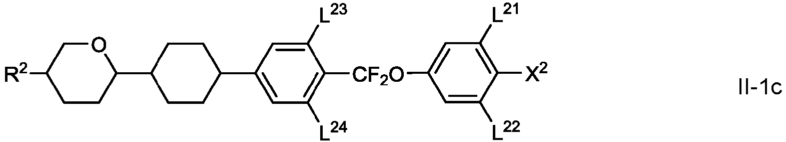 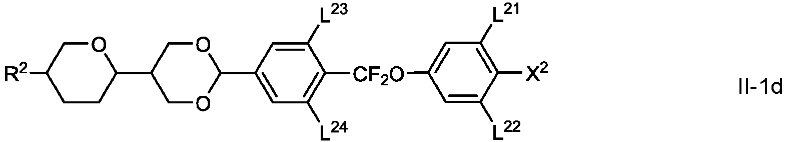 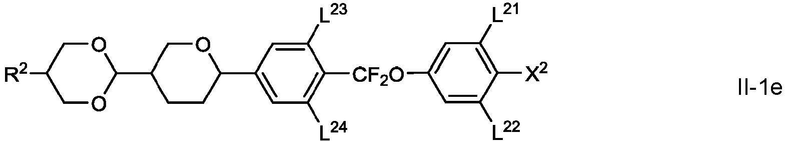 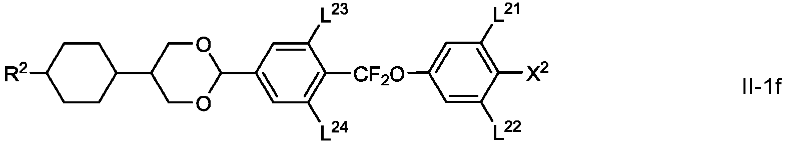 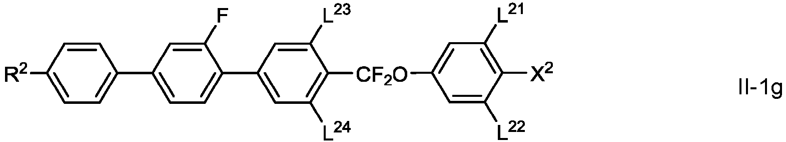 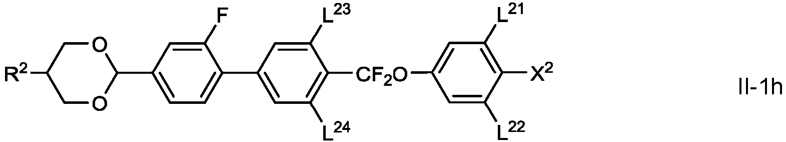 in which the occurring groups have the respective meanings given above.

In a preferred embodiment of the present invention the medium comprises one or more compounds selected from the group of compounds of the formulae II-1a to II-1h wherein L²¹ and L²², and/or L²³ and L²⁴ are both F, respectively.

In another preferred embodiment the medium comprises compounds selected from the group of compounds of formulae II-1a to II-1h, wherein L²¹, L²², L²³ and L²⁴ all are F.

Especially preferred compounds of formula II-1 are 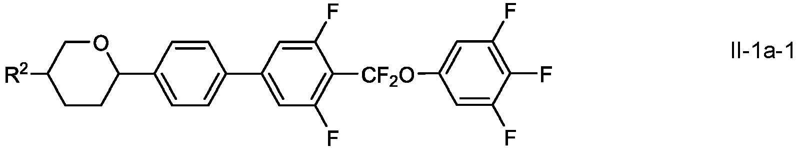 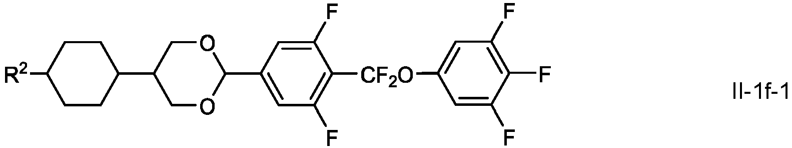 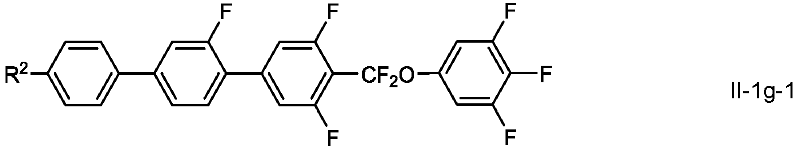 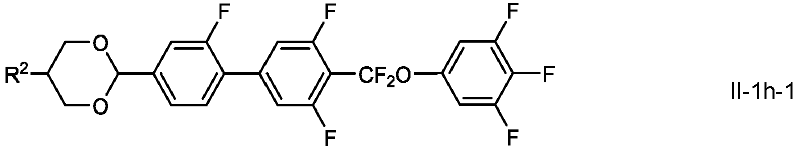 in which R² has the meaning given above.

Preferably the compounds of formula II-2 are selected from the group of compounds of formulae II-2a to II-2c 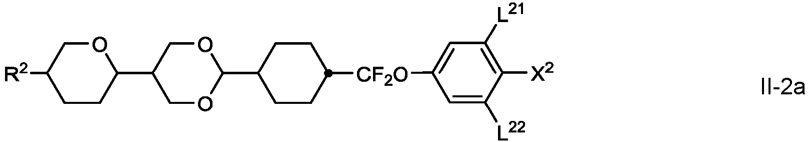 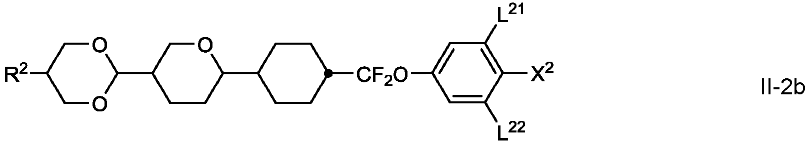 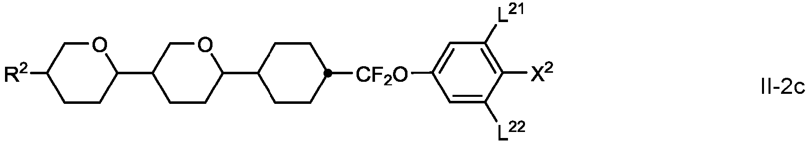 in which the occurring groups have the respective meanings given above and preferably L²¹ and L²² are both F.

Preferably the compounds of formula II-3 are selected from the group of compounds of formulae II-3a to II-3e 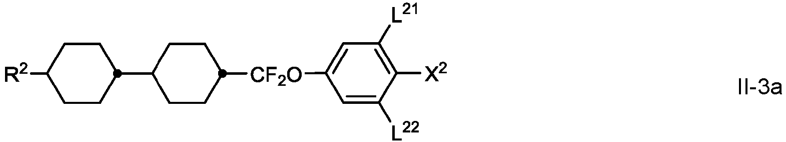 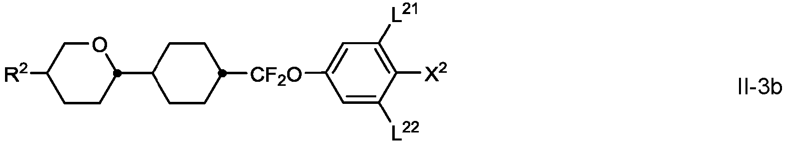 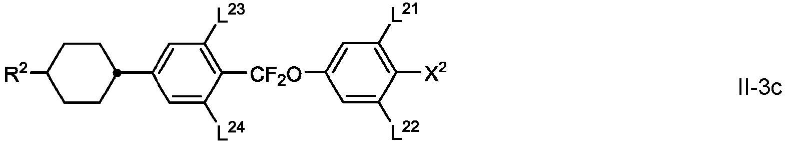 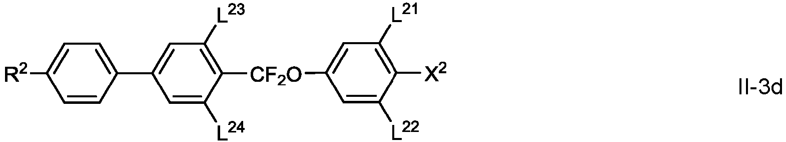 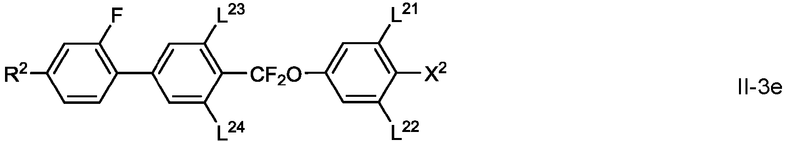
in which the occurring groups have the respective meanings given above and preferably
L²¹ and L²² are both F and L²³ and L²⁴ are both H or
L²¹, L²², L²³ and L²⁴ are all F.

Especially preferred compounds of formula II-3 are 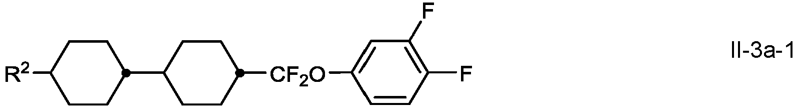 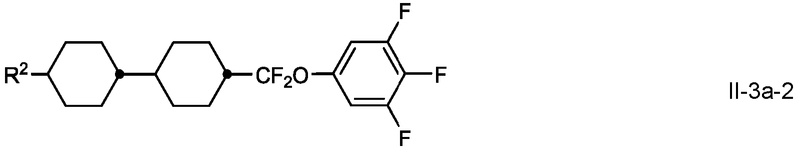 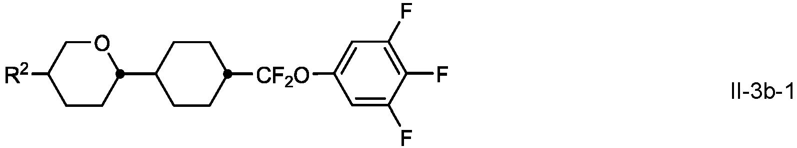 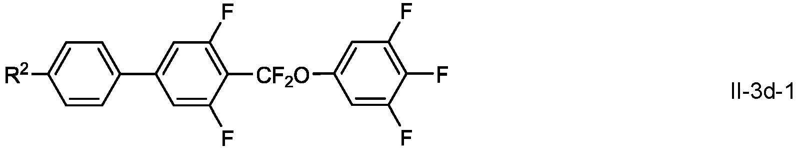 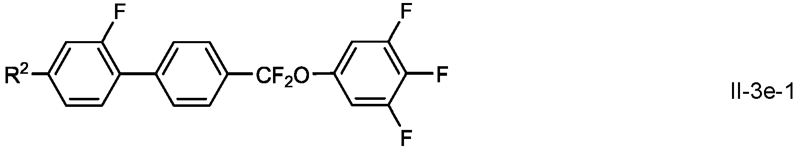 in which R² has the meaning given above.

In addition to the preferred compounds of formula II above the medium optionally comprises one or more compounds of formula II selected from the compounds of the formulae IIA1 to IIA7: 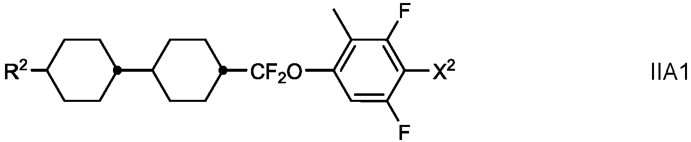 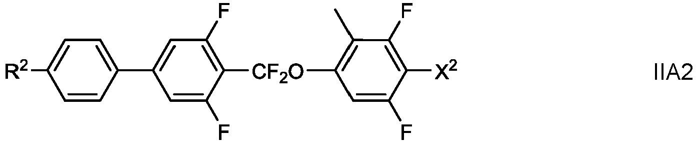 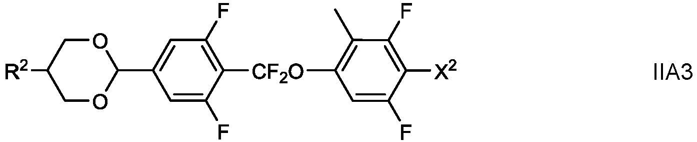 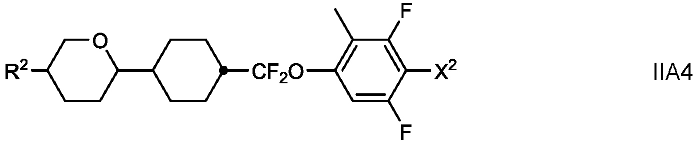 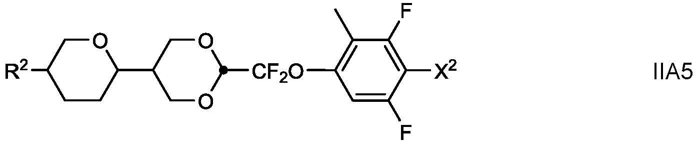 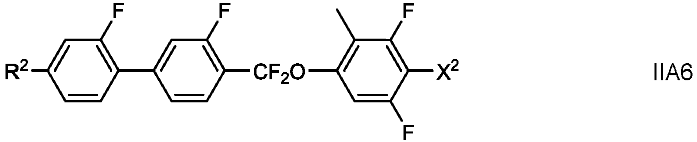 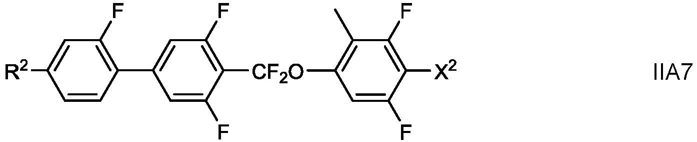 in which R² and X² have the meanings given in formula II or one of the preferred meanings given above and below.

Preferred compounds are those of formula IIA1, IIA2 and IIA3, very preferred those of formula IIA1 and IIA2.

In the compounds of formulae IIA1 to IIA7, R² preferably denotes alkyl having 1 to 6 C atoms, very preferably ethyl or n-propyl, and X² preferably denotes For OCF₃, very preferably F.

In another preferred embodiment of the present invention the medium comprises one or more compounds of formula III preferably selected from the group of formulae III-1 and III-2, preferably of formula III-2:

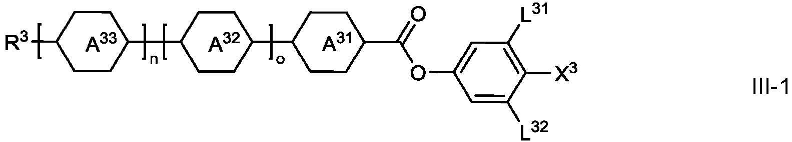

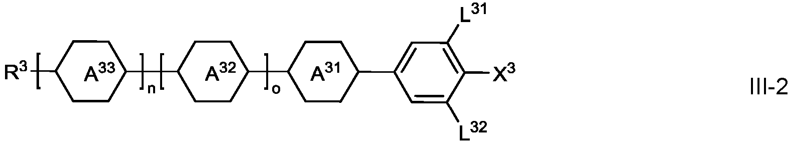

in which the occurring groups and parameters have the respective meanings given under formula III above.

R³ preferably denotes alkyl having 1 to 7 C atoms or alkenyl having 2 to 7 C atoms.

Preferably the compounds of formula III-1 are selected from the group of compounds of formulae Ill-1a and III-1b 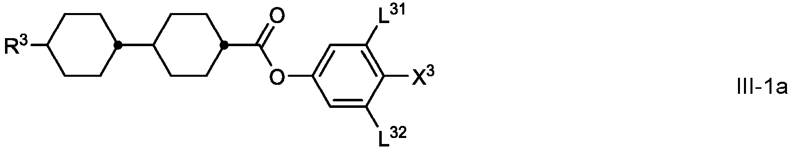 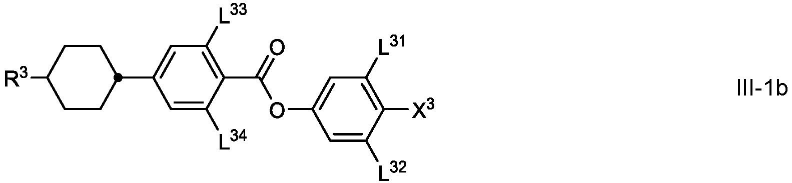 in which the occurring groups have the respective meanings given above and L³³ and L³⁴, independently of each other, denote H or F.

The compounds of formula III-1a are preferably selected from the group of compounds of formulae III-1a-1 to III-1a-6 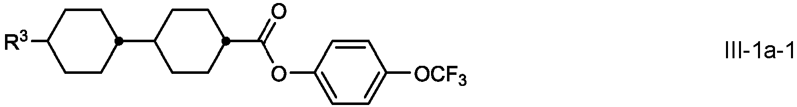 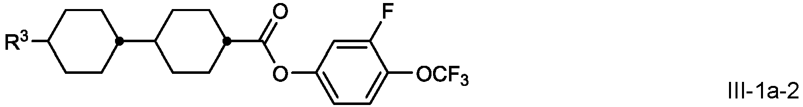 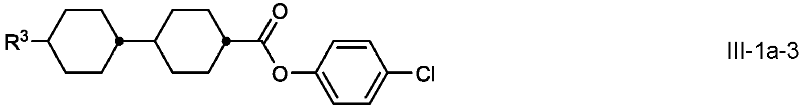 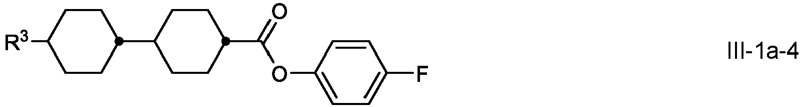 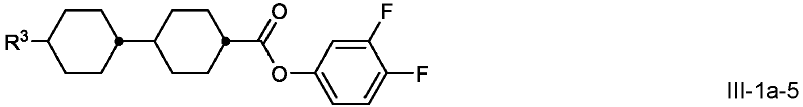 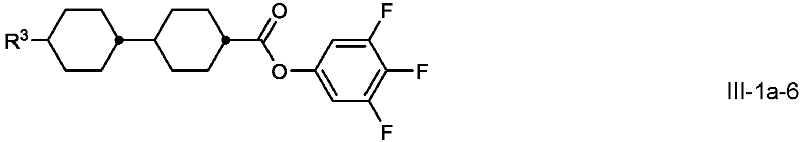 in which R³ has the meaning given above.

Preferably the compounds of formula III-2 are selected from the group of compounds of formulae Ill-2a to III-2m 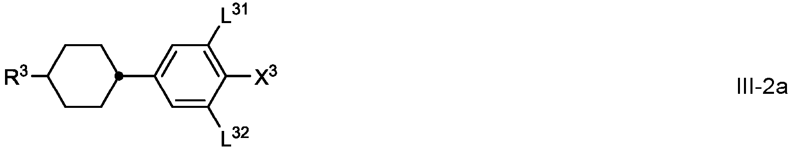 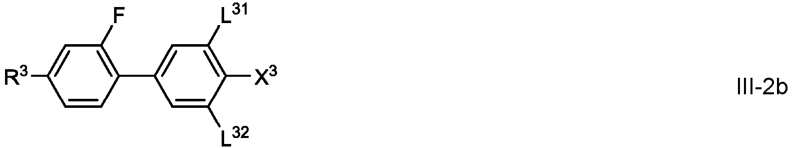 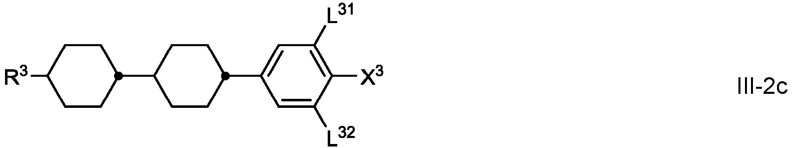 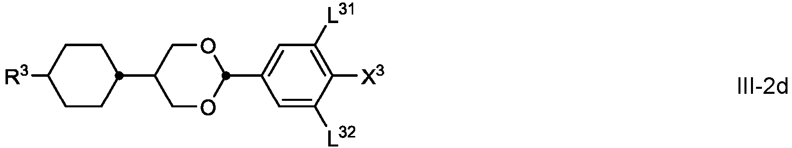 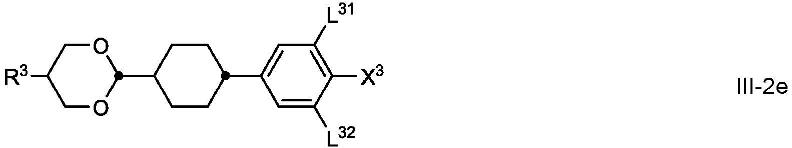 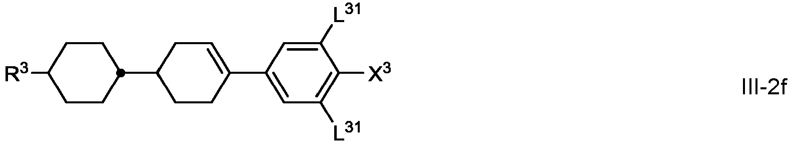 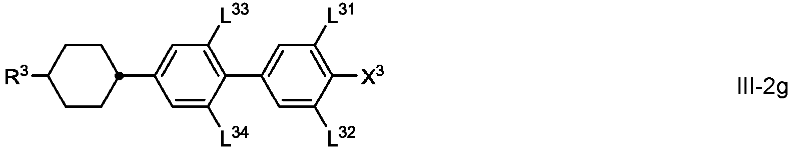 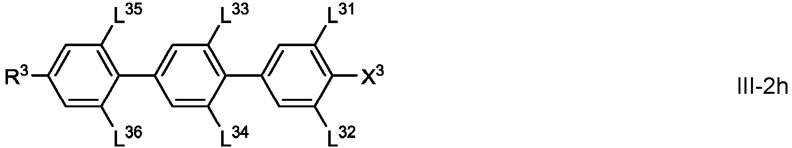 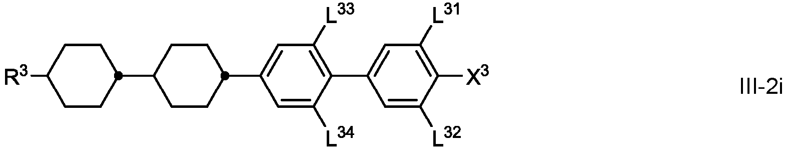 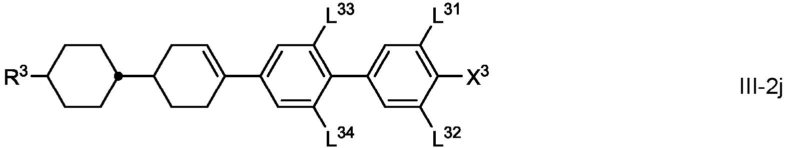 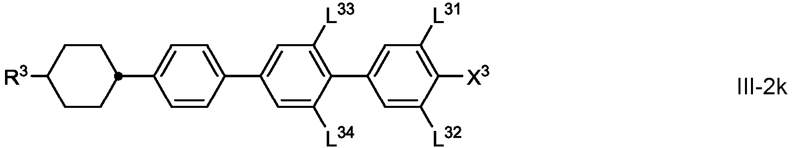 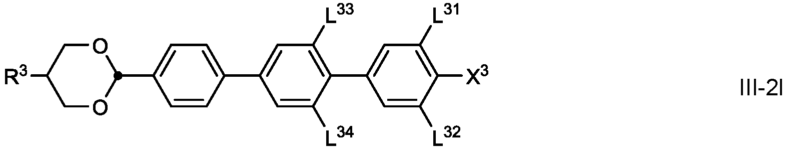 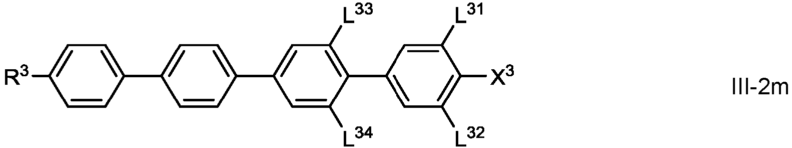 in which the occurring groups have the respective meanings given above and L³⁵ and L³⁶, independently of one another, denote H or F.

Preferably, the compounds of formula II-2a are selected from the group of compounds of formulae Ill-2a-1 to III-2a-4 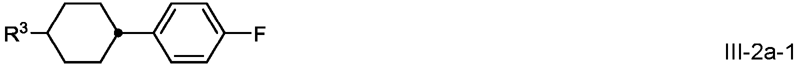 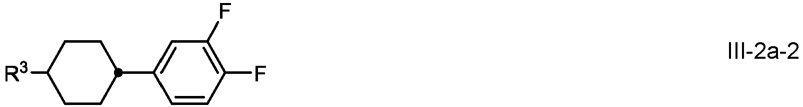 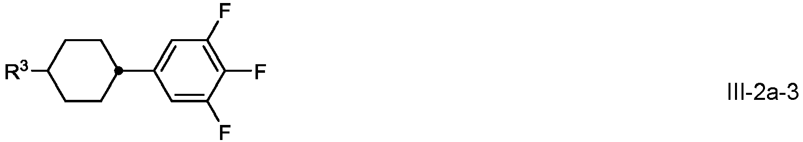 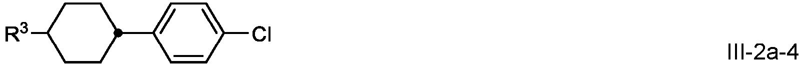 in which R³ has the meaning given above.

The compounds of formula III-2b are preferably selected from the group of compounds of formulae III-2b-1 and III-2b-2, preferably III-2b-2 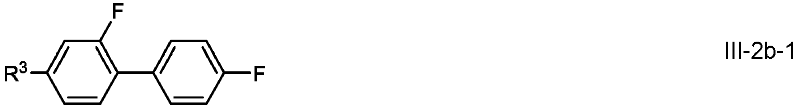 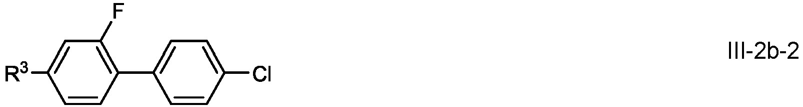 in which R³ has the meaning given above.

The compounds of formula II-2c, are preferably selected from the group of compounds of formulae III-2c-1 to III-2c-5 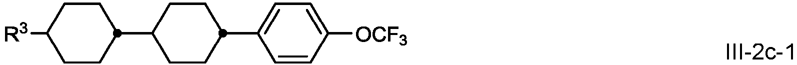 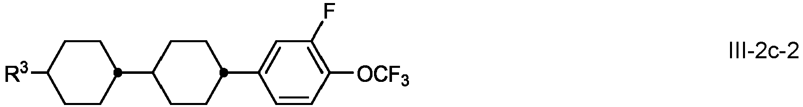 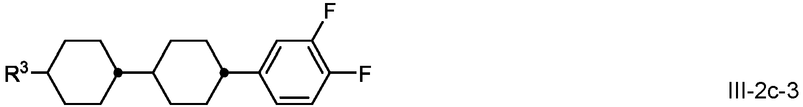 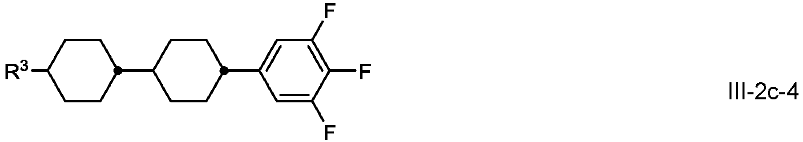 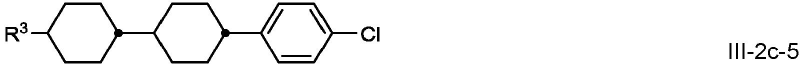 in which R³ has the meaning given above.

The compounds of formulae III-2d and III-2e are preferably selected from the group of compounds of formulae III-2d-1 and III-2e-1 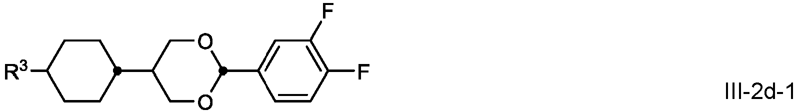 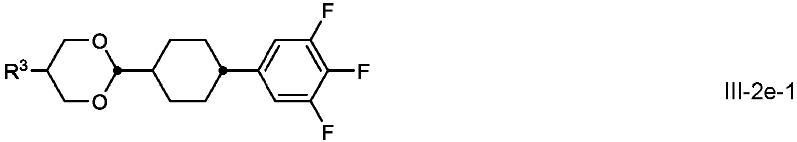 in which R³ has the meaning given above.

The compounds of formula III-2f are preferably selected from the group of compounds of formulae III-2f-1 to III-2f-7 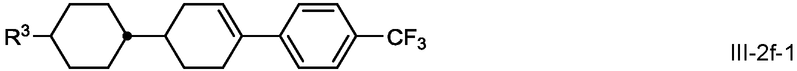 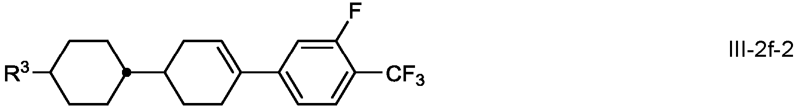 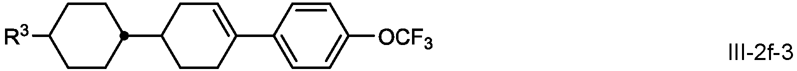 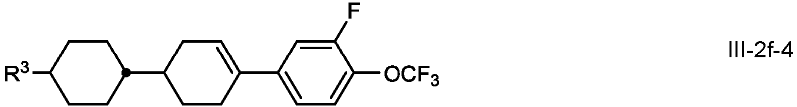 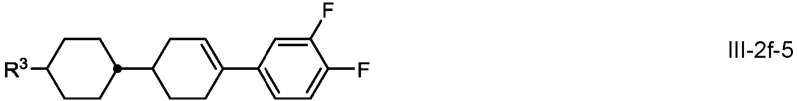 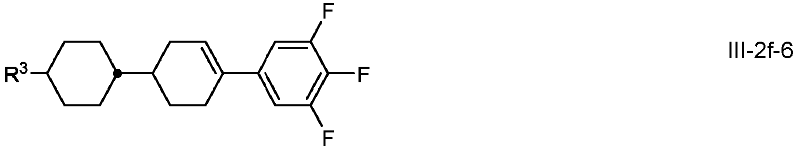 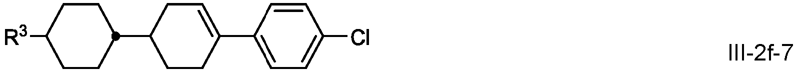 in which R³ has the meaning given above.

The compounds of formula III-2g are preferably selected from the group of compounds of formulae III-2g-1 to III-2g-7 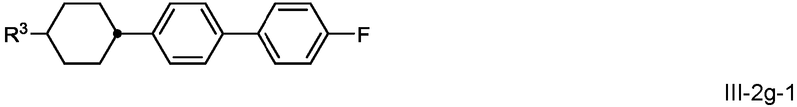 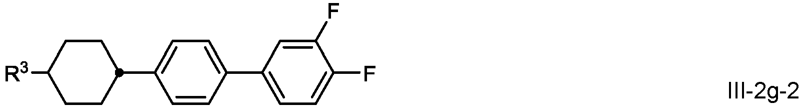 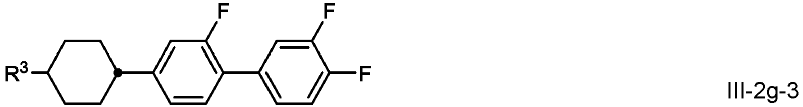 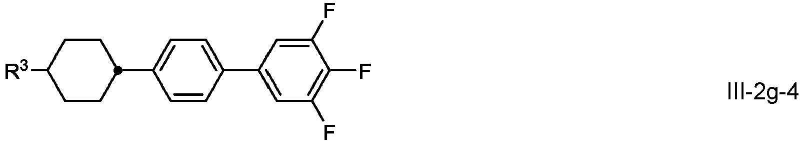 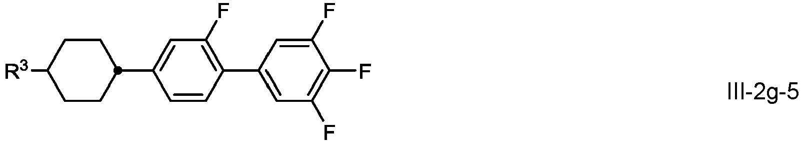 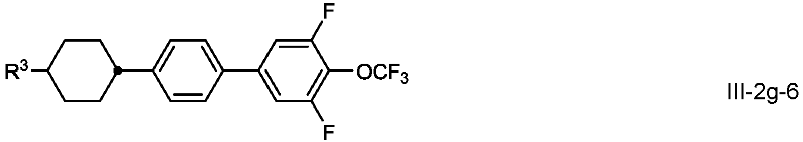 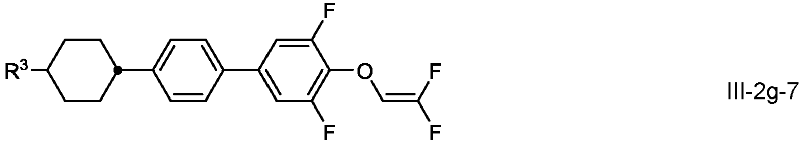 in which R³ has the meaning given above.

The compounds of formula III-2h are preferably selected from the group of compounds of formulae Ill-2h-1 to III-2h-5 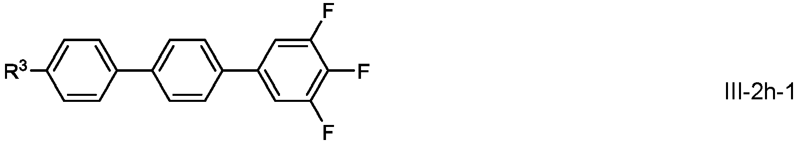 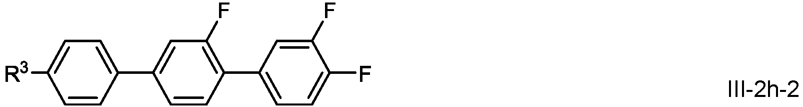 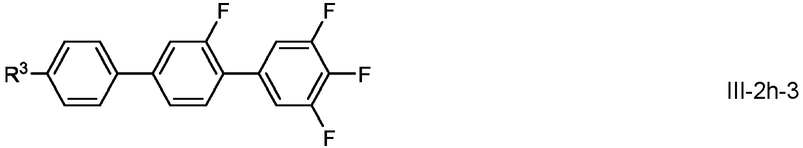 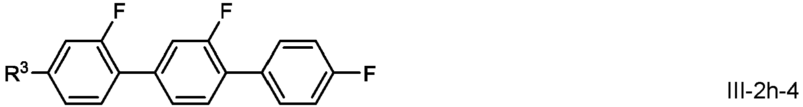 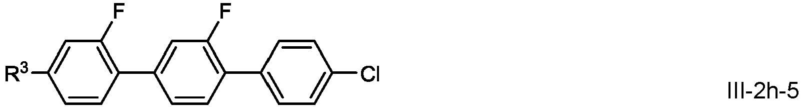 in which R³ has the meaning given above.

The compounds of formula III-2i are preferably selected from the group of compounds of formulae III-2i-1 to III-2i-3 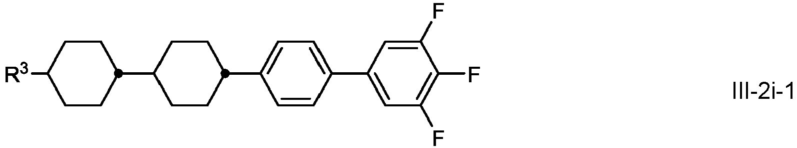 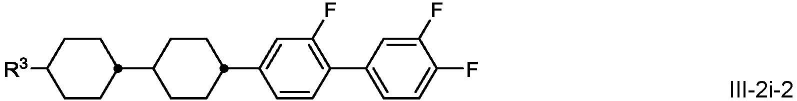 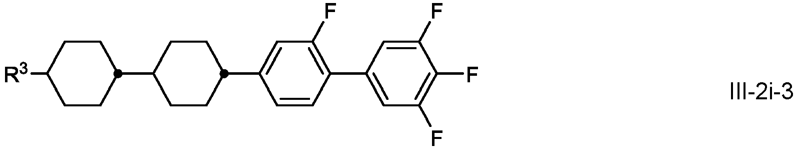 in which R³ has the meaning given above.

The compounds of formula III-2j are preferably selected from the group of compounds of formulae III-2j-1 to III-2j-3 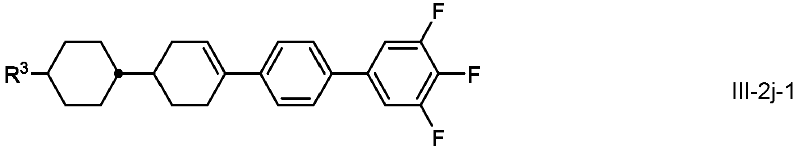 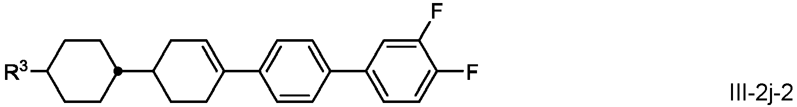 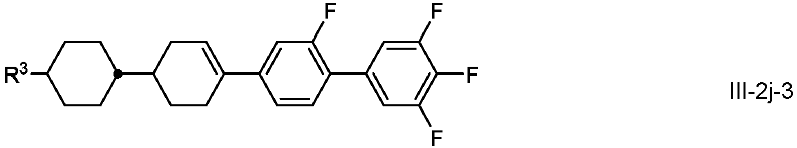 in which R³ has the meaning given above.

The compounds of formula III-2k are preferably selected from the group of compounds of formulae III-2k-1 to III-2k-6 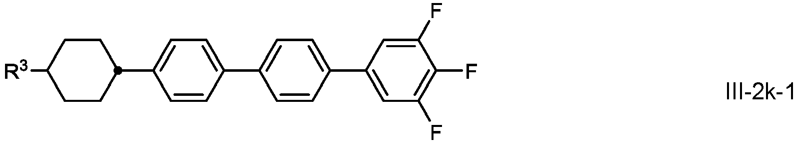 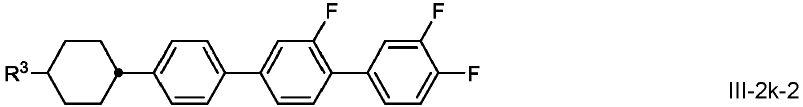 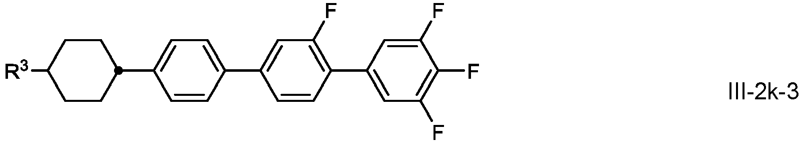 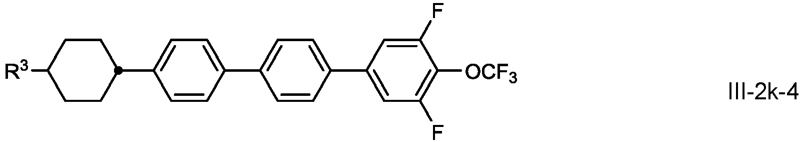 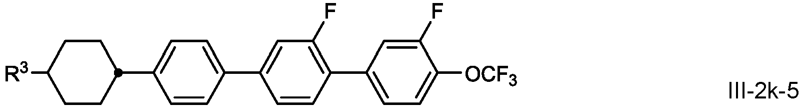 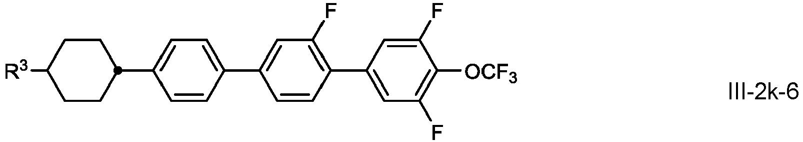 in which R³ has the meaning given above.

The compounds of formula III-2l are preferably selected from the group of compounds of formulae III-2l-1 to III-2l-6 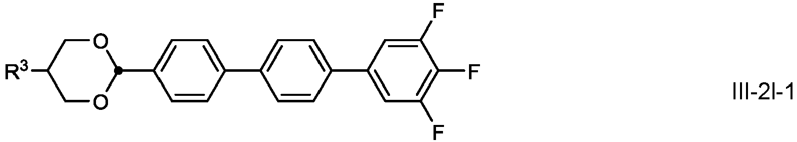 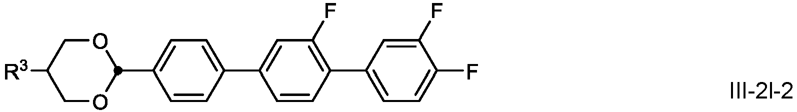 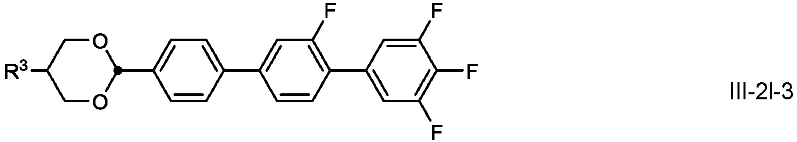 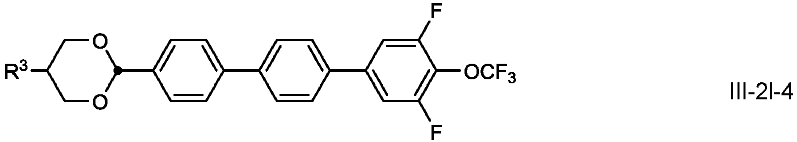 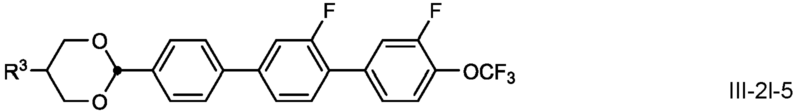 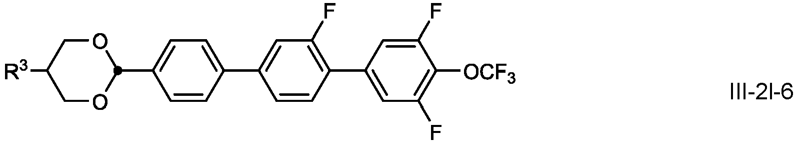 in which R³ has the meaning given above.

The compounds of formula III-2m are preferably selected from the compounds of formula III-2m-1

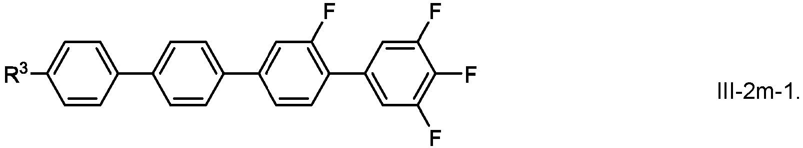

Alternatively or in addition to the compounds of the formulae III-1 and/or 111-2 the media according to the present invention optionally comprise one or more compounds of formula III-3, 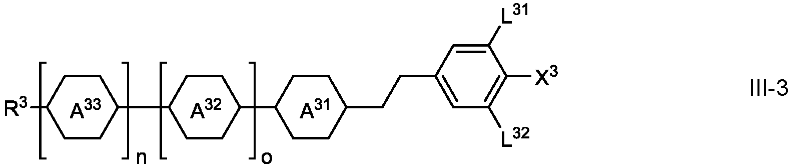
in which the groups and parameters have the respective meanings given under formula III above,
preferably of formula III-3a 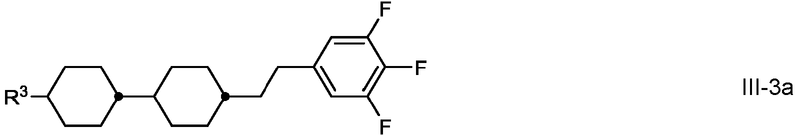
in which the R³ has the meaning given above.

In addition to the preferred compounds of formula III above the medium optionally comprises one or more compounds selected from the group consisting of the formulae IIIA-1 to IIIA-21: 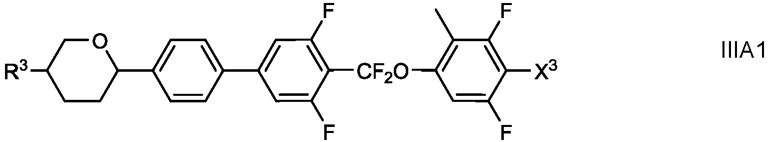 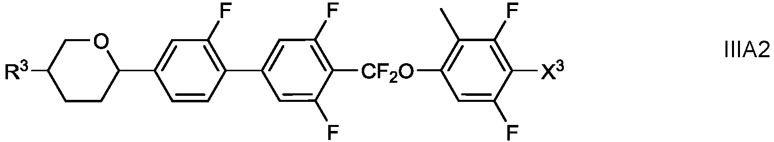 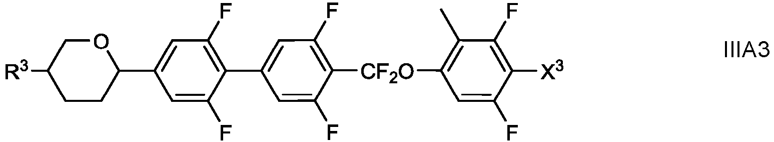 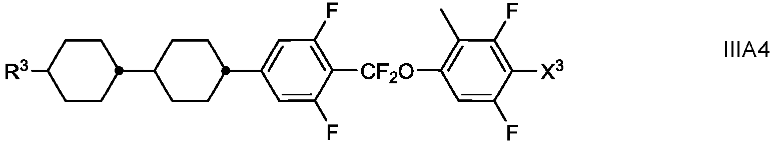 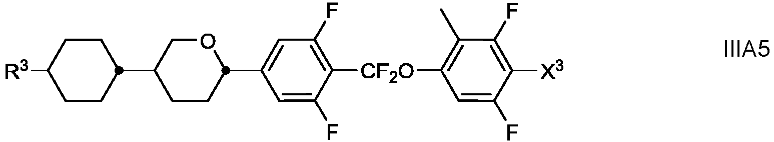 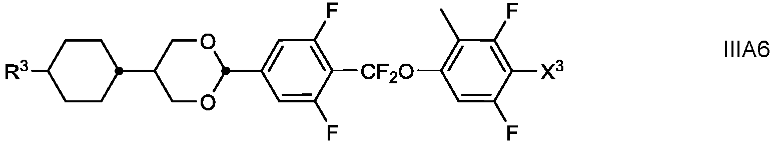 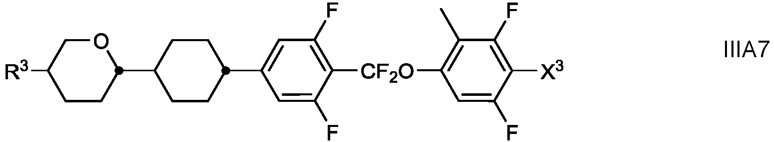 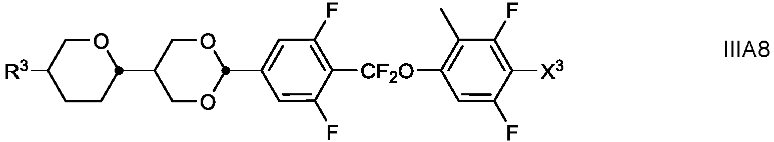 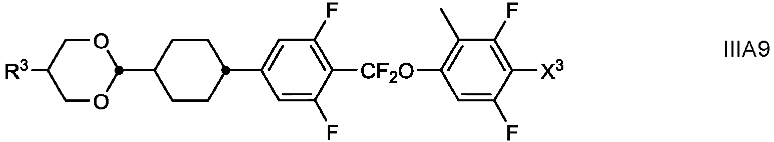 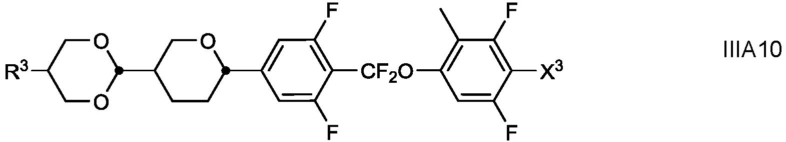 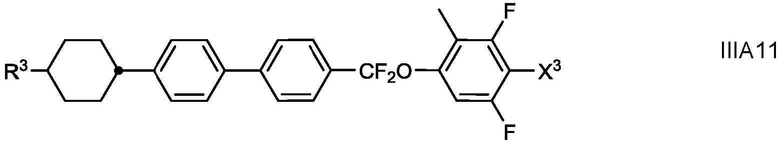 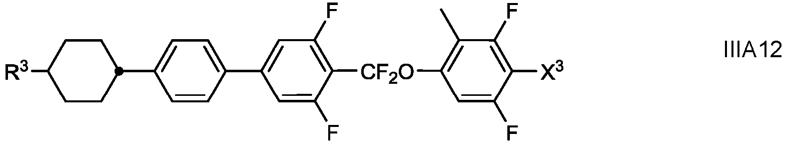 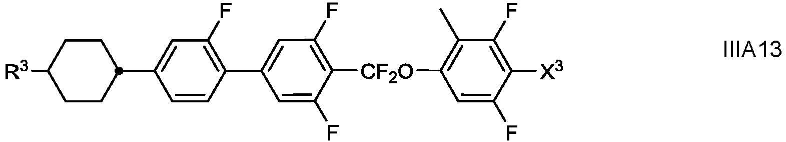 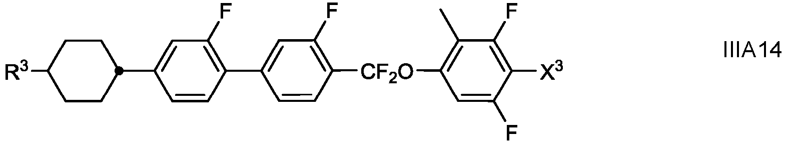 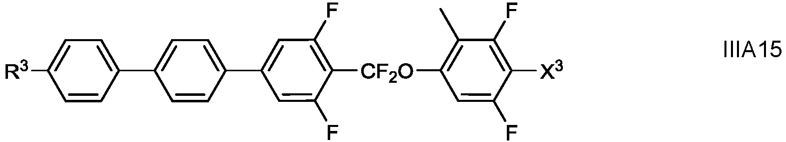 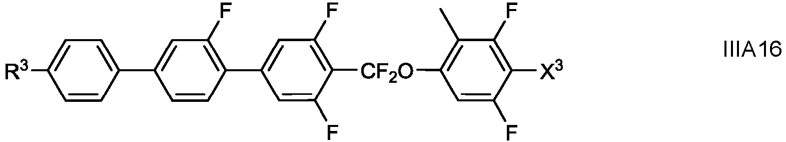 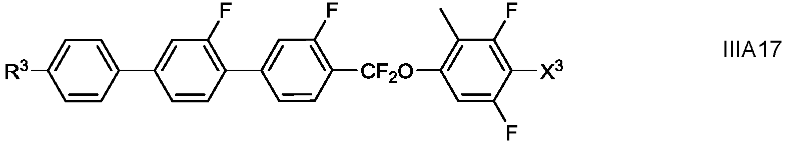 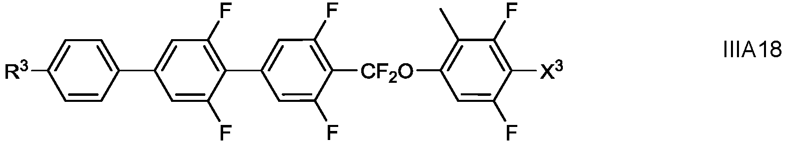 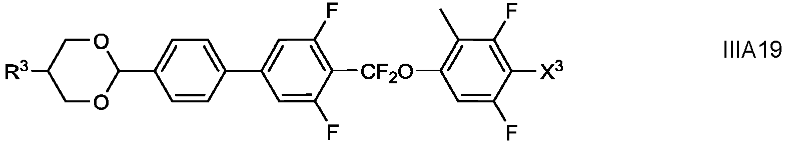 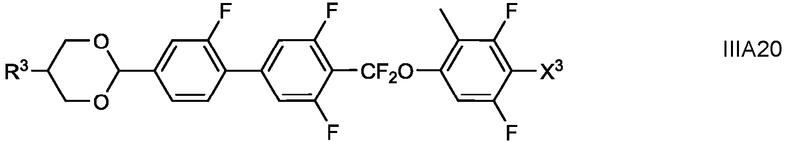 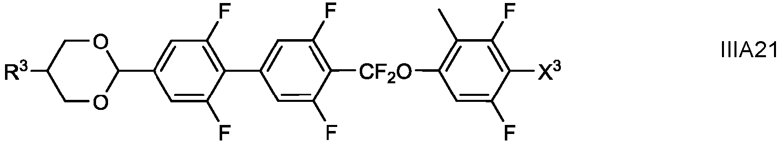 in which R³ and X³ have the meanings given in formula III or one of the preferred meanings given above and below. Preferred compounds are those of formula IIIA1, IIIA4, IIIA6, IIIA16, IIIA19 and IIIA20.

In the compounds of formulae IIIA1 to IIIA21 R³ preferably denotes alkyl having 1 to 6 C atoms, very preferably ethyl or propyl, X³ preferably denotes F or OCF₃, very preferably F.

Preferably, the medium according to the invention comprises one or more compounds of the formula IV 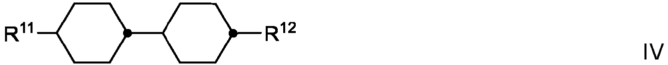 in which
- R¹¹: denotes a straight chain alkyl radical having 1 to 12 C atoms or a branched or cyclic alkyl radical having 3 to 12 C atoms, or a straight chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight chain alkenyl radical having 2 to 12 C atoms,
- R¹²: denotes a straight chain alkyl or alkoxy radical having 1 to 12 C atoms or a branched or cyclic alkyl or alkoxy radical having 3 to 12 C atoms, or a straight chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight chain alkyl radical having 1 to 12 C atoms, very preferably having 1 to 7 C atoms.

The compounds of the formula IV are preferably selected from the group of the compounds of the formulae IV-1 to IV-4, very preferably of the formula IV-3 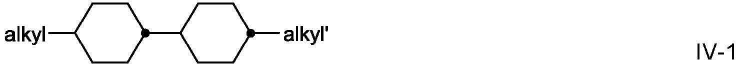 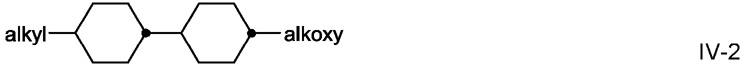 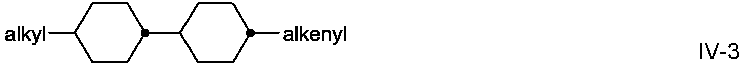 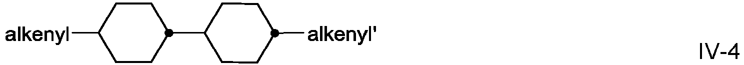 in which
- alkyl and alkyl',: independently of one another, denote alkyl having 1 to 7 C atoms, preferably having 2 to 5 C atoms,
- alkoxy: denotes alkoxy having 1 to 5 C atoms, preferably having 2 to 4 C atoms,
- alkenyl: denotes an alkenyl radical having 2 to 5 C atoms, preferably having 2 to 4 C atoms, particularly preferably 2 C atoms, and
- alkenyl': denotes an alkenyl radical having 2 to 5 C atoms, preferably having 2 to 4 C atoms, particularly preferably having 2 to 3 C atoms.

Preferably, the medium comprises one or more compounds of formula IV-1, preferably selected from the compounds of the formulae IV-1-1 to IV-1-6

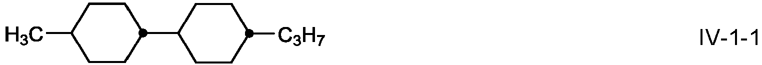

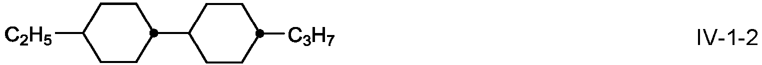

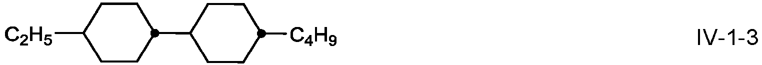

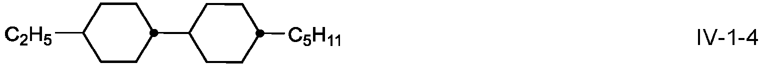

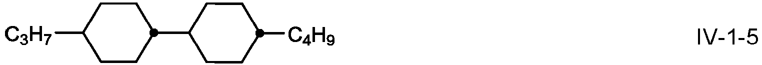

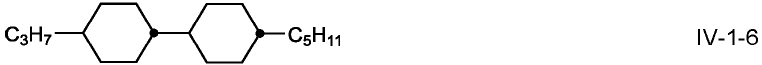

Preferably, the medium according to the invention comprises one or more compounds of the formulae IV-2-1 and/or IV-2-2

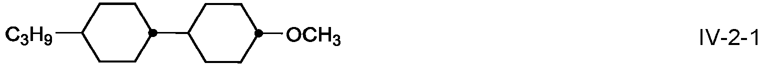

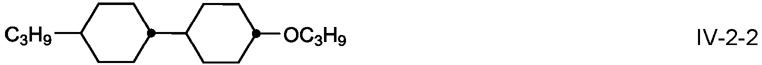

Preferably, the medium according to the invention comprises a compound of formula IV-3, very preferably selected from the compounds of the formulae IV-3-1 to IV-3-6, in particular the compound of formula IV-3-2 and/or IV-3-6:

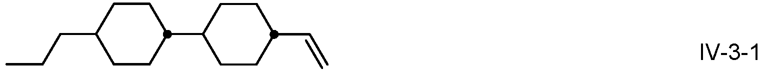

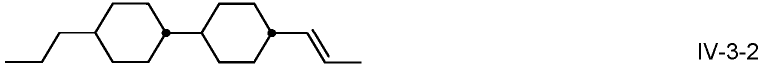

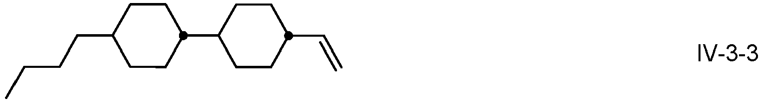

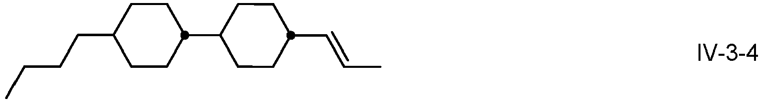

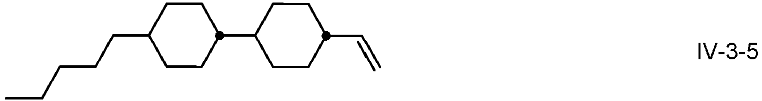

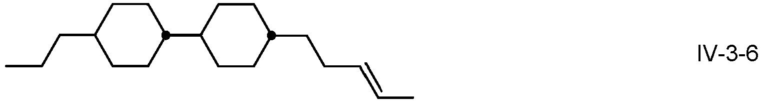

Preferably, the medium according to the invention comprises a compound of formula IV-4, in particular selected from the compounds of the formulae IV-4-1 and IV-4-2:

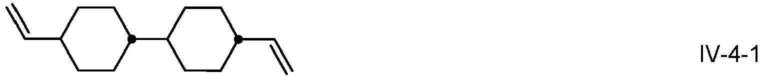

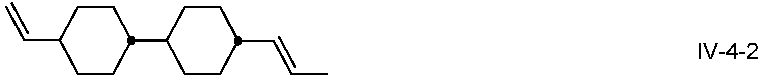

Preferably, the medium according to the invention comprises one or more compounds of the formula IVa and/or IVb, very preferably IVb 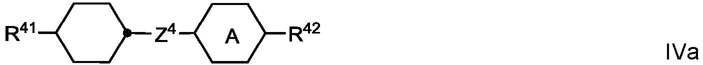 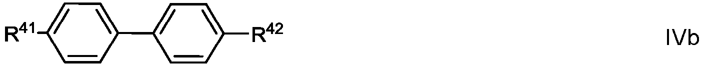 in which
R⁴¹ and R⁴² each, independently of one another, denote a straight-chain alkyl, alkoxy, alkenyl, alkoxyalkyl or alkenyloxy radical having up to 12 C atoms, and 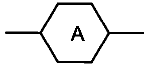 denotes 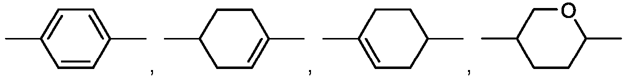 or 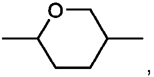
Z⁴ denotes a single bond, -CH₂CH₂-, -CH=CH-, -CF₂O-, -OCF₂-, -CH₂O-, -OCH₂-, -COO-, -OCO-, -C₂F₄-, -C₄H₈-, or -CF=CF-.

Preferred compounds of the formula IVa are selected from the compounds of the formulae IVa-1 to IVa-4: 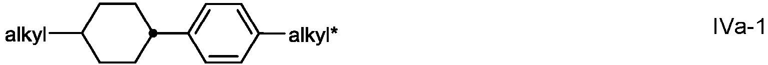 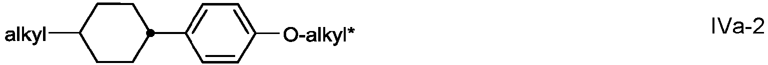 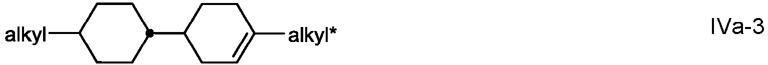 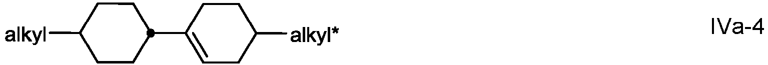 in which
- alkyl and alkyl*: each, independently of one another, denote a straight-chain alkyl radical having 1 to 6 C atoms.

The medium according to the invention preferably comprises at least one compound of the formula IVa-2.

Preferred compounds of the formula IVb are selected from the compounds of the formulae IVb-1 to IVb-3: 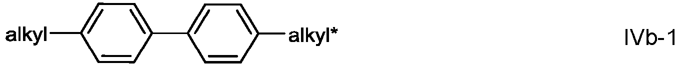 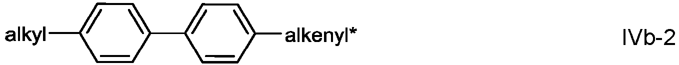 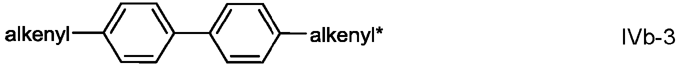 in which
- alkyl and alkyl*: each, independently of one another, denote a straight-chain alkyl radical having 1 to 6 C atoms, and
- alkenyl and alkenyl*: each, independently of one another, denote a straight-chain alkenyl radical having 2 to 6 C atoms.

Of the compounds of the formulae IVb-1 to IVb-3, the compounds of the formula IVb-2 are particularly preferred.

Very particularly preferred compounds of the formulae IVb are selected from the following compounds: 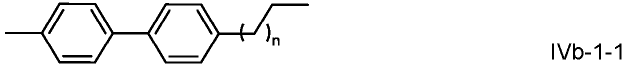 n = 1,2 or 3

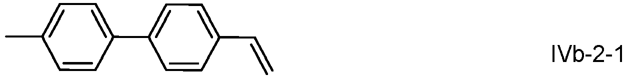

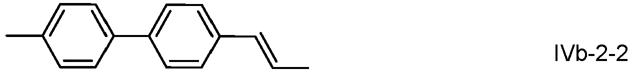

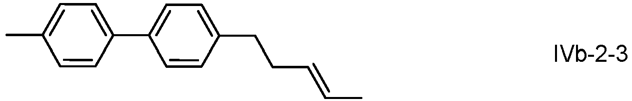

The medium according to the invention particularly preferably comprises the compound IVb-2-3.

Preferably, the medium according to the invention comprises one or more compounds of the formula V 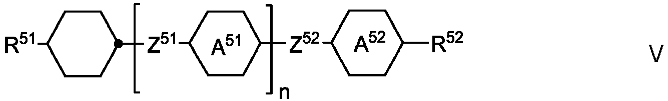 in which
- R⁵¹, R⁵²: denote alkyl having 1 to 7 C atoms, alkoxy having 1 to 7 C atoms, or alkoxyalkyl, alkenyl or alkenyloxy having 2 to 7 C atoms, identically or differently, denote 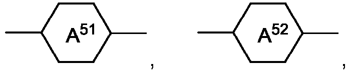 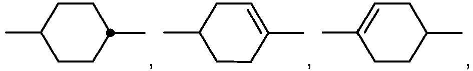 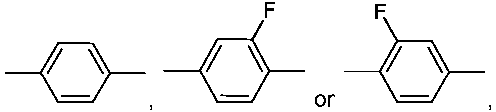
- Z⁵¹, Z⁵²: each, independently of one another, denote -CH₂-CH₂-, -CH₂-O-, -CH=CH-, -C≡C-, -COO- or a single bond, and
- n: is 1 or 2.

The compounds of formula V are preferably selected from the compounds of the formulae V-1 to V-18: 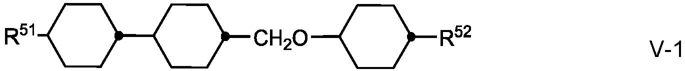 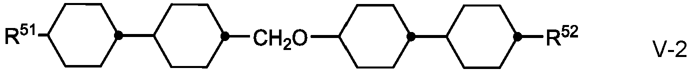 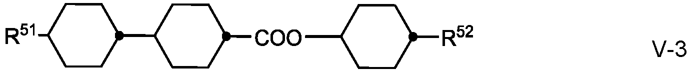 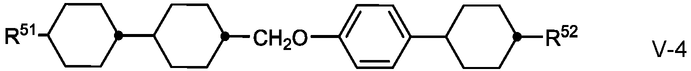 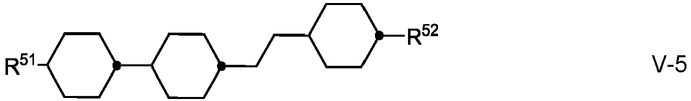 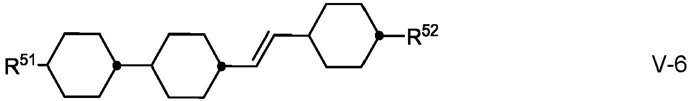 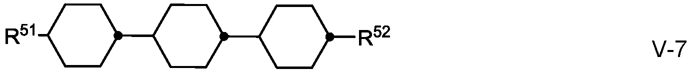 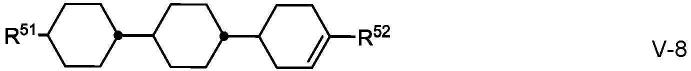 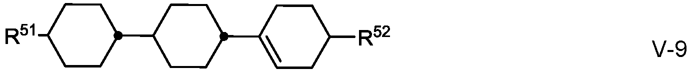 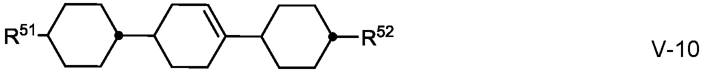 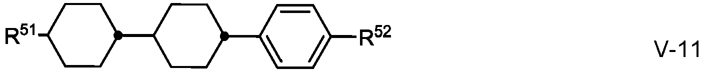 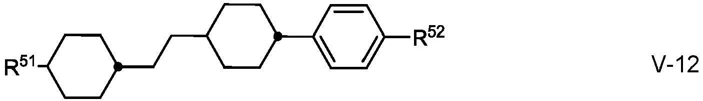 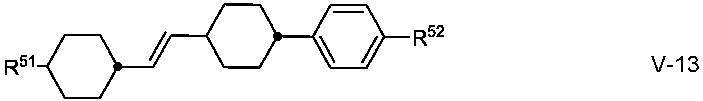 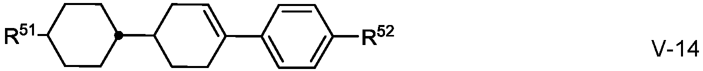 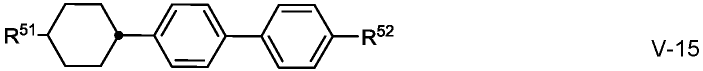 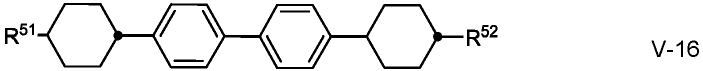 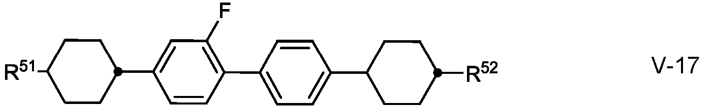 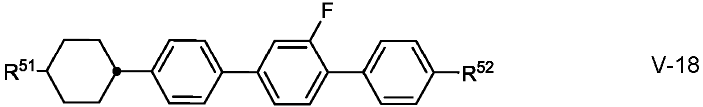 in which R⁵¹ and R⁵² have the meanings indicated above for formula V.

R⁵¹ and R⁵² preferably each, independently of one another, denote straight-chain alkyl having 1 to 7 C atoms or alkenyl having 2 to 7 C atoms.

In a preferred embodiment of the present invention the medium additionally comprises one or more compounds of the formulae VI-1 to VI-9 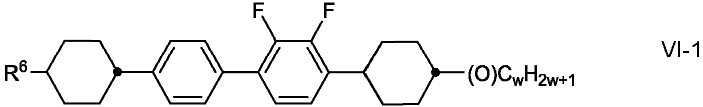 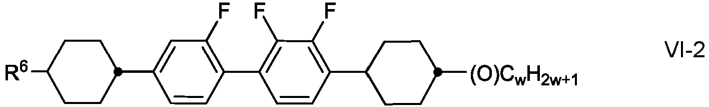 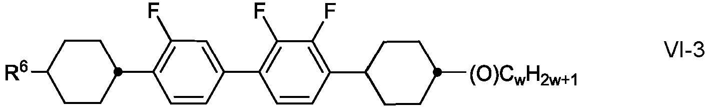 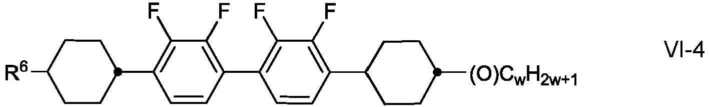 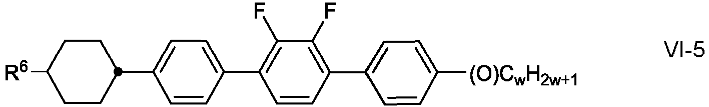 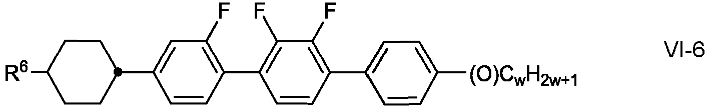 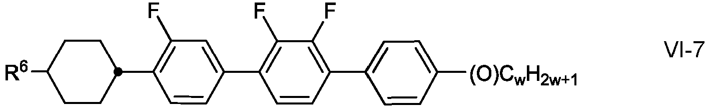 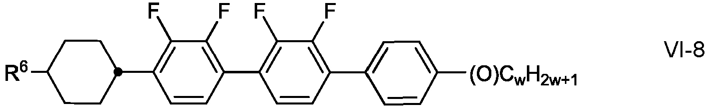 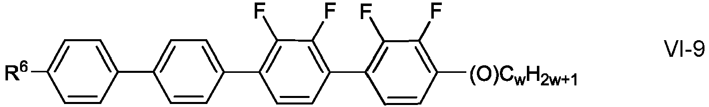 in which
- R⁶: each, independently of one another, have one of the meanings indicated for R¹ in Claim 1, and
- w: each, independently of one another, denote an integer from 1 to 6.

In a preferred embodiment of the present invention the medium additionally comprises one or more compounds of the formula VII, 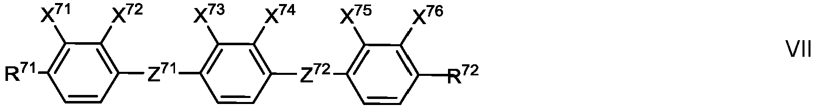 in which
R⁷¹ and R⁷² denote H, F, straight chain alkyl or alkoxy having 1 to 15 C atoms, straight chain alkenyl or alkenyloxy having 2 to 15 C atoms or branched alkyl, alkoxy, alkenyl, alkenyloxy each having 3 to 15 C atoms, where one or more CH₂ groups in these radicals may each be replaced, independently of one another, by 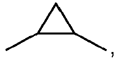 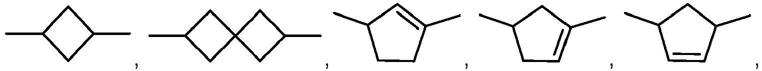 -C≡C-, -CF₂O-, -OCF₂-, -CH=CH-, -O-, -CO-O- or -O-CO- in such a way that O atoms are not linked directly to one another, and in which one or more H atoms may be replaced by halogen,
X⁷¹ to X⁷⁶, identically or differently, denote H or F, preferably at least one of X⁷¹ to X⁷⁶ denotes F, more preferably at least two of X⁷¹ to X⁷⁶ denote F;
Z⁷¹ and Z⁷², identically or differently, denote CH₂CH₂ or a single bond.

The compounds of the formula VII are preferably selected from the formulae VII-1 and VII-2: 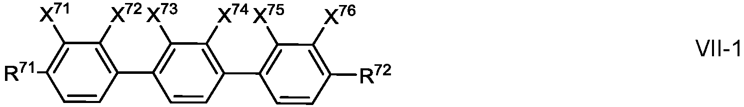 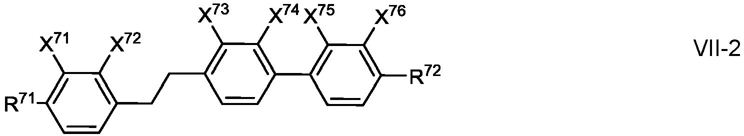 in which the occurring groups have the meanings given for formula VII.

The compounds of the formula VII-1 are preferably selected from the formulae VII-1-1 to VII-1-21, very preferably of the formula VII-1-4: 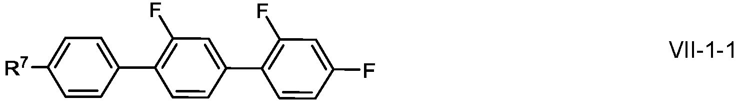 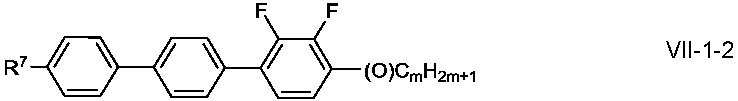 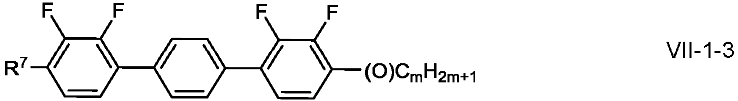 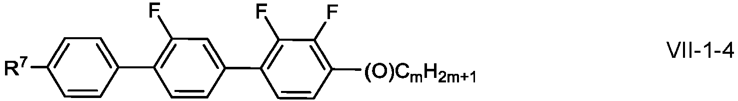 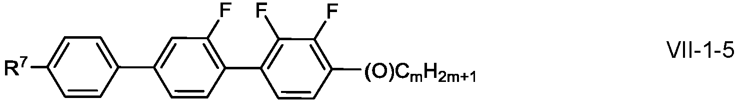 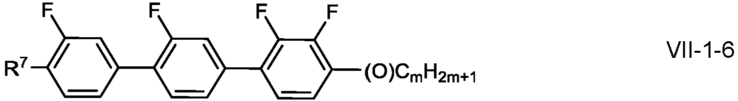 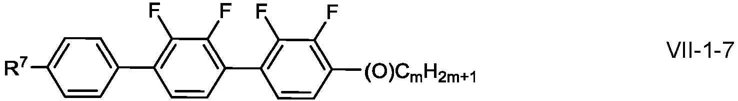 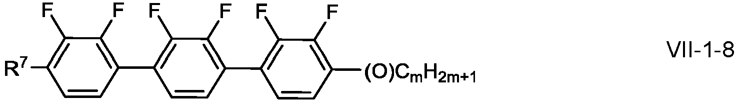 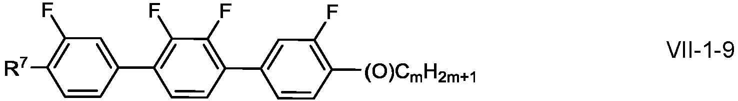 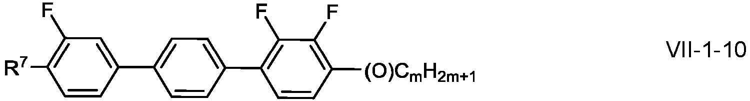 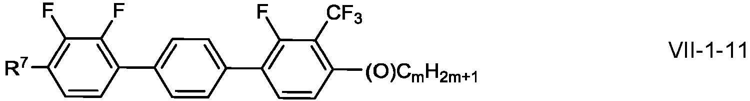 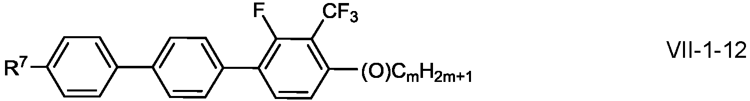 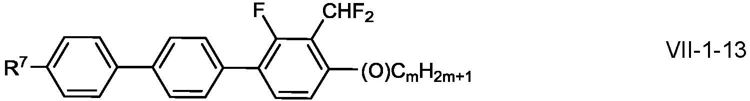 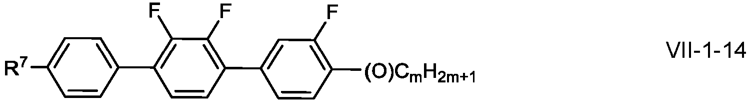 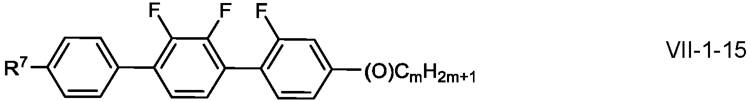 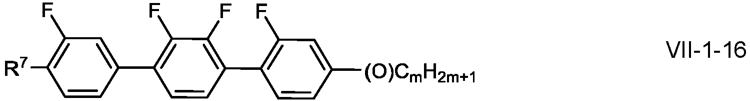 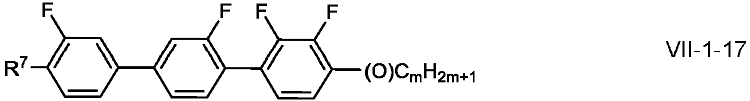 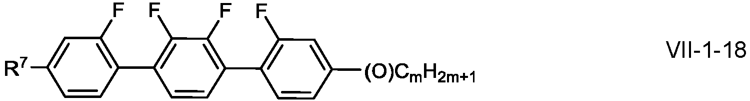 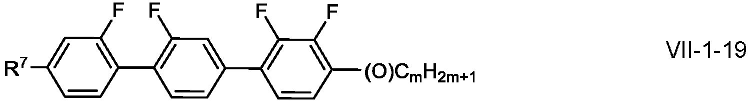 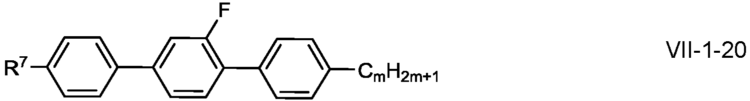 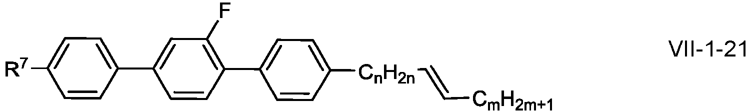 in which R⁷ denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4.

R⁷ preferably denotes methyl, ethyl, propyl, butyl, pentyl, hexyl, methoxy, ethoxy, propoxy, butoxy, pentoxy.

In the compounds of the formula VII-1-4, (O) preferably denotes -O-.

The compounds of the formula VII-2 are preferably selected from the formulae VII-2-1 to VII-2-15, very preferably of the formula VII-2-1: 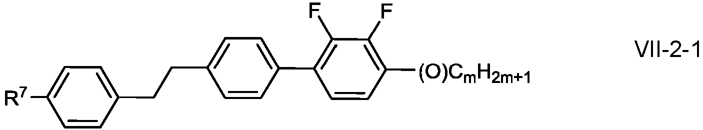 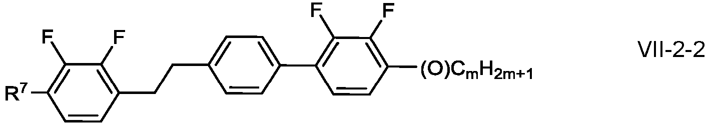 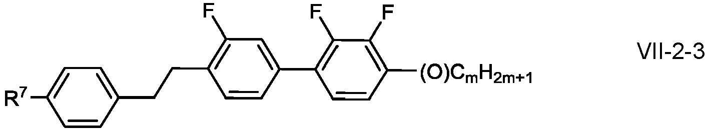 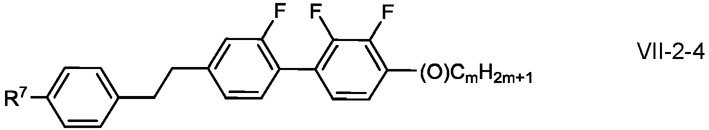 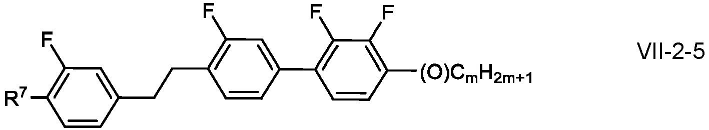 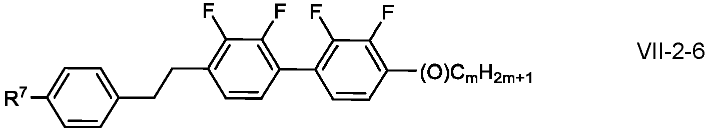 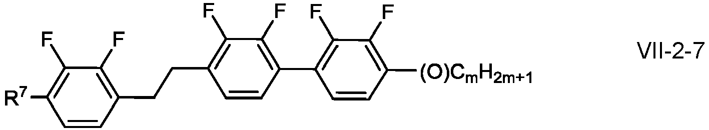 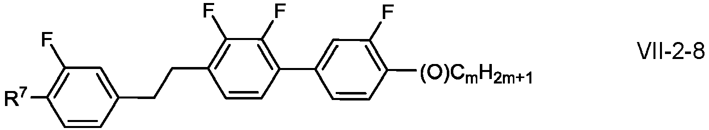 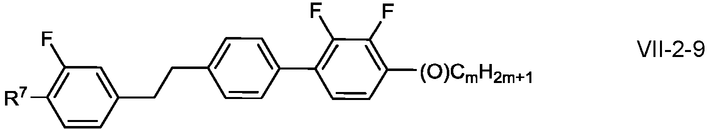 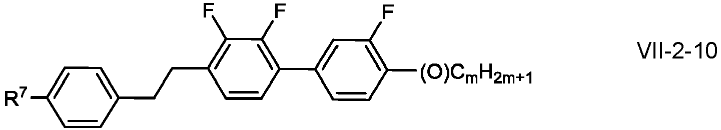 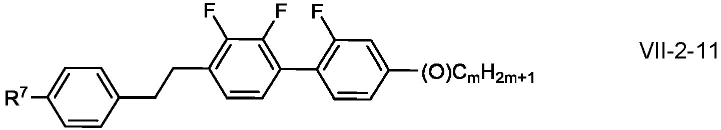 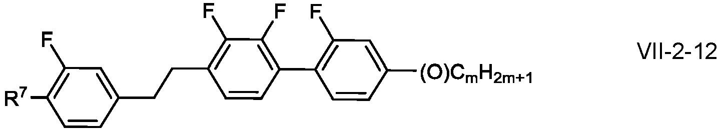 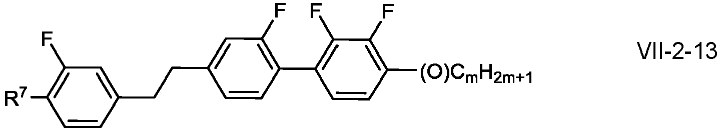 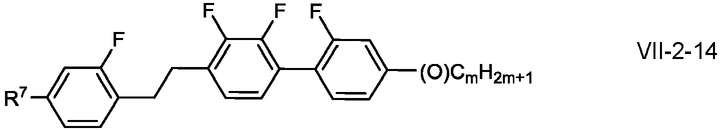 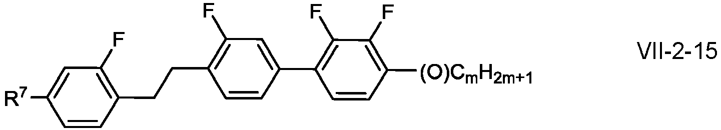 in which R⁷ denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4.

R⁷ preferably denotes methyl, ethyl, propyl, butyl, pentyl, hexyl, methoxy, ethoxy, propoxy, butoxy, pentoxy.

Preferably, the medium according to the invention comprises one or more compounds of the formula VIII: 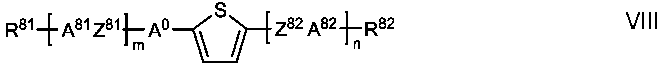 in which
- R⁸¹ and R⁸²,: identically or differently, denote H, halogen, CN, SCN, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more CH₂ groups in these radicals may each be replaced, independently of one another, by 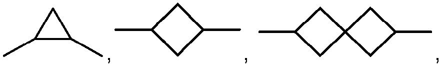 -C≡C-, -CF₂O-, 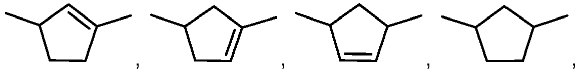 -OCF₂-, -CH=CH-, by -O-, -CO-O- or -O-CO- in such a way that O atoms are not linked directly to one another, and in which one or more H atoms may be replaced by halogen,
- A⁰, A⁸¹, and A⁸²,: each, independently of one another, denote phenylene-1,4-diyl, in which one or two CH groups may be replaced by N and one or more H atoms may be replaced by halogen, CN, CH₃, CHF₂, CH₂F, CF₃, OCH₃, OCHF₂ or OCF₃, cyclohexane-1,4-diyl, in which one or two non-adjacent CH₂ groups may be replaced, independently of one another, by O and/or S and one or more H atoms may be replaced by F, cyclohexene-1,4-diyl, bicyclo[1.1.1]pentane-1,3-diyl, bicyclo[2.2.2]octane-1,4-diyl, spiro[3.3]heptane-2,6-diyl, tetrahydropyran-2,5-diyl or 1,3-dioxane-2,5-diyl;
- Z⁸¹ and Z⁸²,: each, independently of one another, denote -CF₂O-, -OCF₂-, -CH₂O-, -OCH₂- , -CO-O-, -O-CO-, -C₂H₄-, -C₂F₄ , -CF₂CH₂-, -CH₂CF₂-, -CFHCFH-, - CFHCH₂-, -CH₂CFH-, -CF₂CFH-, -CFHCF₂-, -CH=CH-, -CF=CH-, -CH=CF-, -CF=CF-, -C≡C- or a single bond;
- n: denotes 0, 1, 2 or 3, preferably 0, 1 or 2, very preferably 0 or 1, particularly preferably 0; and
- m: denotes 0, 1, 2 or 3, preferably 0, 1 or 2, very preferably 1 or 2, in particular 1.
where the compounds of the formula I are excluded from formula VIII.

A⁸¹ and A⁸² in formula I preferably denote phenylene-1,4-diyl, which may also be mono- or polysubstituted by F, furthermore cyclohexane-1,4-diyl, cyclohexenylene-1,4-diyl, tetrahydropyran-2,5-diyl or 1,3-dioxane-2,5-diyl, very preferably phenylene-1,4-diyl which may also be mono- or polysubstituted by F, or cyclohexane-1,4-diyl.

Z⁸¹ and Z⁸² in formula I preferably denote -CF₂O-, -OCF₂- or a single bond, very preferably a single bond.

A⁸¹ and A⁸² in formula I particularly preferably denote 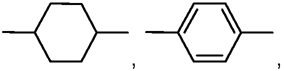 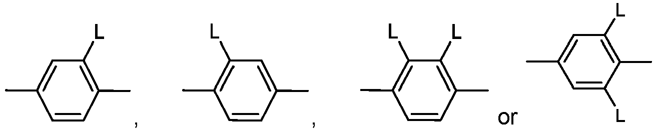 in which L denotes halogen, CF₃ or CN, preferably F.

Preference is furthermore given to compounds of the formula VIII in which R⁸¹ and R⁸² each, independently of one another, denote H, F, or alkyl, alkoxy, alkenyl or alkynyl having 1 to 8, preferably 1 to 5, C atoms, each of which is optionally substituted by halogen, in particular by F.

R⁸¹ and R⁸² preferably denote H, optionally fluorinated alkyl or alkoxy having 1 to 7 C atoms, optionally fluorinated alkenyl or alkynyl having 2 to 7 C atoms, optionally fluorinated cycloalkyl having 3 to 12 C atoms.

Preferably, at least one of R⁸¹ and R⁸² is not H, particularly preferably both of R⁸¹ and R⁸² are not H. R⁸¹ is very particularly preferably alkyl. R⁸² is furthermore preferably H, alkyl or fluorine. Very particularly preferably, R⁸¹ is alkyl and R⁸² is H or alkyl. R⁸¹, R⁸² each, independently of one another, very particularly preferably denote unbranched alkyl having 1 to 5 C atoms. If R⁸¹ and R⁸² denote substituted alkyl, alkoxy, alkenyl or alkynyl, the total number of C atoms in the two groups R⁸¹ and R⁸² is preferably less than 10.

Preferred compounds of the formula VIII are selected from the following sub-formulae, more preferably from the compounds of the formula VIII-3: 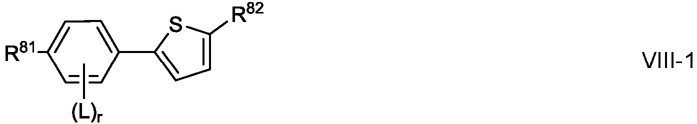 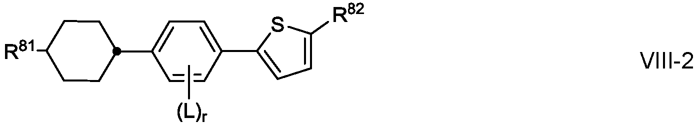 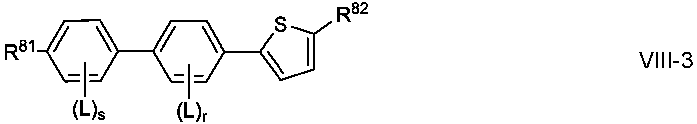 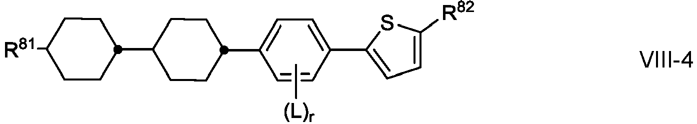 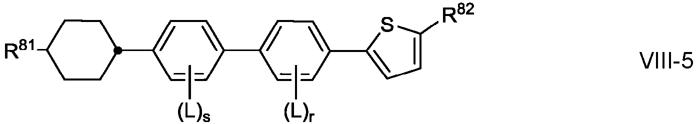 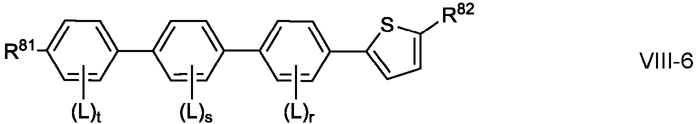 in which R⁸¹ and R⁸² have the meanings indicated above, L denotes F, and r, s and t independently are 0, 1, 2, 3, or 4. r preferably is 1 or 2, very preferably 2 and s and t independently are preferably 0 or 1, very preferably 0. R⁸¹ and R⁸² in particular independently denote n-alkyl having 1 to 5 C atoms.

In a first very preferred embodiment, the compounds of the formulae VIII-1 to VIII-6 are selected from the compounds of the formula VIII-1a to VIII-6a, in particular of the formula VIII-3a: 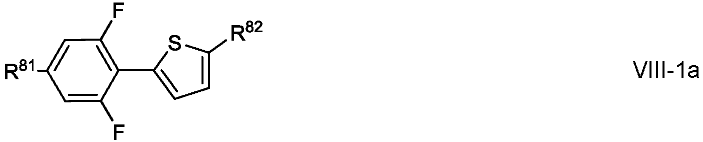 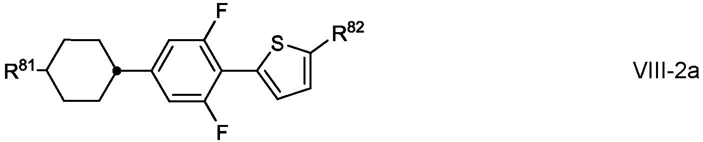 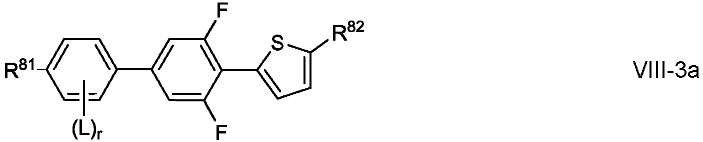 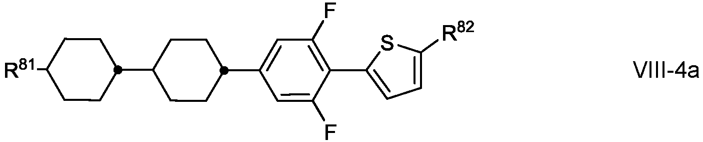 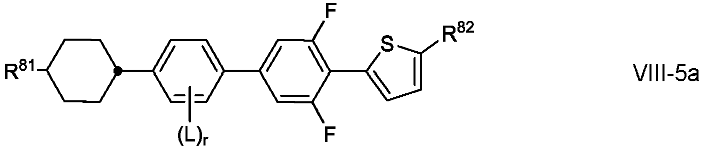 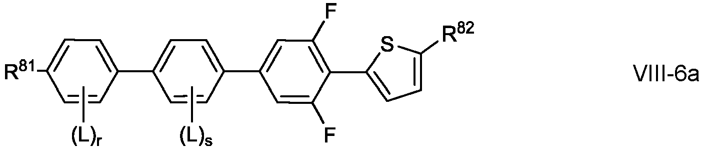 in which R⁸¹, R⁸², L, r and s have the meanings defined above.

In a second very preferred embodiment, the compounds of the formulae VIII-1 to VIII-6 are selected from the compounds of the formula VIII-1b to VIII-5b, in particular of the formula VIII-2b: 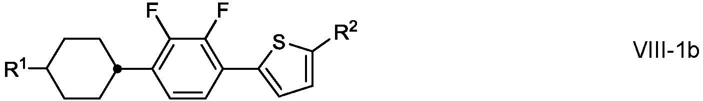 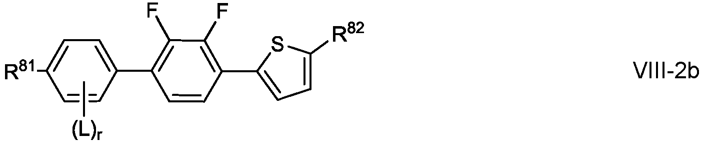 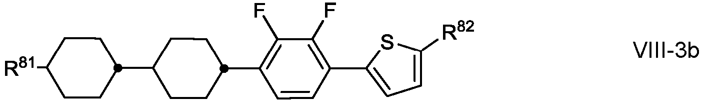 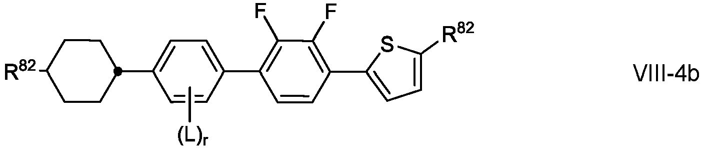 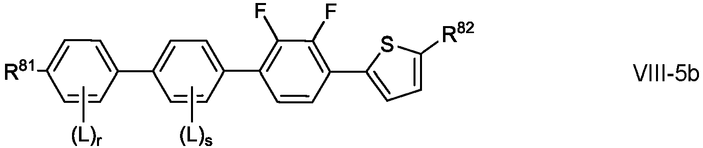 in which R¹, R², L, r and s have the meanings defined above.

In a third very preferred embodiment, the compounds of the formulae VIII-1 to VIII-6 are selected from the compounds of the formula VIII-1c to VIII-6c, in particular of the formula I3-c: 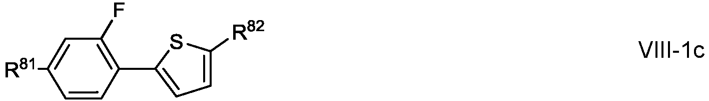 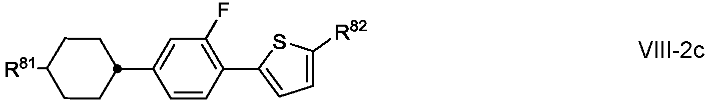 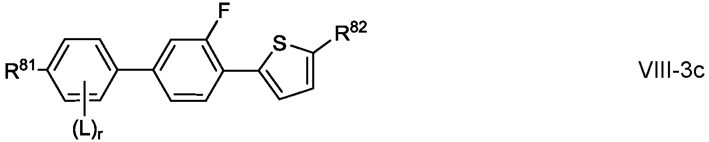 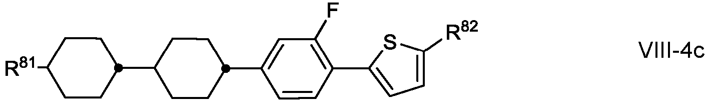 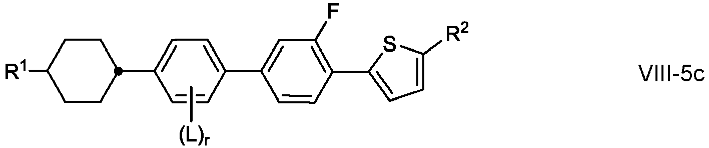 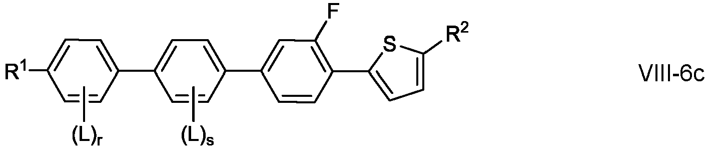 in which R¹, R², L, r and s have the meanings defined above.

In a fourth very preferred embodiment, the compounds of the formulae VIII-1 to VIII-6 are selected from the compounds of the formula VIII-1d to VIII-6d, in particular of the formula VIII-3d: 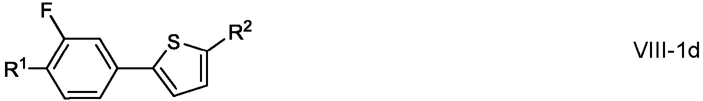 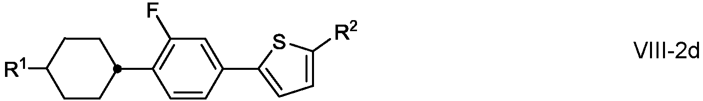 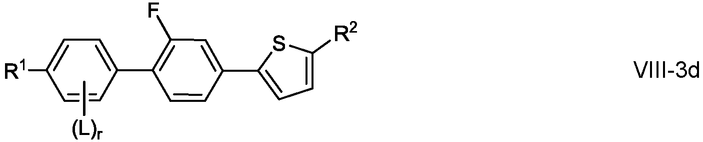 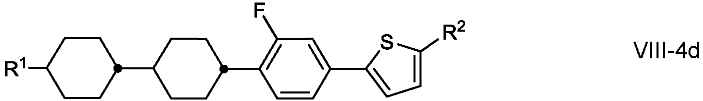 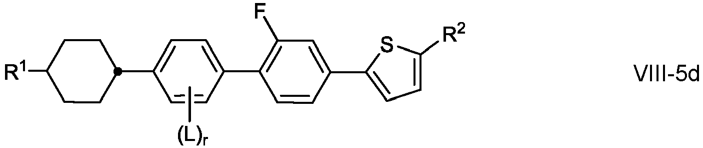 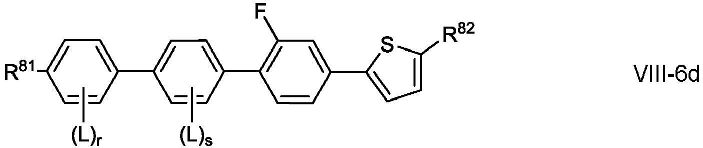 in which R¹, R², L, r and s have the meanings defined above.

In a particularly preferred embodiment, the medium according to the invention comprises one or more compounds selected from the group of the formulae VIII-1a to VIII-6a and one or more compounds selected from the group of the formulae VIII-1b to VIII-6b.

Very particularly preferably the medium comprises one or more compounds selected from the group of compounds of the formulae VIII-3a, VIII-2b, VIII-3c and VIII-3d: 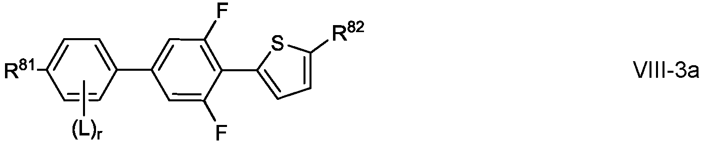 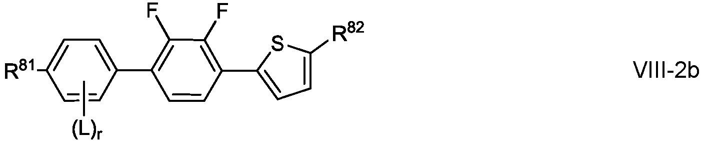 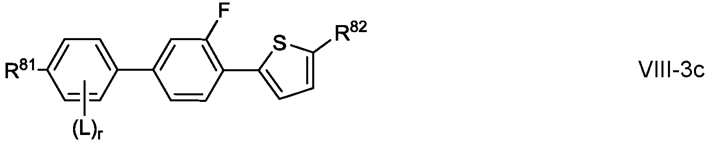 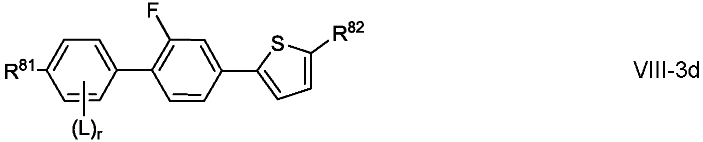 in which R⁸¹, R⁸², L and r have the meanings defined above and preferably r is 0.

Most preferred compounds of formula VIII include, in particular, one or more of the following:

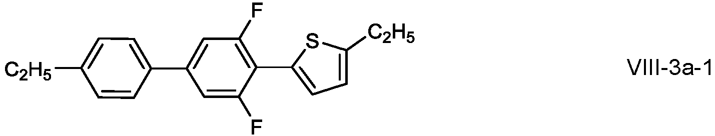

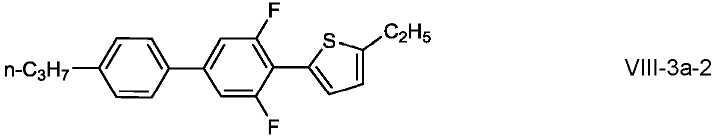

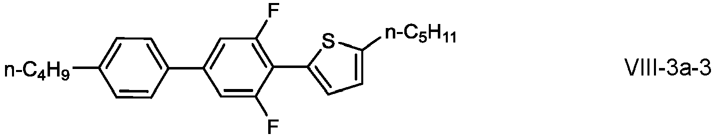

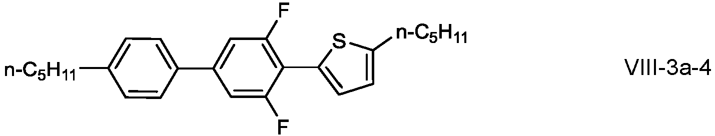

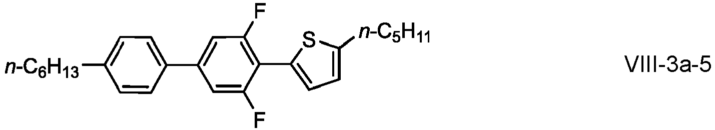

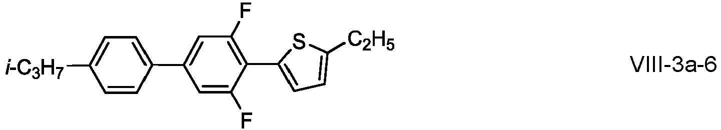

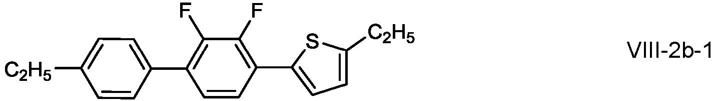

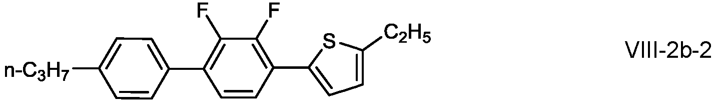

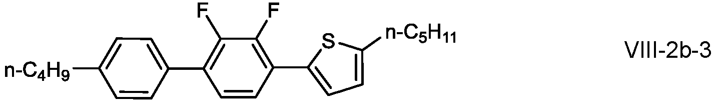

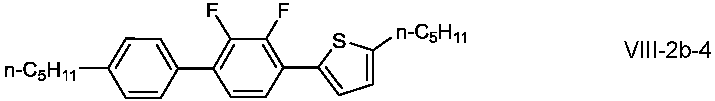

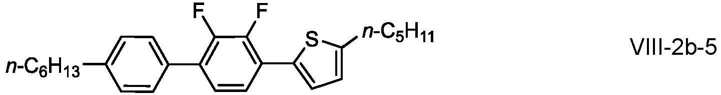

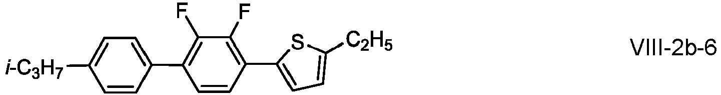

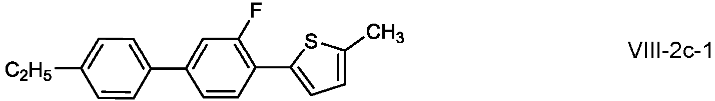

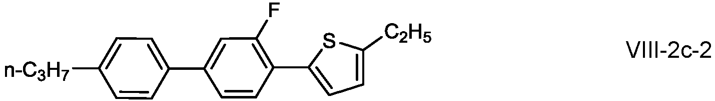

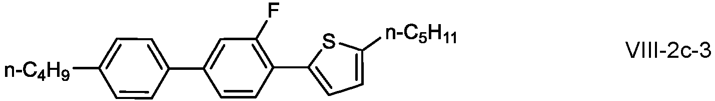

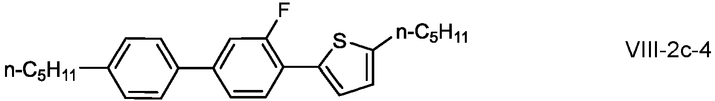

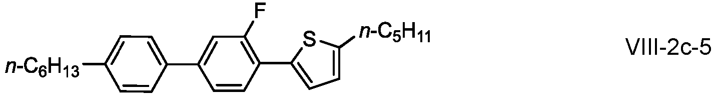

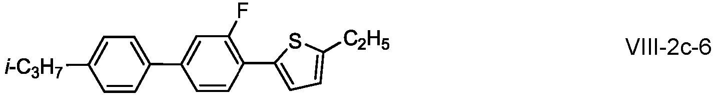

Alternatively, or additionally, the following compounds of formula VIII can be used:

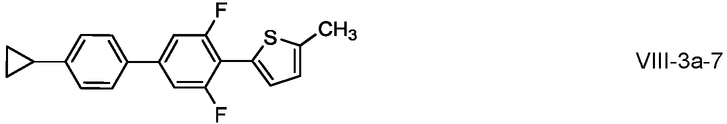

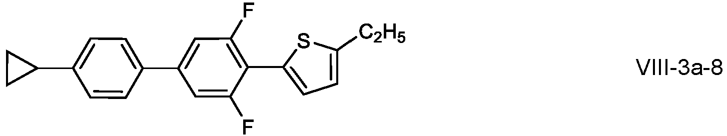

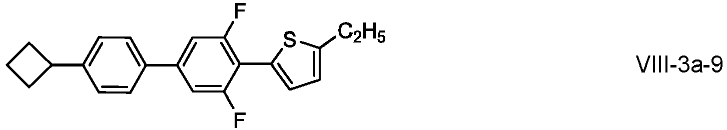

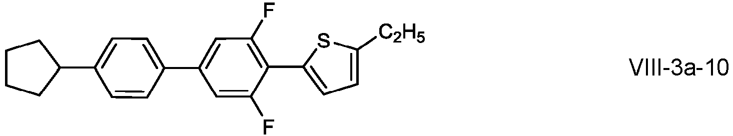

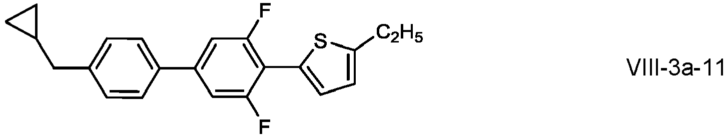

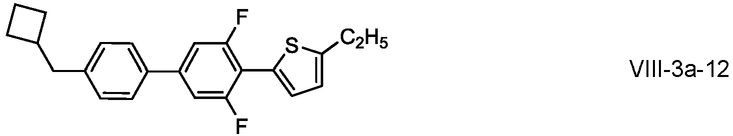

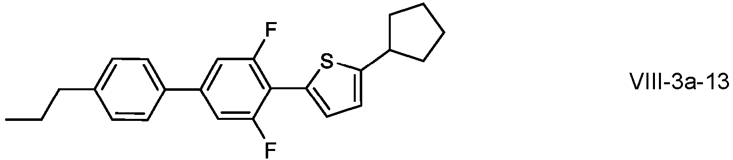

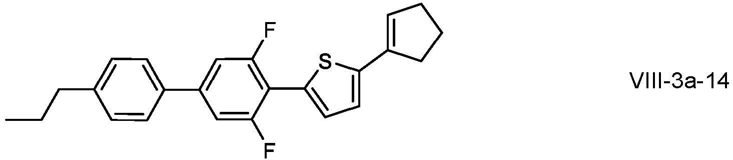

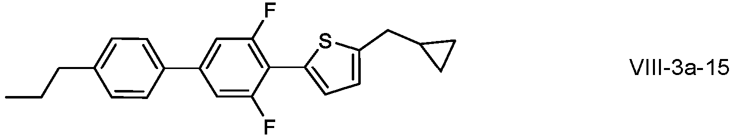

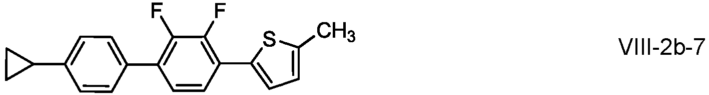

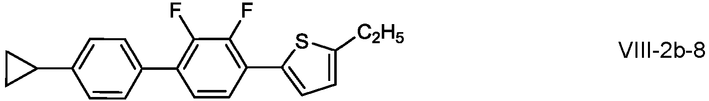

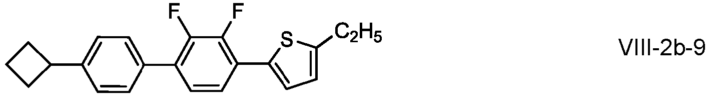

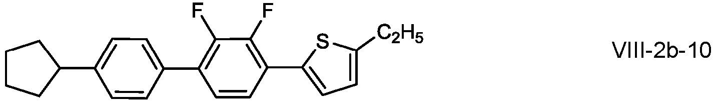

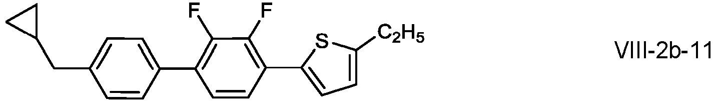

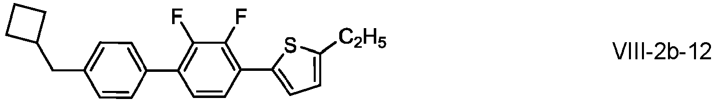

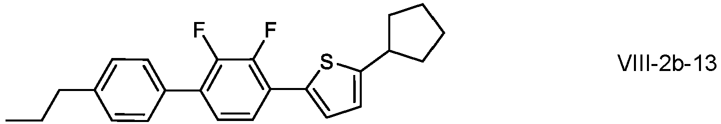

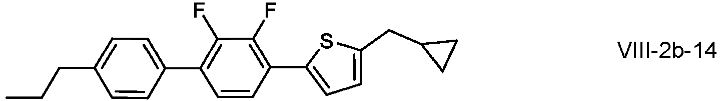

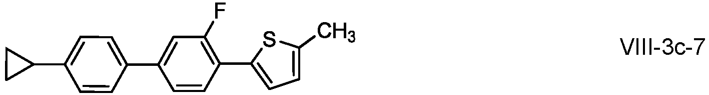

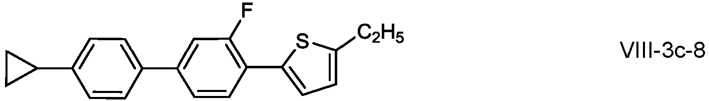

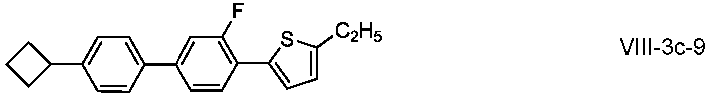

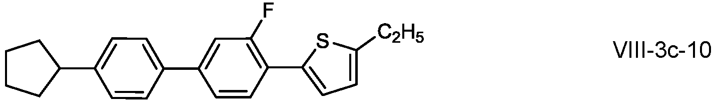

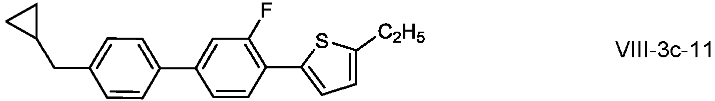

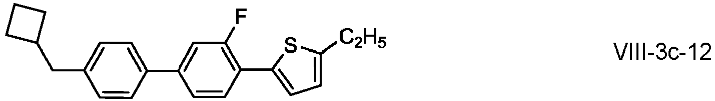

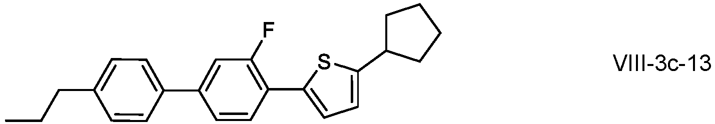

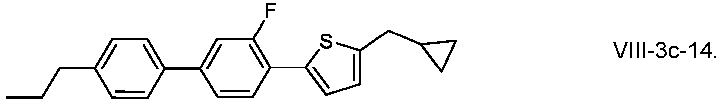

Preferably, the medium according to the invention comprises one or more compounds with negative dielectric anisotropy in addition to the compound of formula I, selected from the group consisting of the formulae YA, YB, YC and YD, B, BA-1 and BA-2 below: 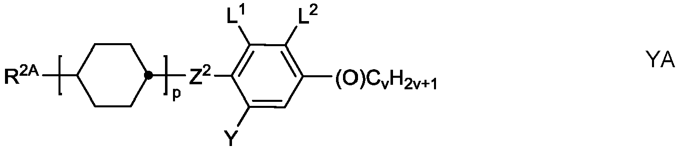 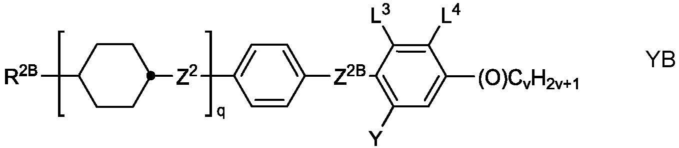 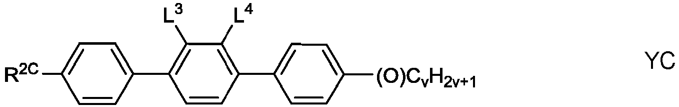 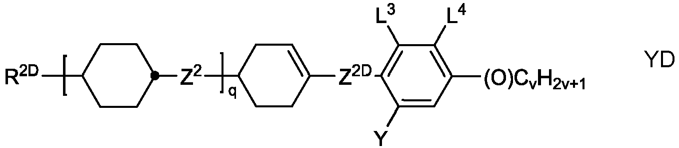 in which
- R^{2A}, R^{2B}, R^{2C} and R^{2D}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 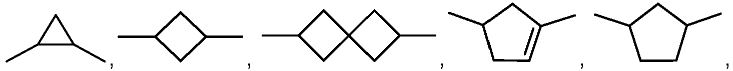 -C≡C-, -CF₂O-, -OCF₂-, -OC-O- or -O-CO- in such a way that O atoms are not linked directly to one another,
- L¹ to L⁴: each, independently of one another, denote F, Cl, CF₃ or CHF₂,
- Y: denotes H, F, Cl, CF₃, CHF₂ or CH₃, preferably H or CH₃, very preferably H,
- Z², Z^{2B} and Z^{2D}: each, independently of one another, denote a single bond, -CH₂CH₂-, -CH=CH-, -CF₂O-, -OCF₂-, -CH₂O-, -OCH₂-, -COO-, -OCO-, -C₂F₄-, -CF=CF- or -CH=CHCH₂O-,
- (O): denotes O or a single bond,
- p: denotes 0, 1 or 2,
- q: denotes 0 or 1, and
- v: denotes 1, 2, 3, 4, 5, or 6,
where the compounds of formula I are excluded from formula YD.

Preferred compounds of the formulae YA, YB, YC and YD are indicated below: 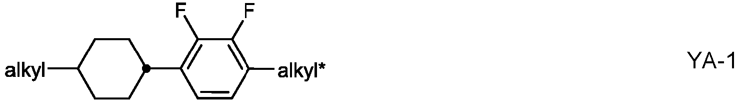 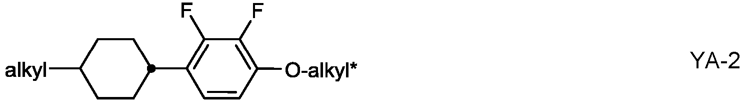 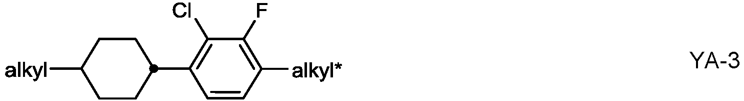 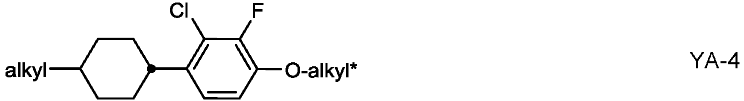 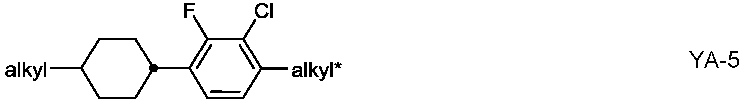 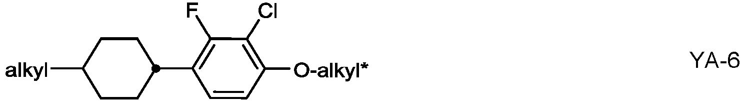 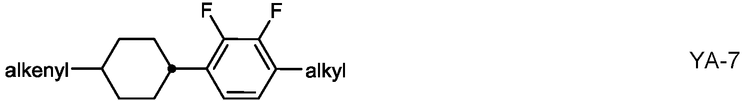 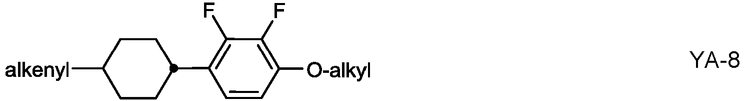 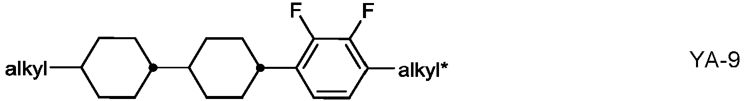 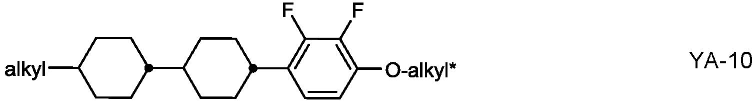 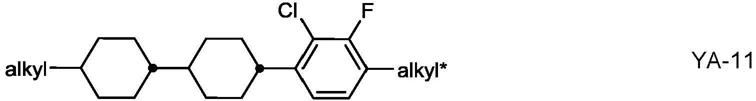 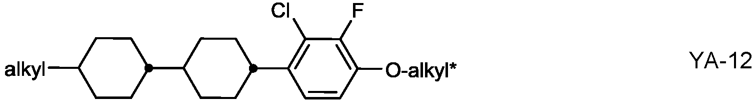 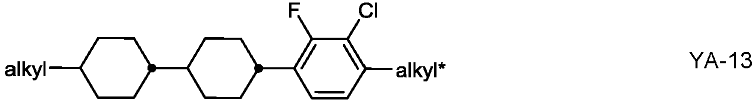 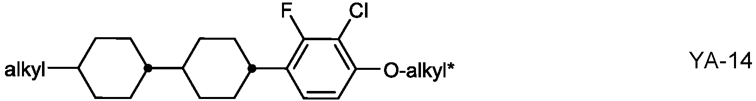 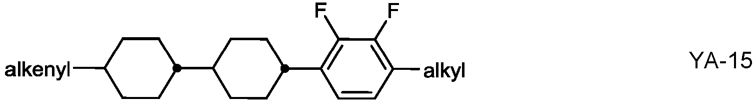 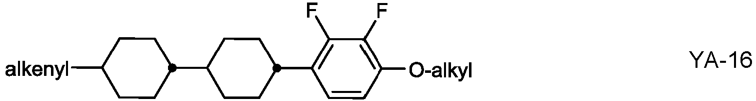 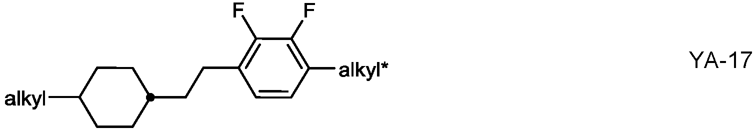 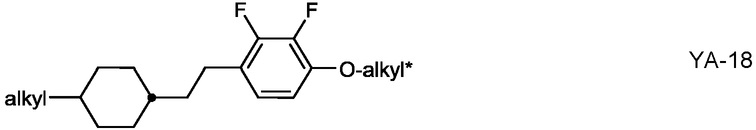 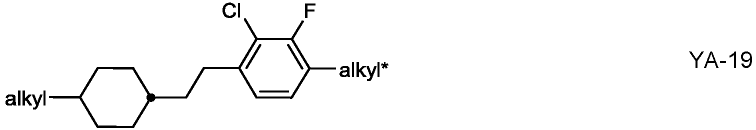 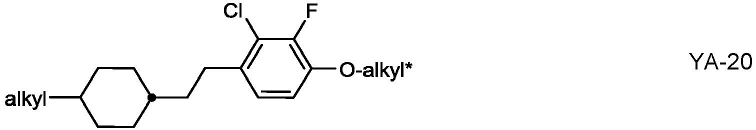 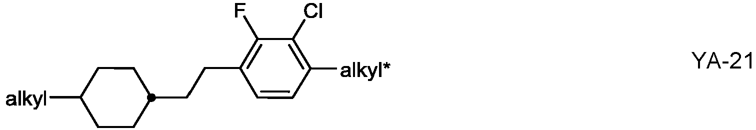 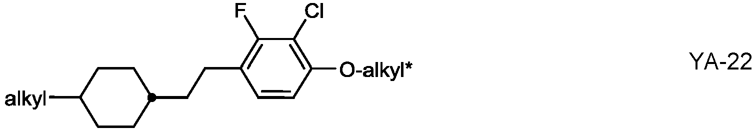 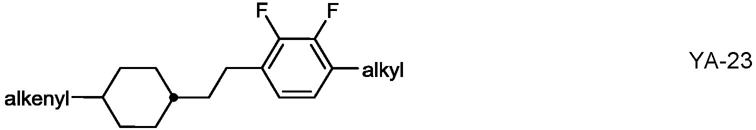 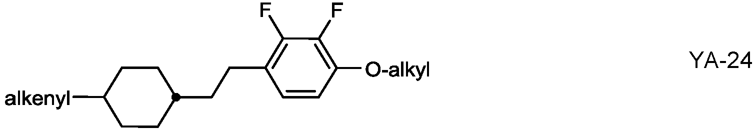 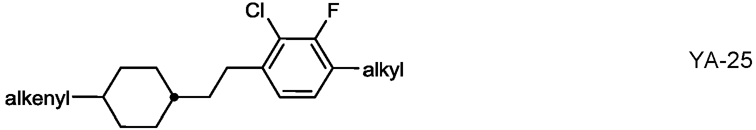 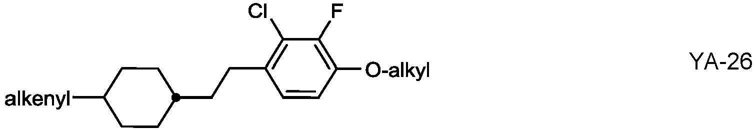 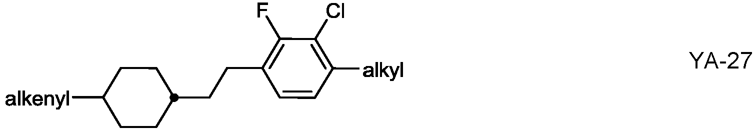 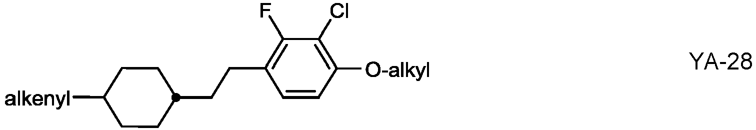 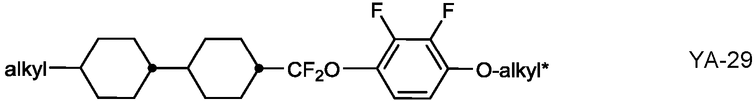 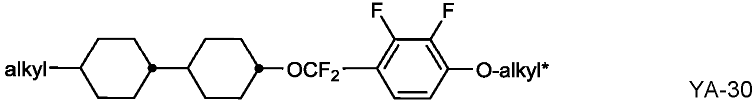 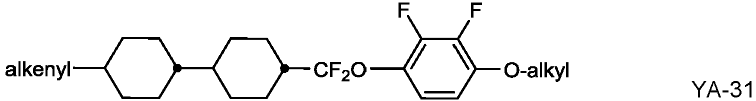 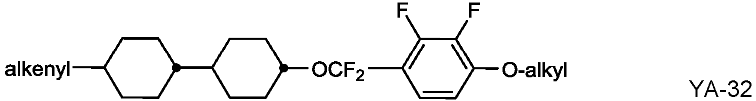 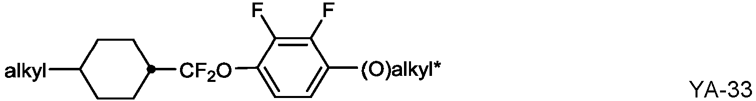 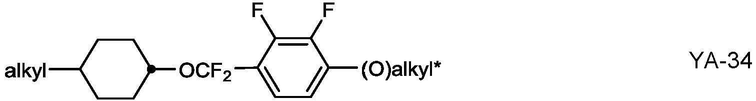 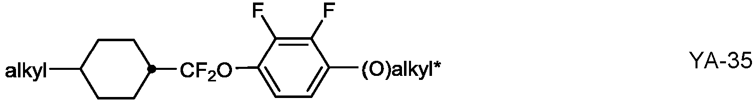 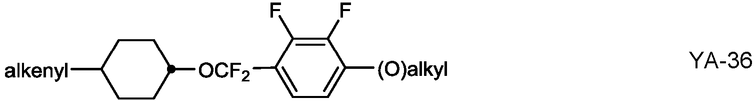 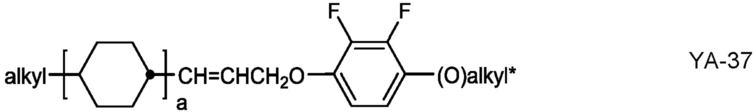 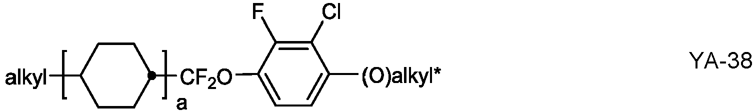 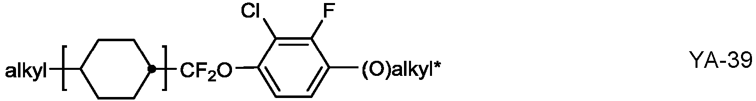 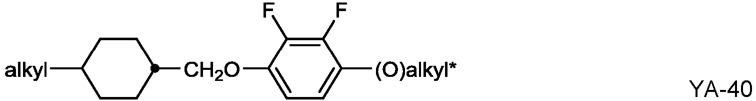 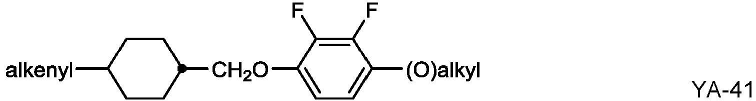 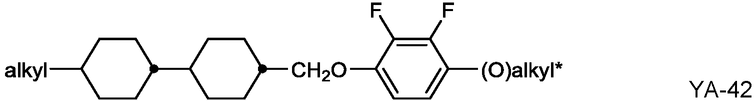 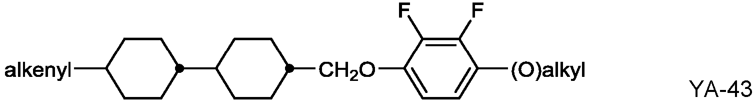 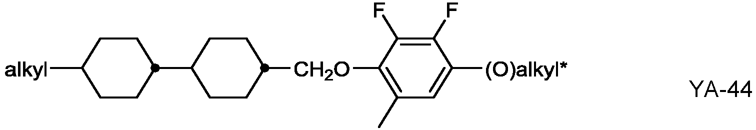 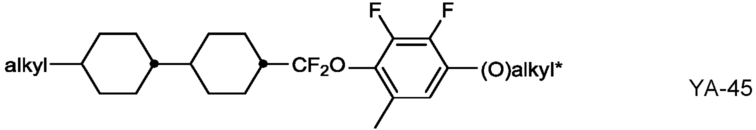 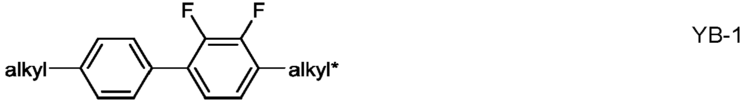 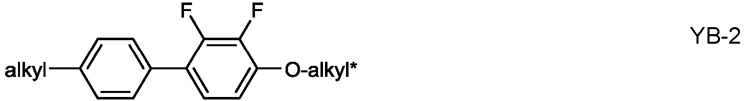 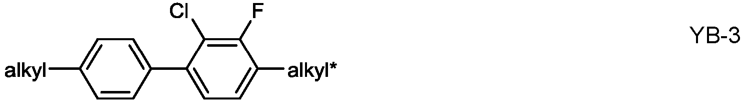 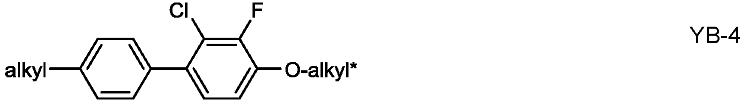 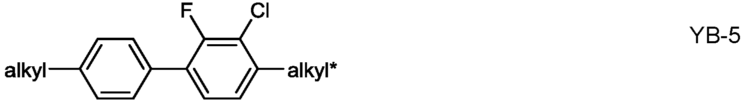 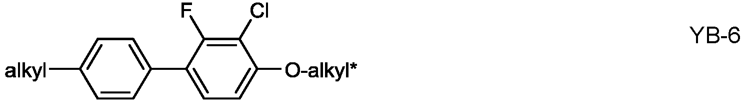 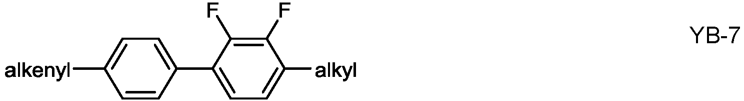 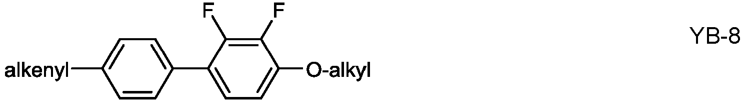 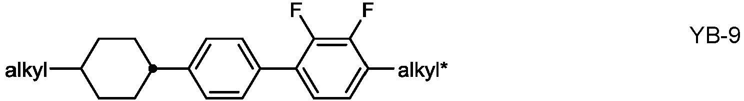 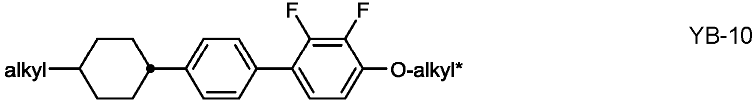 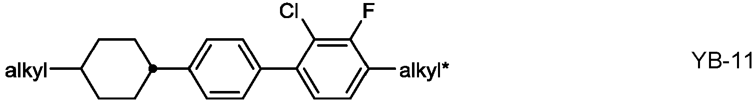 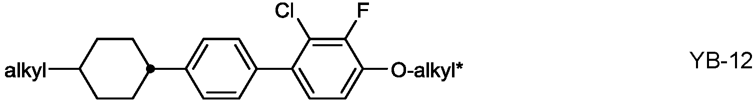 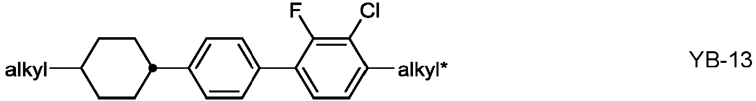 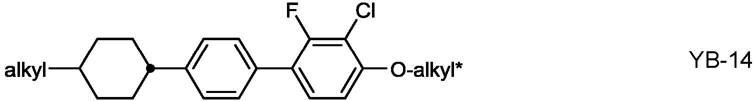 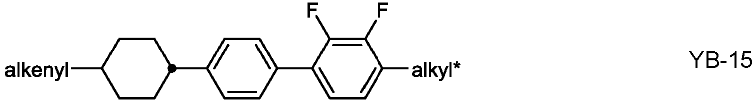 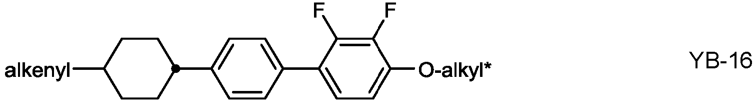 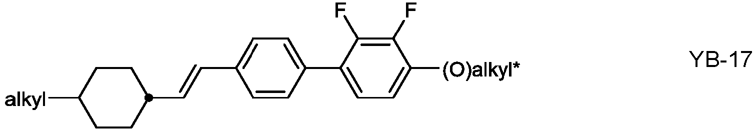 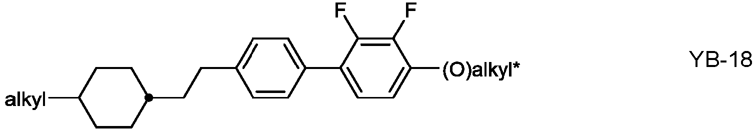 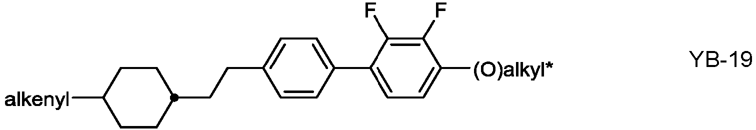 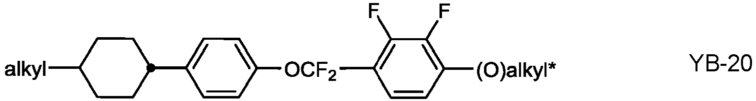 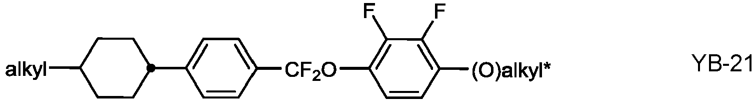 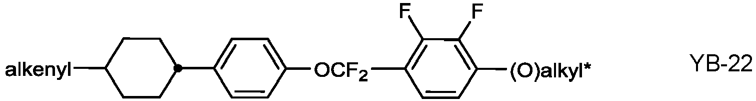 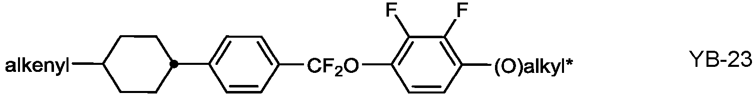 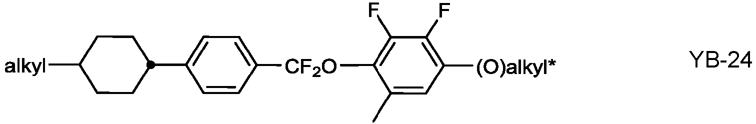 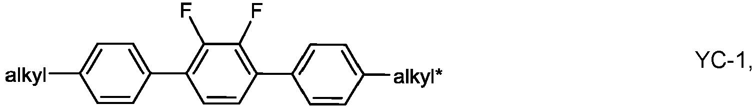 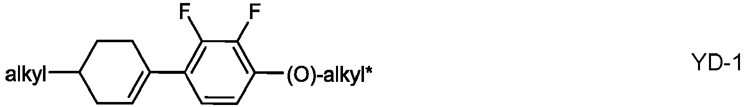 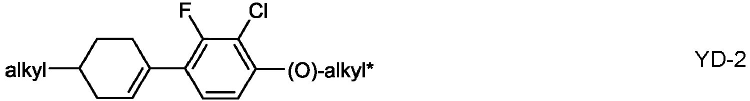 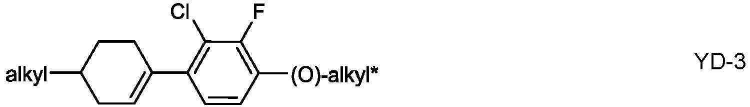 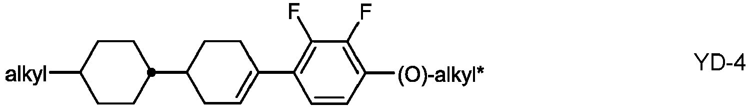 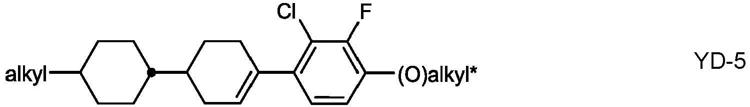 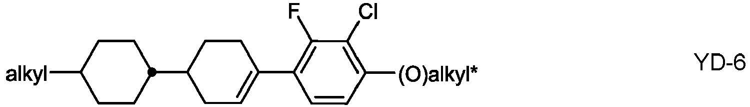 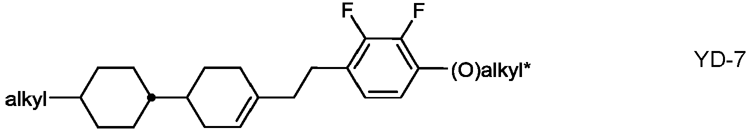 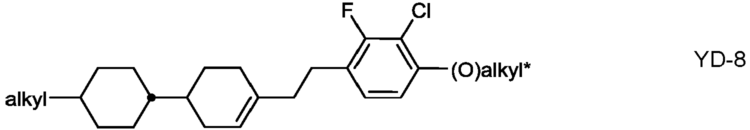 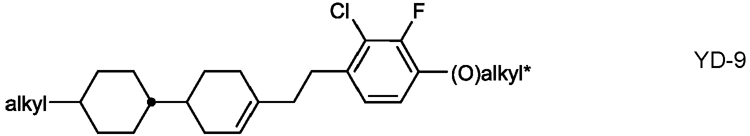 in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred mixtures according to the invention comprise one or more compounds of the formulae YA-2, YA-8, YA-10, YA-16, YA-18, YA-40, YA-41, YA-42, YA-43, YB-2, YB-10, YB-16, YC-1, YD-4 and YD-10.

The proportion of compounds of the formulae YA and/or YB in the mixture as a whole is preferably at least 20 % by weight.

Preferred media according to the invention comprise at least one compound of the formula YC-1, 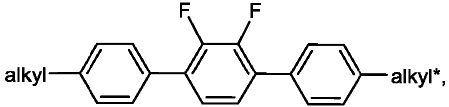 in which alkyl and alkyl* have the meanings indicated above, preferably in amounts of < 5 % by weight, in particular > 3 % by weight.

The medium according to the invention optionally comprises one or more compounds of formula B 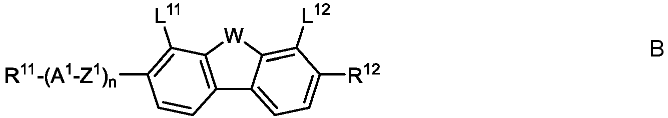 in which
- R¹¹ and R¹²: each, independently of one another, denote H, an alkyl or alkoxy radical having 1 to 15 C atoms, where one or more CH₂ groups in these radicals may each be replaced, independently of one another, by -C≡C-, -CF₂O-, -OCF₂-, -CH=CH-, by -O-, -CO-O- or -O-CO- in such a way that O atoms are not linked directly to one another, and in which one or more H atoms may be replaced by halogen,
- A¹: on each occurrence, independently of one another, denotes
a) 1,4-cyclohexenylene or 1,4-cyclohexylene radical, in which one or two non-adjacent CH₂ groups may be replaced by -O- or -S-,
b) a 1,4-phenylene radical, in which one or two CH groups may be replaced by N, or
c) a radical from the group spiro[3.3]heptane-2,6-diyl, 1,4-bicyclo-[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl,
where the radicals a), b) and c) may be mono- or polysubstituted by halogen atoms,
- n: denotes 0, 1 or 2, preferably 0 or 1,
- Z¹: on each occurrence independently of one another denotes -CO-O-, -O-CO-, -CF₂O- , -OCF₂-, -CH₂O-, -OCH₂-, -CH₂-, -CH₂CH₂-, -(CH₂)₄-, -CH=CH-CH₂O-, -C₂F₄-, -CH₂CF₂-, -CF₂CH₂ -, -CF=CF-, -CH=CF-, -CF=CH-, -CH=CH-, -C≡C- or a single bond, and
- L¹¹ and L¹²: each, independently of one another, denote F, Cl, CF₃ or CHF₂, preferably H or F, most preferably F, and
- W: denotes O or S.

The compounds of formula B are preferably selected from the compounds of the formula B-1 and/or B-2 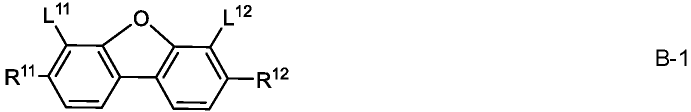 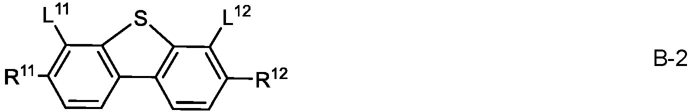 in which the occurring groups have the same meanings as given under formula B above and preferably
- R¹¹ and R¹²: each, independently of one another, an alkyl, alkenyl or alkoxy radical having up to 15 C atoms, more preferably one or both of them denote an alkoxy radical and
- L¹¹ and L¹²: each preferably denote F.

Preferably, the compounds of the formula B-1 selected from the group of compounds of formulae B-1-1 to B-1-11, preferably of formula B-1-6, 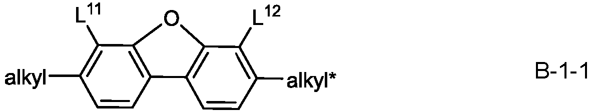 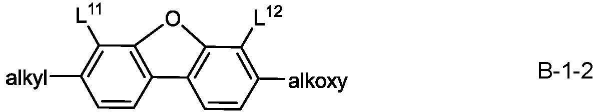 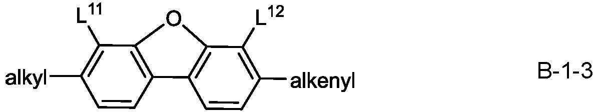 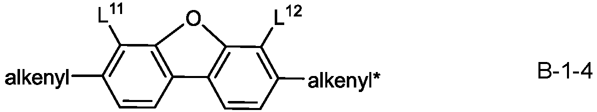 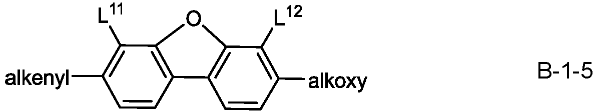 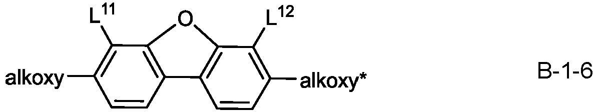 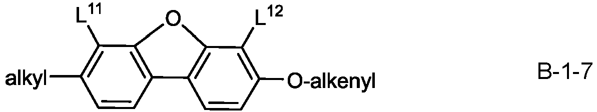 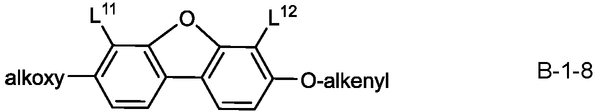 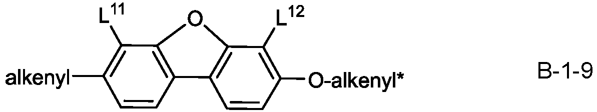 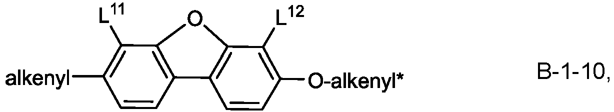 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹¹ and L¹² each, independently of one another, denote F or Cl, preferably both F.

Preferably, the compounds of the formula B-2 are selected from the group of compounds of formulae B-2-1 to B-2-10, preferably of formula B-2-6, 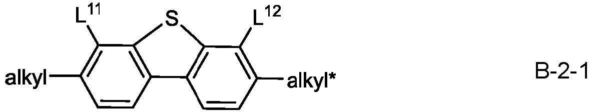 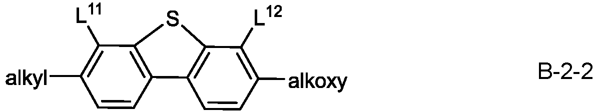 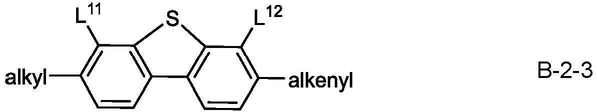 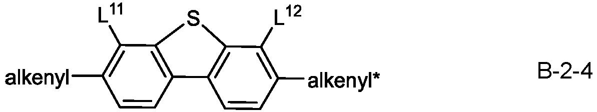 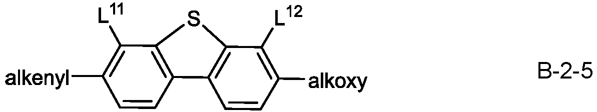 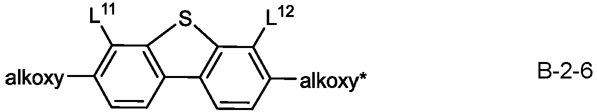 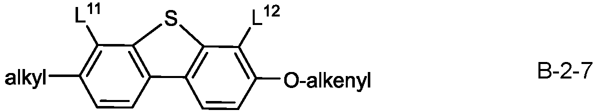 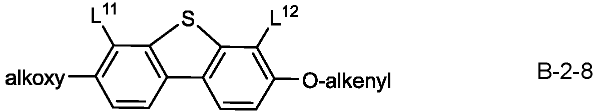 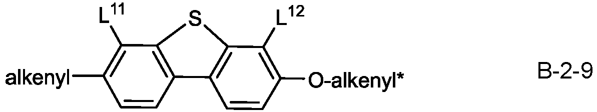 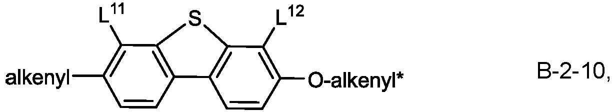 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L¹ and L² each, independently of one another, denote F or Cl, preferably both F.

Optionally the medium comprises one or more compounds of the formula BA-1 and/or BA-2 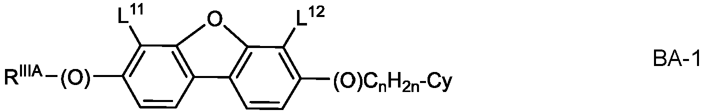 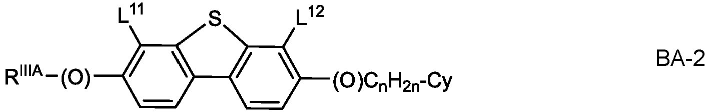 in which L¹¹ and L¹² have the same meanings as given under formula B, (O) denotes O or a single bond,
- R^{IIIA}: denotes alkyl or alkenyl having up to 7 C atoms or a group Cy-CₘH₂ₘ-, m and n are, identically or differently, 0, 1, 2, 3, 4, 5 or 6, preferably 1, 2 or 3, very preferably 1,
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of formula BA-1 and/or BA-2 are contained in the medium either alternatively or in addition to the compounds of formula B, preferably additionally.

Very preferred compounds of the formulae BA-1 and BA-2 are the following: 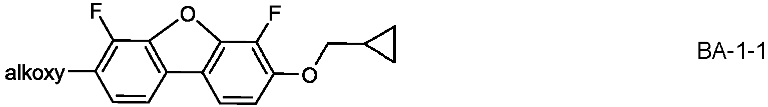 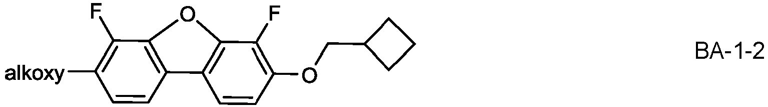 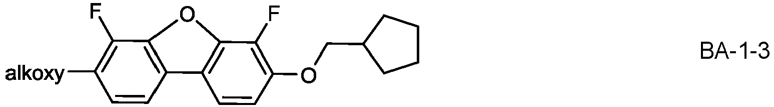 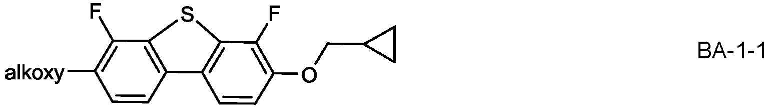 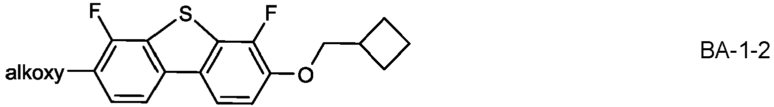 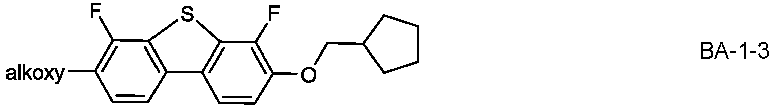 in which alkoxy denotes a straight-chain alkoxy radical having 1-6 C atoms or alternatively -(CH₂)ₙF in which n is 2,3,4, or 5, preferably C₂H₄F.

Alternatively, the medium comprises one or more compounds of the formula 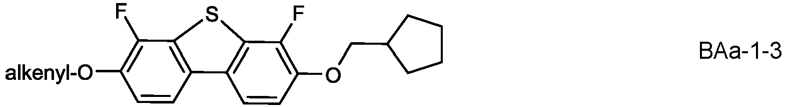 in which alkenyl denotes straight chain alkenyl having 2 to 6 C atoms, preferably 4 C atoms, very preferably CH₃-CH=CH-CH₂- .

In a preferred embodiment of the present invention, the medium comprises one or more compounds of formula B-3 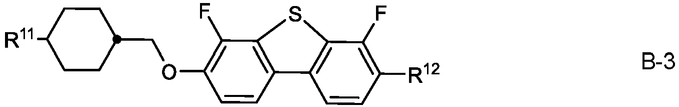 in which
- R¹¹, R¹²: identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, 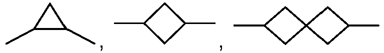 -O-, -CO-O- or -O-CO- in such a way that O 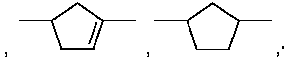 atoms are not linked directly to one another, and in which, in addition, one or more H atoms may be replaced by halogen.

The compounds of formula B-3 are preferably selected from the group of compounds of the formulae B-3-1 to B-3-10:

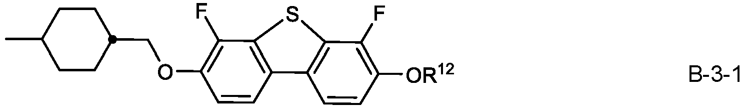

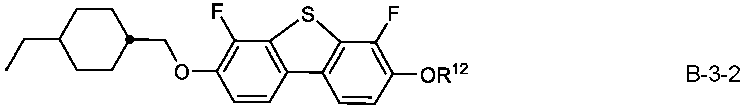

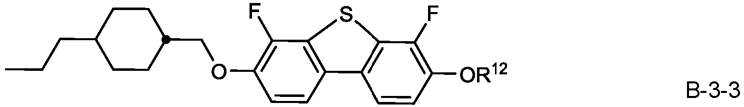

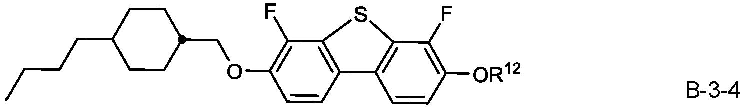

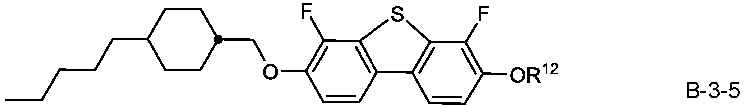

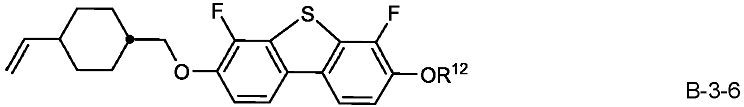

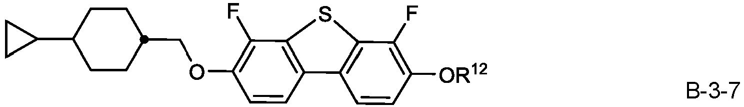

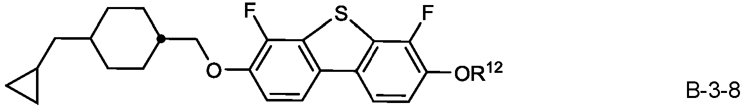

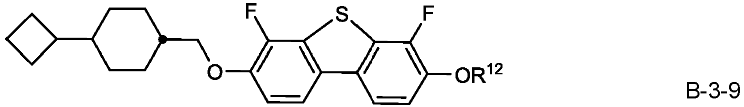

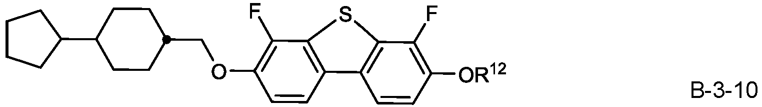

in which R¹² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

In a preferred embodiment of the present invention, the medium comprises one or more compounds of the formulae B-4 to B-6, preferably of formula B-5,

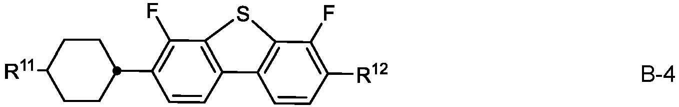

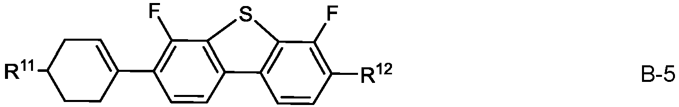

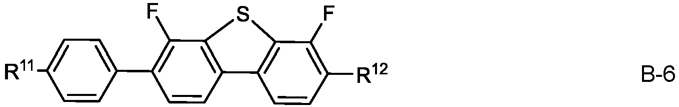

in which the occurring groups have the meanings given above, R¹¹ preferably denotes straight-chain alkyl and R¹² preferably denotes alkoxy, each having 1 to 7 C atoms.

In a preferred embodiment the media comprise one or more compounds of the formula I selected from the group of compounds of formulae B-7 to B-9, preferably of formula B-8,

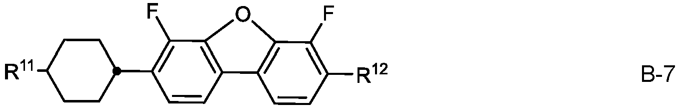

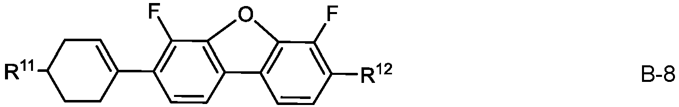

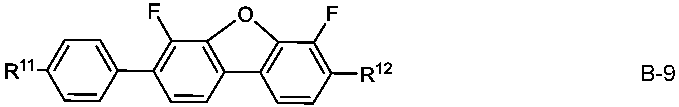

in which the parameters have the meanings given above, R¹¹ preferably denotes straight-chain alkyl and R¹² preferably denotes alkoxy each having 1 to 7 C atoms.

In a preferred embodiment, the medium according to the invention comprises one or more HALS-stabilisers of the formula H: 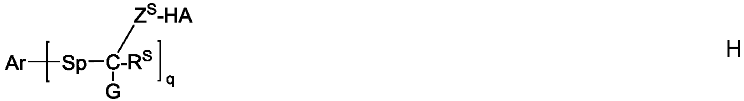 in which
- Ar: denotes a methylene group or an aromatic hydrocarbon group having 6 to 40 C atoms or a heteroaromatic hydrocarbon group having 4 to 40 C atoms; preferably an aromatic hydrocarbon group having 6 to 40 C atoms;
- Sp: denotes a spacer group;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond; 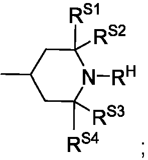
- HA: denotes
- R^{H}: denotes H, O^{•}, CH₃, OH or OR^{S};
- R^{S1}, R^{S2}, R^{S3} and R^{S4},: identically or differently, denote alkyl having 1 to 6 C atoms, preferably having 1 to 3 C atoms, very preferably CH₃;
- G: denotes H or R^{S} or a group Z^{S}-HA;
- z: is an integer from 1 to 6, and
- q: is 2, 3 or 4, preferably 3 or 4;

The compounds of formula I are preferably selected from the compounds of the formulae H-1, H-2 and H-3: 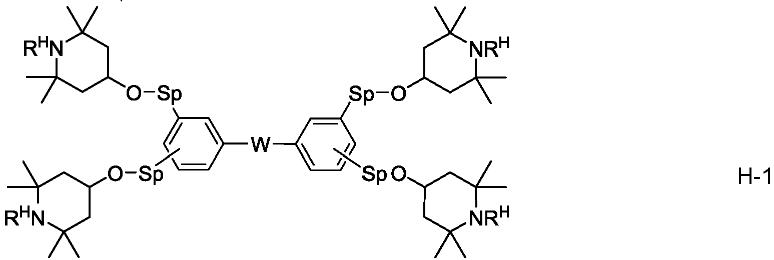 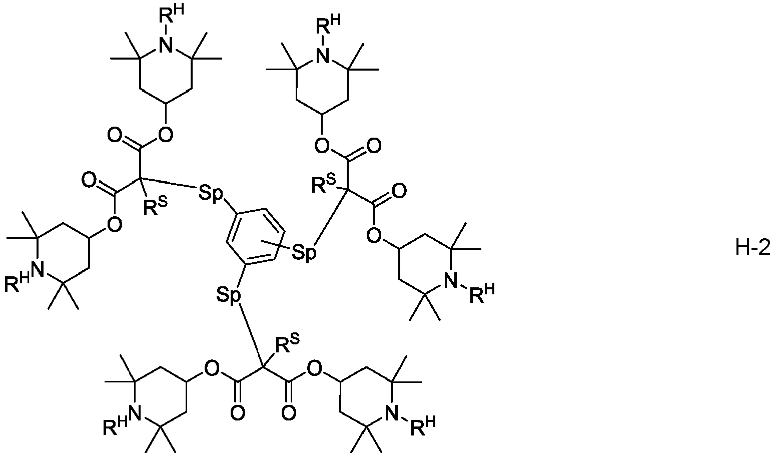 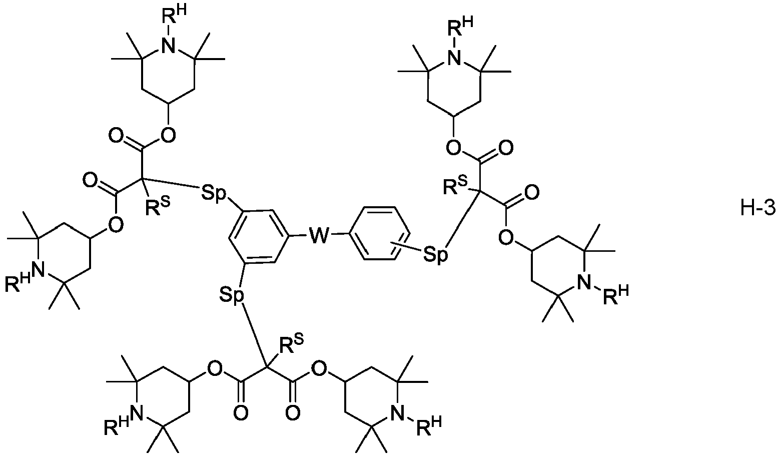
in which R^{H} has the meanings given above and preferably denotes H or O·,
Sp on each occurrence, identically or differently, denotes a spacer group, and W denotes linear or branched, optionally unsaturated alkylene having 1 to 12 C atoms, in which one or more non-adjacent -CH₂- groups may be replaced with -O-.

Preferred compounds of formula H-1 are selected from the compounds of the formula H-1-1: 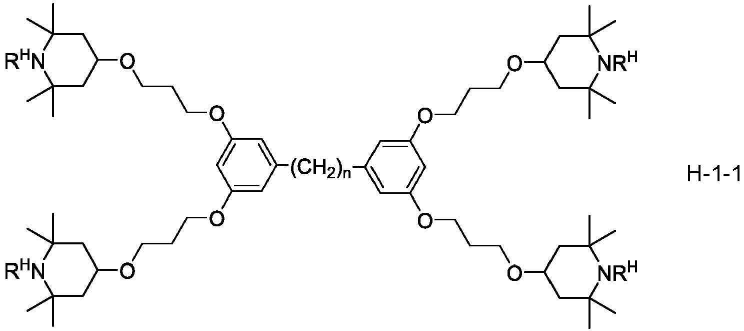 in which R^{H} has the meanings given above and preferably denotes H or O·, and n is an integer from 0 to 12, preferably 5, 6, 7, 8 or 9, very preferably 7.

Preferred compounds of formula H-2 are selected from the compounds of the formula H-2-1:

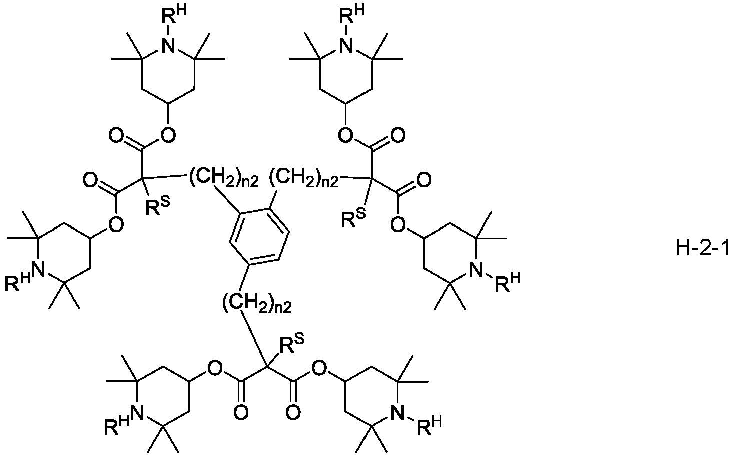

in which R^{H} has the meanings given above and preferably denotes H or O·, and n2, on each occurrence identically or differently, preferably identically, is an integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Preferred compounds of formula H-3 are selected from the compounds of the formula H-3-1: 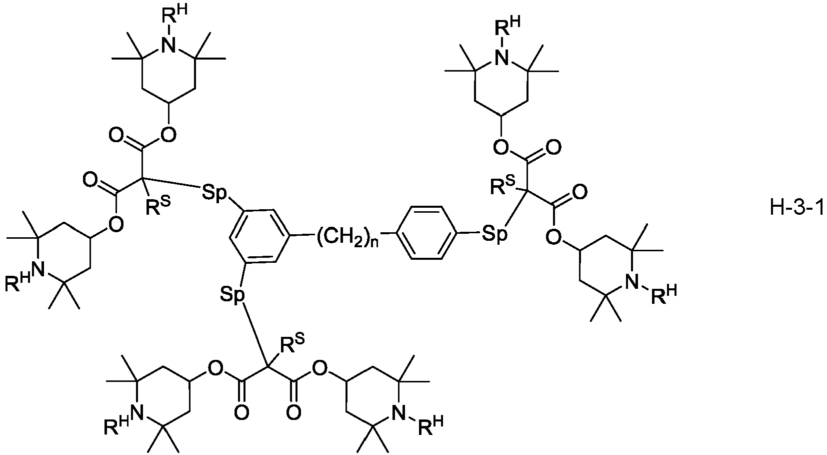 in which R^{H} has the meanings given above and preferably denotes H or O·, and n is an integer from 0 to 12, preferably 5, 6, 7, 8 or 9, very preferably 7.

Preferably, the media according to the invention, comprise a stabilizer selected from the group of compounds of the formulae ST-1 to ST-19. 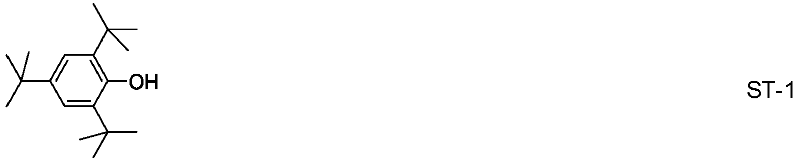 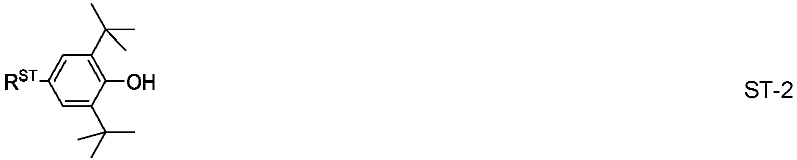 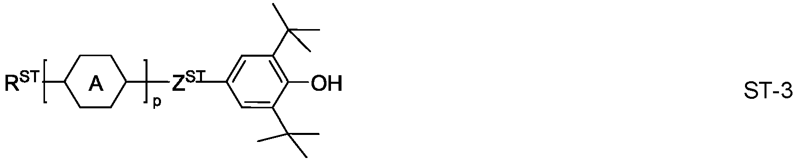 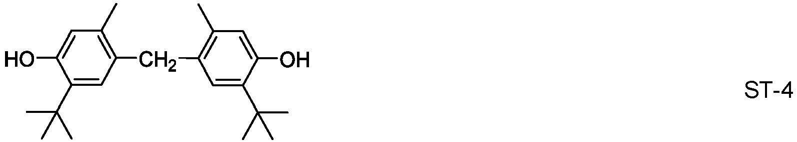 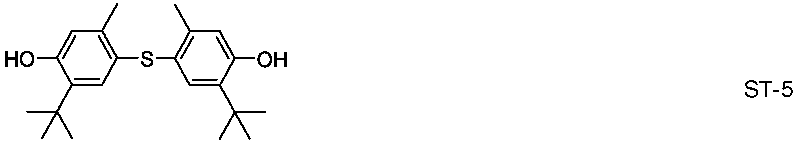 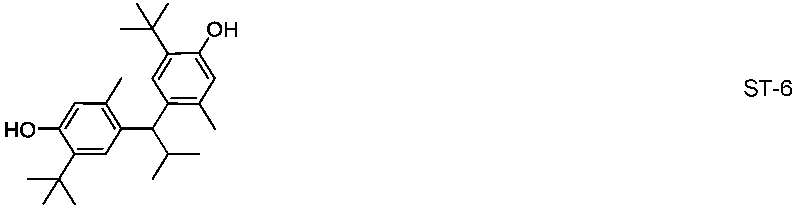 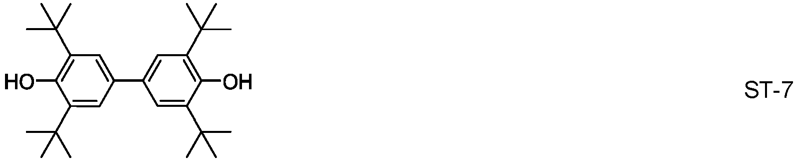 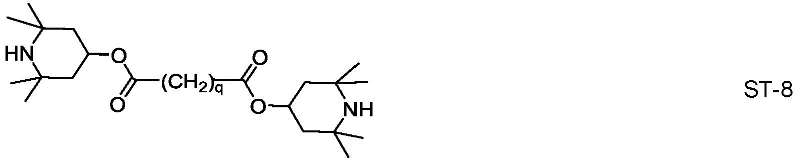 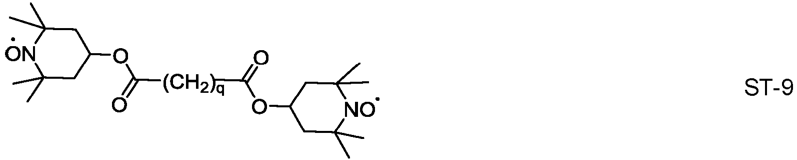 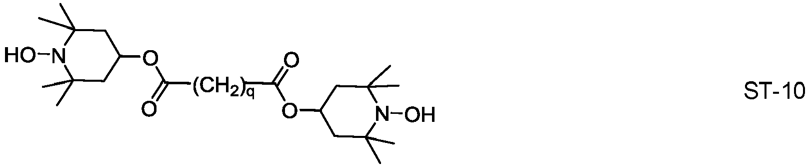 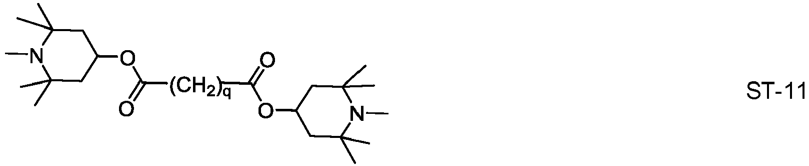 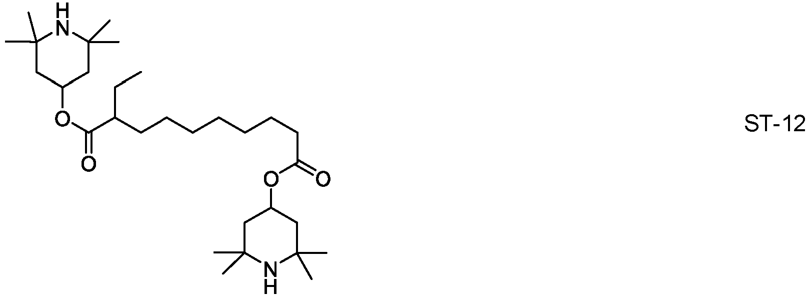 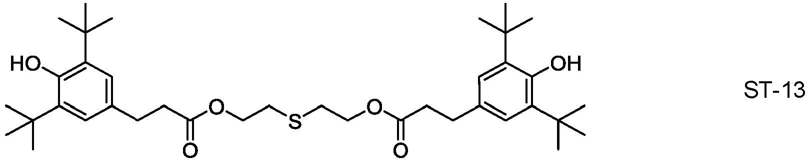 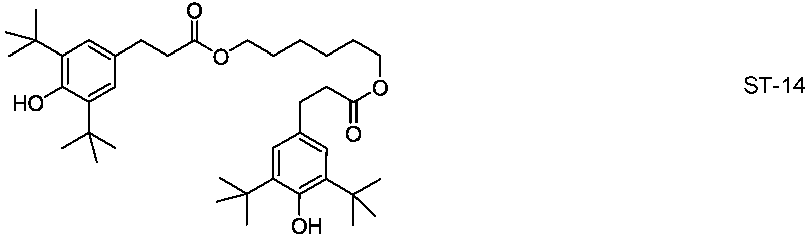 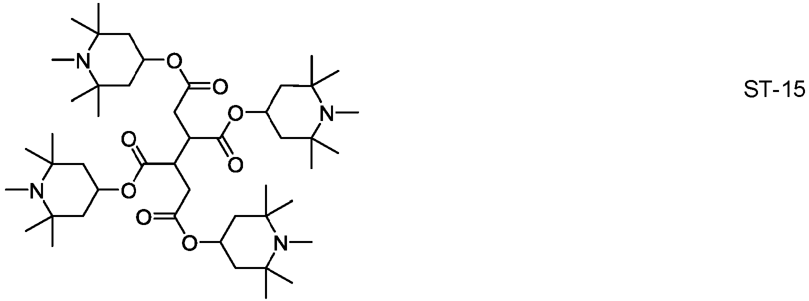 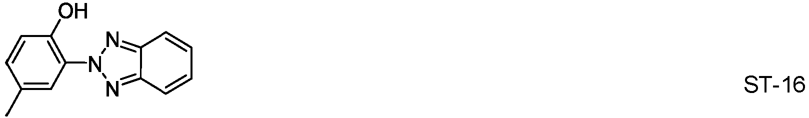 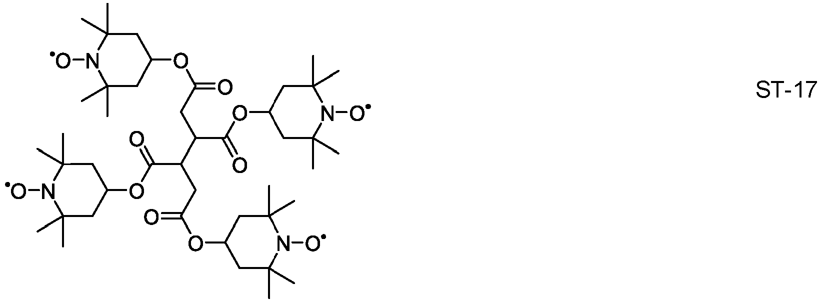 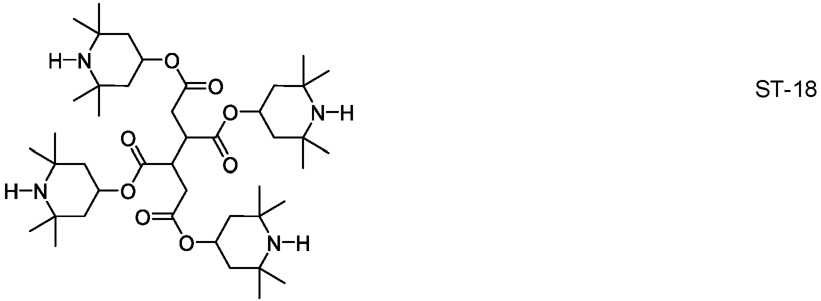 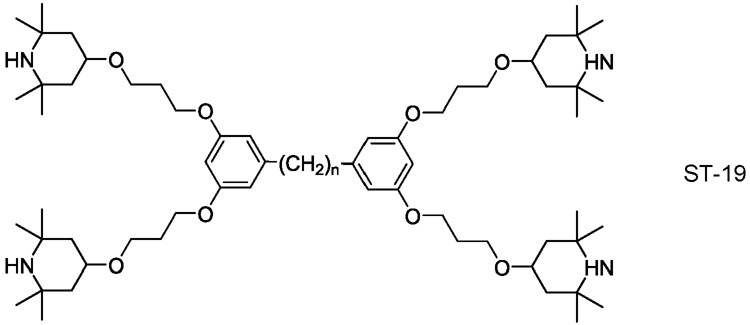 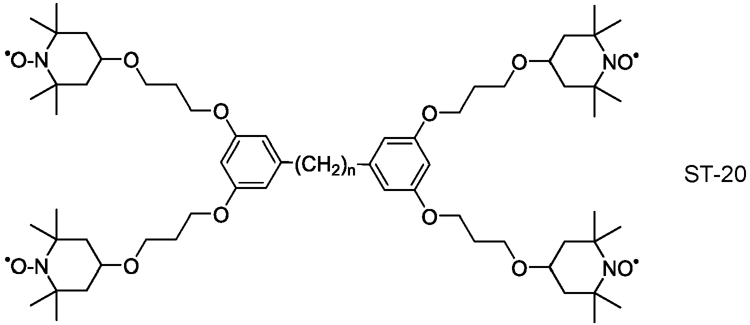 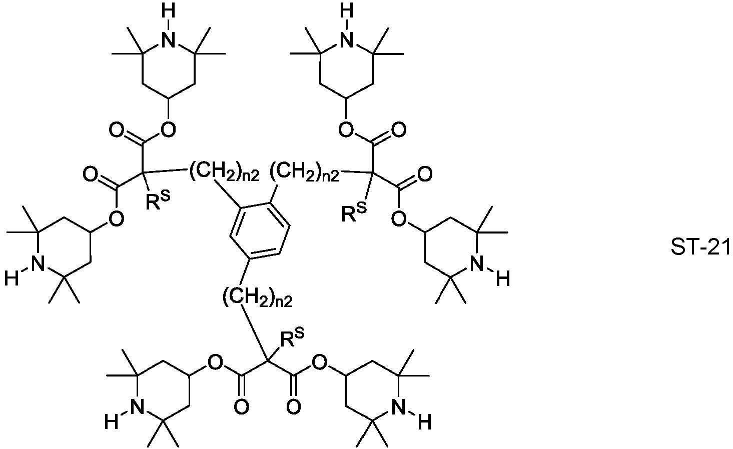 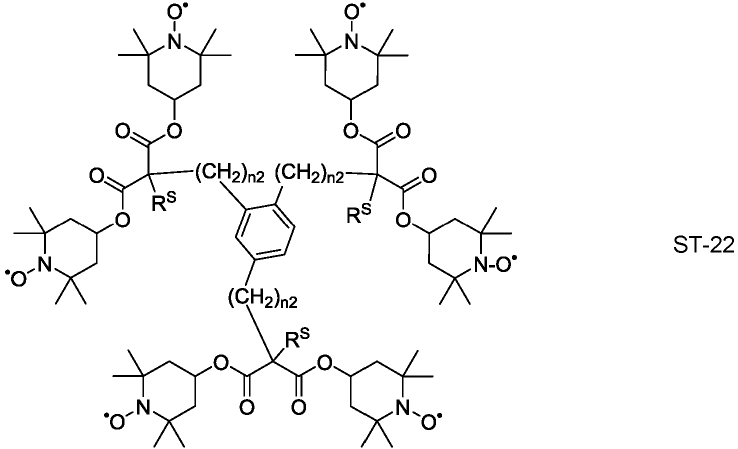 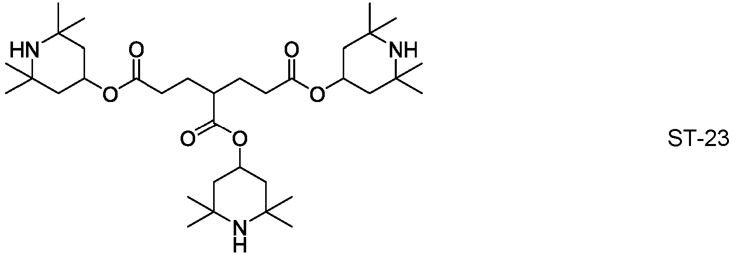 in which
R^{ST} denotes H, an alkyl or alkoxy radical having 1 to 15 C atoms, where, in addition, one or more CH₂ groups in these radicals may each be replaced, independently of one another, by -C≡C-, -CF₂O-, -OCF₂-, -CH=CH-, 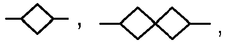 -O-, -CO-O-, -O-CO- in such a way that O atoms are not linked directly to one another, and in which, in addition, one or more H atoms may be replaced by halogen, 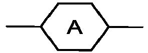 denotes 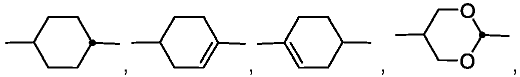 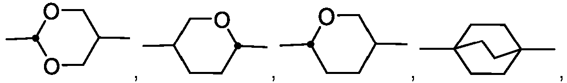 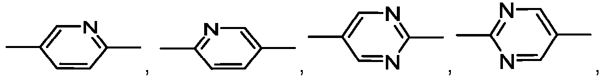 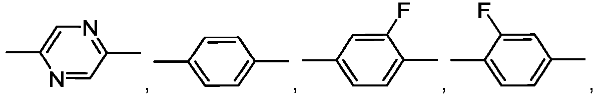 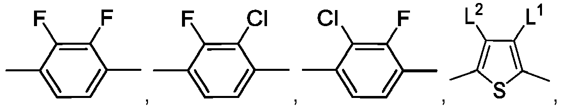 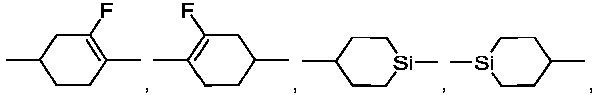 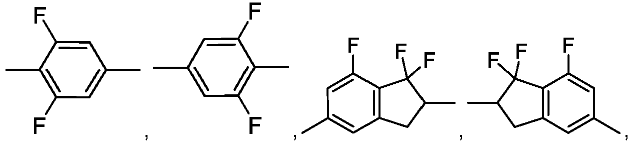 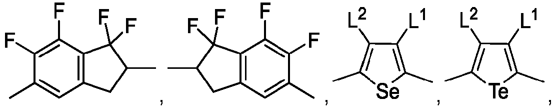 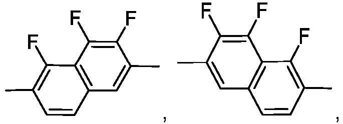 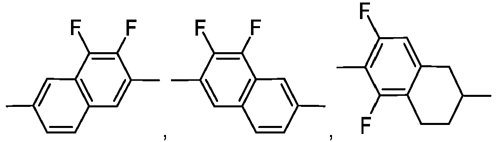 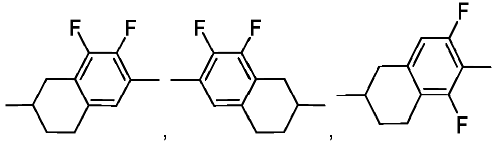 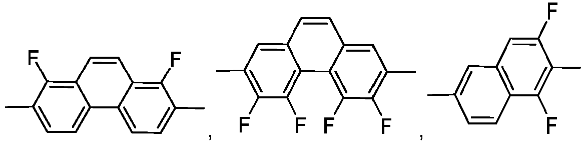 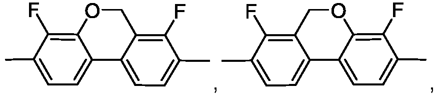 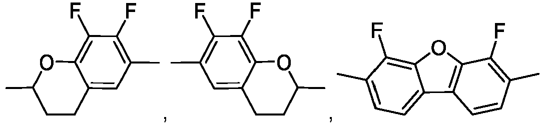
Z^{ST} each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C≡C- or a single bond,
L¹ and L² each, independently of one another, denote F, Cl, CF₃ or CHF₂,
n is an integer from 0 to 12, preferably 5, 6, 7, 8 or 9, very preferably 7,
n2, on each occurrence identically or differently, preferably identically, is an integer from 1 to 12, preferably 2, 3, 4, 5, or 6, very preferably 3, and
R^{S} on each occurrence identically or differently, preferably identically, denotes alkyl having 1 to 6 C atoms, preferably n-butyl,
p denotes 1 or 2,
q denotes 1, 2, 3, 4, 5, 6, 7, 8, 9 or 10.

Of the compounds of the formula ST, special preference is given to the compounds of the formulae 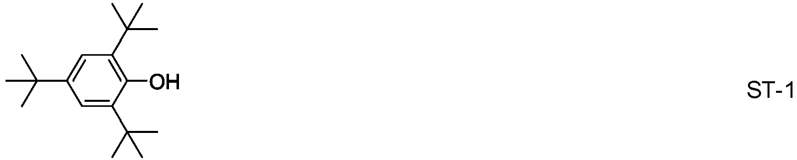 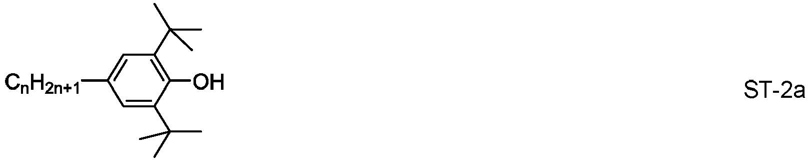 in which n = 1, 2, 3, 4, 5, 6 or 7, preferably n = 1 or 7 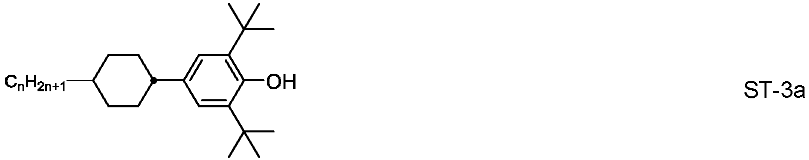 in which n = 1, 2, 3, 4, 5, 6 or 7, preferably n = 3 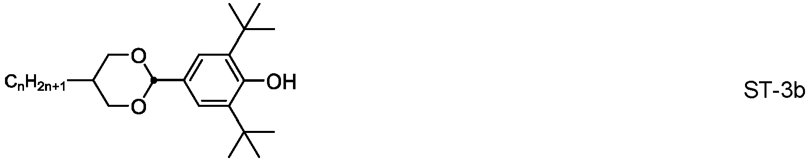 in which n = 1, 2, 3, 4, 5, 6 or 7, preferably n = 3

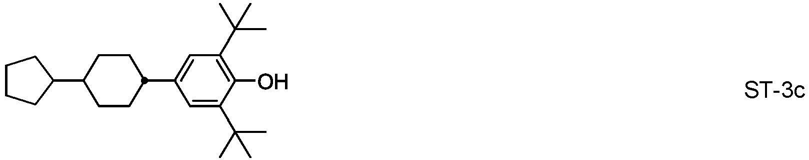

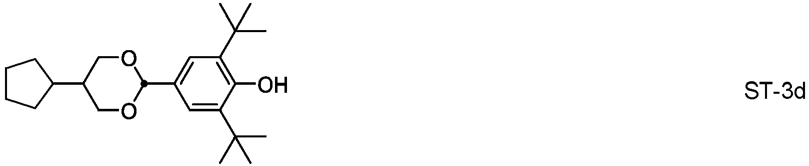

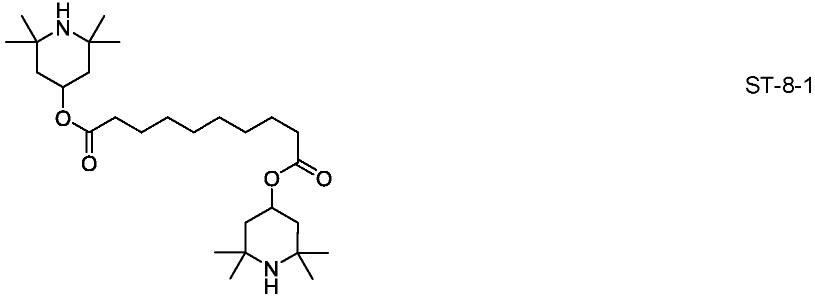

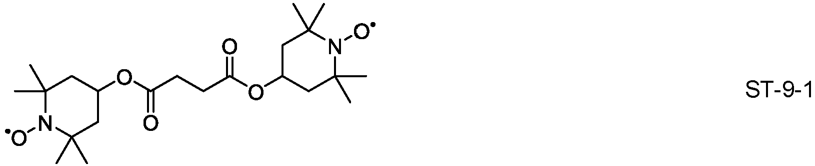

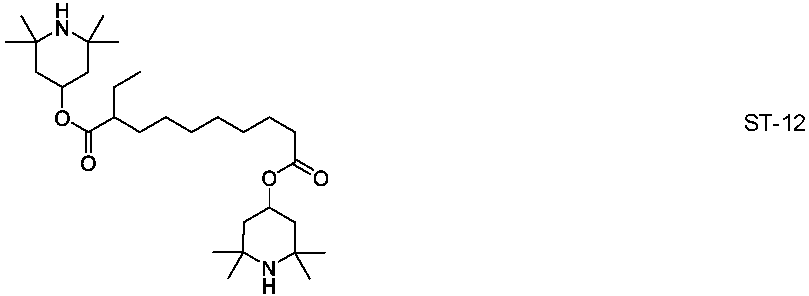

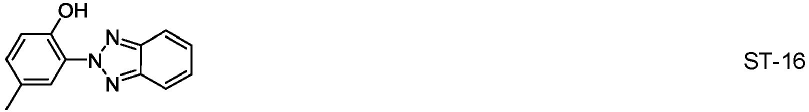

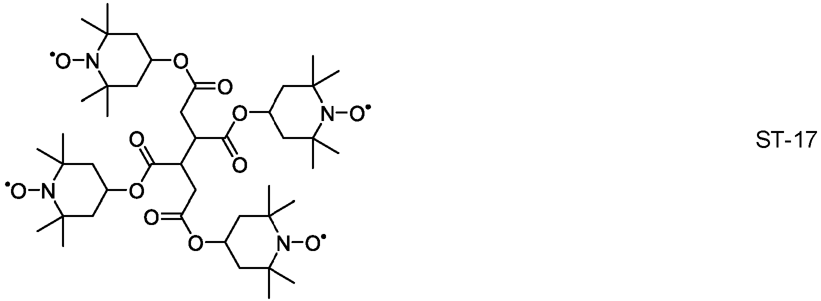

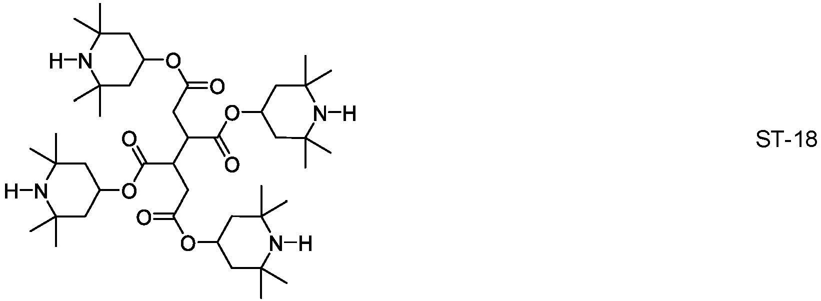

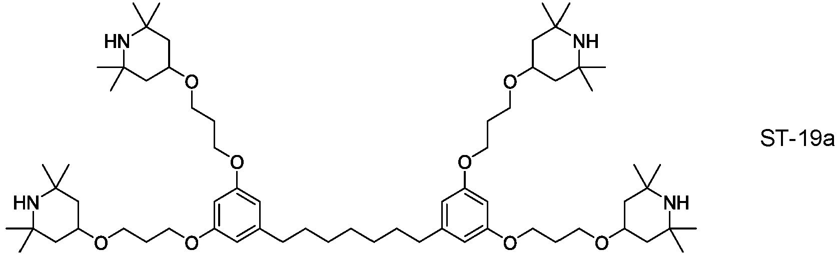

In the compounds of the formulae ST-3a and ST-3b, n preferably denotes 3. In the compounds of the formula ST-2a, n preferably denotes 7.

Very particularly preferred mixtures according to the invention comprise one or more stabilizers from the group of the compounds of the formulae ST-2a-1, ST-3a-1, ST-3b-1, ST-8-1, ST-9-1 and ST-12:

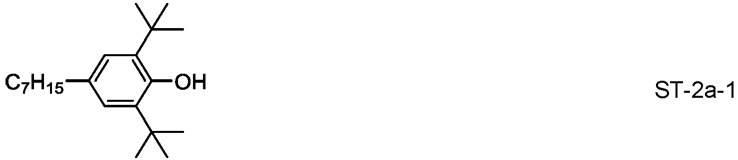

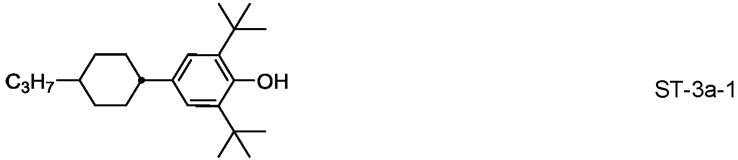

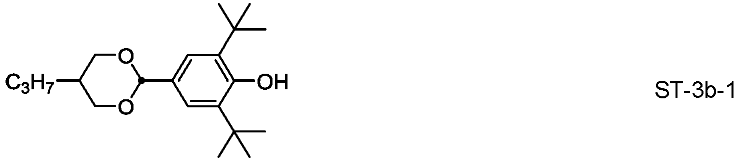

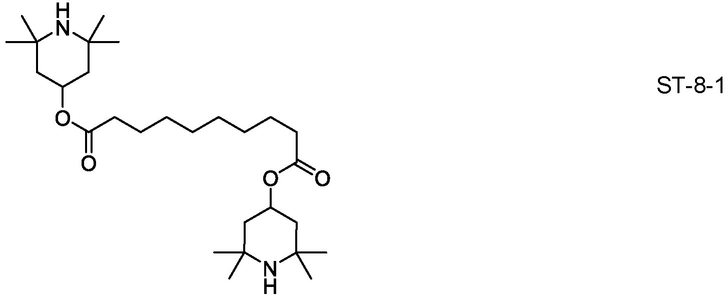

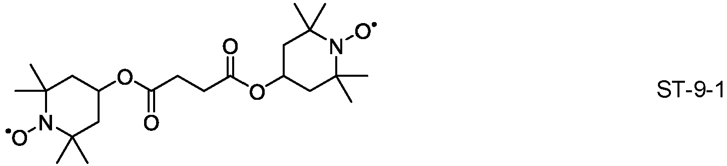

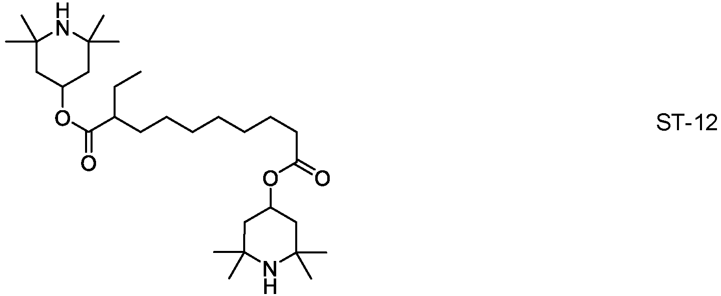

The compounds of the formulae ST-1 to ST-19 are preferably each present in the liquid-crystal mixtures according to the invention in amounts of 0.005 - 0.5%, based on the mixture.

If the mixtures according to the invention comprise two or more compounds from the group of the compounds of the formulae ST-1 to ST-19, the concentration correspondingly increases to 0.01 - 1% in the case of two compounds, based on the mixtures.

However, the total proportion of the compounds of the formulae ST-1 to ST-19, based on the mixture according to the invention, should not exceed 2%.

In another preferred embodiment of the present invention the liquid-crystalline medium additionally comprises one or more polymerisable compounds. The polymerisable compounds are preferably selected from formula M

R^{a}-B¹-(Z^{b}-B²)ₘ R^{b} M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P or P-Sp-,
- P: a polymerisable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
- R⁰ and R⁰⁰: each, independently of one another, denote H or alkyl having 1 to 12 C atoms,
- m: denotes 0, 1, 2, 3 or 4,
- n1: denotes 1, 2, 3 or 4,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
- P and Sp: have the meanings indicated above,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the formula I are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarin, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula M are those in which B¹ and B² each, independently of one another, denote 1,4-phenylene, 1,3-phenylene, naphthalene-1,4-diyl or naphthalene-2,6-diyl,

Very preferred compounds of formula M are selected from the following formulae:

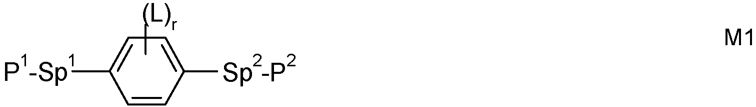

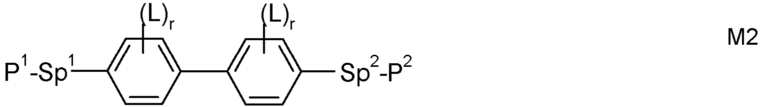

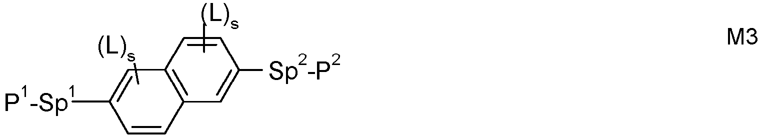

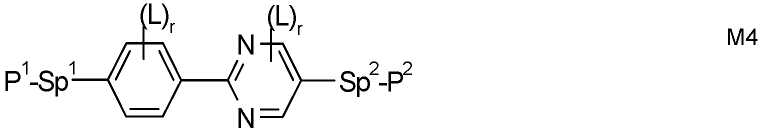

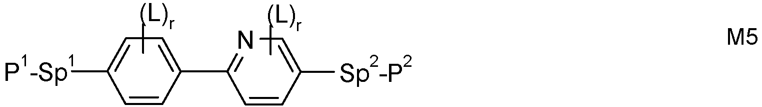

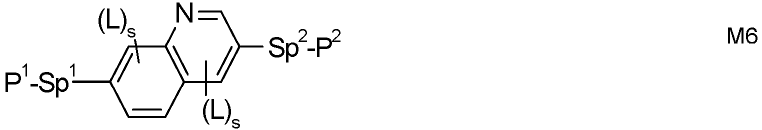

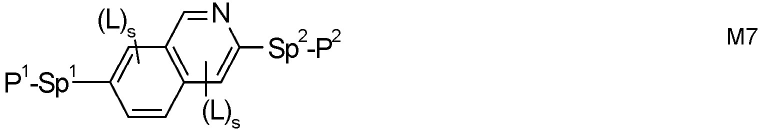

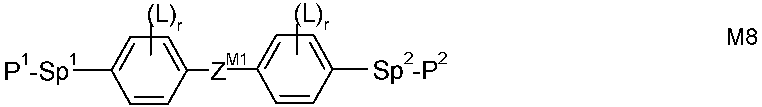

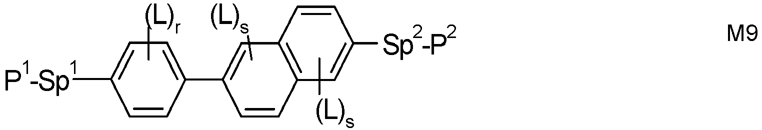

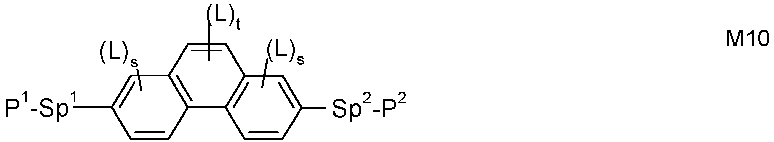

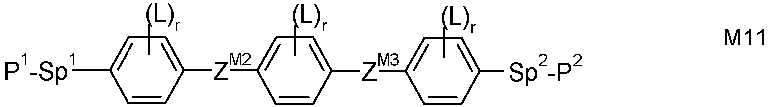

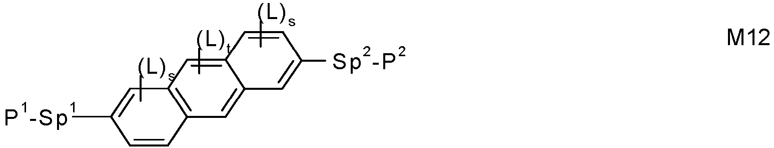

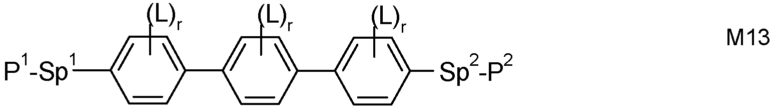

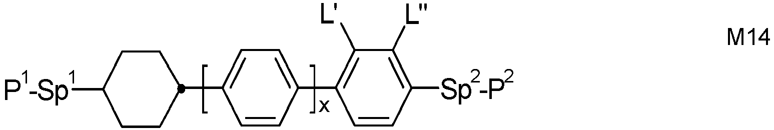

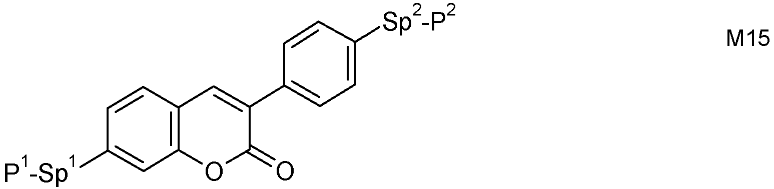

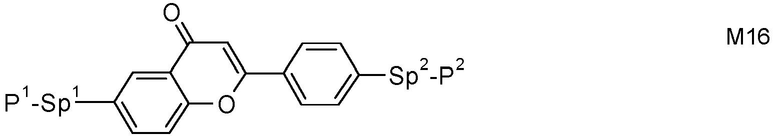

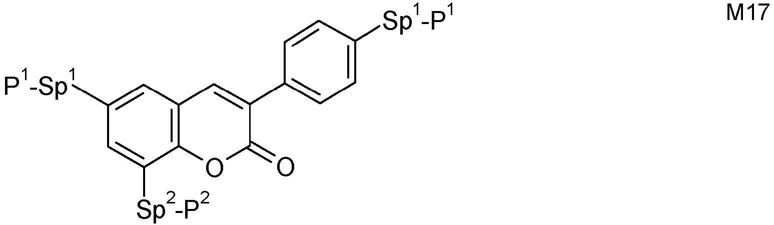

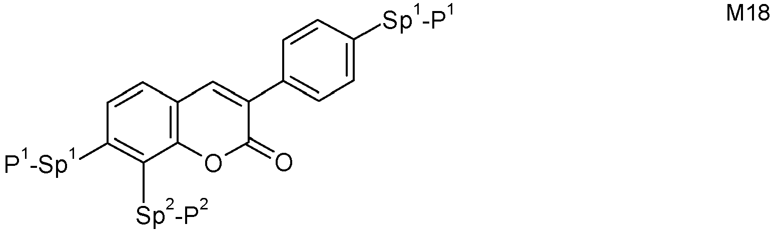

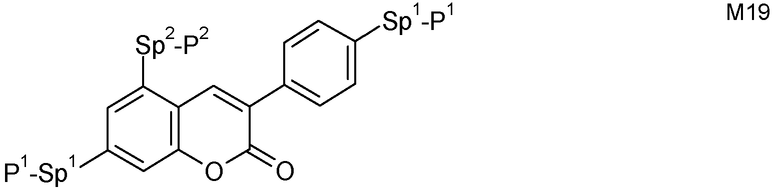

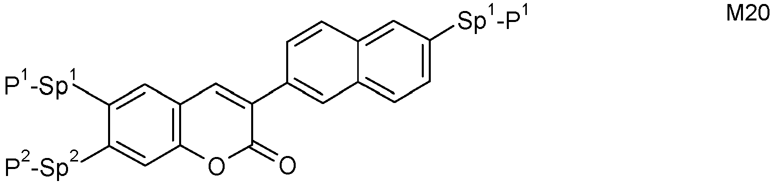

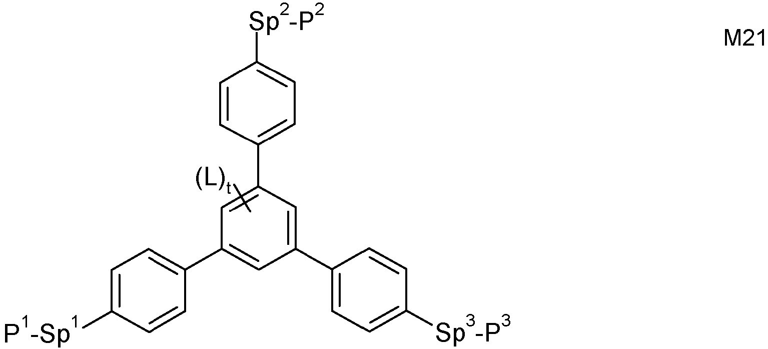

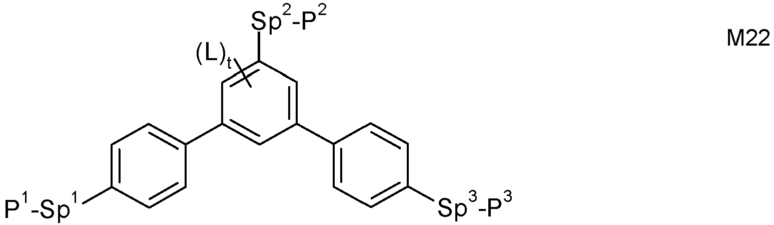

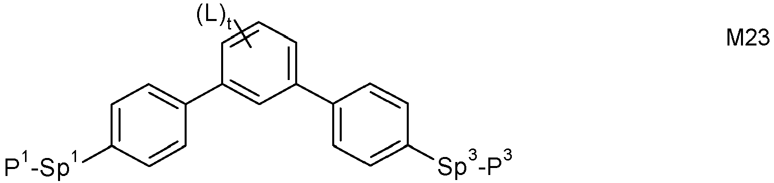

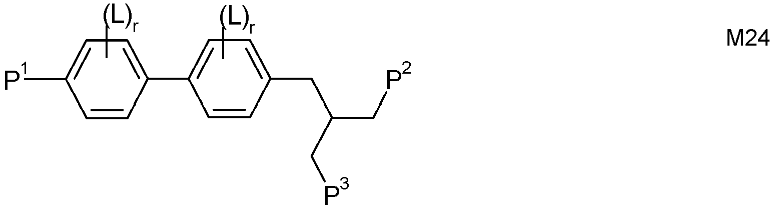

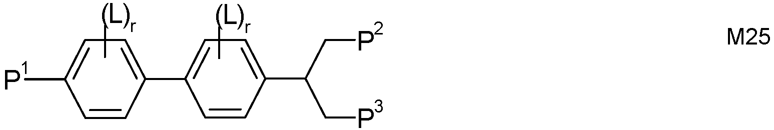

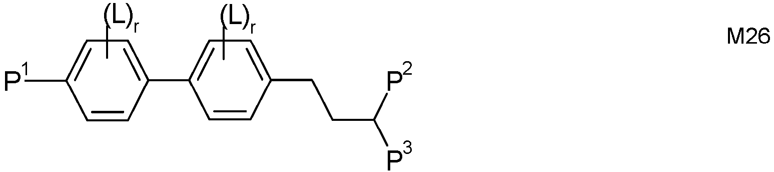

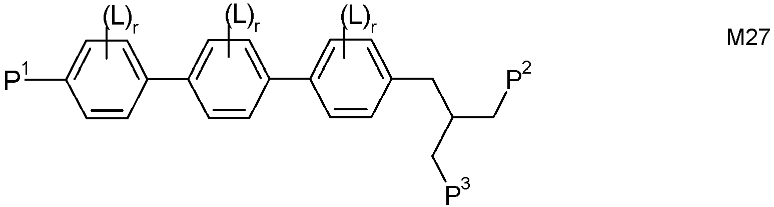

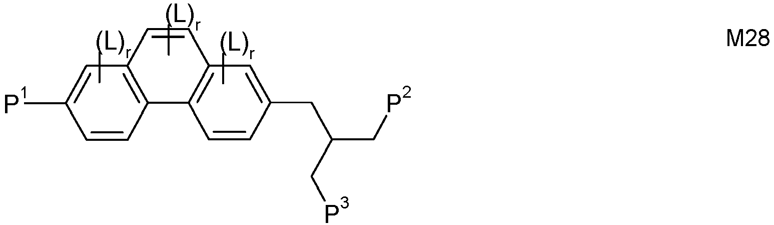

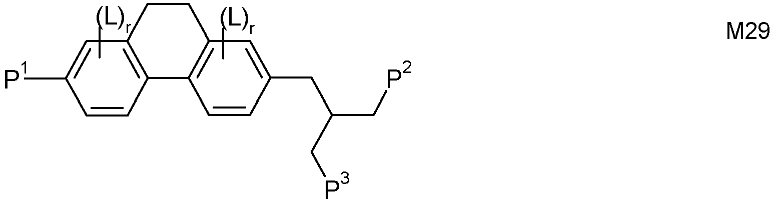

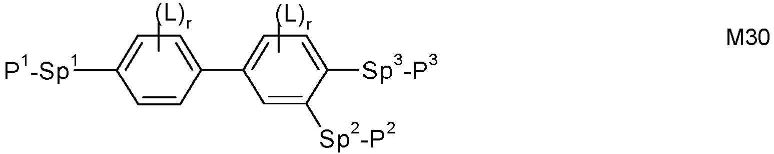

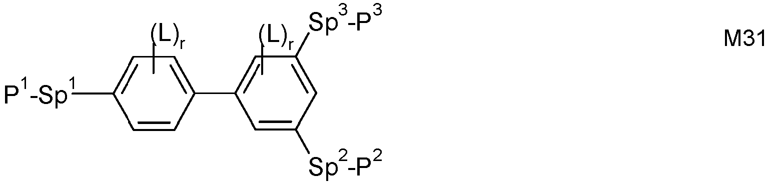

in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³-present is different from R^{aa}, preferably denote -(CH₂)ₚ₁-, -(CH₂)ₚ₁-O-, -(CH₂)ₚ₁-CO-O- or -(CH₂)ₚ₁-O-CO-O-, wherein p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- R^{y} and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, F or Cl,
- r: 0, 1, 2, 3 or 4,
- s: 0, 1, 2 or 3,
- t: 0, 1 or 2,
- x: 0 or 1.

Especially preferred are compounds of formulae M2 and M13.

Further preferred are trireactive compounds M15 to M31, in particular M17, M18, M19, M22, M23, M24, M25, M30 and M31.

In the compounds of formulae M1 to M31 the group 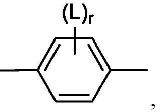 in which L has one of the meanings indicated above and r denotes 0, 1, 2, 3 or 4, in particular denotes 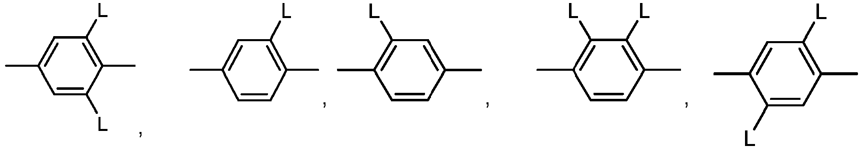 or 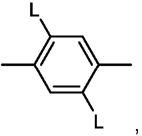 in which L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ oder OCF₃ , especially F or CH₃.

Preferred compounds of formulae M1 to M31 are those in which P¹, P² and P³ denote an acrylate, methacrylate, oxetane or epoxy group, very preferably an acrylate or methacrylate group.

Further preferred compounds of formulae M1 to M31 are those in which Sp¹, Sp² and Sp³ are a single bond.

Further preferred compounds of formulae M1 to M31 are those in which one of Sp¹, Sp² and Sp³ is a single bond and another one of Sp¹, Sp² and Sp³ is different from a single bond.

Further preferred compounds of formulae M1 to M31 are those in which those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to liquid-crystalline media comprising one, two or three polymerisable compounds of formula M, preferably selected from formulae M1 to M31.

Further preferably the liquid-crystalline media according to the present invention comprise one or more polymerisable compounds selected from Table E below.

Preferably the proportion of polymerisable compounds in the liquid-crystalline medium, preferably selected from formula M and Table E, is from 0.01 to 5%, very preferably from 0.05 to 1%, most preferably from 0.1 to 0.5%.

It was observed that the addition of one or more polymerisable compounds to the liquid-crystalline medium, like those selected from formula M and Table E, leads to advantageous properties like fast response times. Such a liquid-crystalline medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the liquid-crystalline medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-CO-O-, CH₂=CW¹-CO-, 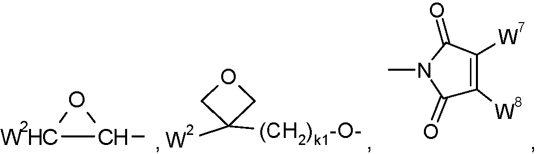 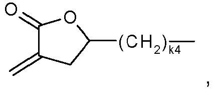 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 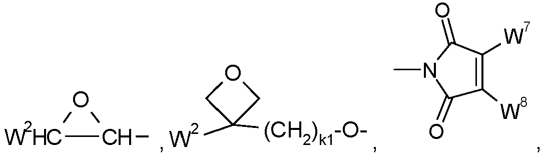 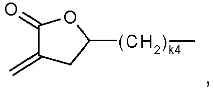 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-, 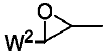 and

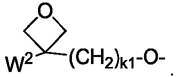

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp- conforms to the formula P-Sp"-X"-, wherein
Sp" denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, - OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, - (CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the production of PSA displays, the polymerisable compounds contained in the liquid-crystalline medium are polymerised or crosslinked (if one compound contains two or more polymerisable groups) by in-situ polymerisation in the liquid-crystalline medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the liquid-crystalline media according to the invention at the same time as constantly high clearing points and high VHR values.

The use of liquid-crystalline media containing polymerisable compounds allows the rapid establishment of a particularly low pretilt angle in PSA displays. In particular, the liquid-crystalline media exhibit significantly shortened response times, in particular also the grey-shade response times, in PSA displays compared with the media from the prior art.

In further preferred embodiments, the medium according to the invention comprises the following compounds, where the acronyms are explained in Table D below:
- one, two or more compounds of formula I in a total concentration in the range of from 0.5 % to 10 %, preferably 1% to 8%, particularly preferably 2% to 6%;
- one or more compounds of formula II, preferably of formula II-1, more preferably of the sub-formulae II-1a and/or II-1f and/or II-1g and/or II-1h, in particular formula II-1a-1 and/or II-1g-1, preferably in a total concentration in the range of from 3 % to 20 %, preferably from 5 % to 18 %, particularly preferably from 7 % to 15 %;
   and/or
- one or more compounds of formula III in a total concentration in the range of from 0.5% to 10%, preferably from 1% to 8%, more preferably from 1.5% to 7%, preferably selected from the group of compounds of formula III-2, more preferably of the formulae III-2c and/or III-2i and/or III-2l and/or III-2m, very preferably of the formulae III-2c-4 and/or III-2i-3 and/or III-21-3 and/or III-2m-1, in particular of the formulae III-2l-3 and III-2m-1 and optionally III-2c-4, where the concentration of the compound(s) of the formula III-2m-1 is very preferably 1% or less;
   and/or
- one or more compounds of the formula YA, preferably of the formulae YA-2 and/or YA-10 in a total concentration in the range of from 0.5 % to 10 %, preferably 1% to 7%, particularly preferably 2% to 5%;
   and/or
- one or more compounds of the formula YB, preferably of the formulae YB-2 and/or YB-10 in a total concentration in the range of from 0.5 % to 10 %, preferably 1% to 7%, particularly preferably 2% to 5%;
   and/or
- one or more compounds of the formula I and YA and optionally YB, preferably selected from the compounds of the formulae YA-2, YA-10, YB-2 and YB-10 in a total concentration in the range of from 1 % to 20 %, preferably 2% to 15%, particularly preferably 3% to 12%;
- one or more compounds of formula IV-3 in a total concentration in the range of from 40 % to 70, more preferably 45% to 60%, very preferably selected from the compounds of the formulae IV-3-1 to IV-3-6, in particular the compounds of formula IV-3-1 and/or IV-3-2;
   and/or
- 2% to 7%, preferably 3% to 6% of the compound CC-3-2V1 or CC-4-V1, preferably of the compound CC-4-V1;
   and/or
- one or more compounds of formula IVb, preferably of formula Vlb-2, very preferably of formula IVb-2-3, preferably in a total concentration in the range of from 0.5% to 8%, more preferably from 1% to 4%, in particular from 2% to 3%;
   and/or
   one or more compounds of formula V, preferably selected from the group consisting of the compounds V-11, V-12, V-13, V-14 and V-15; most preferably of formula V-11 and/or V-14 and/or V-15, preferably in a total concentration in the range of from 5% to 25%, preferably from 8% to 20%, in particular from 10% to 18%;
      and/or
   one or more compounds of formula VII, preferably of the formula VII-20 and/or VII-21, preferably in a total concentration in the range of from 2% to 18%, preferably from 4% to 14%, in particular from 6% to 12%;
- in total 10% to 30%, preferably 18% to 30%, more preferably 20% to 27% of one or more compounds of formula V and VII.

The liquid-crystalline media according to the invention, while retaining the nematic phase down to -20°C and preferably down to -30°C, particularly preferably down to -40°C, and the clearing point ≥ 75°C, preferably ≥ 79°C, at the same time allow rotational viscosities γ₁ of ≤ 80 mPa·s, particularly preferably ≤ 70 mPa·s, to be achieved, enabling excellent MLC displays having fast response times. The rotational viscosities are determined at 20°C.

The dielectric anisotropy Δε of the liquid-crystalline media according to the invention at 20°C and 1kHz is preferably ≥ +1.5, preferably in the range of from 1.5 to 8, more preferably from 2.0 to 6.0, very preferably from 2.5 to 4.5 and particularly preferably from 2.6 to 3.2.

The birefringence Δn of the liquid-crystalline media according to the invention at 20°C is preferably from 0.095 to 0.110, very preferably from 0.098 to 0.105, in particular from 0.100 to 0.102.

The rotational viscosity γ₁ of the liquid-crystalline media according to the invention is preferably ≤ 100 mPa s, more preferably ≤ 80 mPa s, very preferably ≤ 70 mPa s.

The ratio γ₁/K₁ of the liquid-crystalline media according to the invention is preferably ≤ 5.5 mPa·s/pN.

Herein, the structures of the mesogenic compounds are indicated by means of abbreviations, also referred to as acronyms. In these acronyms, the chemical formulae are abbreviated as follows using Tables A to C below. All groups CₙH₂ₙ₊₁, CₘH₂ₘ₊₁ and CₗH₂ₗ₊₁, and CₙH₂ₙ₋₁, CₘH₂ₘ₋₁ and CₗH₂ₗ₋₁ denote straight-chain alkyl or alkylene, respectively, in each case having n, m or I C atoms, wherein n and m, independently are 1, 2, 3, 4, 5, 6 or 7 and I is 1, 2 or 3. Table A lists the codes used for the ring elements of the core structures of the compounds, while Table B and Table C show the linking groups and end groups. Table D shows illustrative structures of compounds with their respective abbreviations.

**Table A: Ring elements**

| | | | |
|---|---|---|---|
| **C** | 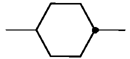 | | |
| **D** | 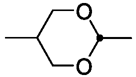 | **DI** | 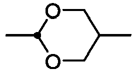 |
| **A** | 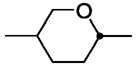 | **Al** | 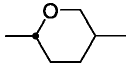 |
| **G** | 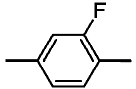 | **GI** | 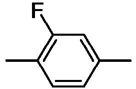 |
| **U** | 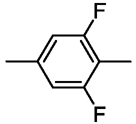 | **UI** | 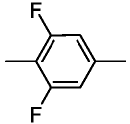 |
| **U(1)** | 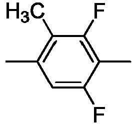 | **U(1)I** | 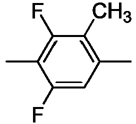 |
| **Y** | 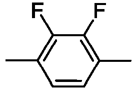 | **Y(1)** | 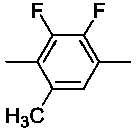 |
| **M** | 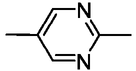 | **MI** | 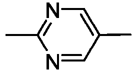 |
| **N** | 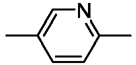 | **NI** | 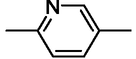 |
| **K** | 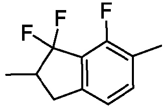 | **KI** | 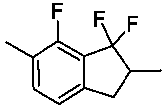 |
| **L** | 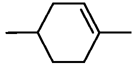 | **LI** | 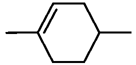 |
| **F** | 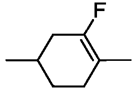 | **Fl** | 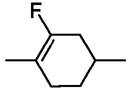 |
| **P** | 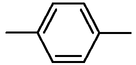 | **P(o)** | 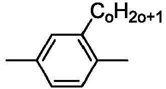 |
| **P(i3)** | 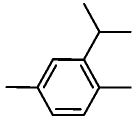 | **Pl(o)** | 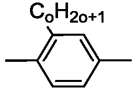 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Table C: End groups**

| **Left-hand side** | | **Right-hand side** | |
|---|---|---|---|
| | | **Used alone** | |
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| **-V-** | CH₂=CH- | **-V** | -CH=CH₂ |
| -**nV**- | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CI-** | CI- | **-Cl** | -CI |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-FXO-** | CF₂=CH-O- | **-OXF** | -O-CH=CF₂ |
| **-A-** | H-C≡C- | **-A** | -C≡C-H |
| **-nA-** | CₙHₐ₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 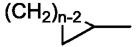 | **-(cn)** | 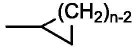 |
| **-(cn)m-** | 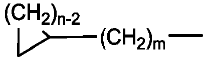 | **-m(cn)** | 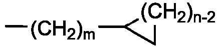 |
| **-(c5-1en)m-** | 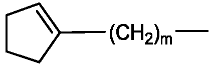 | **-m(c5-1en)** | 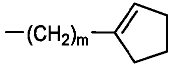 |
| **-(c5-2en)m-** | 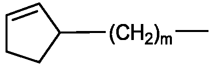 | **-m(c5-2en)** | 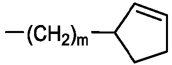 |
| **-(c5-3en)m-** | 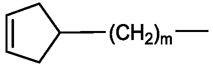 | -m(c5-3en) | 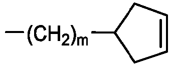 |

| | **Used in combination with others** | | |
|---|---|---|---|
| **-...A...-** | -C≡C- | **-...A...** | -C≡C- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are placeholders for other abbreviations from this table.

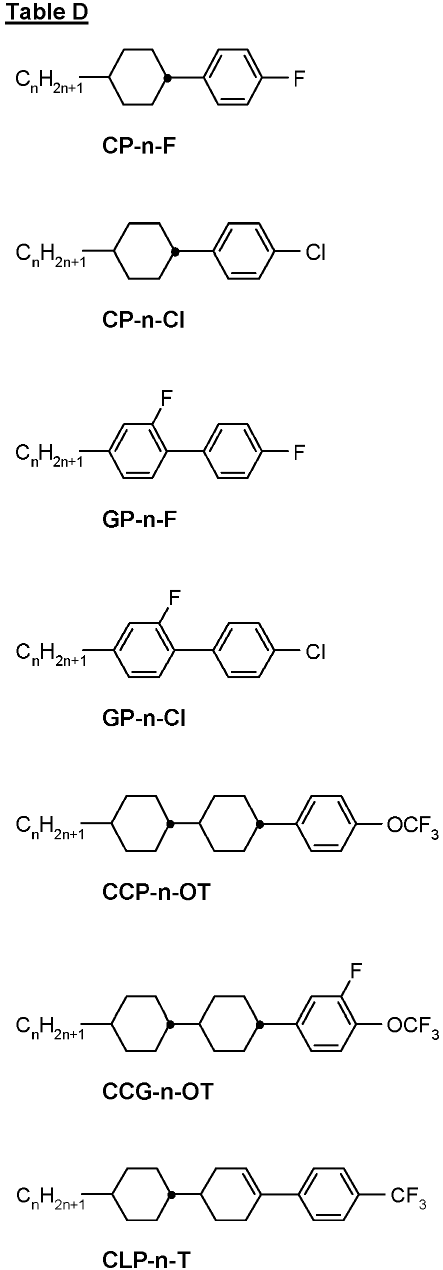

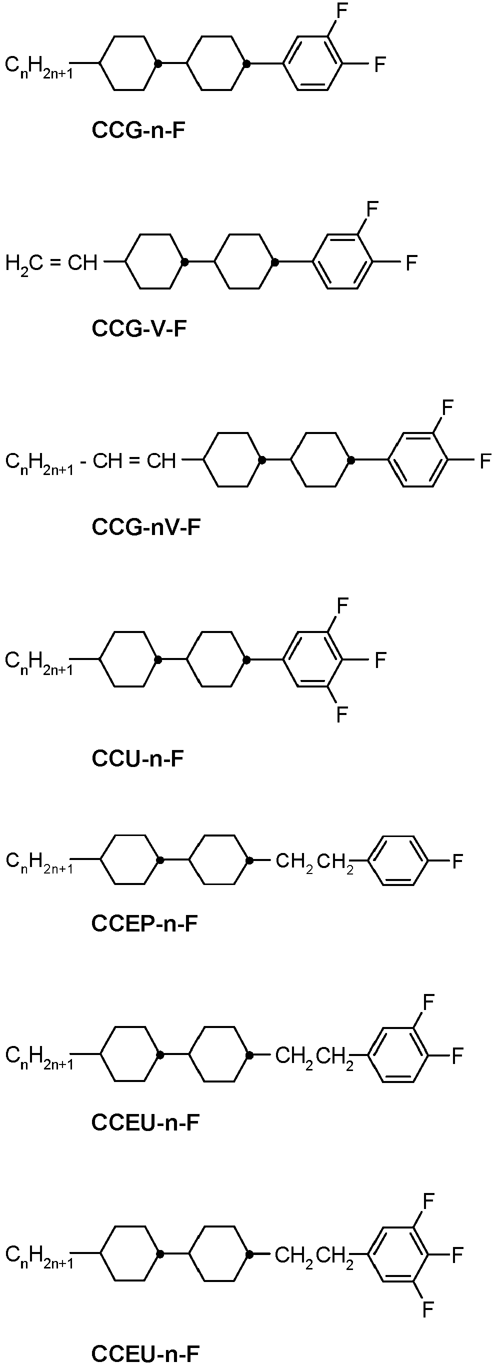

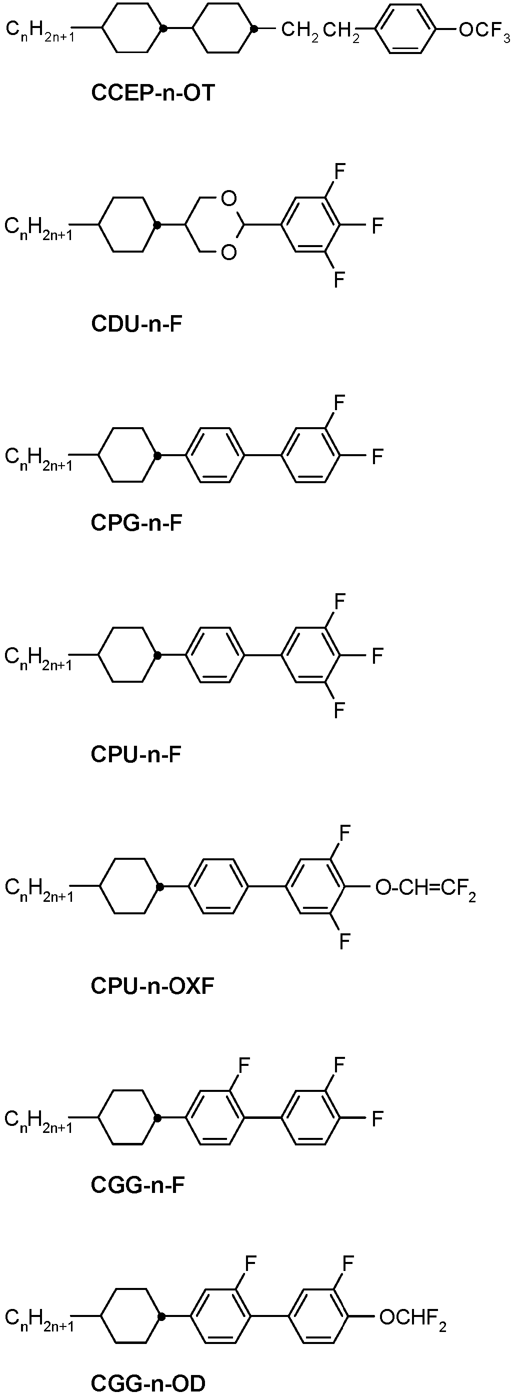

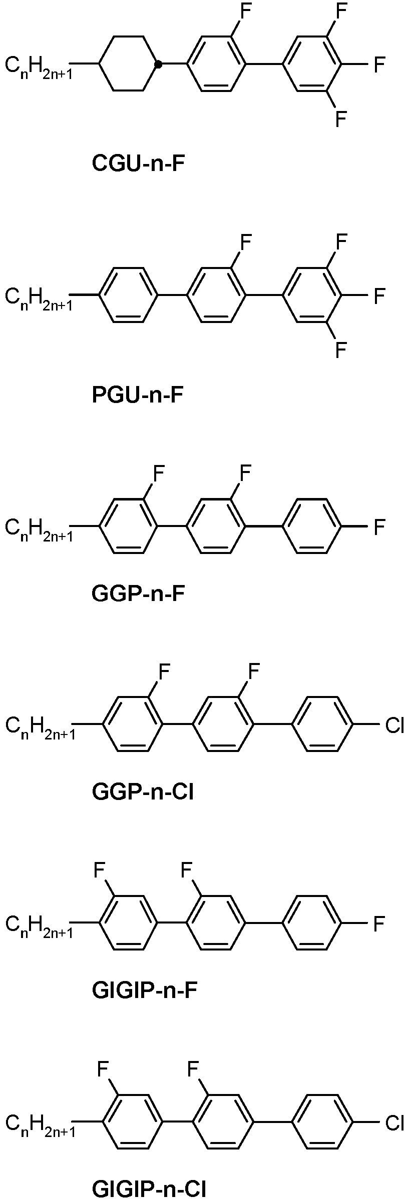

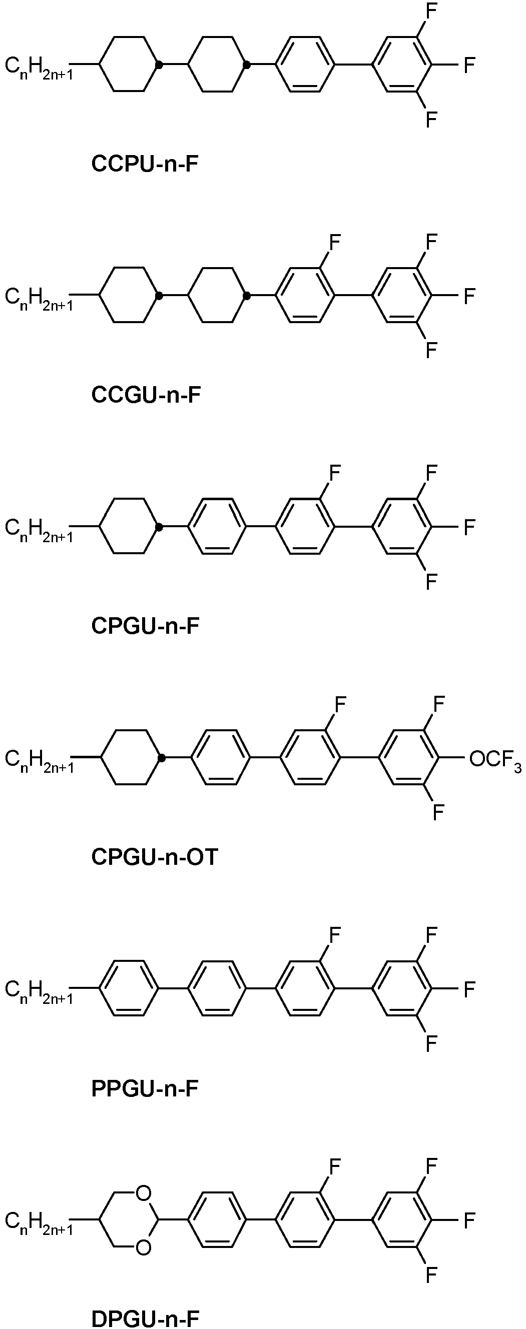

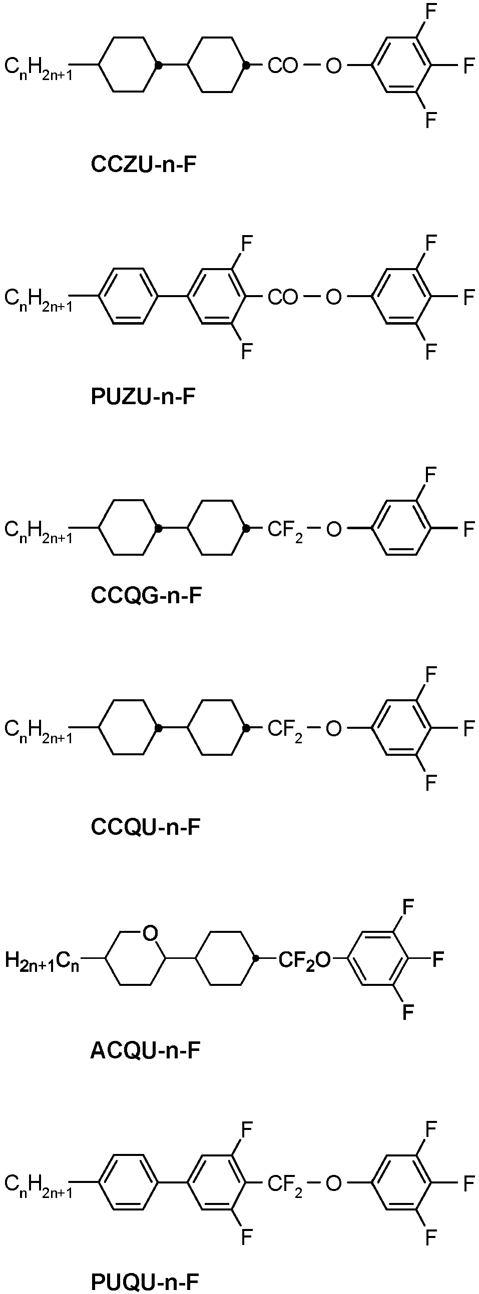

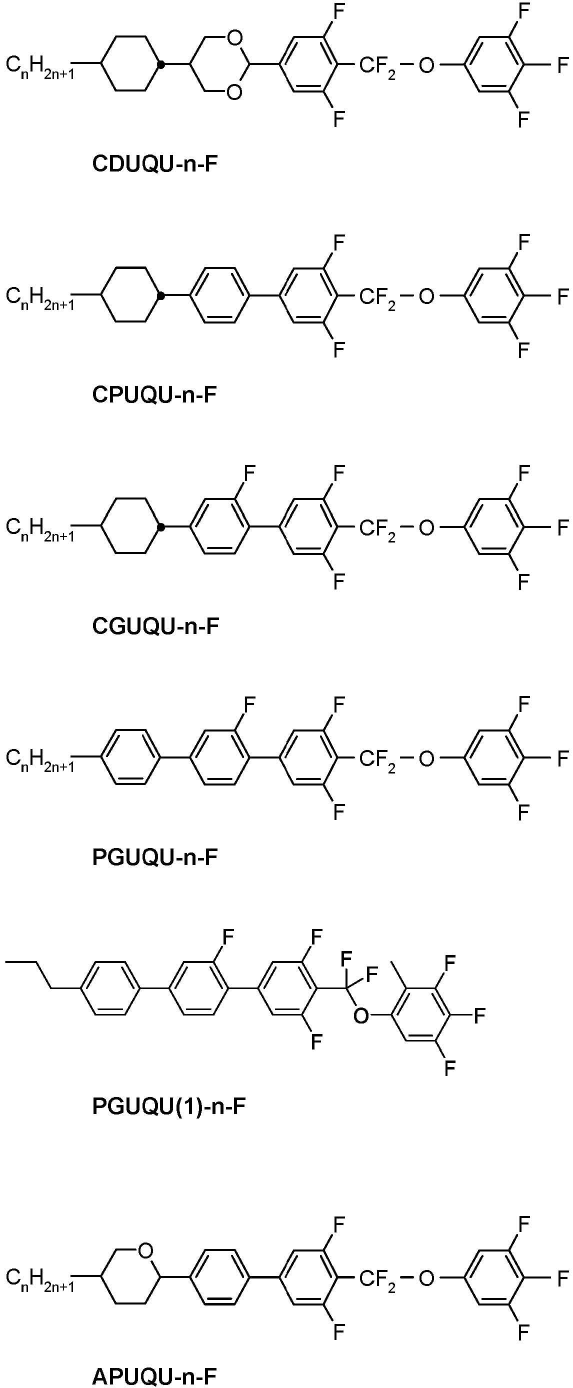

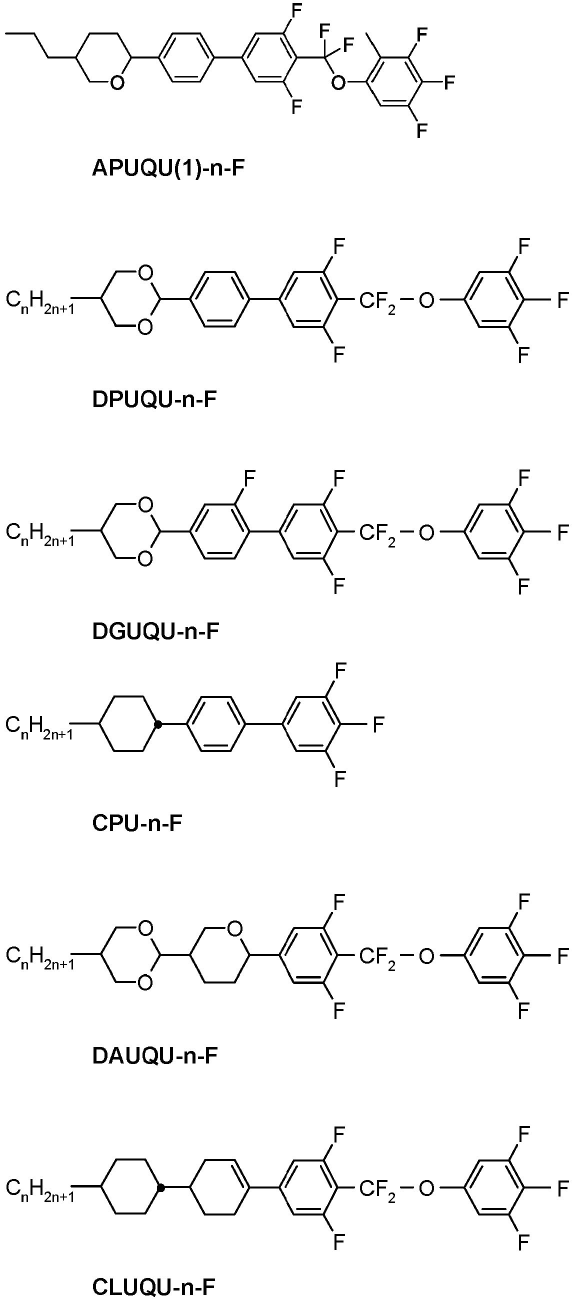

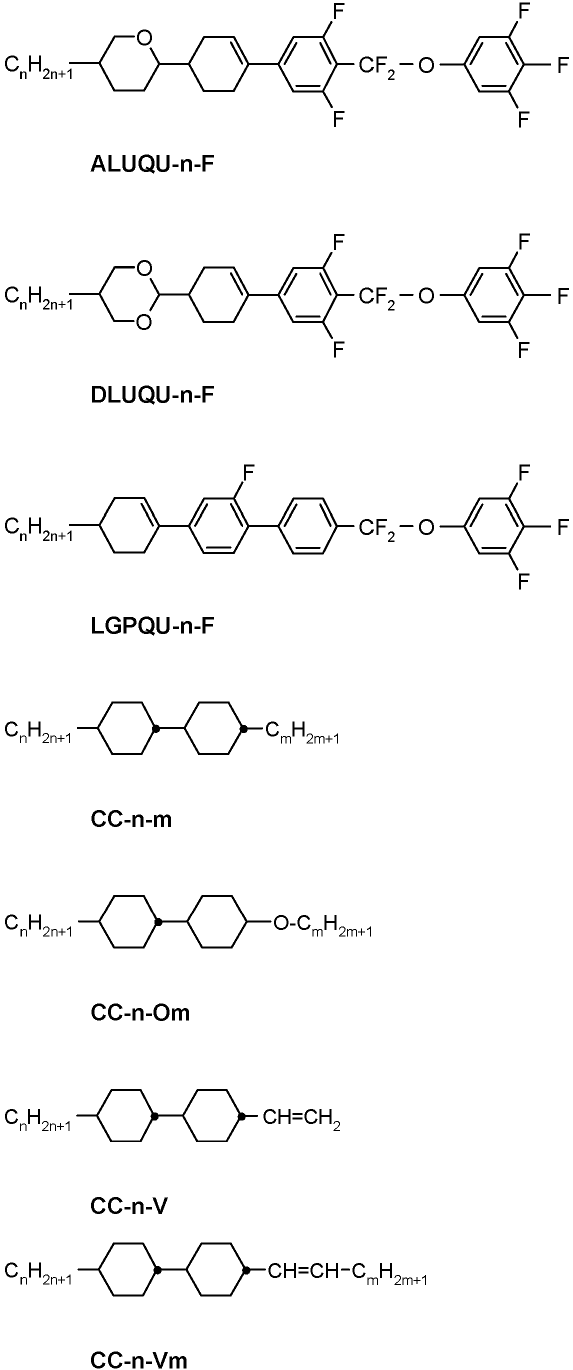

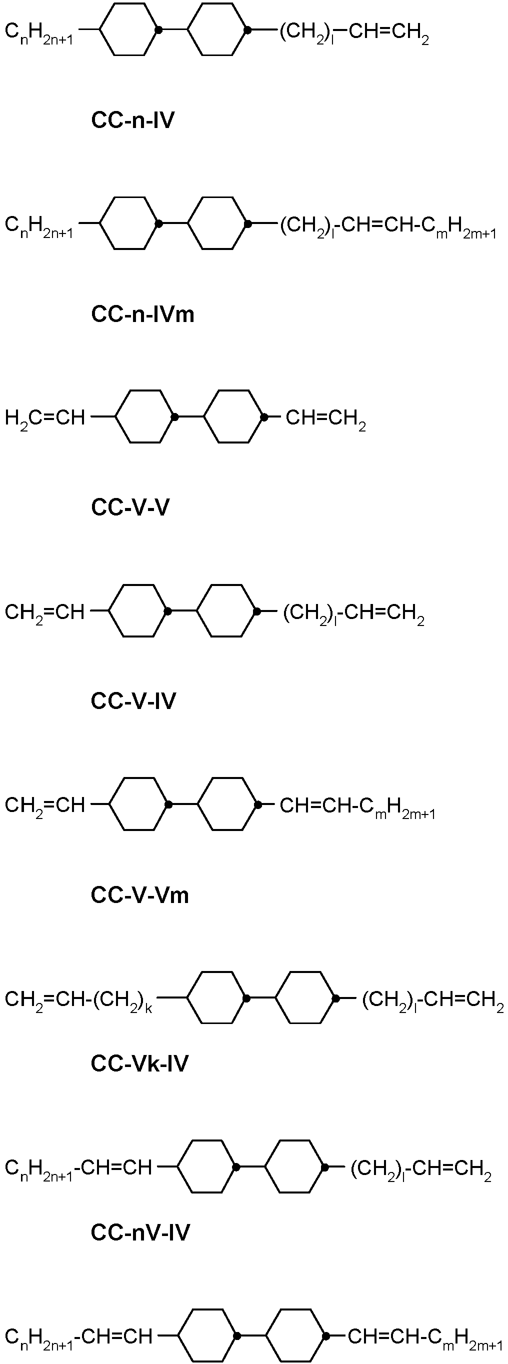

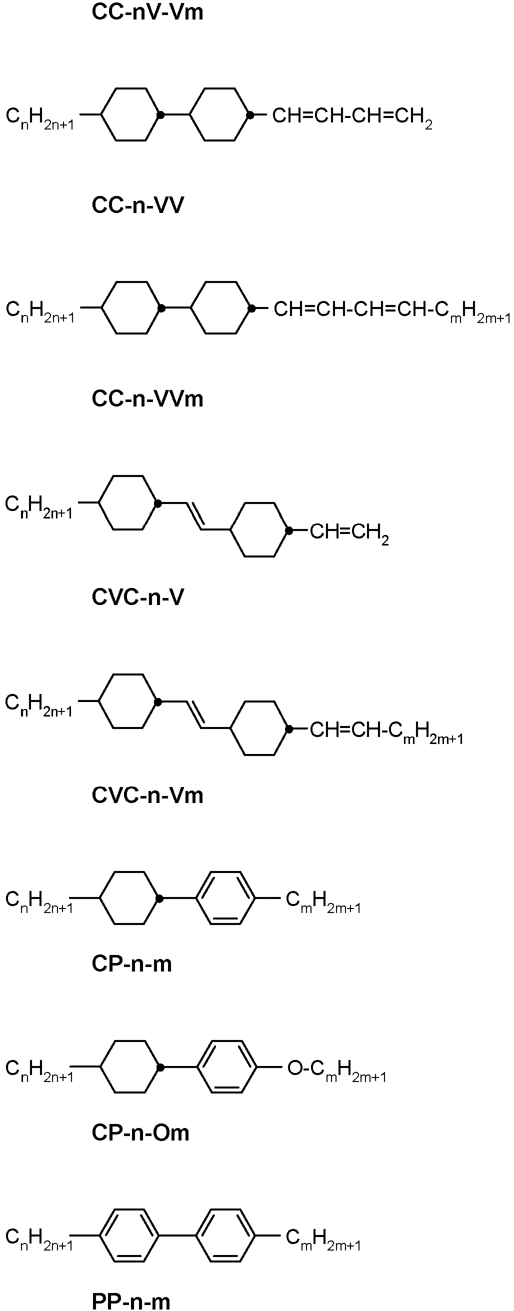

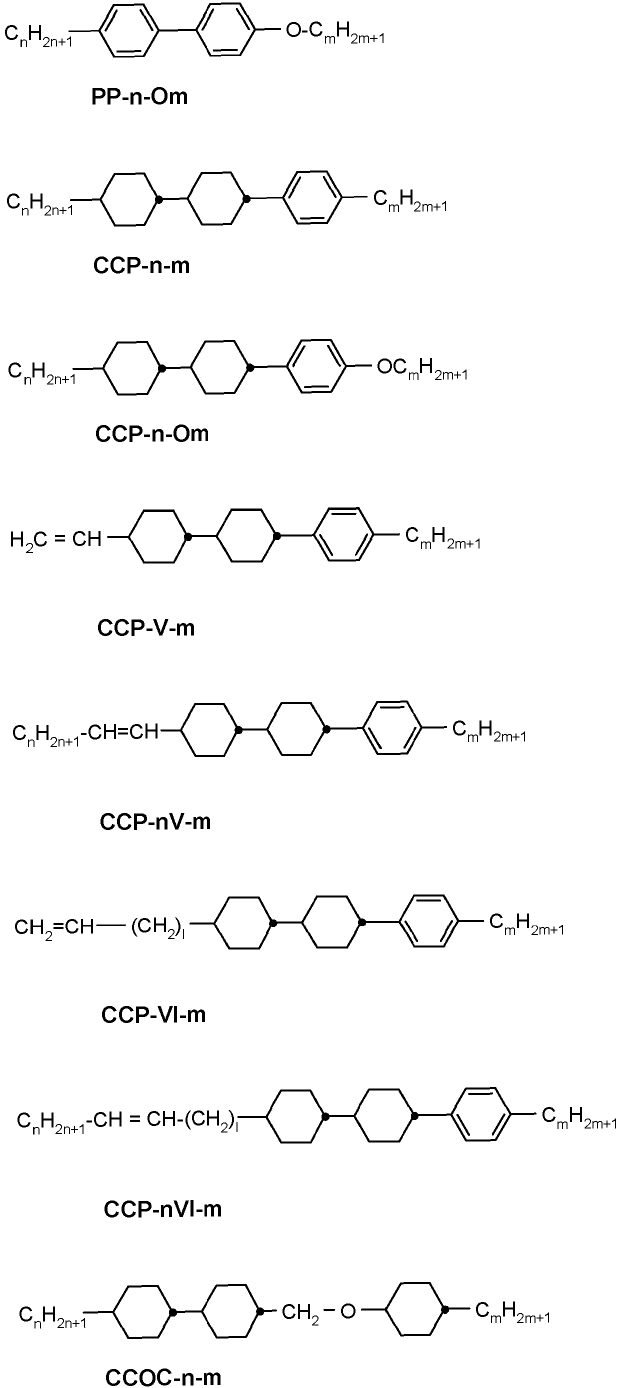

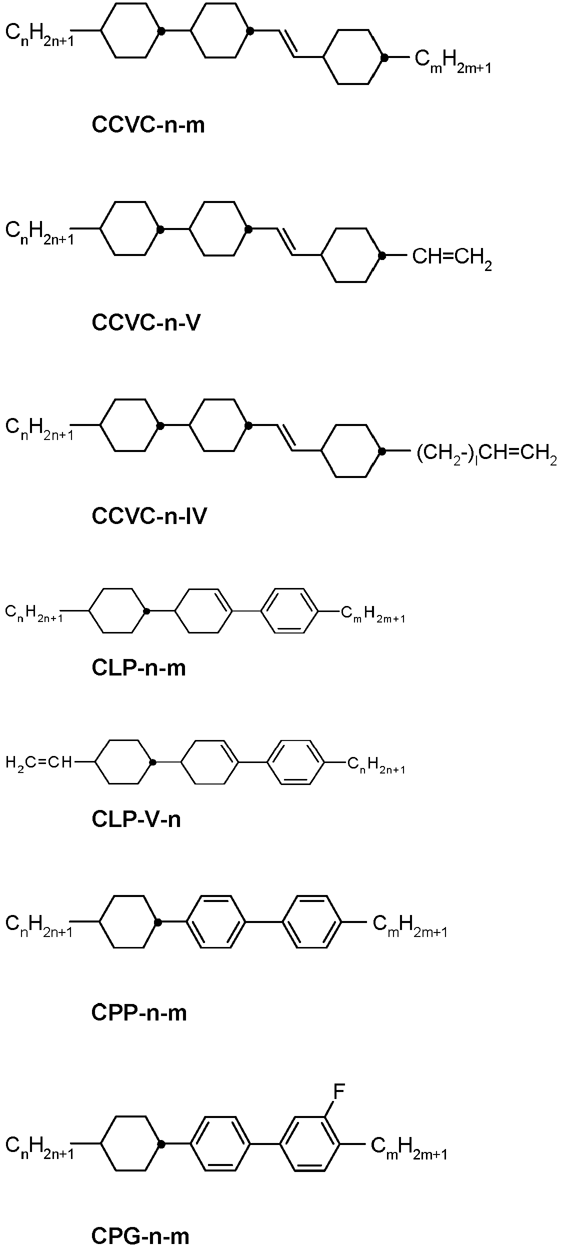

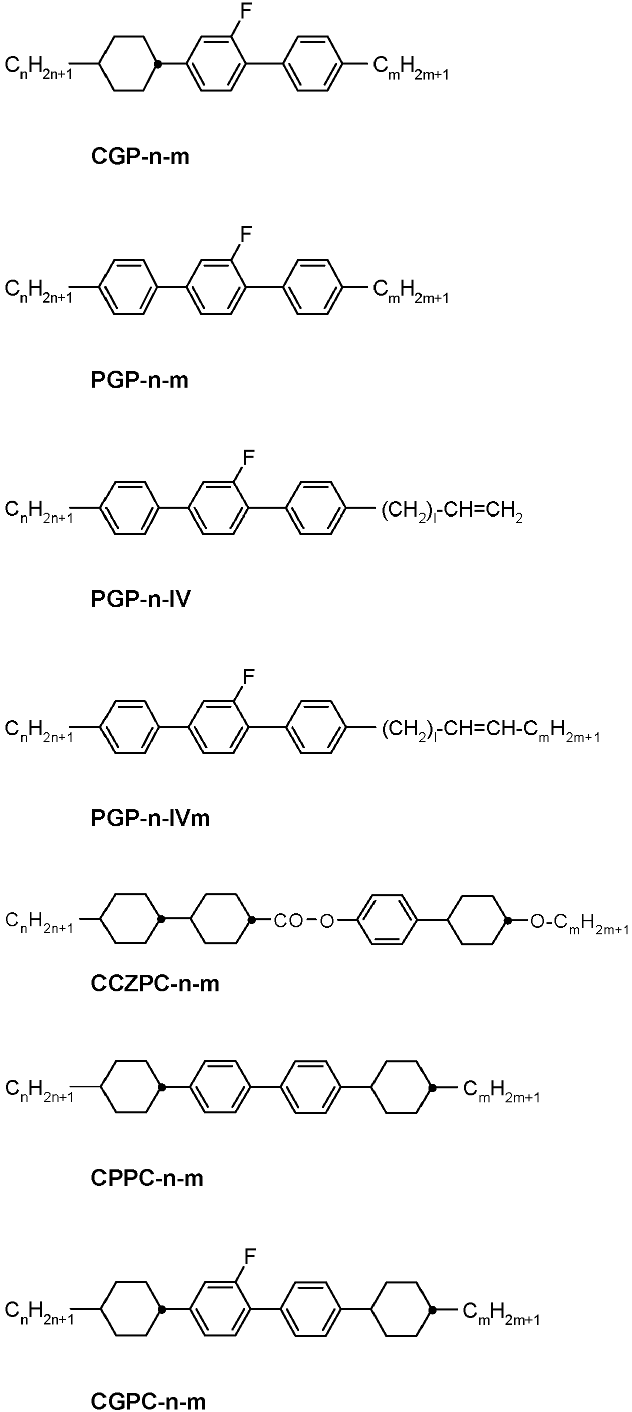

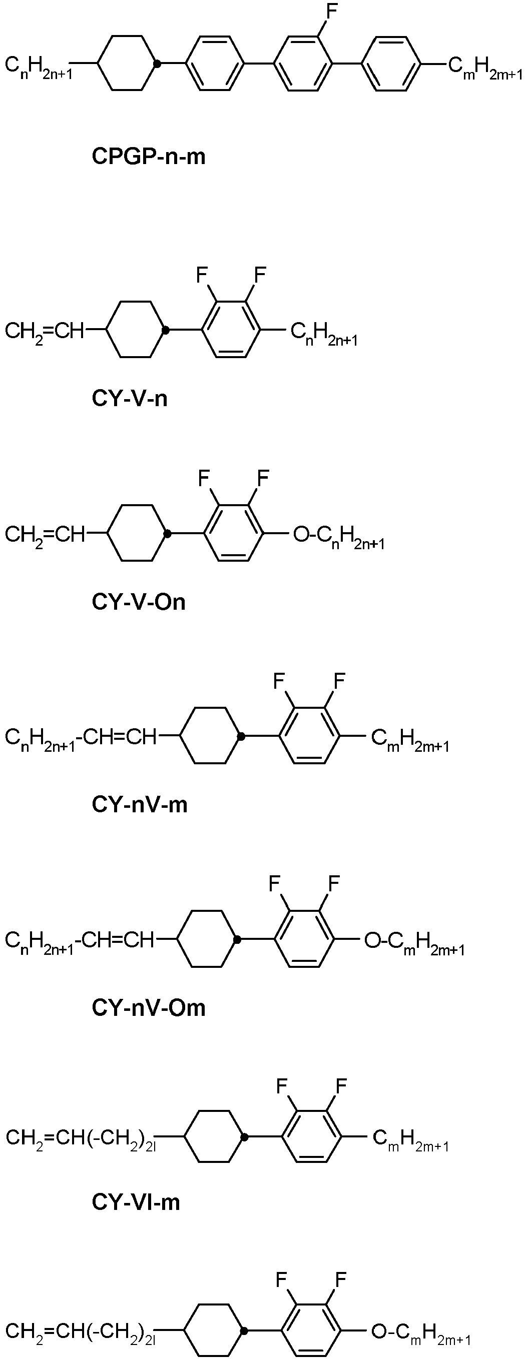

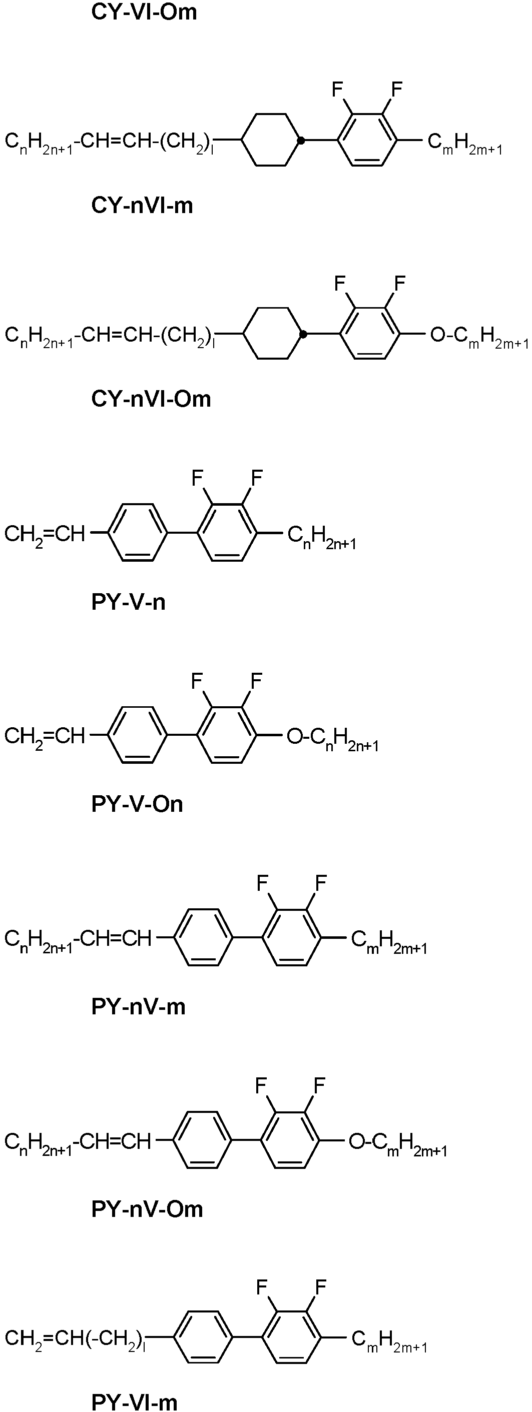

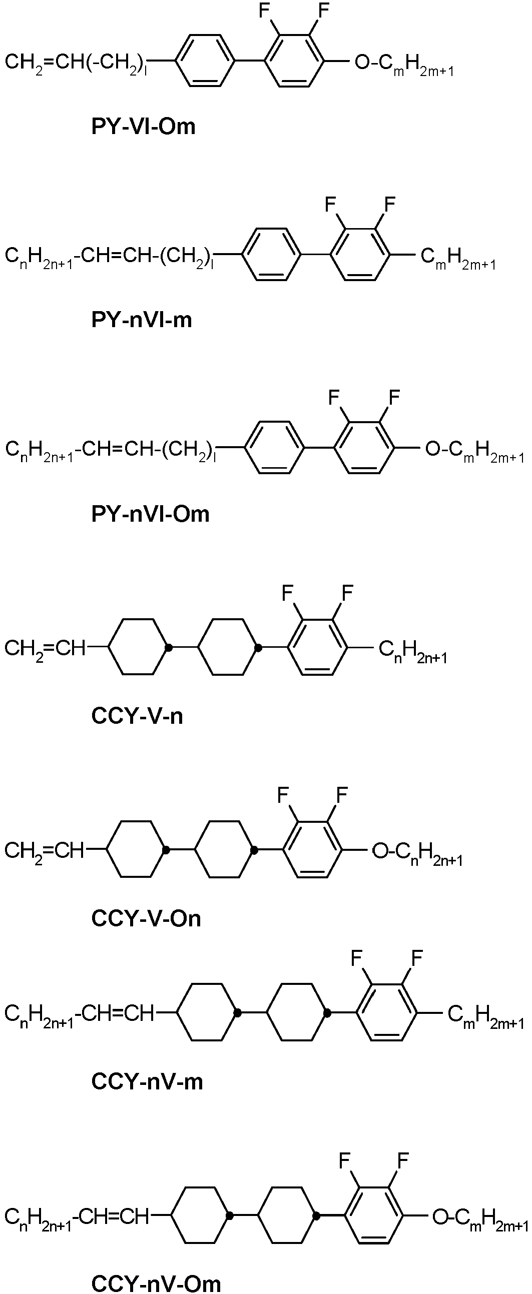

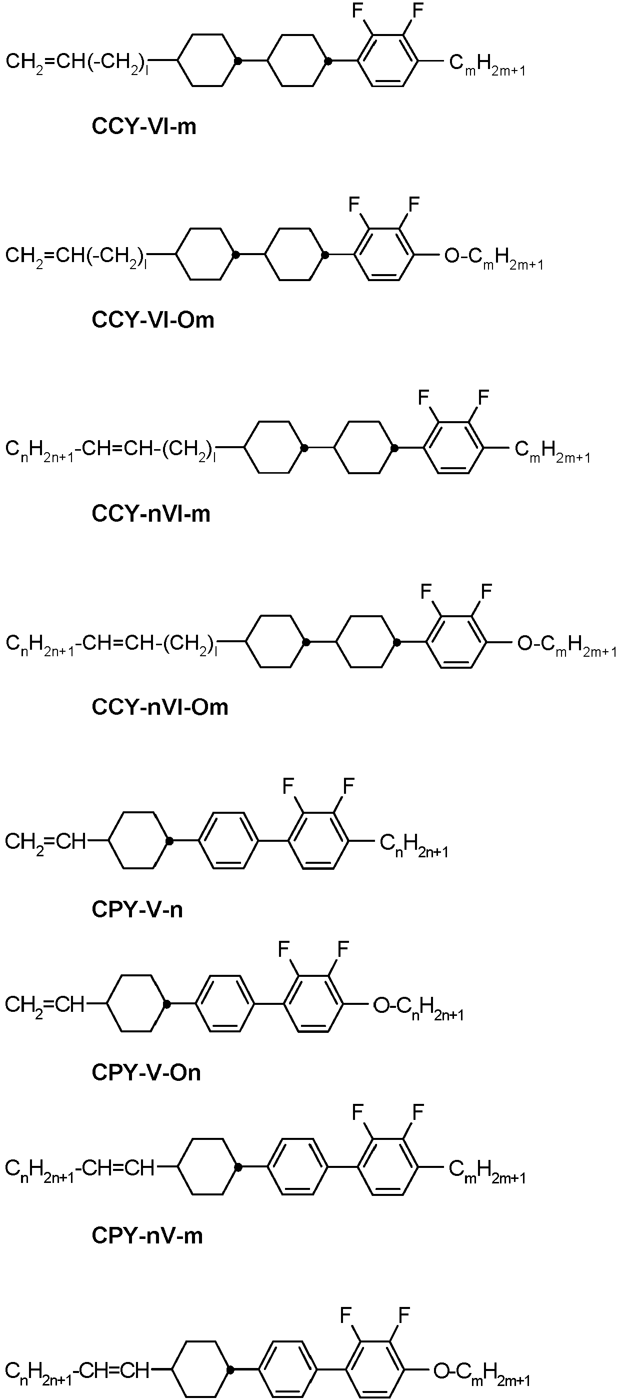

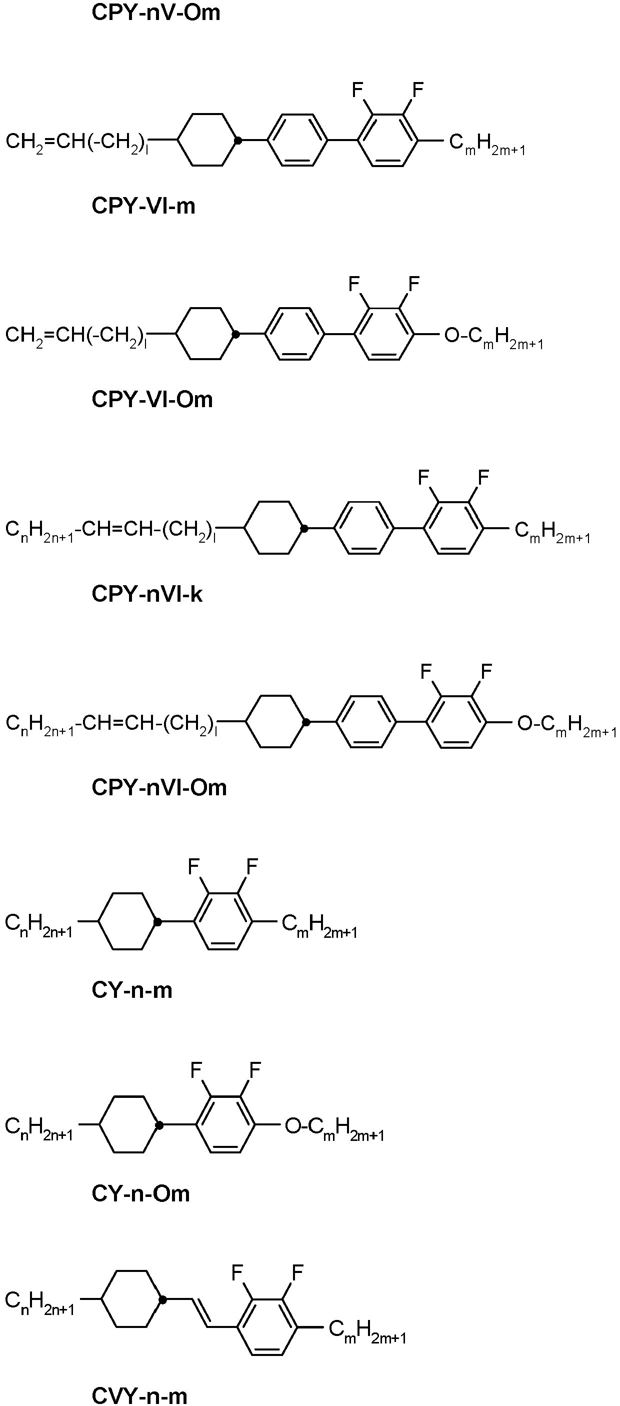

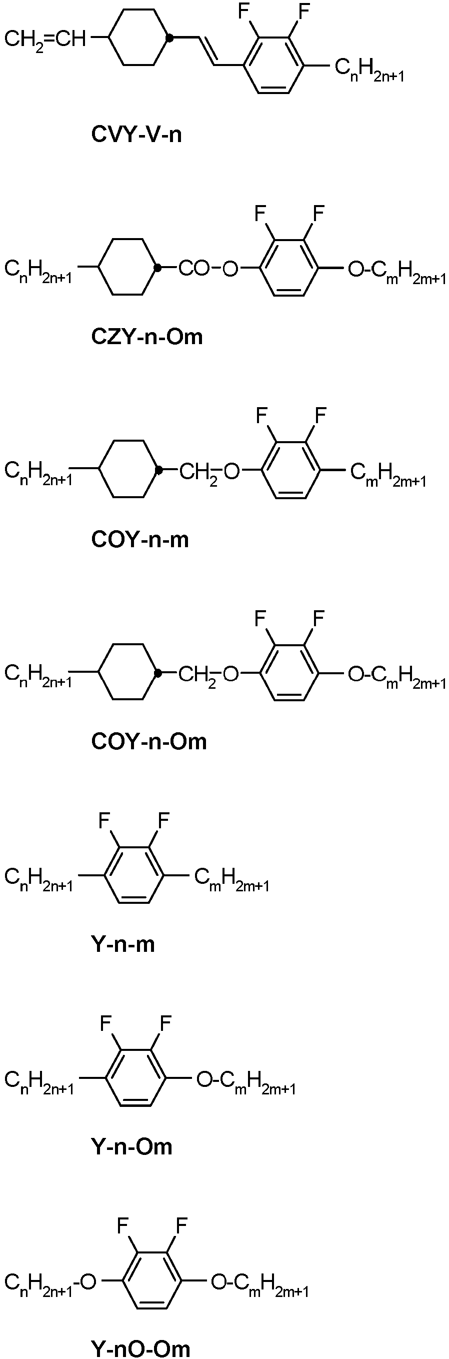

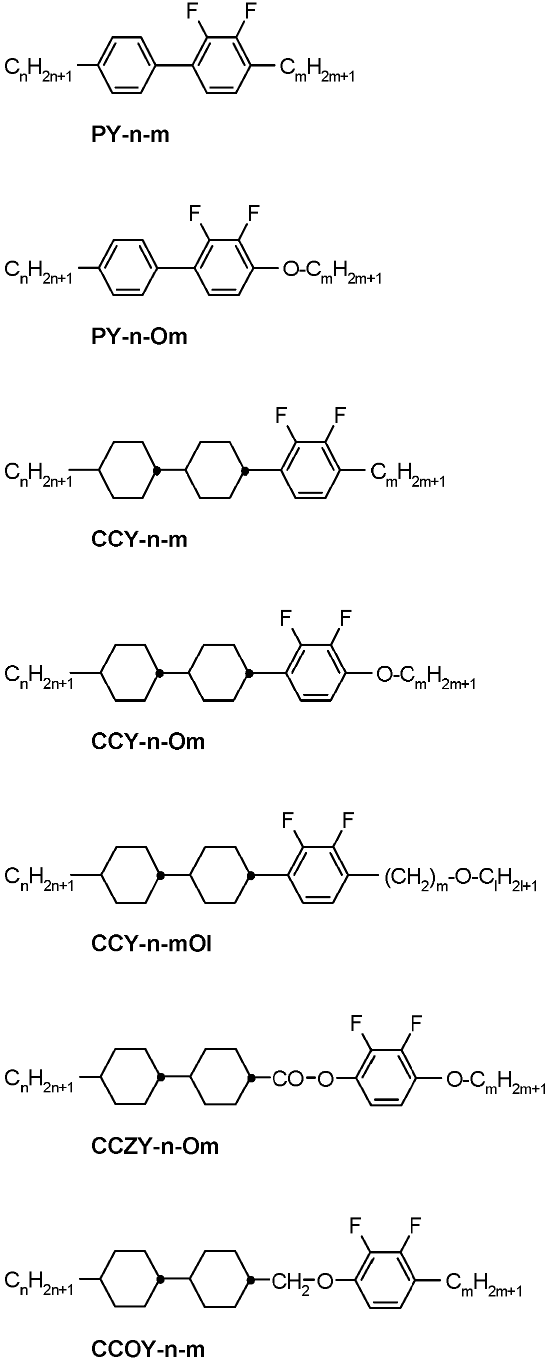

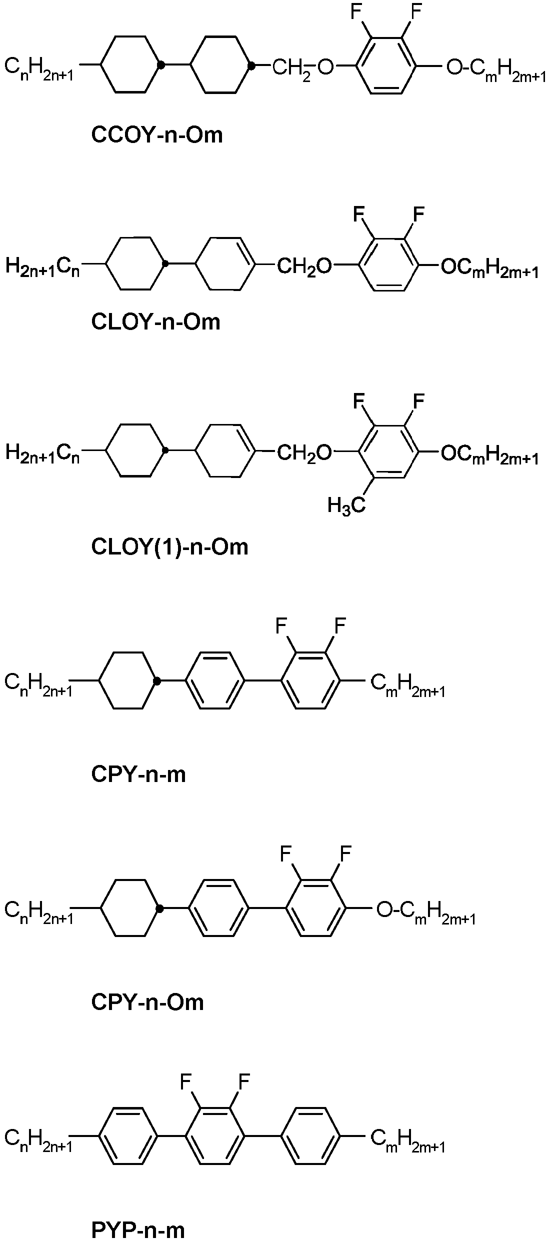

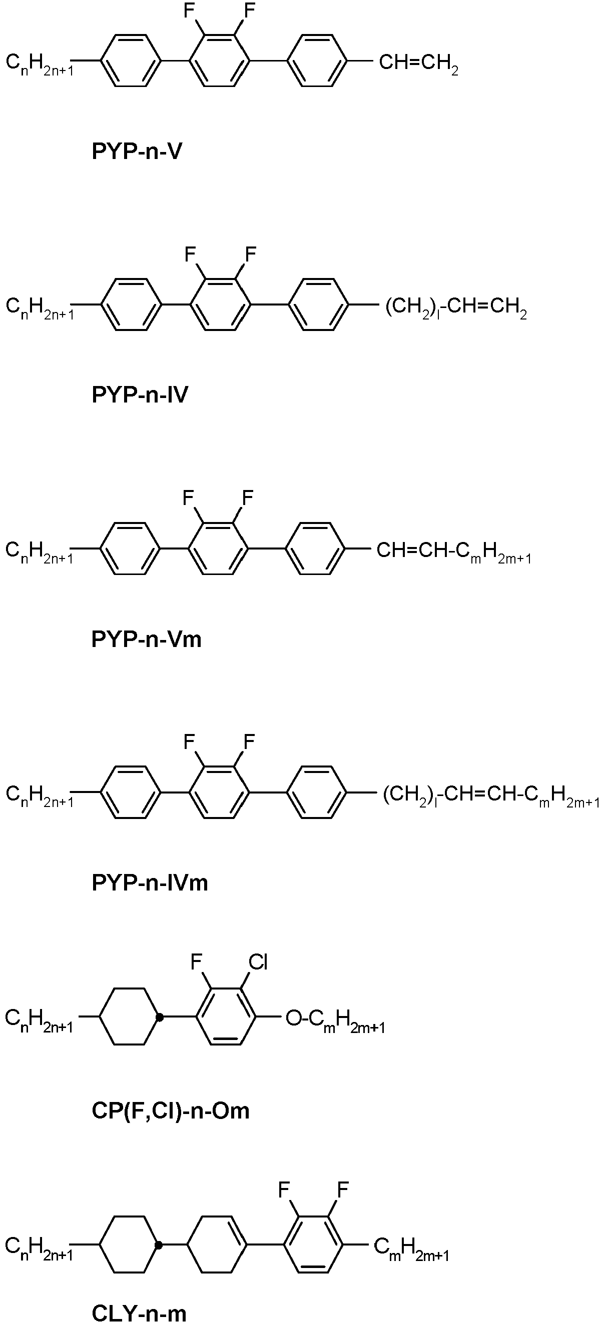

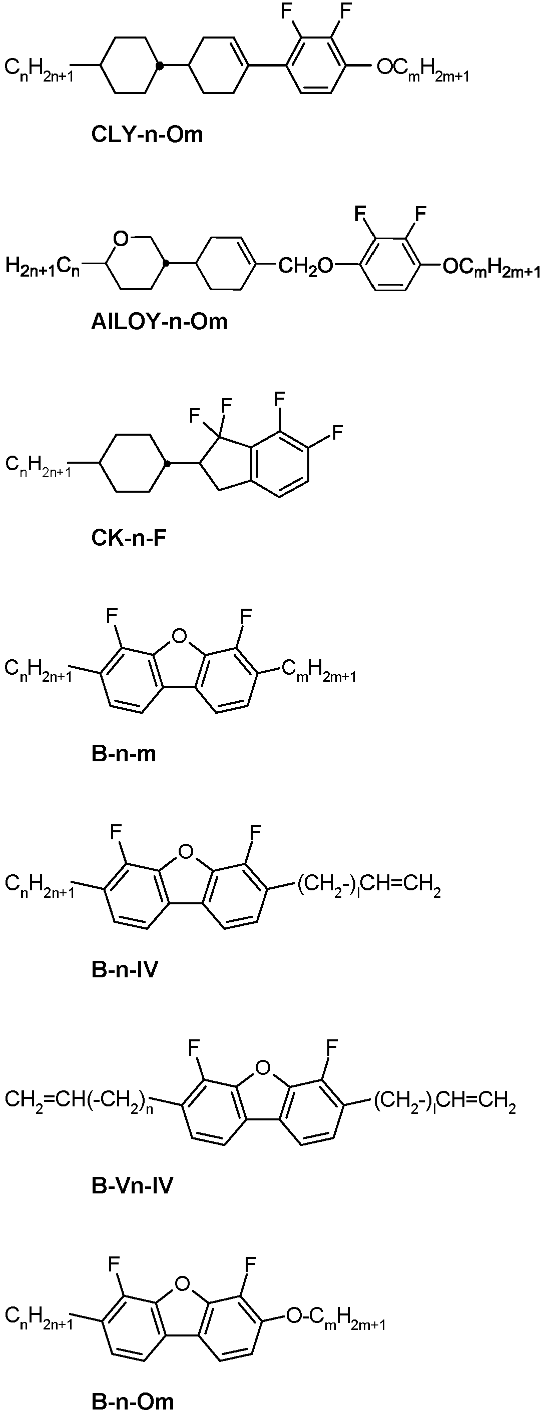

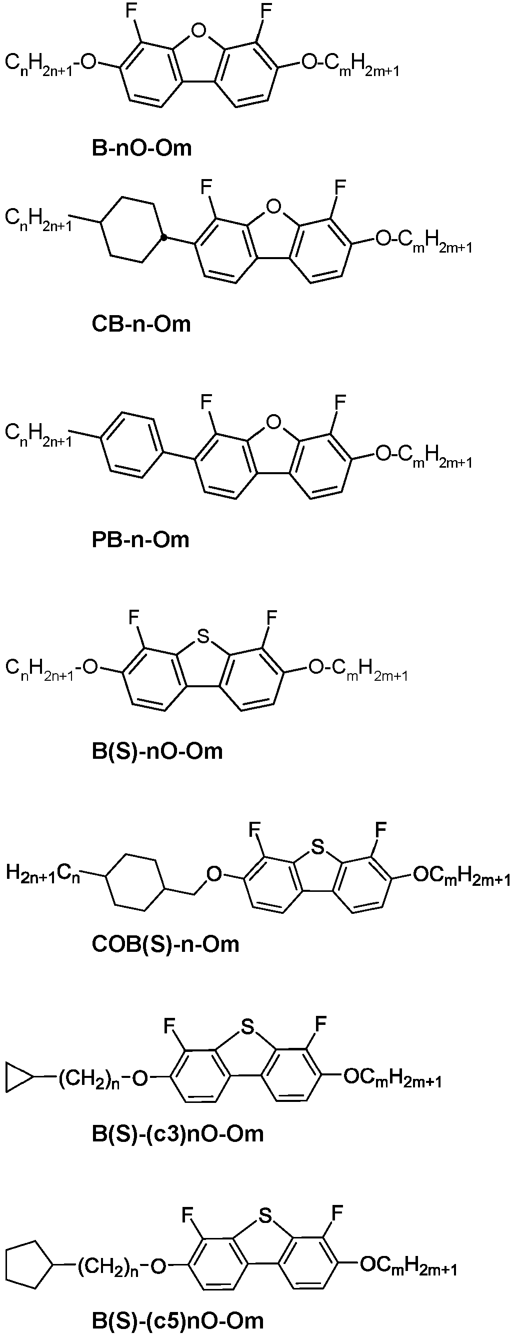

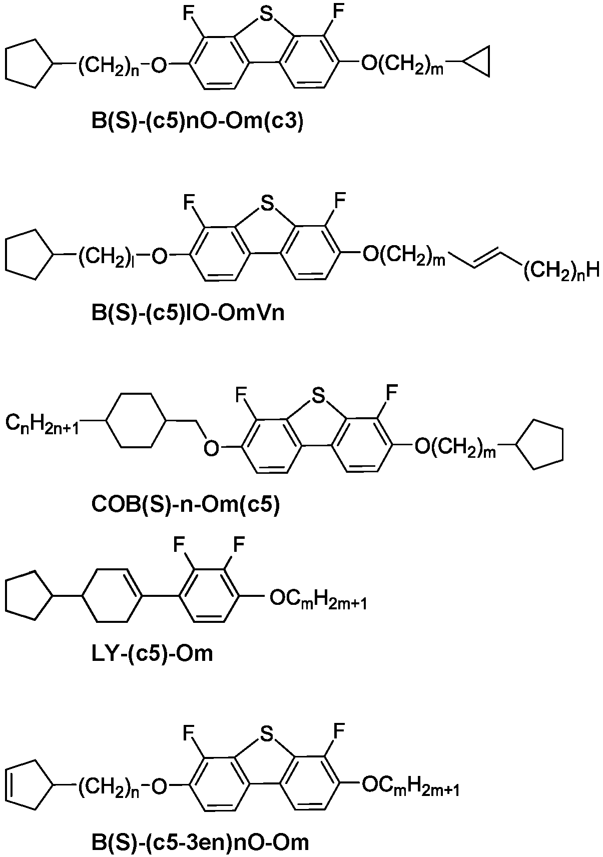

In a preferred embodiment of the present invention, the media comprise one or more compounds selected from the group of the compounds of Table D.

Table E shows chiral dopants which are preferably employed in the mixtures according to the invention.

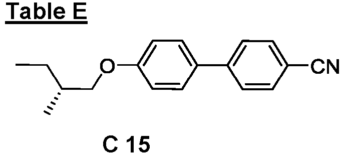

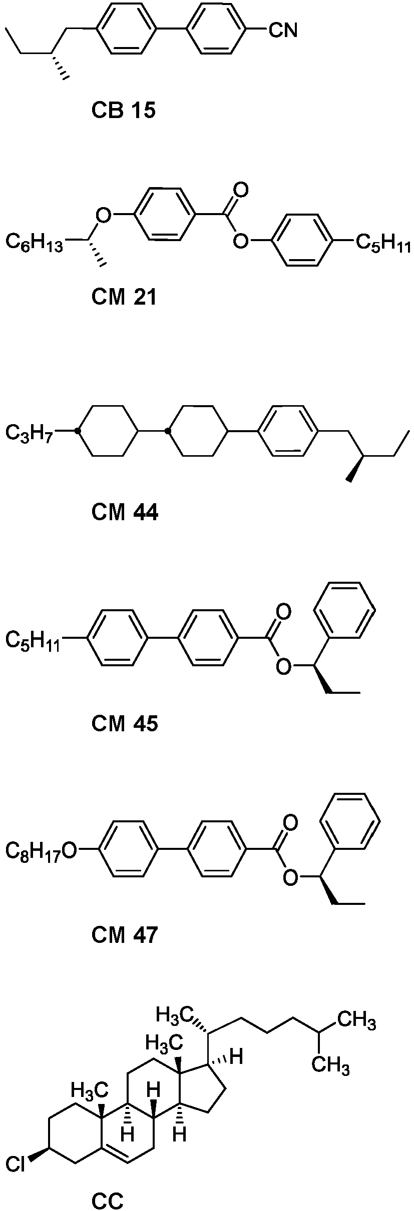

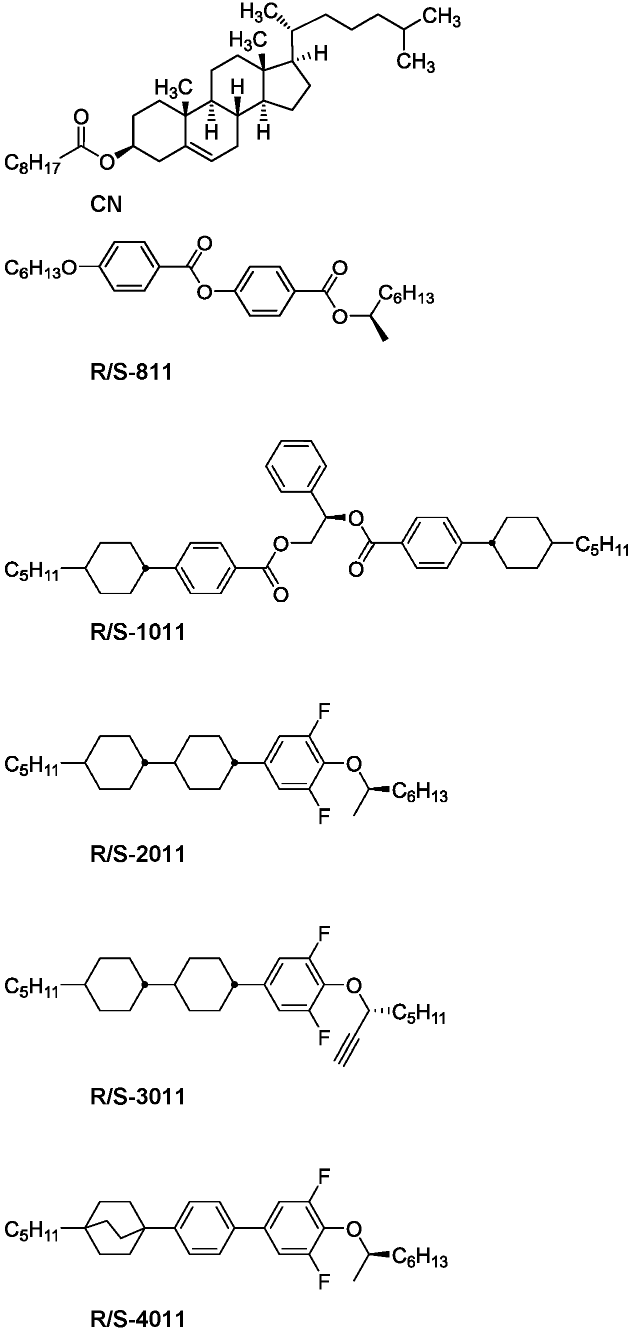

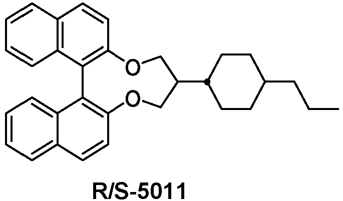

Preferably, the media according to the invention comprise one or more compounds selected from the group of the compounds from Table E.

**Table F**

| Table F shows illustrative reactive mesogenic compounds (RM) which can be used in the LC media in accordance with the present invention. | |
|---|---|
| 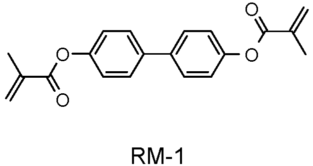 | 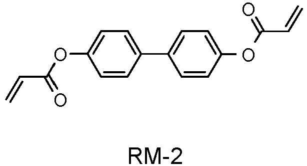 |
| 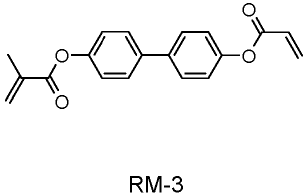 | 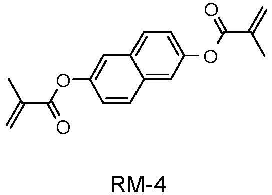 |
| 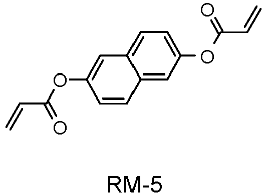 | 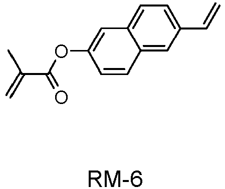 |
| 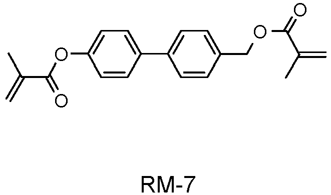 | 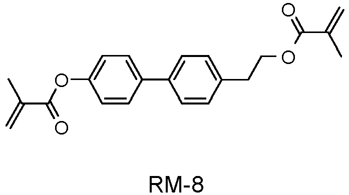 |
| 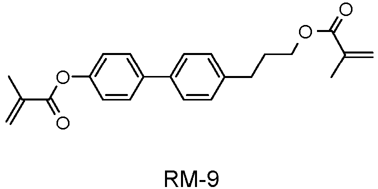 | 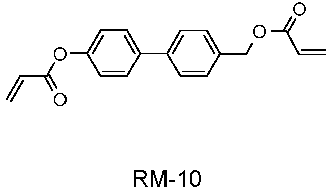 |
| 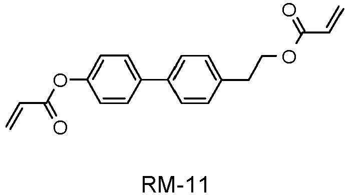 | 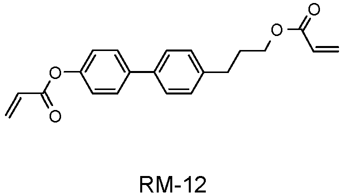 |
| 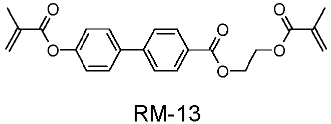 | 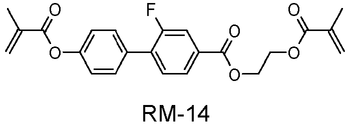 |
| 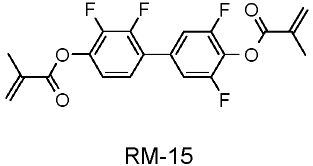 | 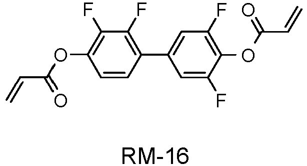 |
| 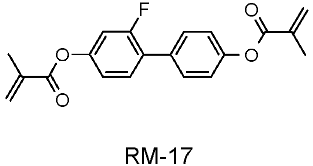 | 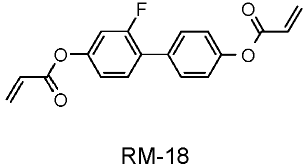 |
| 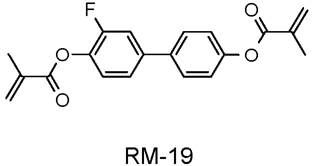 | 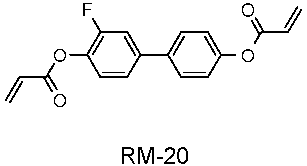 |
| 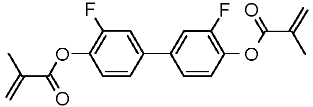 | 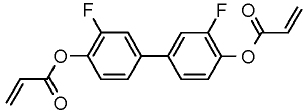 |
| 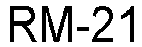 | 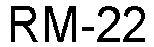 |
| 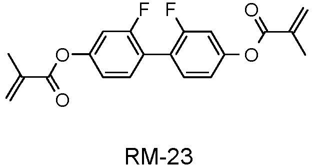 | 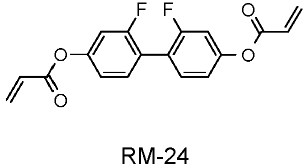 |
| 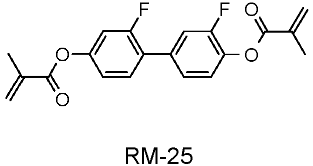 | 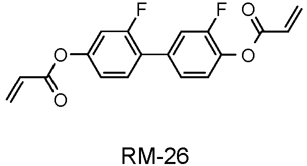 |
| 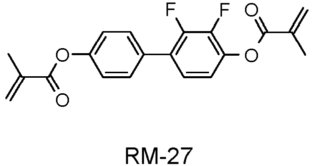 | 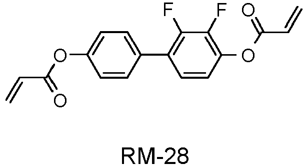 |
| 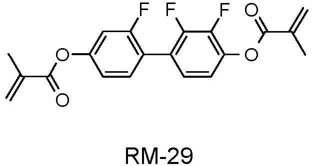 | 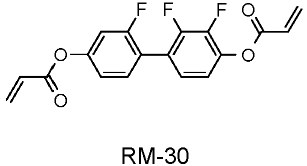 |
| 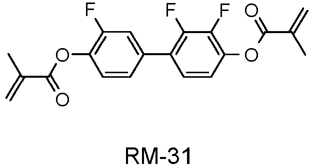 | 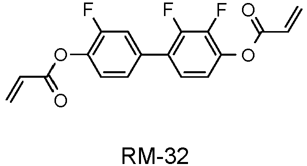 |
| 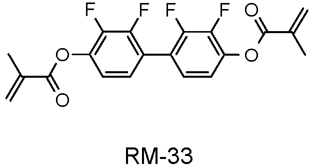 | 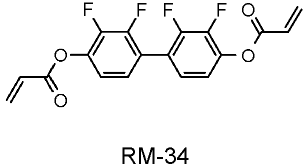 |
| 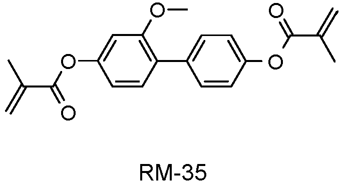 | 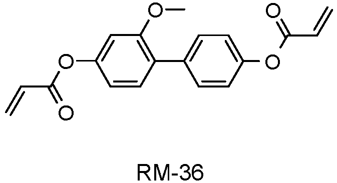 |
| 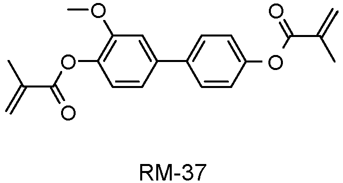 | 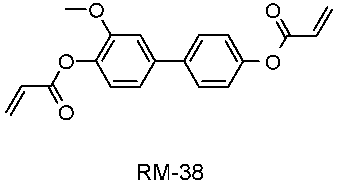 |
| 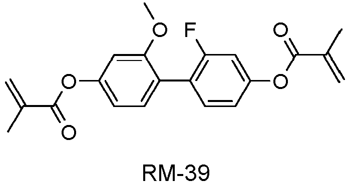 | 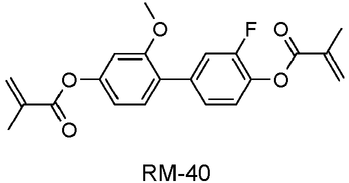 |
| 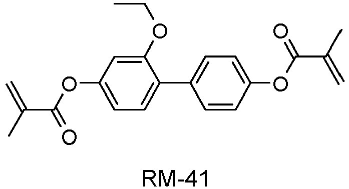 | 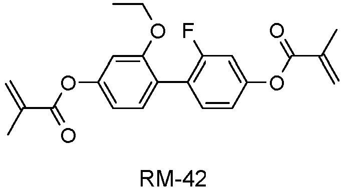 |
| 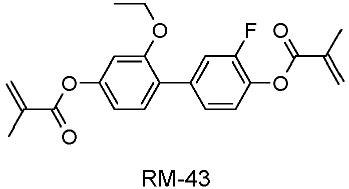 | 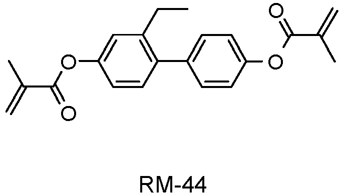 |
| 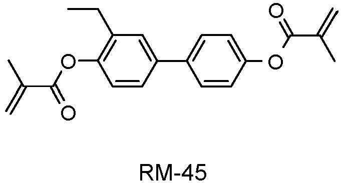 | 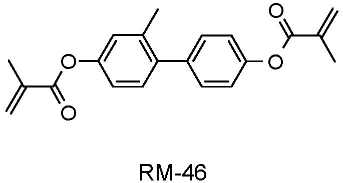 |
| 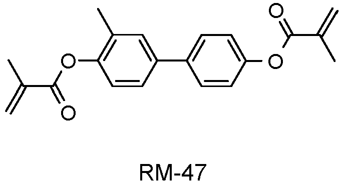 | 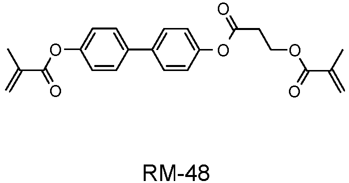 |
| 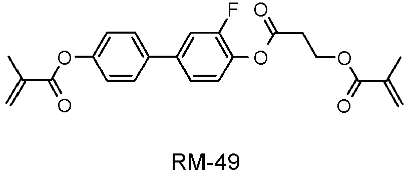 | |
| 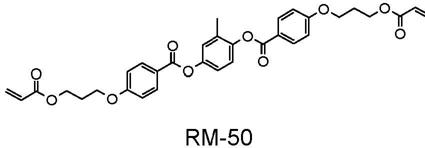 | |
| 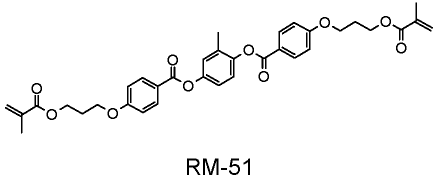 | |
| 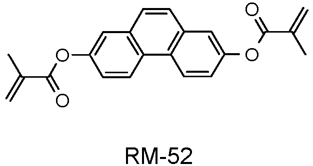 | 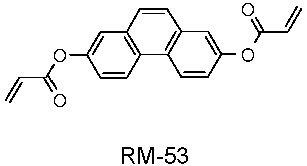 |
| 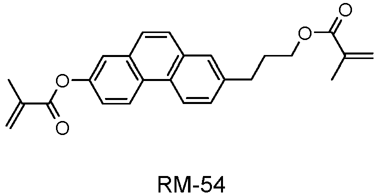 | 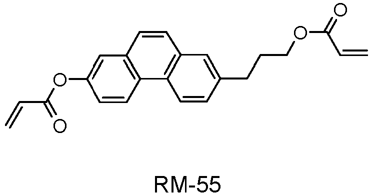 |
| 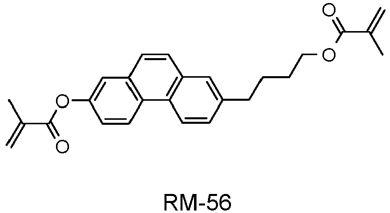 | 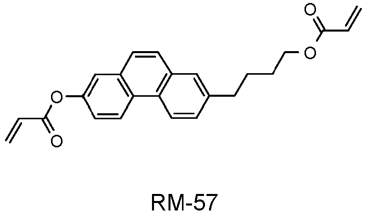 |
| 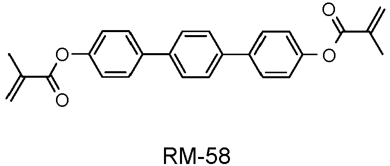 | 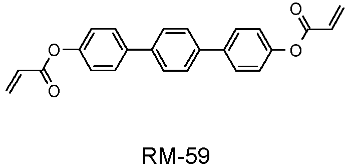 |
| 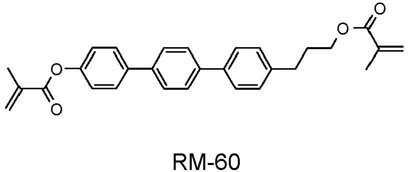 | 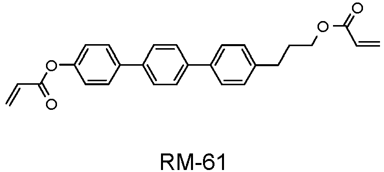 |
| 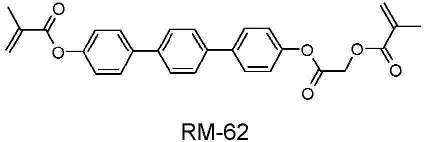 | 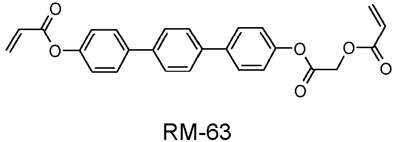 |
| 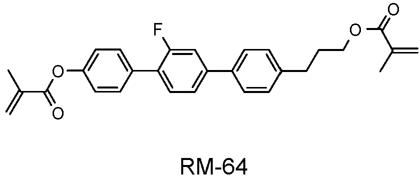 | 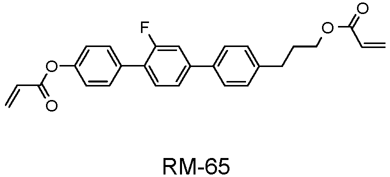 |
| 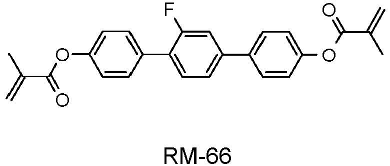 | 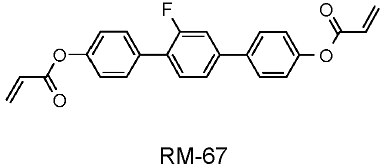 |
| 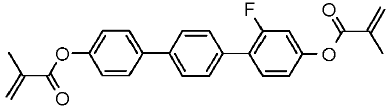 | 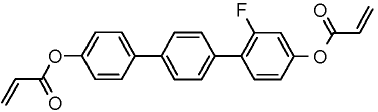 |
| 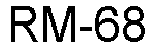 | 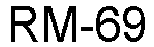 |
| 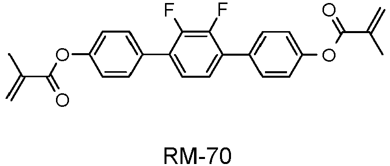 | 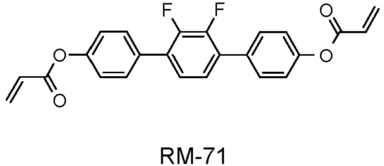 |
| 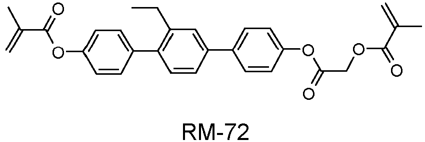 | 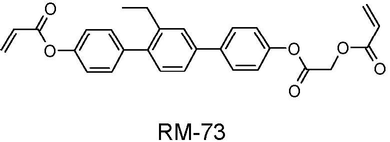 |
| 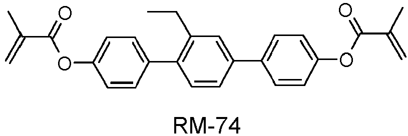 | 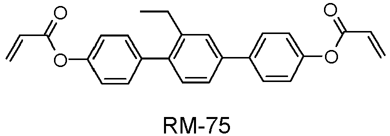 |
| 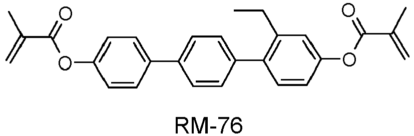 | 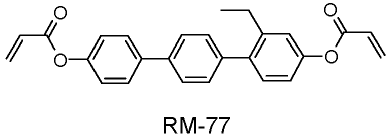 |
| 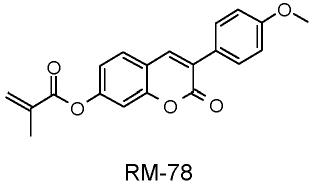 | 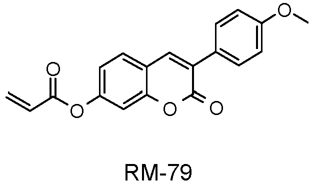 |
| 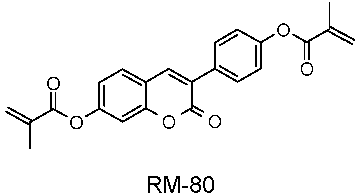 | 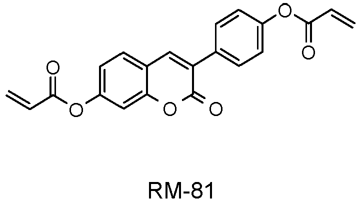 |
| 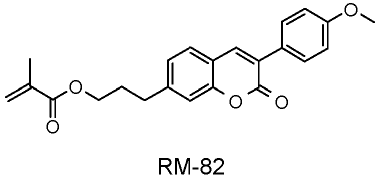 | 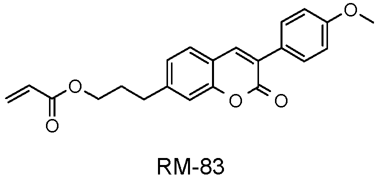 |
| 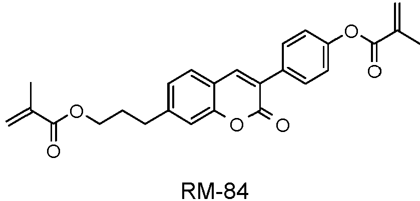 | 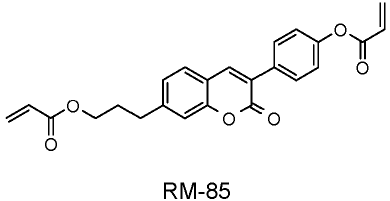 |
| 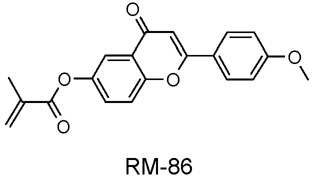 | 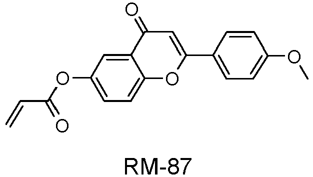 |
| 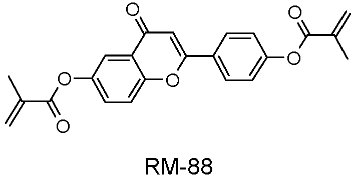 | 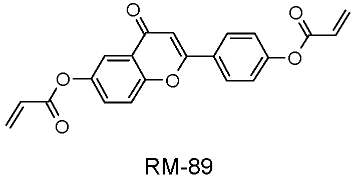 |
| 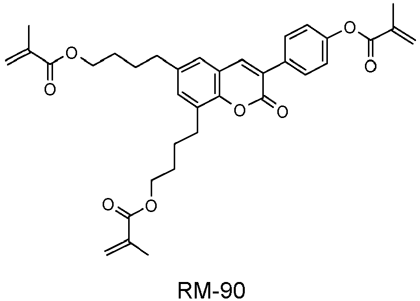 | 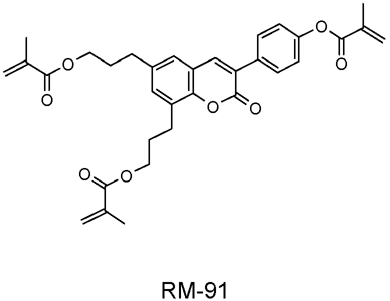 |
| 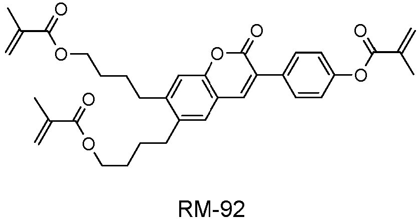 | 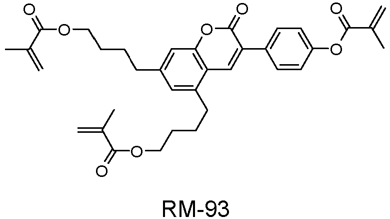 |
| 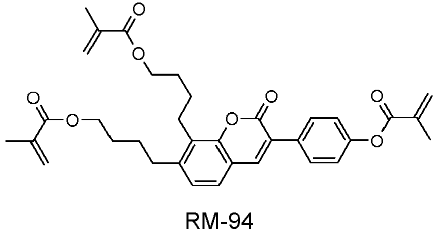 | 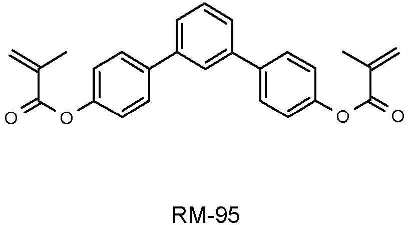 |
| 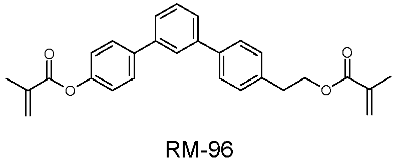 | 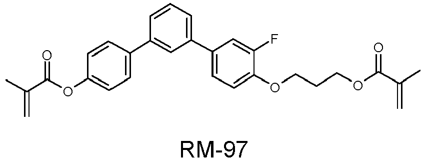 |
| 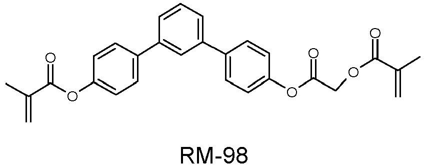 | 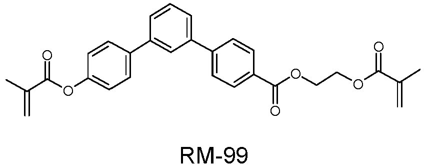 |
| 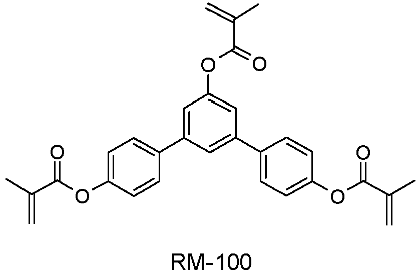 | |
| 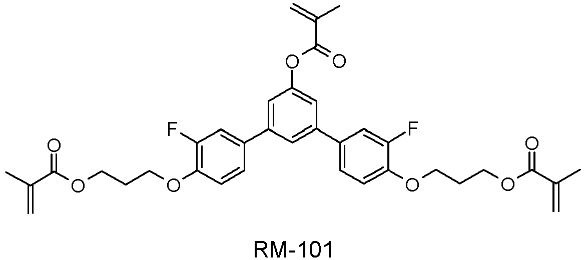 | |
| 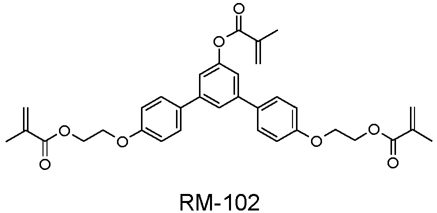 | |
| 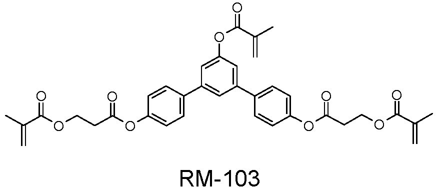 | |
| 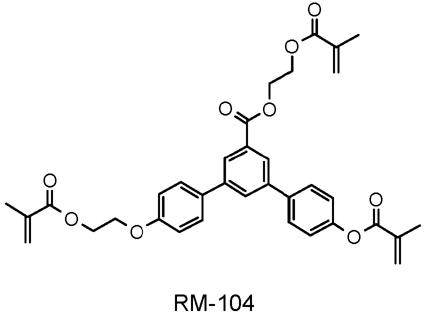 | |
| 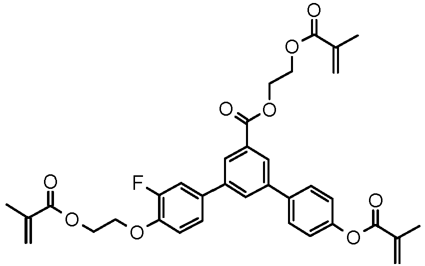 | 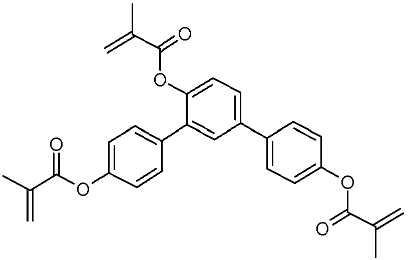 |
| 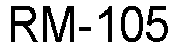 | 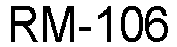 |
| 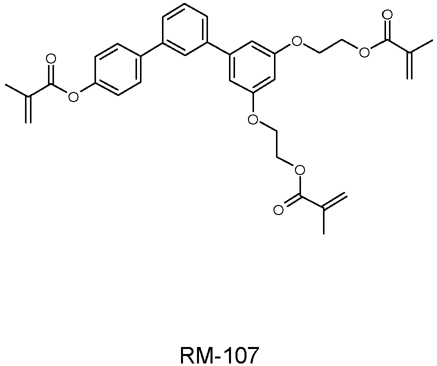 | 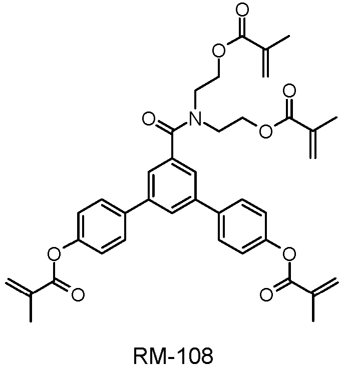 |
| 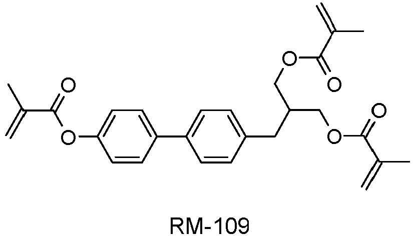 | 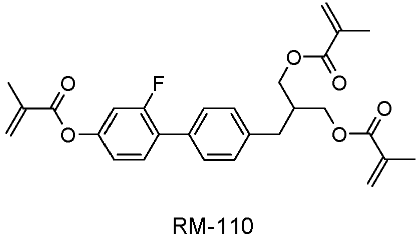 |
| 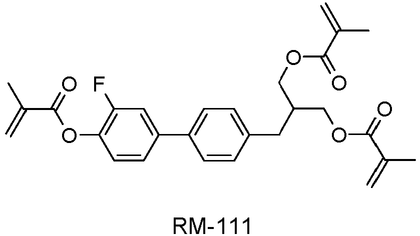 | 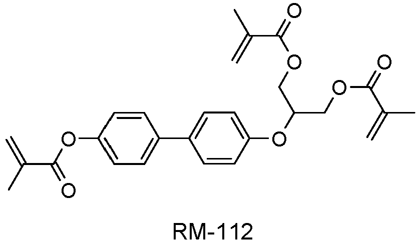 |
| 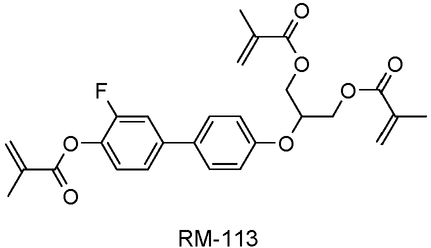 | 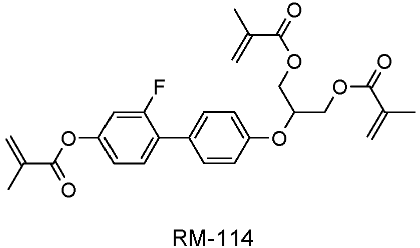 |
| 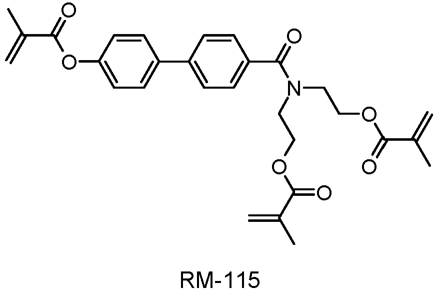 | 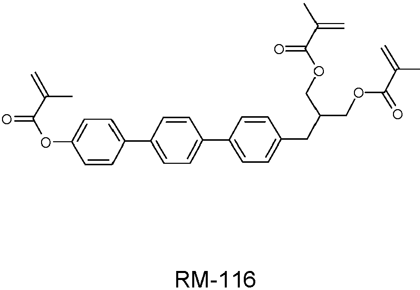 |
| 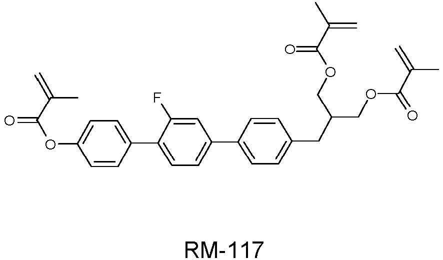 | 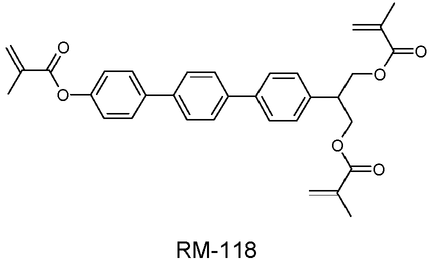 |
| 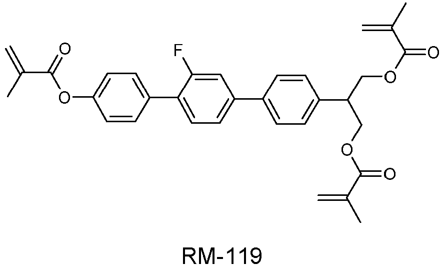 | 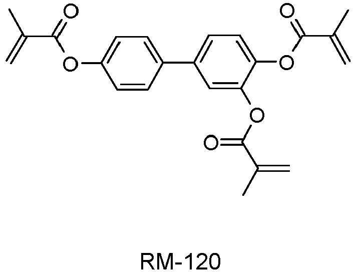 |
| 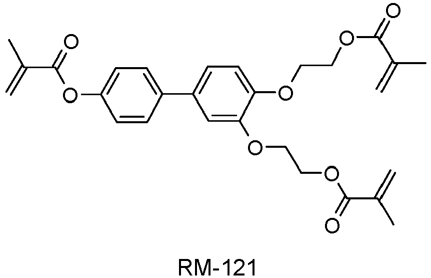 | 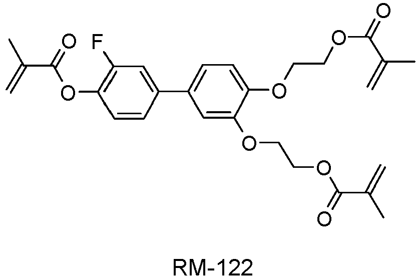 |
| 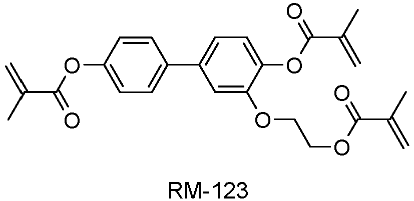 | 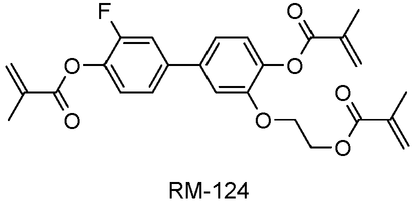 |
| 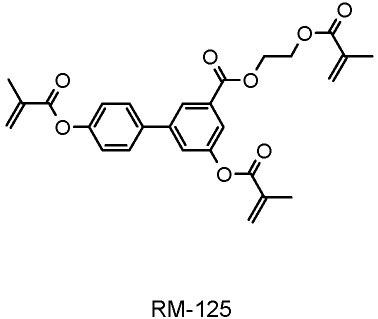 | 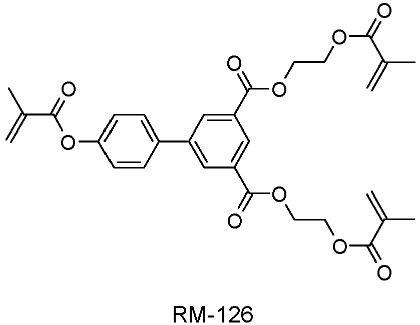 |
| 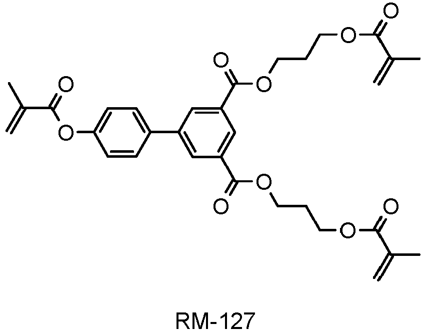 | 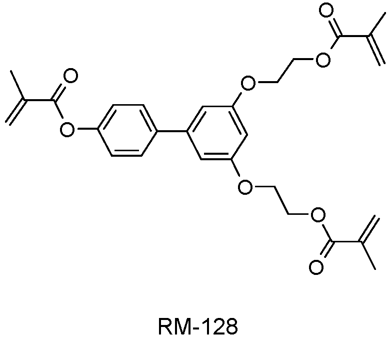 |
| 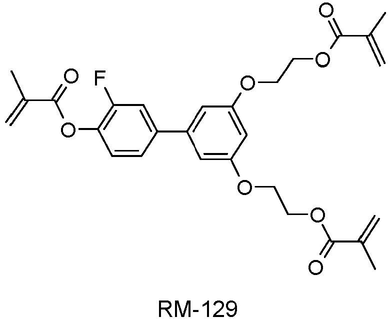 | 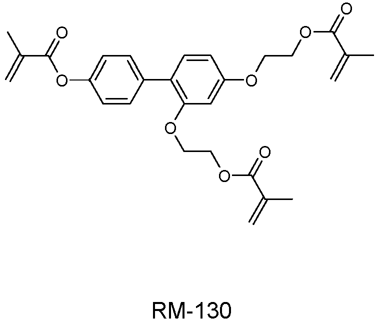 |
| 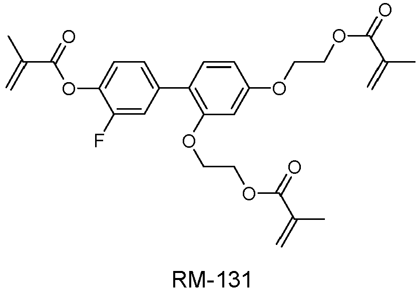 | 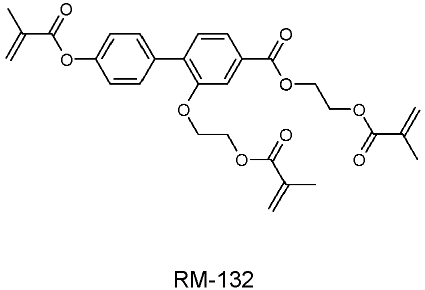 |
| 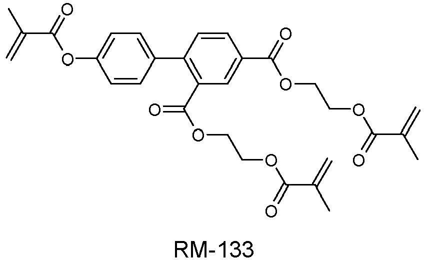 | 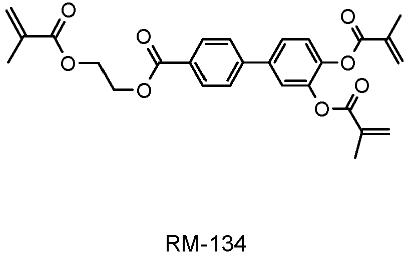 |
| 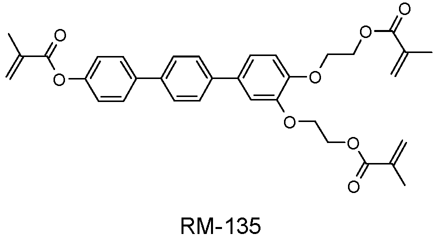 | 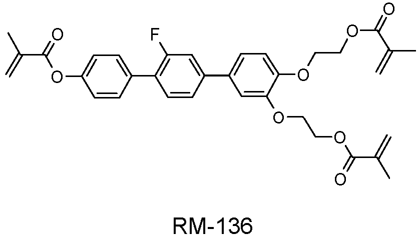 |
| 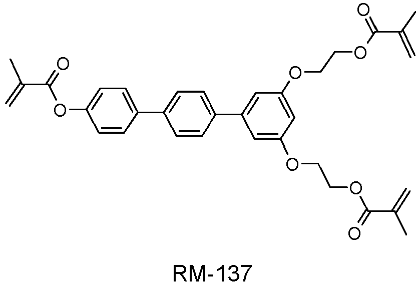 | 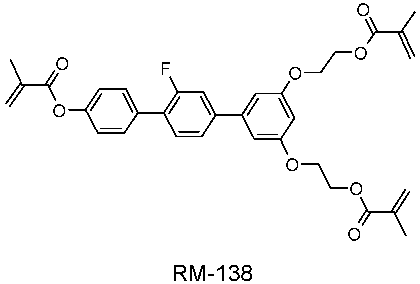 |
| 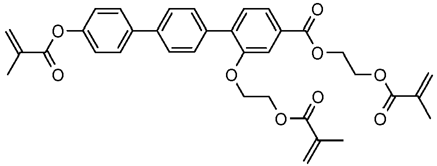 | 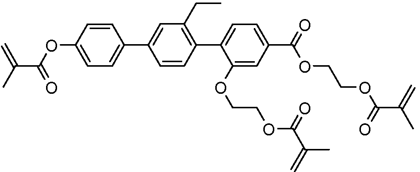 |
| 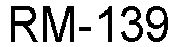 | 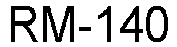 |
| 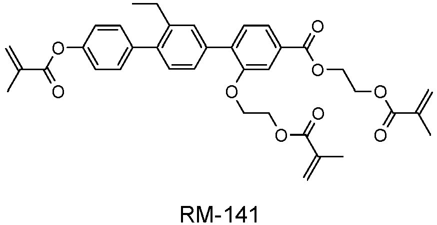 | 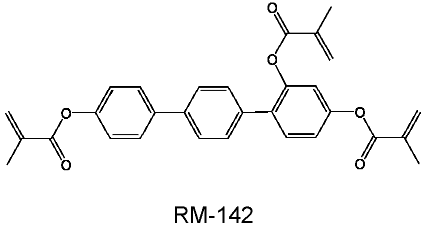 |
| 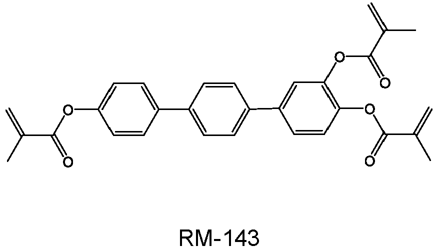 | 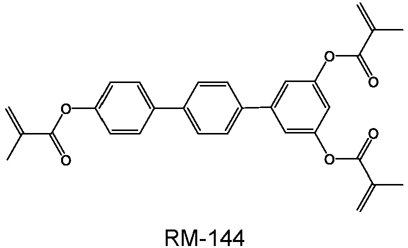 |
| 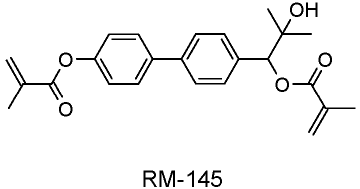 | 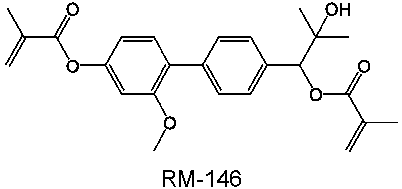 |
| 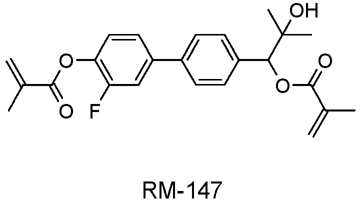 | 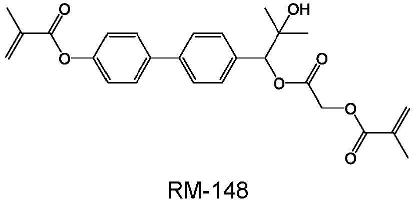 |
| 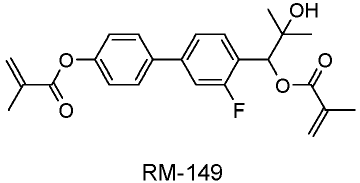 | 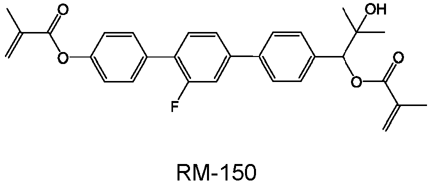 |
| 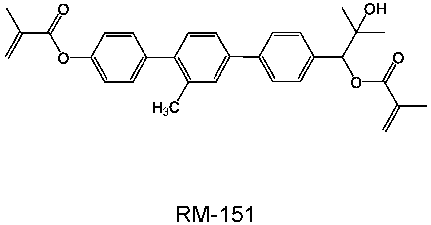 | 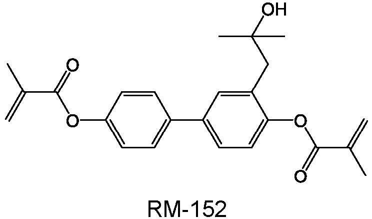 |
| 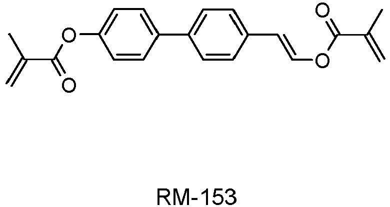 | 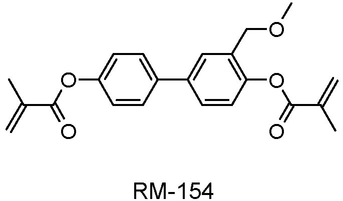 |
| 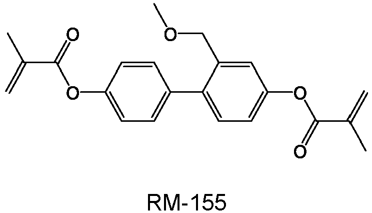 | 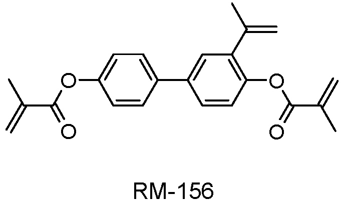 |
| 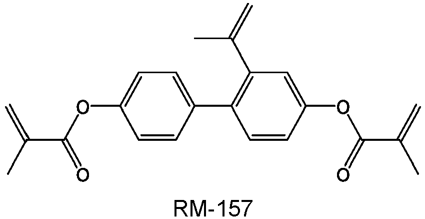 | 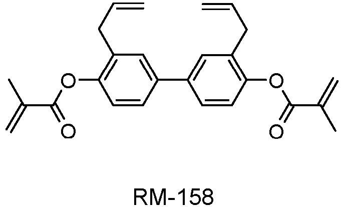 |
| 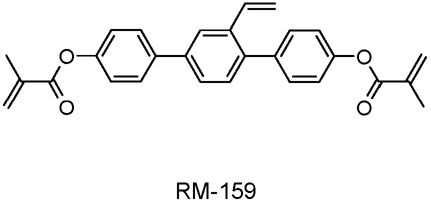 | 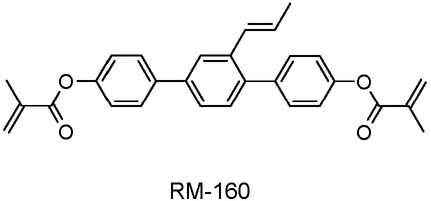 |
| 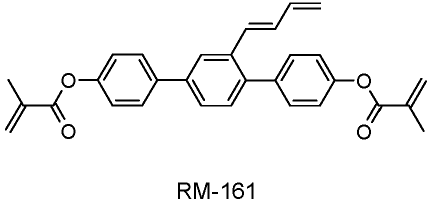 | 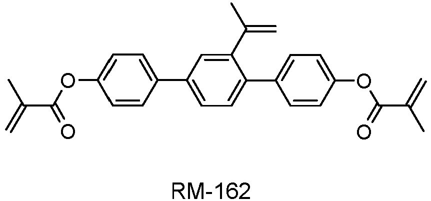 |
| 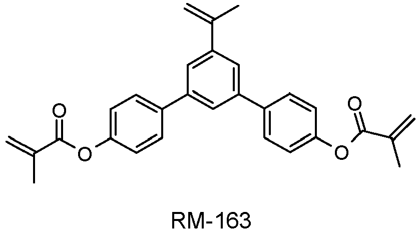 | 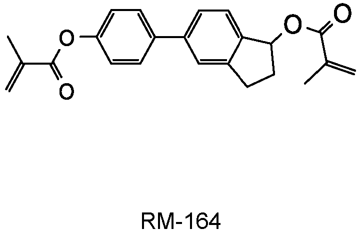 |
| 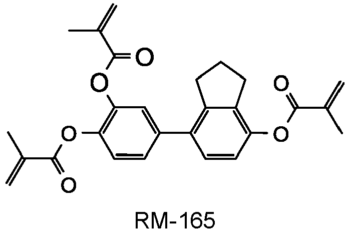 | 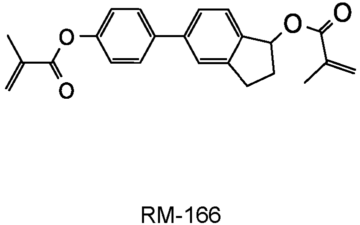 |
| 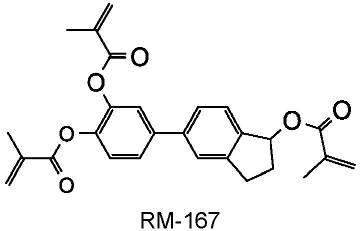 | 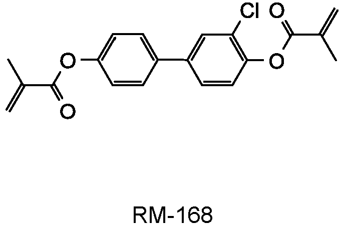 |
| 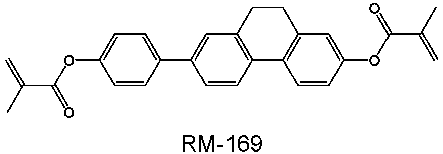 | 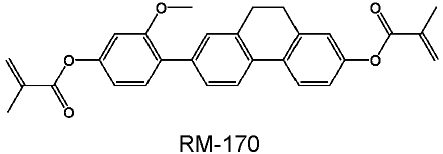 |
| 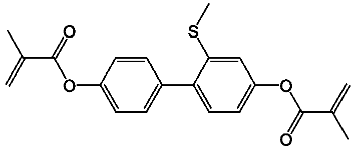 | 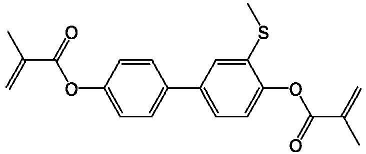 |
| 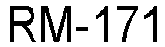 | 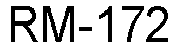 |
| 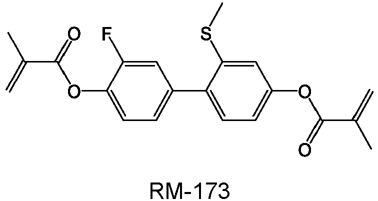 | 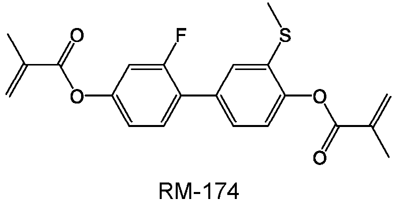 |
| 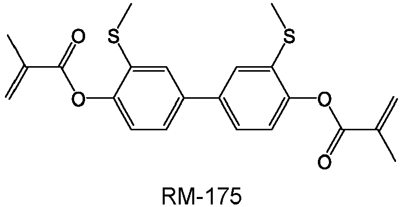 | 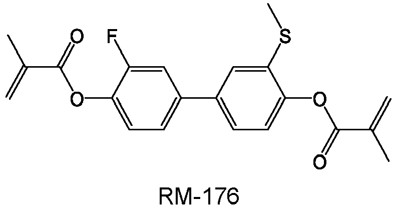 |
| 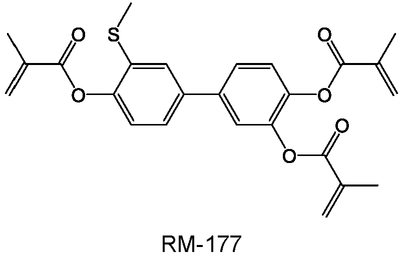 | 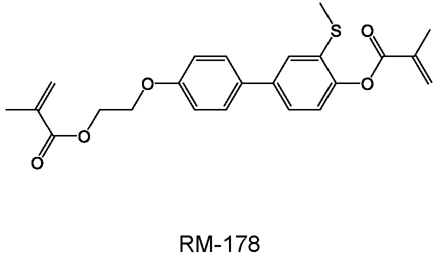 |
| 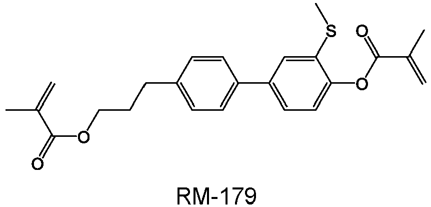 | 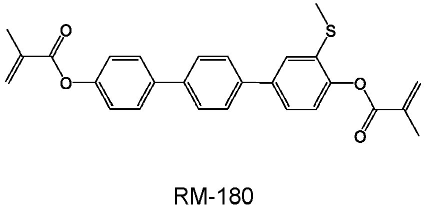 |
| 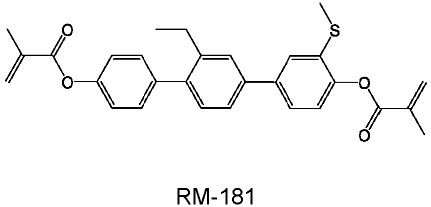 | 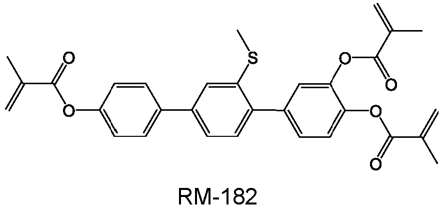 |
| 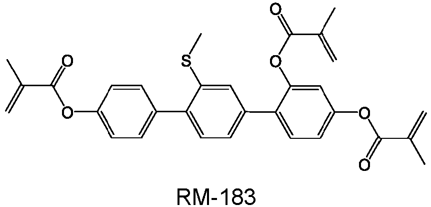 | |

In a preferred embodiment, the mixtures according to the invention comprise one or more polymerizable compounds, preferably selected from the polymerizable compounds of the formulae RM-1 to RM-182. Of these, compounds RM-1, RM-4, RM-8, RM-17, RM-19, RM-35, RM-37, RM-39, RM-40, RM-41, RM-48, RM-52, RM-54, RM-57, RM-58, RM-64, RM-74, RM-76, RM-88, RM-91, RM-102, RM-103, RM-109, RM-116, RM-117, RM-120, RM-121, RM-122, RM-139, RM-140, RM-142, RM-143, RM-145, RM-146, RM-147, RM-149, RM-156 to RM-163, RM-169, RM-170 and RM-171 to RM-183 are particularly preferred.

### Working examples:

The following examples are intended to explain the invention without limiting it. In the examples, m.p. denotes the melting point and T_{(N,I)} denotes the clearing point of a liquid-crystalline substance in degrees Celsius; Furthermore: C denotes crystalline solid state, S denotes smectic phase (the index denotes the phase type), N denotes nematic state, Ch denotes cholesteric phase, I denotes isotropic phase, T_{g} denotes glass-transition temperature. The number between two symbols indicates the conversion temperature in degrees Celsius.

The host mixture used for determination of the optical anisotropy Δn of single compounds is the commercial mixture ZLI-4792 (Merck KGaA). The dielectric anisotropy Δε is determined using commercial mixture ZLI-2857. The physical data of the compound to be investigated are obtained from the change in the dielectric constants of the host mixture after addition of the compound to be investigated and extrapolation to 100 % of the compound employed. In general, 10 % of the compound to be investigated are dissolved in the host mixture, depending on the solubility.

Unless indicated otherwise, parts or per cent data denote parts by weight or per cent by weight.

Above and below:
- Vₒ: denotes threshold voltage, capacitive [V] at 20°C,
- nₑ: denotes extraordinary refractive index at 20°C and 589 nm,
- nₒ: denotes ordinary refractive index at 20°C and 589 nm,
- Δn: denotes optical anisotropy at 20°C and 589 nm,
- ε_{⊥}: denotes dielectric permittivity perpendicular to the director at 20°C and 1 kHz,
- ε_{∥}: denotes dielectric permittivity parallel to the director at 20°C and 1 kHz,
- Δε: denotes dielectric anisotropy at 20°C and 1 kHz,
- cl.p., T(N,I): denotes clearing point [°C],
- γ₁: denotes rotational viscosity measured at 20°C [mPa·s],
- K₁: denotes elastic constant, "splay" deformation at 20°C [pN],
- K₂: denotes elastic constant, "twist" deformation at 20°C [pN],
- K₃: denotes elastic constant, "bend" deformation at 20°C [pN], and
- LTS: denotes low-temperature stability (nematic phase), determined in test cells or in the bulk, as specified.

Unless explicitly noted otherwise, all values indicated in the present application for temperatures, such as, for example, the melting point T(C,N), the transition from the smectic (S) to the nematic (N) phase T(S,N) and the clearing point T(N,I) or cl.p., are indicated in degrees Celsius (°C).

The term "threshold voltage" for the present invention relates to the capacitive threshold (V₀), also called the Freedericksz threshold, unless explicitly indicated otherwise. In the examples, as is generally usual, the optical threshold can also be indicated for 10 % relative contrast (V₁₀).

The display used for measurement of the capacitive threshold voltage consists of two plane-parallel glass outer plates at a separation of 20 µm, which each have on the insides an electrode layer and an unrubbed polyimide alignment layer on top, which cause a homeotropic edge alignment of the liquid-crystal molecules.

The display or test cell used for measurement of the tilt angle consists of two plane-parallel glass outer plates at a separation of 4 µm, which each have on the insides an electrode layer and a polyimide alignment layer on top, where the two polyimide layers are rubbed antiparallel to one another and cause a homeotropic edge alignment of the liquid-crystal molecules.

The polymerisable compounds are polymerised in the display or test cell by irradiation with UV light of defined intensity for a prespecified time, with a voltage simultaneously being applied to the display (usually 10 V to 30 V alternating current, 1 kHz). In the examples, unless indicated otherwise, a metal halide lamp and an intensity of 100 mW/cm² is used for polymerisation. The intensity is measured using a standard meter (Hoenle UV-meter high end with UV sensor).

The tilt angle is determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

Unless indicated otherwise, the VHR is determined at 20°C (VHR₂₀) and after 5 minutes in an oven at 100°C (VHR₁₀₀) in a commercially available instrument Model LCM-1 (O0004) from TOYO Corporation, Japan. The voltage used has a frequency of in a range from 1 Hz to 60 Hz, unless indicated more precisely.

The stability to UV irradiation is investigated in a "Suntest CPS+", a commercial instrument from Heraeus, Germany, using a Xenon lamp NXE1500B. The sealed test cells are irradiated for 2.0 h, unless explicitly indicated, without additional heating. The irradiation power in the wavelength range from 300 nm to 800 nm is 765 W / m² V. A UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio (ΔVHR) usually caused by the exposure, for example by UV irradiation or by LCD backlighting, is determined in accordance with the following equation (1): $Δ VHR \left(t\right) = VHR \left(t\right) - VHR \left(t=0\right)$

In order to investigate the low-temperature stability, also known as "LTS", i.e. the stability of the LC mixture in the bulk against spontaneous crystallisation of individual components at low temperatures or the occurrence of smectic phases, as the case may be, several sealed bottles, each containing about 1 g of the material, are stored at one or more given temperatures, typically of -10°C, -20°C, -30°C and/or -40°C and it is inspected at regular intervals visually, whether a phase transition is observed or not. As soon as the first one of the samples at a given temperature shows a change the test is discontinued and the time until the last inspection, at which no change has been observed, is noted as the respective LTS. The test is run for 1000 h. If after 1000 h no change has occurred, the result is "LTS >1000 h"

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2µm cell gap. The measurement is performed after 5 min of storage in an oven at 60 °C or 100 °C.

The so-called "HTP" denotes the helical twisting power of an optically active or chiral substance in an LC medium (in µm). Unless indicated otherwise, the HTP is measured in the commercially available nematic LC host mixture MLD-6260 (Merck KGaA) at a temperature of 20°C.

The Clearing point is measured using the Mettler Thermosystem FP900. The optical anisotropy (Δn) is measured using an Abbe-Refraktometer H005 (Natrium-spectral lamp Na10 at 589nm, 20 °C). The dielectric anisotropy (Δε) is measured using an LCR-Meter E4980A/Agilent (G005) at 20°C (ε-parallel-cells with JALS 2096-R1). The turn on voltage (V₀) is measured using an LCR-Meter E4980A/Agilent (G005) at 20°C (ε-parallel-cells with JALS 2096-R1). The rotational viscosity (γ₁) is measured using a TOYO LCM-2 (0002) at 20°C (gamma 1 negative cells with JALS-2096-R 1 ). The elastic constant (K₁, splay) is measured using an LCR-Meter E4980A/Agilent (G005) at 20°C (ε parallel-cells with JALS 2096-R1). K₃: The elastic constant (K₃, bend) is measured using an LCR-Meter E4980A/Agilent (G005) at 20°C (ε-parallel-cells with JALS 2096-R1).

Unless explicitly noted otherwise, all concentrations in the present application are indicated in per cent by weight and relate to the corresponding mixture as a whole, comprising all solid or liquid-crystalline components, without solvents. All physical properties are determined in accordance with "Merck Liquid Crystals, Physical Properties of Liquid Crystals", Status November 1997, Merck KGaA, Germany, and apply for a temperature of 20°C, unless explicitly indicated otherwise.

The following mixture examples having negative dielectric anisotropy are suitable, in particular, for liquid-crystal displays which have at least one planar alignment layer, such as, for example, IPS and FFS displays, in particular UB-FFS ( = ultra-bright FFS), and for VA displays.

### Examples

The comparative Mixture C-1 and the nematic mixtures M-1 to M-27 are prepared as follows:

### Comparative Mixture C1

| | | | |
|---|---|---|---|
| CC-3-V | 48.5 % | Clearing point /°C: | 79.7 |
| CC-3-V1 | 3.0 % | Δn (589 nm, 20°C): | 0.1002 |
| CCP-V-1 | 12.0 % | nₑ (589 nm, 20°C): | 1.5860 |
| PGP-2-2V | 7.5 % | nₒ (589 nm, 20°C): | 1.4858 |
| APUQU-3-F | 6.0 % | Δε (1 kHz, 20°C): | 2.7 |
| PGUQU-4-F | 5.0 % | ε_{∥} (1 kHz, 20°C): | 6.2 |
| DPGU-4-F | 2.0 % | ε_{⊥} (1 kHz, 20°C): | 3.5 |
| PPGU-3-F | 0.5 % | γ₁ (20°C)/ mPa·s: | 65 |
| CY-5-O2 | 6.0 % | K₁ (pN, 20°C): | 13.1 |
| CCY-5-O2 | 3.5 % | K₃ (pN, 20°C): | 14.9 |
| CPY-3-O2 | 3.5 % | LTS (-20°C) [h]: | 1000 |
| PP-1-2V1 | 2.5 % | | |
| Σ | 100.0 % | | |

### Mixture M1

| | | | |
|---|---|---|---|
| CC-3-V | 48.5 % | Clearing point /°C: | 82.7 |
| CC-3-V1 | 3.0 % | Δn (589 nm, 20°C): | 0.1013 |
| CCP-V-1 | 14.5 % | nₑ (589 nm, 20°C): | 1.5882 |
| PGP-2-2V | 7.5 % | nₒ (589 nm, 20°C): | 1.4869 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 68 |
| CY-5-O2 | 2.0 % | K₁ (pN, 20°C): | 13.6 |
| CCY-3-O2 | 1.5 % | K₃ (pN, 20°C): | 16.0 |
| CPY-3-O2 | 3.0 % | | |
| PP-1-2V1 | 2.5 % | | |
| CLOY-3-O2 | 4.0 % | | |
| Σ | 100.0 % | | |

### Mixture M2

| | | | |
|---|---|---|---|
| CC-3-V | 48.5 % | Clearing point /°C: | 79.3 |
| CC-3-V1 | 4.0 % | Δn (589 nm, 20°C): | 0.1010 |
| CCP-V-1 | 12.0 % | nₑ (589 nm, 20°C): | 1.5882 |
| PGP-1-2V | 4.0 % | nₒ (589 nm, 20°C): | 1.4872 |
| PGP-2-2V | 7.0 % | Δε (1 kHz, 20°C): | 2.8 |
| APUQU-3-F | 5.0 % | ε_{∥} (1 kHz, 20°C): | 5.9 |
| PGUQU-4-F | 4.5 % | ε_{⊥} (1 kHz, 20°C): | 3.1 |
| DPGU-4-F | 1.0 % | γ₁ (20°C)/ mPa·s: | 59 |
| CY-5-O2 | 3.0 % | K₁ (pN, 20°C): | 13.2 |
| CPP-3-2 | 2.0 % | K₃ (pN, 20°C): | 15.1 |
| CCU-3-F | 4.5 % | | |
| PP-1-2V1 | 2.0 % | | |
| CLOY-3-O2 | 2.5 % | | |
| Σ | 100.0 % | | |

The mixtures according to the invention are distinguished by advantageously high values K_{Avg}. and low values γ₁/K₁.

| Mixture | Δε | Δn | K_{Avg.} [pN] | γ₁/K₁ [mPas/pN] |
|---|---|---|---|---|
| C1 | 2.7 | 0.100 | 11.5 | 5.0 |
| M1 | 2.8 | 0.101 | 12.1 | 5.0 |
| M2 | 2.8 | 0.101 | 11.6 | 4.5 |

### Mixture M3

| | | | |
|---|---|---|---|
| CC-3-V | 48.5 % | Clearing point /°C: | 80.3 |
| CC-3-V1 | 3.0 % | Δn (589 nm, 20°C): | 0.1008 |
| CCP-V-1 | 14.5 % | nₑ (589 nm, 20°C): | 1.5873 |
| PGP-2-2V | 7.5 % | nₒ (589 nm, 20°C): | 1.4865 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 65 |
| CY-5-O2 | 3.5 % | K₁ (pN, 20°C): | 13.3 |
| CPY-3-O2 | 3.0 % | K₃ (pN, 20°C): | 15.5 |
| PP-1-2V1 | 2.5 % | | |
| CLOY-3-O2 | 4.0 % | | |
| Σ | 100.0 % | | |

### Mixture M4

| | | | |
|---|---|---|---|
| CC-3-V | 48.5 % | Clearing point /°C: | 82.4 |
| CC-4-V1 | 3.0 % | Δn (589 nm, 20°C): | 0.1002 |
| CCP-V-1 | 14.5 % | nₑ (589 nm, 20°C): | 1.5876 |
| PGP-2-2V | 7.5 % | nₒ (589 nm, 20°C): | 1.4873 |
| APUQU-3-F | 3.0 % | Δε (1 kHz, 20°C): | 2.9 |
| APUQU(1)-3-F | 3.0 % | ε_{∥} (1 kHz, 20°C): | 6.2 |
| PGUQU(1)-3-F | 5.0 % | ε_{⊥} (1 kHz, 20°C): | 3.3 |
| DPGU-4-F | 2.0 % | γ₁ (20°C)/ mPa·s: | 68 |
| PPGU-3-F | 0.5 % | | |
| CY-5-O2 | 2.0 % | | |
| CCY-3-O2 | 1.5 % | | |
| CPY-3-O2 | 3.0 % | | |
| PP-1-2V1 | 2.5 % | | |
| CLOY-3-O2 | 4.0 % | | |
| Σ | 100.0 % | | |

### Mixture M5

| | | | |
|---|---|---|---|
| CC-3-V | 48.5 % | Clearing point /°C: | 78.7 |
| CC-3-V1 | 4.0 % | Δn (589 nm, 20°C): | 0.1006 |
| CCP-V-1 | 12.0 % | nₑ (589 nm, 20°C): | 1.5881 |
| PGP-1-2V | 4.0 % | nₒ (589 nm, 20°C): | 1.4875 |
| PGP-2-2V | 7.0 % | Δε (1 kHz, 20°C): | 2.8 |
| APUQU-3-F | 5.0 % | ε_{∥} (1 kHz, 20°C): | 5.9 |
| PGUQU-(c3)1-F | 4.5 % | ε_{⊥} (1 kHz, 20°C): | 3.1 |
| DPGU-4-F | 1.0 % | γ₁ (20°C)/ mPa·s: | 59 |
| CY-5-O2 | 3.0 % | | |
| CPP-3-2 | 2.0 % | | |
| CCU-3-F | 4.5 % | | |
| PP-1-2V1 | 2.0 % | | |
| CLOY-3-O2 | 2.5 % | | |
| Σ | 100.0 % | | |

### Mixture M6

| | | | |
|---|---|---|---|
| CC-3-V | 48.5 % | Clearing point /°C: | 80.0 |
| CC-3-V1 | 4.0 % | Δn (589 nm, 20°C): | 0.1010 |
| CCP-V-1 | 12.0 % | nₑ (589 nm, 20°C): | 1.5885 |
| PGP-1-2V | 4.0 % | nₒ (589 nm, 20°C): | 1.4875 |
| PGP-2-2V | 4.0 % | Δε (1 kHz, 20°C): | 2.8 |
| PGP-1-1 (c3) | 3.0 % | | |
| APUQU-3-F | 5.0 % | ε_{∥} (1 kHz, 20°C): | 5.9 |
| PGUQU-4-F | 4.5 % | ε_{⊥} (1 kHz, 20°C): | 3.1 |
| DPGU-4-F | 1.0 % | γ₁ (20°C)/ mPa·s: | 59 |
| CY-5-O2 | 3.0 % | K₁ (pN, 20°C): | 13.1 |
| CPP-3-2 | 2.0 % | K₃ (pN, 20°C): | 15.0 |
| CCU-3-F | 4.5 % | | |
| PP-1-2V1 | 2.0 % | | |
| CLOY-3-O2 | 2.5 % | | |
| ∑ | 100.0 % | | |

### Mixture M7

| | | | |
|---|---|---|---|
| CC-3-V | 48.5 % | Clearing point /°C: | 82.0 |
| CC-3-V1 | 3.0 % | Δn (589 nm, 20°C): | 0.1004 |
| CCP-V-1 | 14.5 % | nₑ (589 nm, 20°C): | 1.5873 |
| PGP-2-2V | 7.5 % | nₒ (589 nm, 20°C): | 1.4869 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 67 |
| CY-5-O2 | 2.0 % | K₁ (pN, 20°C): | 13.5 |
| CCY-3-O2 | 1.5 % | K₃ (pN, 20°C): | 15.9 |
| CPY-3-O2 | 3.0 % | | |
| PP-1-5 | 2.5 % | | |
| CLOY-3-O2 | 4.0 % | | |
| ∑ | 100.0 % | | |

### Mixture M8

| | | | |
|---|---|---|---|
| CC-3-V | 48.5 % | Clearing point /°C: | 81.8 |
| CC-3-V1 | 3.0 % | Δn (589 nm, 20°C): | 0.1007 |
| CCP-V-1 | 14.5 % | nₑ (589 nm, 20°C): | 1.5877 |
| PGP-2-2V | 7.5 % | nₒ (589 nm, 20°C): | 1.4870 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPPP-4-1T | 0.5 % | γ₁ (20°C)/ mPa·s: | 67 |
| CY-5-O2 | 2.0 % | K₁ (pN, 20°C): | 13.6 |
| CCY-3-O2 | 1.5 % | K₃ (pN, 20°C): | 15.7 |
| CPY-3-O2 | 3.0 % | | |
| PP-1-3 | 2.5 % | | |
| CLOY-3-O2 | 4.0 % | | |
| ∑ | 100.0 % | | |

### Mixture M9

| | | | |
|---|---|---|---|
| CC-3-V | 48.0 % | Clearing point /°C: | 82.9 |
| CC-3-2V1 | 3.0 % | Δn (589 nm, 20°C): | 0.0996 |
| CCP-V-1 | 16.0 % | nₑ (589 nm, 20°C): | 1.5865 |
| PGP-2-2V | 6.5 % | nₒ (589 nm, 20°C): | 1.4869 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 68 |
| CY-5-O2 | 2.0 % | K₁ (pN, 20°C): | 13.7 |
| CCY-3-O2 | 1.5 % | K₃ (pN, 20°C): | 16.0 |
| CPY-3-O2 | 3.0 % | | |
| PP-1-3 | 2.5 % | | |
| CLOY-3-O2 | 4.0 % | | |
| ∑ | 100.0 % | | |

### Mixture M10

| | | | |
|---|---|---|---|
| CC-3-V | 48.5 % | Clearing point /°C: | 82.9 |
| CC-3-V1 | 4.0 % | Δn (589 nm, 20°C): | 0.1059 |
| CLP-V-1 | 13.5 % | nₑ (589 nm, 20°C): | 1.5943 |
| PGP-2-2V | 7.5 % | nₒ (589 nm, 20°C): | 1.4882 |
| APUQU-3-F | 6.0 % | Δε (1 kHz, 20°C): | 3.0 |
| PGUQU-4-F | 5.0 % | ε_{∥} (1 kHz, 20°C): | 6.4 |
| DPGU-4-F | 2.0 % | ε_{⊥} (1 kHz, 20°C): | 3.4 |
| PPGU-3-F | 0.5 % | γ₁ (20°C)/ mPa·s: | 72 |
| CY-5-O2 | 2.0 % | K₁ (pN, 20°C): | 14.8 |
| CCY-3-O2 | 1.5 % | K₃ (pN, 20°C): | 15.8 |
| CPY-3-O2 | 3.0 % | | |
| PP-1-4 | 2.5 % | | |
| CLOY-3-O2 | 4.0 % | | |
| ∑ | 100.0 % | | |

### Mixture M11

| | | | |
|---|---|---|---|
| CC-3-V | 48.5 % | Clearing point /°C: | 81.5 |
| CC-3-V1 | 3.0 % | Δn (589 nm, 20°C): | 0.1015 |
| CCP-V-1 | 14.5 % | nₑ (589 nm, 20°C): | 1.5885 |
| PGP-2-2V | 7.5 % | nₒ (589 nm, 20°C): | 1.4870 |
| APUQU-3-F | 6.0 % | Δε (1 kHz, 20°C): | 2.8 |
| PGUQU-4-F | 5.0 % | ε_{∥} (1 kHz, 20°C): | 6.3 |
| DPGU-4-F | 2.0 % | ε_{⊥} (1 kHz, 20°C): | 3.5 |
| PPGU-3-F | 0.5 % | γ₁ (20°C)/ mPa·s: | 66 |
| CY-5-O2 | 3.0 % | K₁ (pN, 20°C): | 13.7 |
| CPY-3-O2 | 1.0 % | K₃ (pN, 20°C): | 15.6 |
| COB(S)-2-O4 | 2.5 % | | |
| PP-1-2V1 | 2.5 % | | |
| CLOY-3-O2 | 4.0 % | | |
| ∑ | 100.0 % | | |

### Mixture M12

| | | | |
|---|---|---|---|
| CC-3-V | 48.5 % | Clearing point /°C: | 82 |
| CC-3-V1 | 3.0 % | Δn (589 nm, 20°C): | 0.1013 |
| CCP-V-1 | 14.5 % | nₑ (589 nm, 20°C): | 1.5884 |
| PGP-2-2V | 7.5 % | nₒ (589 nm, 20°C): | 1.4871 |
| APUQU-3-F | 6.0 % | Δε (1 kHz, 20°C): | 2.8 |
| PGUQU-4-F | 5.0 % | ε_{∥} (1 kHz, 20°C): | 6.3 |
| DPGU-4-F | 2.0 % | ε_{⊥} (1 kHz, 20°C): | 3.5 |
| PPGU-3-F | 0.5 % | γ₁ (20°C)/ mPa·s: | 67 |
| CY-5-O2 | 3.0 % | K₁ (pN, 20°C): | 13.5 |
| CPY-3-O2 | 1.0 % | K₃ (pN, 20°C): | 15.4 |
| COB(S)-2-O1(c5) | 2.5 % | | |
| PP-1-2V1 | 2.5 % | | |
| CLOY-3-O2 | 4.0 % | | |
| ∑ | 100.0 % | | |

### Mixture M13

| | | | |
|---|---|---|---|
| CC-3-V | 48.5 % | Clearing point /°C: | 83.9 |
| CC-3-V1 | 3.0 % | Δn (589 nm, 20°C): | 0.1028 |
| CCP-V-1 | 14.5 % | nₑ (589 nm, 20°C): | 1.5901 |
| PGP-2-2V | 7.5 % | nₒ (589 nm, 20°C): | 1.4873 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 68 |
| PY-2O-O2 | 2.0 % | | |
| CCY-3-O2 | 2.5 % | | |
| CPY-3-O2 | 2.0 % | | |
| PP-1-2V1 | 2.5 % | | |
| CLOY-3-O2 | 4.0 % | | |
| Σ | 100.0 % | | |

### Mixture M14

| | | | |
|---|---|---|---|
| CC-3-V | 48.5 % | Clearing point /°C: | 82.1 |
| CC-3-V1 | 3.0 % | Δn (589 nm, 20°C): | 0.1010 |
| CCP-V-1 | 14.5 % | nₑ (589 nm, 20°C): | 1.5878 |
| PGP-2-2V | 7.5 % | nₒ (589 nm, 20°C): | 1.4868 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 68 |
| CY-5-O2 | 2.0 % | | |
| CAIY-3-O2 | 1.5 % | | |
| CPY-3-O2 | 3.0 % | | |
| PP-1-2V1 | 2.5 % | | |
| CLOY-3-O2 | 4.0 % | | |
| Σ | 100.0 % | | |

### Mixture M15

| | | | |
|---|---|---|---|
| CC-3-V | 49.5 % | Clearing point /°C: | 81.6 |
| CC-3-V1 | 4.0 % | Δn (589 nm, 20°C): | 0.1055 |
| CLP-V-1 | 12.5 % | nₑ (589 nm, 20°C): | 1.5933 |
| PGP-2-2V | 7.5 % | nₒ (589 nm, 20°C): | 1.4878 |
| APUQU-3-F | 6.0 % | Δε (1 kHz, 20°C): | 3.,0 |
| PGUQU-4-F | 5.0 % | ε_{∥} (1 kHz, 20°C): | 6.4 |
| DPGU-4-F | 2.0 % | ε_{⊥} (1 kHz, 20°C): | 3.4 |
| PPGU-3-F | 0.5 % | γ₁ (20°C)/ mPa·s: | 70 |
| CY-5-O2 | 2.0 % | | |
| CCY-2-O2 | 1.5 % | | |
| CPY-3-O2 | 3.0 % | | |
| PP-1-2V1 | 2.5 % | | |
| CLOY-3-O2 | 4.0 % | | |
| Σ | 100.0 % | | |

### Mixture M16

| | | | |
|---|---|---|---|
| CC-3-V | 48.5 % | Clearing point /°C: | 82.6 |
| CC-3-V1 | 3.0 % | Δn (589 nm, 20°C): | 0.1059 |
| CCP-V-1 | 14.5 % | nₑ (589 nm, 20°C): | 1.5943 |
| PGP-2-2V | 7.5 % | nₒ (589 nm, 20°C): | 1.4882 |
| APUQU-3-F | 6.0 % | Δε (1 kHz, 20°C): | 2.8 |
| PGUQU-4-F | 5.0 % | ε_{∥} (1 kHz, 20°C): | 6.2 |
| DPGU-4-F | 2.0 % | ε_{⊥} (1 kHz, 20°C): | 3.4 |
| PPGU-3-F | 0.5 % | γ₁ (20°C)/ mPa·s: | 67 |
| LY-5-O2 | 2.0 % | | |
| CCY-3-O2 | 1.5 % | | |
| CPY-3-O2 | 3.0 % | | |
| PP-1-2V1 | 2.5 % | | |
| CLOY-3-O2 | 4.0 % | | |
| Σ | 100.0 % | | |

### Mixture M17

| | | | |
|---|---|---|---|
| PUQU-3-F | 5.0 % | Clearing point /°C | 101.7 |
| CDUQU-3-F | 6.0 % | nₑ [589 nm, 20°C]: | 1.6025 |
| PGUQU-3-F | 5.0 % | nₒ [589 nm, 20°C]: | 1.4911 |
| CC-3-V | 25.0 % | Δn [589 nm, 20°C]: | 0.1114 |
| CC-3-V1 | 6.0 % | ε_{∥} [1 kHz, 20°C]: | 7.2 |
| CC-3-2V1 | 4.5 % | ε_{⊥} [1 kHz, 20°C]: | 2.9 |
| PP-1-2V1 | 6.5 % | Δε [1 kHz, 20°C]: | 4.3 |
| CCP-V-1 | 15.0 % | K₁ [pN, 20°C]: | 17.8 |
| CCP-V2-1 | 9.0 % | K₃ [pN, 20°C]: | 19.9 |
| CLP-V-1 | 6.0 % | | |
| PGP-2-2V | 5.0 % | | |
| CCVC-3-V | 4.0 % | | |
| PPGU-3-F | 0.5 % | | |
| CLOY-3-O2 | 2.5 % | | |
| Σ | 100.0 % | | |

### Mixture M18

| | | | |
|---|---|---|---|
| DGUQU-4-F | 2.0 % | Clearing point /°C | 104 |
| PGUQU-3-F | 3.0 % | nₑ [589 nm, 20°C]: | 1.6022 |
| PGUQU-4-F | 3.0% | nₒ [589 nm, 20°C]: | 1.4910 |
| CDUQU-3-F | 7.0% | Δn [589 nm, 20°C]: | 0.1112 |
| CC-3-V | 29.0 % | ε_{∥} [1 kHz, 20°C]: | 7.1 |
| CC-3-V1 | 6.0 % | ε_{⊥} [1 kHz, 20°C]: | 2.9 |
| CC-3-2V1 | 3.0% | Δε [1 kHz, 20°C]: | 4.3 |
| PP-1-2V1 | 6.0 % | K₁ [pN, 20°C]: | 17.7 |
| CCP-V-1 | 15.0 % | K₃ [pN, 20°C]: | 19.8 |
| CCP-V2-1 | 8.0 % | | |
| CLP-V-1 | 5.0 % | | |
| PGP-2-2V | 7.0% | | |
| CCVC-3-V | 4.0% | | |
| PPGU-3-F | 0.5 % | | |
| CLOY-3-O2 | 1.5 % | | |
| Σ | 100.0 % | | |

### Mixture M19

| | | | |
|---|---|---|---|
| CC-3-2V1 | 4.0 % | Clearing point /°C | 115 |
| CC-3-V | 24.0 % | nₑ [589 nm, 20°C]: | 1.5784 |
| CC-3-V1 | 8.0 % | nₒ [589 nm, 20°C]: | 1.4867 |
| CCP-V-1 | 15.0 % | Δn [589 nm, 20°C]: | 0.0917 |
| CCP-V2-1 | 8.0 % | ε_{∥} [1 kHz, 20°C]: | 5.7 |
| CCPC-35 | 3.0 % | ε_{⊥} [1 kHz, 20°C]: | 3.1 |
| CCQU-3-F | 3.0 % | Δε [1 kHz, 20°C]: | 2.6 |
| CCVC-3-V | 6.0 % | K₁ [pN, 20°C]: | 17.4 |
| CCY-3-1 | 3.0 % | K₃ [pN, 20°C]: | 21.8 |
| CDUQU-3-F | 5.0 % | | |
| CLOY-3-O2 | 2.5 % | | |
| CLP-V-1 | 6.0 % | | |
| CY-3-O2 | 1.0 % | | |
| DGUQU-4-F | 4.0 % | | |
| CP-3-O2 | 5.0% | | |
| PGP-1-2V | 2.5 % | | |
| Σ | 100.0 % | | |

### Mixture M20

| | | | |
|---|---|---|---|
| CC-3-V | 48.5 % | Clearing point /°C | 80.0 |
| CC-3-V1 | 3.0% | Δn [589 nm, 20°C]: | 0.1002 |
| CCP-V-1 | 14.5 % | nₑ [589 nm, 20°C]: | 1.5866 |
| PGP-2-2V | 7.5 % | nₒ [589 nm, 20°C]: | 1.4864 |
| APUQU-3-F | 6.0 % | Δε [1 kHz, 20°C]: | 2.8 |
| PGUQU-4-F | 5.0 % | ε_{∥} [1 kHz, 20°C]: | 6.2 |
| DLGU-4-F | 2.0 % | ε_{⊥} [1 kHz, 20°C]: | 3.4 |
| PPGU-3-F | 0.5 % | γ₁ [mPa s, 20°C]: | 66 |
| CY-5-O2 | 3.5 % | K₁ [pN, 20°C]: | 13.4 |
| CPY-3-O2 | 3.0% | K₃ [pN, 20°C]: | 15.5 |
| PP-1-2V1 | 2.5 % | | |
| CLOY-3-O2 | 4.0% | | |
| Σ | 100.0 % | | |

### Mixture M21

| | | | |
|---|---|---|---|
| PUQU-3-F | 5.0 % | Clearing point /°C | 99.0 |
| CDUQU-3-F | 6.0 % | nₑ [589 nm, 20°C]: | 1.4984 |
| PGUQU-3-F | 5.0 % | nₒ [589 nm, 20°C]: | 1.4900 |
| CC-3-V | 25.0 % | Δn [589 nm, 20°C]: | 0.1084 |
| CC-3-V1 | 6.0 % | ε_{∥} [1 kHz, 20°C]: | 7.4 |
| CC-3-2V1 | 4.5 % | ε_{⊥} [1 kHz, 20°C]: | 3.5 |
| PP-1-2V1 | 6.5 % | Δε [1 kHz, 20°C]: | 3.9 |
| CCP-V-1 | 15.0 % | K₁ [pN, 20°C]: | 18.1 |
| CCP-V2-1 | 9.0 % | K₃ [pN, 20°C]: | 19.7 |
| CLP-V-1 | | | 6. %0 |
| B(S)-2O-O5 | | | 5.0 % |
| CCVC-3-V | | | 4.0% |
| PPGU-3-F | | | 0.5 % |
| CLOY-3-O2 | | | 2.5 % |
| Σ | | | 100.0 % |

### Mixture M22

| | | | |
|---|---|---|---|
| PUQU-3-F | 5.0 % | Clearing point /°C | 98.5 |
| CDUQU-3-F | 6.0 % | nₑ [589 nm, 20°C]: | 1.4981 |
| PGUQU-3-F | 5.0 % | nₒ [589 nm, 20°C]: | 1.4899 |
| CC-3-V | 25.0 % | Δn [589 nm, 20°C]: | 0.1082 |
| CC-3-V1 | 6.0 % | ε_{∥} [1 kHz, 20°C]: | 7.4 |
| CC-3-2V1 | 4.5 % | ε_{⊥} [1 kHz, 20°C]: | 3.4 |
| PP-1-2V | 6.5 % | Δε [1 kHz, 20°C]: | 4.0 |
| CCP-V-1 | 15.0 % | K₁ [pN, 20°C]: | 18.2 |
| CCP-V2-1 | 9.0 % | K₃ [pN, 20°C]: | 19.6 |
| CLP-V-1 | 6.0 % | | |
| B(S)-(c5)1O-O1V2 | 5.0 % | | |
| CCVC-3-V | 4.0 % | | |
| PPGU-3-F | 0.5 % | | |
| CLOY-3-O2 | 2.5 % | | |
| Σ | 100.0 % | | |

### Mixture M23

| | | | |
|---|---|---|---|
| CC-3-V | 48.5 % | Clearing point /°C | 79.0 |
| CC-3-V1 | 3.0% | Δn [589 nm, 20°C]: | 0.0980 |
| CCP-V-1 | 14.5 % | nₑ [589 nm, 20°C]: | 1.5840 |
| PGP-2-2V | 7.5 % | nₒ [589 nm, 20°C]: | 1.4860 |
| APUQU-3-F | 6.0 % | Δε [1 kHz, 20°C]: | 2.6 |
| PGUQU-4-F | 5.0 % | ε_{∥} [1 kHz, 20°C]: | 6.0 |
| CLU-3-F | 2.0 % | ε_{⊥} [1 kHz, 20°C]: | 3.4 |
| PPGU-3-F | 0.5 % | γ₁ [mPa s, 20°C]: | 63 |
| CY-5-O2 | 3.5 % | K₁ [pN, 20°C]: | 13.1 |
| CPY-3-O2 | 3.0% | K₃ [pN, 20°C]: | 15.2 |
| PP-1-2V1 | 2.5 % | | |
| CLOY-3-O2 | 4.0% | | |
| Σ | 100.0 % | | |

### Mixture M24

| | | | |
|---|---|---|---|
| CC-3-V | 48.5 % | Clearing point /°C | 80.0 |
| CC-3-V1 | 3.0% | Δn [589 nm, 20°C]: | 0.1002 |
| CCP-V-1 | 14.5 % | nₑ [589 nm, 20°C]: | 1.5866 |
| PGP-2-2V | 7.5 % | nₒ [589 nm, 20°C]: | 1.4864 |
| APUQU-3-F | 6.0 % | Δε [1 kHz, 20°C]: | 2.8 |
| PGUQU-4-F | 5.0 % | ε_{∥} [1 kHz, 20°C]: | 6.2 |
| DLGU-4-F | 2.0 % | ε_{⊥} [1 kHz, 20°C]: | 3.4 |
| PPGU-3-F | 0.5 % | γ₁ [mPa s, 20°C]: | 68 |
| CY-5-O2 | 3.5 % | K₁ [pN, 20°C]: | 13.4 |
| CPY-3-O2 | 3.0% | K₃ [pN, 20°C]: | 15.5 |
| PP-1-2V1 | 2.5 % | | |
| CLOY(1)-3-O2 | 4.0% | | |
| Σ | 100.0 % | | |

### Mixture M25

| | | | |
|---|---|---|---|
| CC-3-V | 48.5 % | Clearing point /°C | 79.5 |
| CC-3-V1 | 3.0% | Δn [589 nm, 20°C]: | 0.1003 |
| CCP-V-1 | 14.5 % | nₑ [589 nm, 20°C]: | 1.5867 |
| PGP-2-2V | 7.5 % | nₒ [589 nm, 20°C]: | 1.4864 |
| APUQU-3-F | 6.0 % | Δε [1 kHz, 20°C]: | 2.7 |
| PGUQU-4-F | 5.0 % | ε_{∥} [1 kHz, 20°C]: | 6.2 |
| DLGU-4-F | 2.0 % | ε_{⊥} [1 kHz, 20°C]: | 3.5 |
| PPGU-3-F | 0.5 % | γ₁ [mPa s, 20°C]: | 67 |
| CY-5-O2 | 3.5 % | K₁ [pN, 20°C]: | 13.3 |
| CPY-3-O2 | 3.0% | K₃ [pN, 20°C]: | 15.3 |
| PP-1-2V1 | 2.5 % | | |
| AILOY-3-O2 | 4.0% | | |
| Σ | 100.0 % | | |

### Mixture M26

| | | | |
|---|---|---|---|
| CC-3-V | 48.5 % | Clearing point /°C | 77.5 |
| CC-3-V1 | 3.0% | Δn [589 nm, 20°C]: | 0.1002 |
| CCP-V-1 | 14.5 % | nₑ [589 nm, 20°C]: | 1.5872 |
| PUS-3-2 | 7.5 % | nₒ [589 nm, 20°C]: | 1.4870 |
| APUQU-3-F | 6.0 % | Δε [1 kHz, 20°C]: | 2.8 |
| PGUQU-4-F | 5.0 % | ε_{∥} [1 kHz, 20°C]: | 6.2 |
| CLU-3-F | 2.0 % | ε_{⊥} [1 kHz, 20°C]: | 3.4 |
| PPGU-3-F | 0.5 % | γ₁ [mPa s, 20°C]: | 60 |
| CY-5-O2 | 3.5 % | K₁ [pN, 20°C]: | 13.2 |
| CPY-3-O2 | 3.0% | K₃ [pN, 20°C]: | 14.8 |
| PP-1-2V1 | 2.5 % | | |
| CLOY-3-O2 | 4.0% | | |
| Σ | 100.0 % | | |

### Mixture M27

| | | | |
|---|---|---|---|
| CC-3-V | 48.5 % | Clearing point /°C | 80.0 |
| CC-3-V1 | 3.0% | Δn [589 nm, 20°C]: | 0.1021 |
| CCP-V-1 | 14.5 % | nₑ [589 nm, 20°C]: | 1.5894 |
| PGS-2-1 | 7.5 % | nₒ [589 nm, 20°C]: | 1.4873 |
| APUQU-3-F | 6.0 % | Δε [1 kHz, 20°C]: | 2.8 |
| PGUQU-4-F | 5.0 % | ε_{∥} [1 kHz, 20°C]: | 6.2 |
| CLU-3-F | 2.0 % | ε_{⊥} [1 kHz, 20°C]: | 3.4 |
| PPGU-3-F | 0.5 % | γ₁ [mPa s, 20°C]: | 61 |
| CY-5-O2 | 3.5 % | K₁ [pN, 20°C]: | 13.8 |
| CPY-3-O2 | 3.0% | K₃ [pN, 20°C]: | 14.9 |
| PP-1-2V1 | 2.5 % | | |
| CLOY-3-O2 | 4.0% | | |
| Σ | 100.0 % | | |

### Mixture M28

Mixture M28 consists of 99.975% of Mixture M1 and 250 ppm of the stabiliser ST-3c

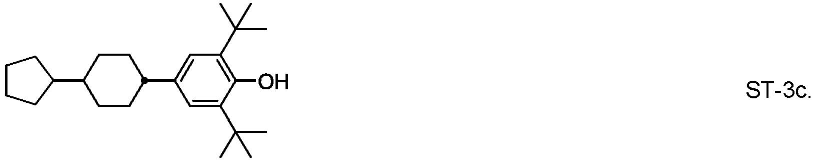

### Mixture M29

Mixture M29 consists of 99.975% of Mixture M2, 150 ppm of Stabiliser ST-3d and 100 ppm of stabiliser ST-19a

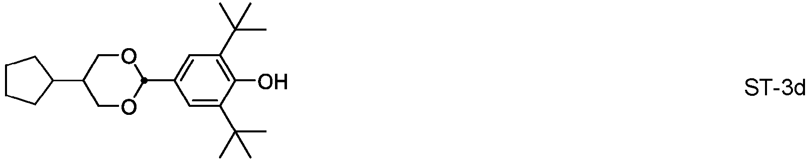

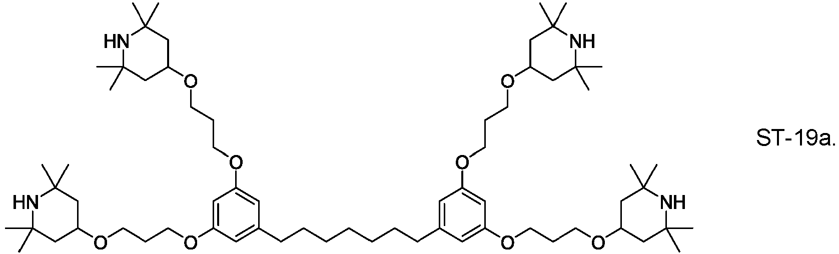

## Claims

1. A liquid crystal medium comprising
a) one or more compounds of the formula I 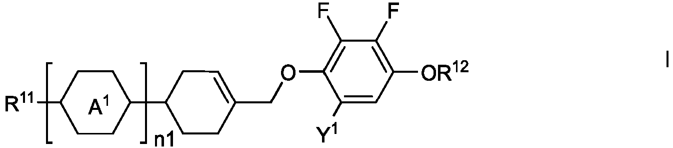 in which
R¹¹, R¹² identically or differently, denote a straight chain alkyl radical having 1 to 12 C atoms or a branched alkyl radical having 3 to 12 C atoms, where one or more CH₂ groups in these radicals may each be replaced, independently of one another, by 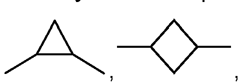 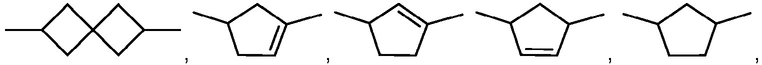 -C≡C-, -CF₂O-, -OCF₂-, -CH=CH-, -O-, -CO-O- or -O-CO- in such a way that O atoms are not linked directly to one another, and in which, in addition, one or more H atoms may be replaced by halogen, denotes 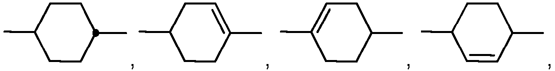 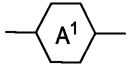 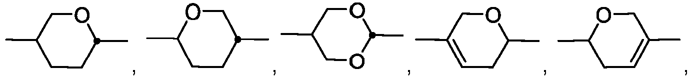 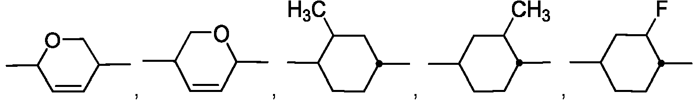 or 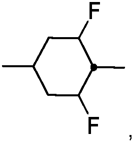
Y¹ denotes H or CH₃,
n1 is 0 or 1,
v is 1, 2, 3, 4, 5, or 6;
and
b) one or more compounds selected from the group of compounds of the formulae II and III 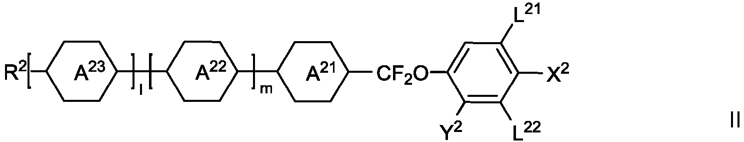 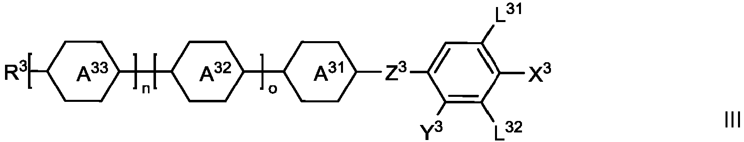 in which
R² and R³, independently of one another, denote a straight-chain or branched alkyl or alkoxy radical that is unsubstituted or halogenated and has 1 to 15 C atoms, where one or more CH₂ groups in these radicals may each be replaced, independently of one another, by 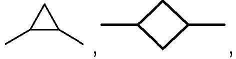 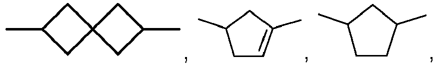 -C≡C-, -CF₂O-, -CH=CH-, -O-, -CO-O- or -O-CO- in such a way that O atoms are not linked directly to one another, 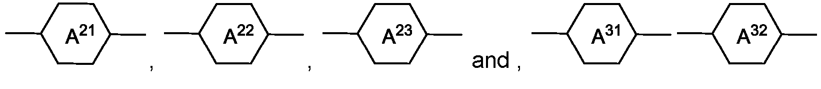 and 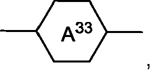 independently of one another denote 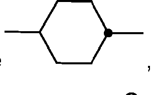 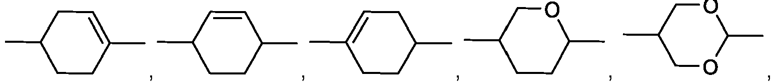 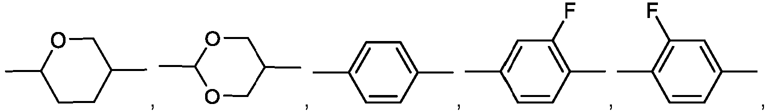 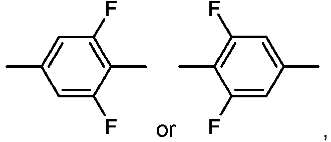
L²¹, L²²,
L³¹ and L³² independently of each other, denote H or F,
Y² and Y³ identically or differently, denote H or CH₃,
X² and X³ independently of each other, denote halogen, halogenated alkyl or halogenated alkoxy with 1 to 3 C-atoms or halogenated alkenyl or halogenated alkenyloxy with 2 or 3 C-atoms,
Z³ denotes -CH₂CH₂-, -CF₂CF₂-, -COO-, *trans-* -CH=CH-, trans-CF=CF-, -CH₂O- or a single bond, and
I, m, n and o are, independently of each other, 0 or 1,
**characterised in that** the medium has positive dielectric anisotropy.

2. The liquid crystal medium according to claim 1, wherein n1 is 1.

3. The liquid crystal medium according to claim 1 or 2, wherein the medium comprises one or more compounds of formula II selected from the compounds of the formulae II-1, II-2 and II-3 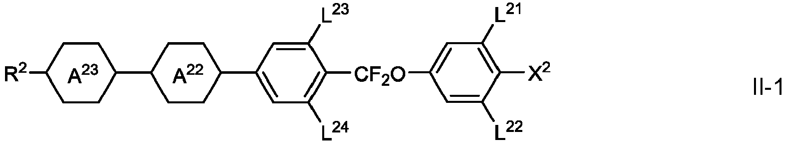 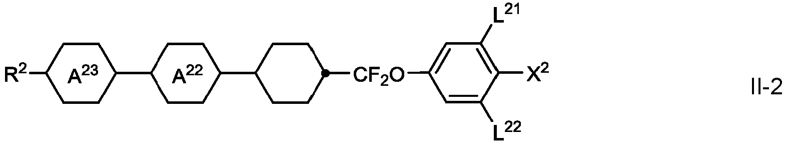 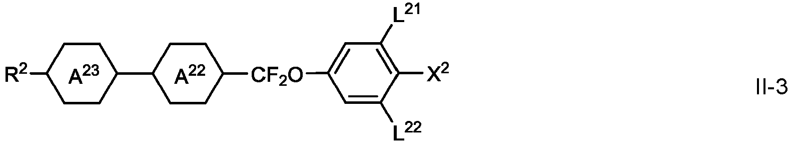 in which
L²³ and L²⁴ denote H or F,
and the remaining groups have the meanings given under formula II in claim 1.

4. The liquid crystal medium according to one or more of claims 1 to 3, wherein the medium comprises one or more compounds of formula III selected from the compounds of the formulae III-1 and III-2 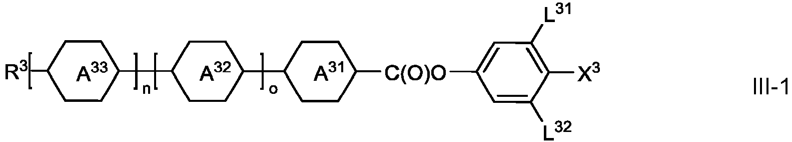 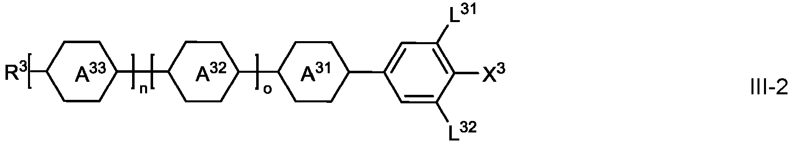 in which R³, X³, L³¹, L³², the ring elements A³¹, A³² and A³³, and n and o have the meanings defined in claim 1 for formula III.

5. The liquid crystal medium according to one or more of claims 1 to 4, wherein the medium comprises one or more compounds selected from the group of compounds of the formulae Y and B 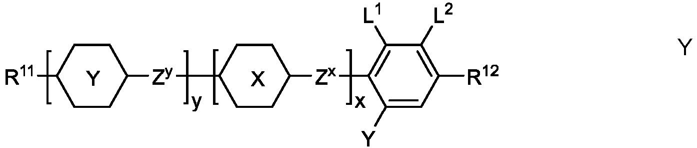 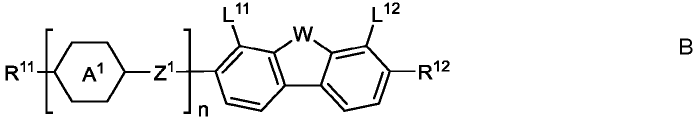 in which 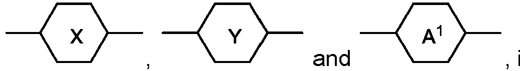 independently of one another, denote 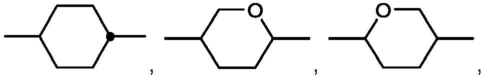 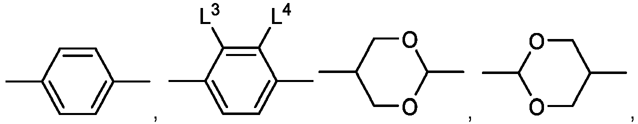 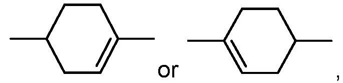
R¹¹, R¹² identically or differently, denote a straight-chain or branched alkyl or alkoxy radical that is unsubstituted or halogenated and has 1 to 15 C atoms, where one or more CH₂ groups in these radicals may each be replaced, independently of one another, by 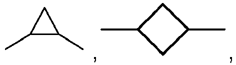 -C≡C-, -CF₂O-, -CH=CH-, -O-, 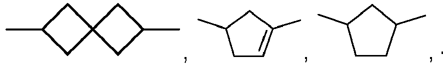 -CO-O- or -O-CO- in such a way that O atoms are not linked directly to one another, and R¹² alternatively denotes F,
Z^{x}, Z^{y} identically or differently denote -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond,
Z¹ denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond,
W denotes O or S,
L¹, L², L¹¹, L¹² identically or differently, denote F or Cl,
L³ and L⁴, identically or differently, denote H, F Cl or CH₃,
Y denotes H, F, Cl, CF₃, CHF₂ or CH₃, and
x and y independently are 0, 1 or 2, where x+y ≤3.

6. The liquid crystal medium according to one or more of claims 1 to 5, wherein the medium comprises one or more compounds of the formula VII, 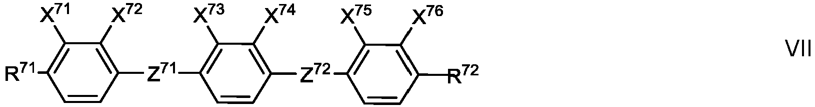 in which
R⁷¹ and R⁷² denote H, F, straight chain alkyl or alkoxy having 1 to 15 C atoms, straight chain alkenyl or alkenyloxy having 2 to 15 C atoms or branched alkyl, alkoxy, alkenyl, alkenyloxy each having 3 to 15 C atoms, where one or more CH₂ groups in these radicals may each be replaced, independently of one another, by 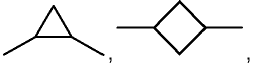 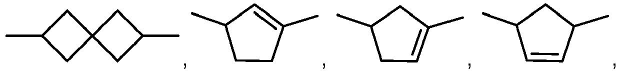 -C≡C-, -CF₂O-, -OCF₂-, -CH=CH-, -O-, -CO-O- or -O-CO- in such a way that O atoms are not linked directly to one another, and in which one or more H atoms may be replaced by halogen,
X⁷¹, X⁷², X⁷³, X⁷⁴, X⁷⁵ and X⁷⁶, identically or differently, denote H or F,
Z⁷¹ and Z⁷², identically or differently, denote CH₂CH₂ or a single bond.

7. The liquid crystal medium according to one or more of claims 1 to 6, wherein the medium comprises one or more compounds of the formula IV 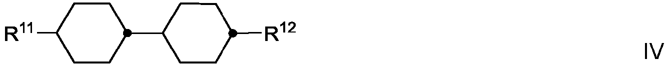 in which
R¹¹ denotes a straight-chain alkyl radical having 1 to 12 C atoms or a branched or cyclic alkyl radical having 3 to 12 C atoms, or a straight-chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine,
R¹² denotes a straight chain alkyl or alkoxy radical having 1 to 12 C atoms or a branched or cyclic alkyl or alkoxy radical having 3 to 12 C atoms, or a straight chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine.

8. The liquid crystal medium according to one or more of claims 1 to 7, wherein the medium comprises one or more compounds of the formula IVa and/or IVb, 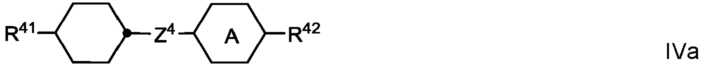 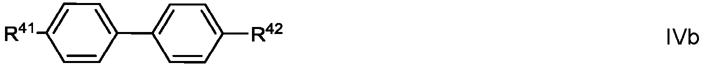 in which
R⁴¹ and R⁴² each, independently of one another, denote a straight-chain alkyl, alkoxy, alkenyl, alkoxyalkyl or alkenyloxy radical having up to 12 C atoms, denotes 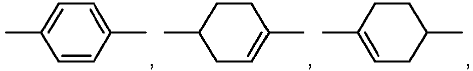 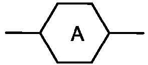 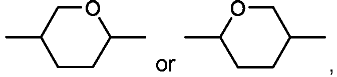
Z⁴ denotes a single bond, -CH₂CH₂-, -CH=CH-, -CF₂O-, -OCF₂-, -CH₂O-, -OCH₂-, -COO-, -OCO-, -C₂F₄-, -C₄H₈-, or -CF=CF-.

9. The liquid crystal medium according to one or more of claims 1 to 8, wherein the medium comprises one or more compounds of the formula V 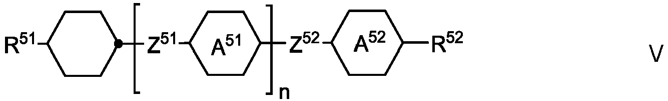 in which
R⁵¹, R⁵² denote alkyl having 1 to 7 C atoms, alkoxy having 1 to 7 C atoms, or alkoxyalkyl, alkenyl or alkenyloxy having 2 to 7 C atoms, identically or differently, denote 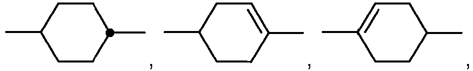 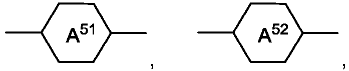
Z⁵¹, Z⁵² 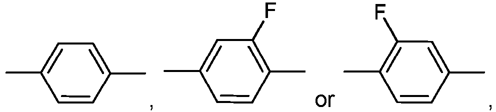 each, independently of one another, denote -CH₂-CH₂-, -CH₂-O-, -CH=CH-, -C≡C-, -COO- or a single bond, and
n is 1 or 2.

10. The liquid crystal medium according to one or more of claims 1 to 9, wherein the medium comprises one or more compounds of the formula VIII 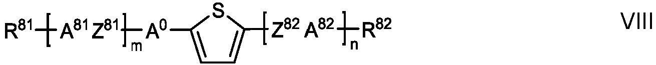 in which
R⁸¹ and R⁸², identically or differently, denote H, halogen, CN, SCN, straight chain alkyl or alkoxy having 1 to 15 C atoms, straight chain alkenyl or alkenyloxy having 2 to 15 C atoms or branched alkyl, alkoxy, alkenyl or alkenyloxy having 3 to 15 C atoms, where one or more CH₂ groups in these radicals may each be replaced, independently of one another, by 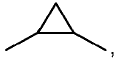 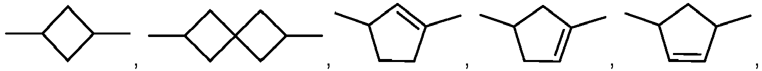 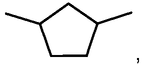 -C≡C-, -CF₂O-, -OCF₂-, -CH=CH-, by -O-, -CO-O- or -O-COin such a way that O atoms are not linked directly to one another, and in which one or more H atoms may be replaced by halogen,
A⁰, A⁸¹, and A⁸², each, independently of one another, denote phenylene-1,4-diyl, in which one or two CH groups may be replaced by N and one or more H atoms may be replaced by halogen, CN, CH₃, CHF₂, CH₂F, CF₃, OCH₃, OCHF₂ or OCF₃, cyclohexane-1,4-diyl, in which one or two non-adjacent CH₂ groups may be replaced, independently of one another, by O and/or S and one or more H atoms may be replaced by F, cyclohexene-1,4-diyl, bicyclo[1.1.1]pentane-1,3-diyl, bicyclo[2.2.2]octane-1,4-diyl, spiro[3.3]heptane-2,6-diyl, tetrahydropyran-2,5-diyl or 1,3-dioxane-2,5-diyl;
Z⁸¹ and Z⁸², each, independently of one another, denote -CF₂O-, -OCF₂-, -CH₂O-,-OCH₂- , -CO-O-, -O-CO-, -C₂H₄-, -C₂F₄ , -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C=C- or a single bond;
n denotes 0, 1, 2 or 3, and
m denotes 0, 1, 2 or 3.

11. The liquid crystal medium according to one or more of claims 1 to 10, wherein the medium additionally comprises one or more stabilizers.

12. A liquid crystal display, **characterized in that** it comprises a liquid-crystal medium according to one or more of claims 1 to 11.

13. The liquid crystal display according to claim 12, wherein the display is configured to operate in the IPS- or FFS mode.

14. Use of the liquid crystal medium according to one or more of Claims 1 to 11 in a liquid crystal display.

15. Process for the preparation of a liquid-crystal medium according to one or more of claims 1 to 11, **characterized in that** one or more compounds of formula I are mixed with one or more compounds of the formulae II and/or III and optionally with one or more compounds of the formulae B and/or Y.

## Patentansprüche

1. Flüssigkristallmedium enthaltend
a) eine oder mehrere Verbindungen der Formel I 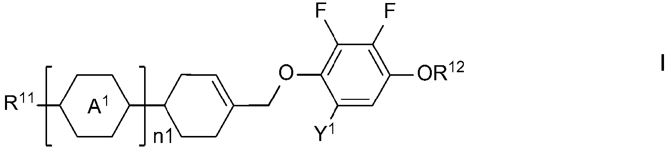 worin
R¹¹, R¹² gleich oder verschieden einen geradkettigen Alkylrest mit 1 bis 12 C-Atomen oder einen verzweigten Alkylrest mit 3 bis 12 C-Atomen bedeuten, wobei in diesen Resten eine oder mehrere CH₂-Gruppen jeweils unabhängig voneinander so durch 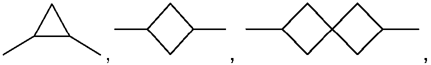 -C≡C-, -CF₂O-, 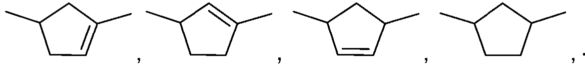 -OCF₂-, -CH=CH-, -O-, -CO-O- oder -O-CO- ersetzt sein können, dass O-Atome nicht direkt miteinander verknüpft sind, und worin zusätzlich ein oder mehrere H-Atome durch Halogen ersetzt sein können, 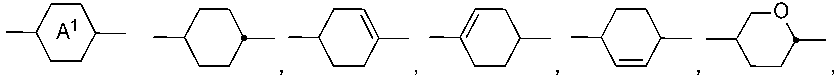 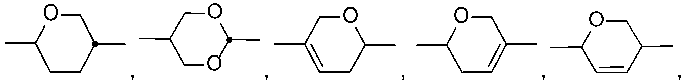 oder 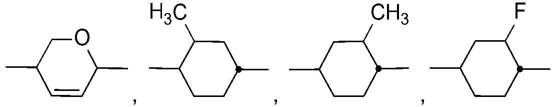 bedeutet, 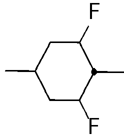
Y¹ H oder CH₃ bedeutet,
n1 0 oder 1 ist,
v 1, 2, 3, 4, 5 oder 6 ist;
und
b) eine oder mehrere Verbindungen, die ausgewählt sind aus der Gruppe der Verbindungen der Formeln II und III 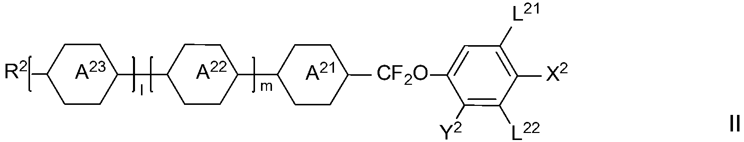 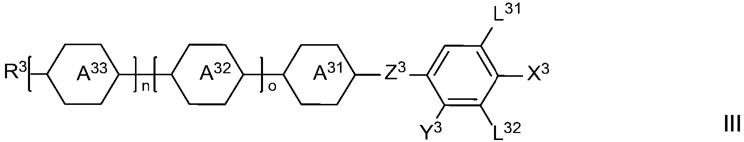 worin
R² und R³ unabhängig voneinander einen geradkettigen oder verzweigten Alkyl- oder Alkoxyrest bedeuten, der unsubstituiert oder halogeniert ist und 1 bis 15 C-Atome aufweist, wobei in diesen Resten eine oder mehrere CH₂-Gruppen jeweils unabhängig voneinander so durch 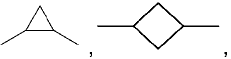 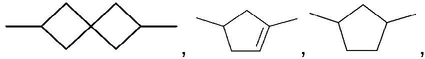 -C≡C-, -CF₂O-, -CH=CH-, -O-, -CO-O- oder -O-CO- ersetzt sein können, dass O-Atome nicht direkt miteinander verknüpft sind, 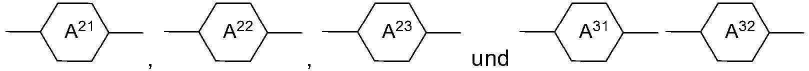 und 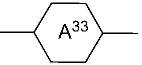 unabhängig voneinander 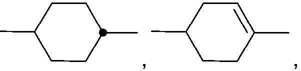 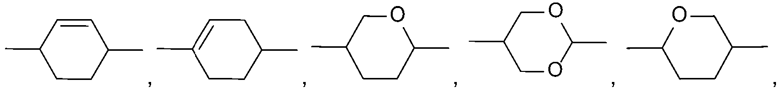 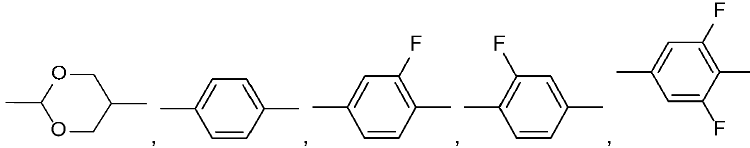 oder 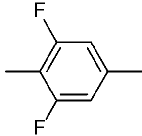 bedeuten,
L²¹, L²²,
L³¹ und L³² unabhängig voneinander H oder F bedeuten,
Y² und Y³ gleich oder verschieden H oder CH₃ bedeuten,
X² und X³ unabhängig voneinander Halogen, halogeniertes Alkyl oder halogeniertes Alkoxy mit 1 bis 3 C-Atomen oder halogeniertes Alkenyl oder halogeniertes Alkenyloxy mit 2 oder 3 C-Atomen bedeuten,
Z³ -CH₂CH₂-, -CF₂CF₂-, -COO-, *trans-* -CH=CH-, trans-CF=CF-, -CH₂O- oder eine Einfachbindung bedeutet, und
I, m, n und o unabhängig voneinander 0 oder 1 sind,
**dadurch gekennzeichnet, dass** das Medium positive dielektrische Anisotropie aufweist.

2. Flüssigkristallines Medium nach Anspruch 1, bei dem n1 1 ist.

3. Flüssigkristallmedium nach Anspruch 1 oder 2, bei dem das Medium eine oder mehrere Verbindungen der Formel II enthält, die ausgewählt sind aus den Verbindungen der Formeln II-1, II-2 und II-3 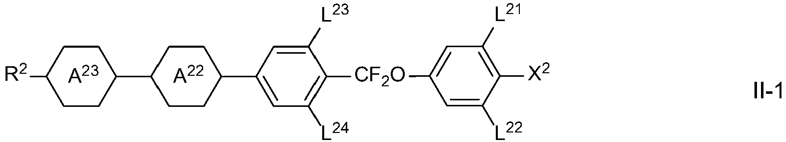 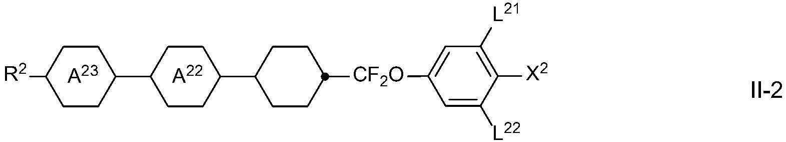 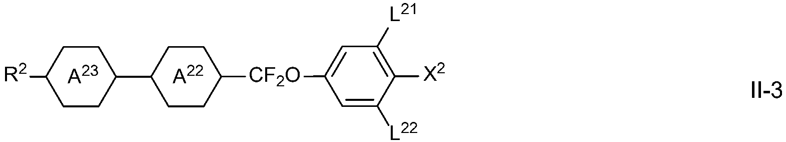 worin
L²³ und L²⁴ H oder F bedeuten,
und die restlichen Gruppen die unter Formel II in Anspruch 1 genannten Bedeutungen besitzen.

4. Flüssigkristallmedium nach einem oder mehreren der Ansprüche 1 bis 3, bei dem das Medium eine oder mehrere Verbindungen der Formel III enthält, die ausgewählt sind aus den Verbindungen der Formeln III-1 und III-2, 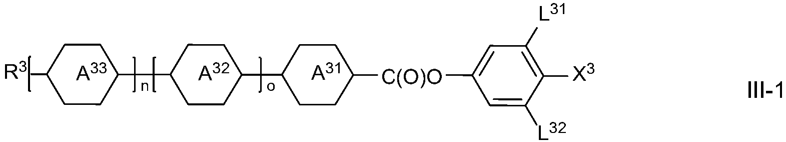 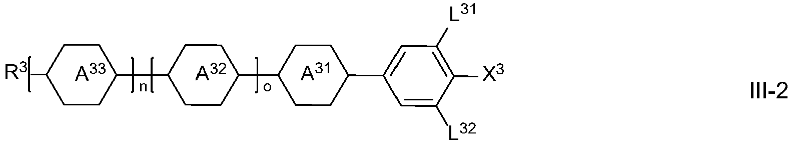 worin R³, X³, L³¹, L³², die Ringelemente A³¹, A³² und A³³ und n und o die in Anspruch 1 für Formel III definierten Bedeutungen besitzen.

5. Flüssigkristallmedium nach einem oder mehreren der Ansprüche 1 bis 4, bei dem das Medium eine oder mehrere Verbindungen enthält, die ausgewählt sind aus der Gruppe der Verbindungen der Formeln Y und B 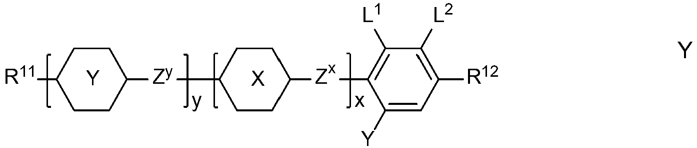 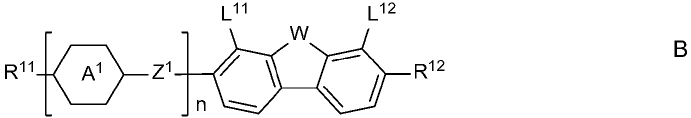 worin 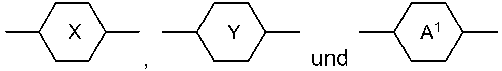 unabhängig voneinander 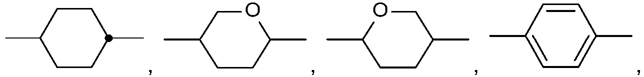 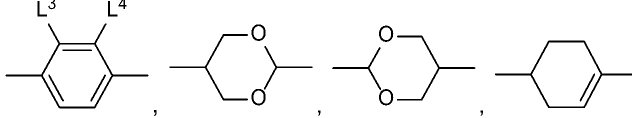 oder 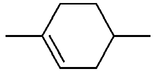 bedeuten,
R¹¹, R¹² unabhängig voneinander einen geradkettigen oder verzweigten Alkyl- oder Alkoxyrest bedeuten, der unsubstituiert oder halogeniert ist und 1 bis 15 C-Atome aufweist, wobei in diesen Resten eine oder mehrere CH₂-Gruppen jeweils unabhängig voneinander so durch 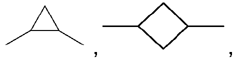 -C≡C-, -CF₂O-, -CH=CH-, -O-, 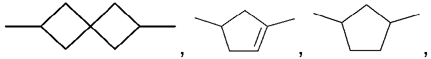 -CO-O- oder -O-CO- ersetzt sein können, dass O-Atome nicht direkt miteinander verknüpft sind, und R¹² alternativ F bedeutet,
Z^{x}, Z^{y} gleich oder verschieden -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung bedeuten,
Z¹ -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung bedeutet,
W O oder S bedeutet,
L¹, L², L¹¹, L¹² gleich oder verschieden F oder Cl bedeuten,
L³, L⁴ gleich oder verschieden H, F, Cl oder CH₃ bedeuten,
Y H, F, Cl, CF₃, CHF₂ oder CH₃ bedeutet, und
x und y unabhängig 0, 1 oder 2 sind, wobei x+y ≤3.

6. Flüssigkristallmedium nach einem oder mehreren der Ansprüche 1 bis 5, bei dem das Medium eine oder mehrere Verbindungen der Formel VII 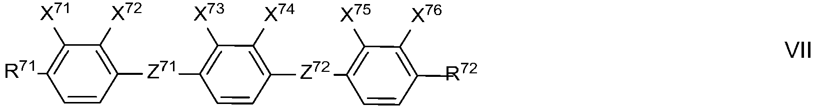 enthält, worin
R⁷¹ und R⁷² H, F, geradkettiges Alkyl oder Alkoxy mit 1 bis 15 C-Atomen, geradkettiges Alkenyl oder Alkenyloxy mit 2 bis 15 C-Atomen oder verzweigtes Alkyl, Alkoxy, Alkenyl, Alkenyloxy mit jeweils 3 bis 15 C-Atomen bedeuten, wobei in diesen Resten eine oder mehrere CH₂-Gruppen jeweils unabhängig voneinander so durch 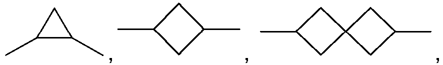 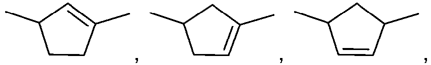 -C≡C-, -CF₂O-, -OCF₂-, -CH=CH-, -O-, -CO-O- oder -O-CO- ersetzt sein können, dass O-Atome nicht direkt miteinander verknüpft sind, und worin ein oder mehrere H-Atome durch Halogen ersetzt sein können,
X⁷¹, X¹², X¹³, X¹⁴, X⁷⁵ und X⁷⁶ gleich oder verschieden H oder F bedeuten,
Z⁷¹ und Z⁷² gleich oder verschieden CH₂CH₂ oder eine Einfachbindung bedeuten.

7. Flüssigkristallmedium nach einem oder mehreren der Ansprüche 1 bis 6, bei dem das Medium eine oder mehrere Verbindungen der Formel IV 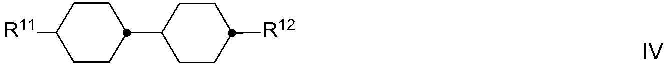 enthält, worin
R¹¹ einen geradkettigen Alkylrest mit 1 bis 12 C-Atomen oder einen verzweigten oder cyclischen Alkylrest mit 3 bis 12 C-Atomen oder einen geradkettigen Alkenylrest mit 2 bis 12 C-Atomen oder einen verzweigten Alkenylrest mit 3 bis 12 C-Atomen oder einen cyclischen Alkenylrest mit 5 bis 12 C-Atomen, bei denen gegebenenfalls ein oder mehrere H-Atome durch Fluor ersetzt sind, bedeutet,
R¹² einen geradkettigen Alkyl- oder Alkoxyrest mit 1 bis 12 C-Atomen oder einen verzweigten oder cyclischen Alkyl- oder Alkoxyrest mit 3 bis 12 C-Atomen oder einen geradkettigen Alkenylrest mit 2 bis 12 C-Atomen oder einen verzweigten Alkenylrest mit 3 bis 12 C-Atomen oder einen cyclischen Alkenylrest mit 5 bis 12 C-Atomen, bei denen gegebenenfalls ein oder mehrere H-Atome durch Fluor ersetzt sind, bedeutet.

8. Flüssigkristallmedium nach einem oder mehreren der Ansprüche 1 bis 7, bei dem das Medium eine oder mehrere Verbindungen der Formel IVa und/oder IVb 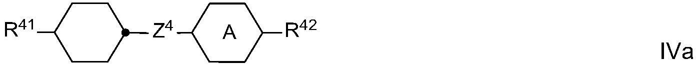 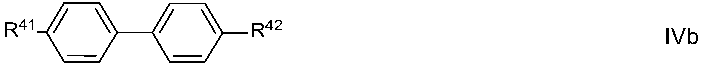 enthält, worin
R⁴¹ und R⁴² jeweils unabhängig voneinander einen geradkettigen Alkyl-, Alkoxy-, Alkenyl-, Alkoxyalkyl- oder Alkenyloxyrest mit bis zu 12 C-Atomen bedeuten, 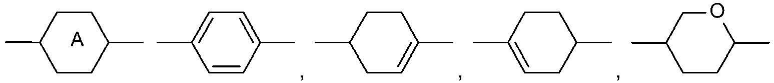 oder 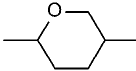 bedeutet,
Z⁴ eine Einfachbindung, -CH₂CH₂-, -CH=CH-, -CF₂O-, -OCF₂-, -CH₂O-, -OCH₂-, -COO-, -OCO-, -C₂F₄-, -C₄H₈- oder -CF=CF bedeutet.

9. Flüssigkristallmedium nach einem oder mehreren der Ansprüche 1 bis 8, bei dem das Medium eine oder mehrere Verbindungen der Formel V 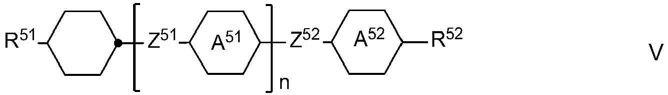 enthält, worin
R⁵¹, R⁵² Alkyl mit 1 bis 7 C-Atomen, Alkoxy mit 1 bis 7 C-Atomen oder Alkoxyalkyl, Alkenyl oder Alkenyloxy mit 2 bis 7 C-Atomen bedeuten, 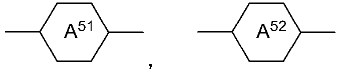 gleich oder verschieden 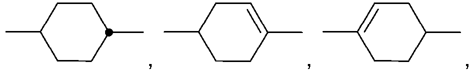 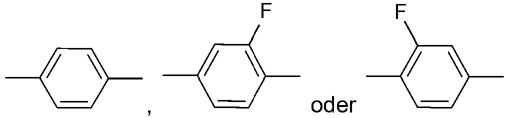 bedeuten,
Z⁵¹, Z⁵² jeweils unabhängig voneinander -CH₂-CH₂-, -CH₂-O-, -CH=CH-, -C≡C-, -COO- oder eine Einfachbindung bedeuten, und
n 1 oder 2 ist.

10. Flüssigkristallmedium nach einem oder mehreren der Ansprüche 1 bis 9, bei dem das Medium eine oder mehrere Verbindungen der Formel VIII 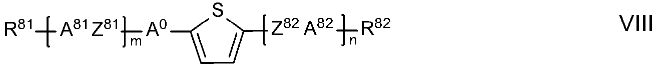 enthält, worin
R⁸¹ und R⁸² gleich oder verschieden H, Halogen, CN, SCN, geradkettiges Alkyl oder Alkoxy mit 1 bis 15 C-Atomen, geradkettiges Alkenyl oder Alkenyloxy mit 2 bis 15 C-Atomen oder verzweigtes Alkyl, Alkoxy, Alkenyl oder Alkenyloxy mit 3 bis 15 C-Atomen bedeuten, wobei in diesen Resten eine oder mehrere CH₂-Gruppen jeweils unabhängig voneinander so durch 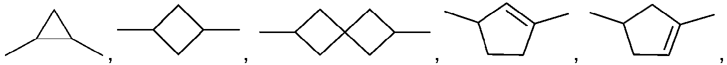 -C≡C-, -CF₂O-, -OCF₂-, -CH=CH-, durch -O-, 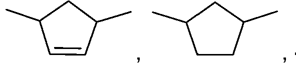 -CO-O- oder -O-CO- ersetzt sein können, dass O-Atome nicht direkt miteinander verknüpft sind, und worin ein oder mehrere H-Atome durch Halogen ersetzt sein können,
A⁰, A⁸¹ und A⁸² jeweils unabhängig voneinander Phenylen-1,4-diyl, worin eine oder zwei CH-Gruppen durch N ersetzt sein können und ein oder mehrere H-Atome durch Halogen, CN, CH₃, CHF₂, CH₂F, CF₃, OCH₃, OCHF₂ oder OCF₃ ersetzt sein können, Cyclohexan-1,4-diyl, worin eine oder zwei nicht benachbarte CH₂-Gruppen unabhängig voneinander durch O und/oder S ersetzt sein können und ein oder mehrere H-Atome durch F ersetzt sein können, Cyclohexen-1,4-diyl, Bicyclo[1.1.1]pentan-1,3-diyl, Bicyclo[2.2.2]-octan-1,4-diyl, Spiro[3.3]heptan-2,6-diyl, Tetrahydropyran-2,5-diyl oder 1,3-Dioxan-2,5-diyl bedeuten;
Z⁸¹ und Z⁸² jeweils unabhängig voneinander -CF₂O-, -OCF₂-, -CH₂O-, -OCH₂-, -CO-O-, -O-CO-, -C₂H₄-, -C₂F₄, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C=C- oder eine Einfachbindung bedeuten;
n 0, 1, 2 oder 3 bedeutet, und
m 0, 1, 2 oder 3 bedeutet.

11. Flüssigkristallmedium nach einem oder mehreren der Ansprüche 1 bis 10, bei dem das Medium zusätzlich einen oder mehrere Stabilisatoren enthält.

12. Flüssigkristallanzeige, **dadurch gekennzeichnet, dass** sie ein Flüssigkristallmedium nach einem oder mehreren der Ansprüche 1 bis 11 enthält.

13. Flüssigkristallanzeige nach Anspruch 12, bei der die Anzeige dafür ausgelegt ist, im IPS- oder FFS-Modus betrieben zu werden.

14. Verwendung des Flüssigkristallmediums nach einem oder mehreren der Ansprüche 1 bis 11 in einer Flüssigkristallanzeige.

15. Verfahren zur Herstellung eines Flüssigkristallmediums nach einem oder mehreren der Ansprüche 1 bis 11, **dadurch gekennzeichnet, dass** man eine oder mehrere Verbindungen der Formel I mit einer oder mehreren Verbindungen der Formeln II und/oder III und gegebenenfalls mit einer oder mehreren Verbindungen der Formeln B und/oder Y mischt.

## Revendications

1. Milieu cristallin liquide comprenant
a) un ou plusieurs composés de formule I 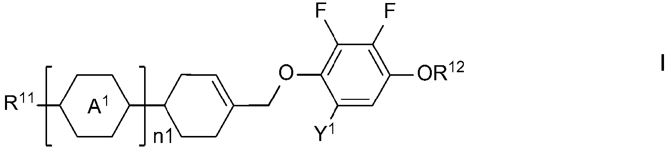 dans laquelle
R¹¹, R¹² désignent de manière identique ou différente un radical alkyle à chaîne linéaire ayant de 1 à 12 atomes de C ou un radical alkyle ramifié ayant de 3 à 12 atomes de C, où un ou plusieurs groupements CH₂ dans ces radicaux peuvent chacun être remplacés, indépendamment les uns des autres, par 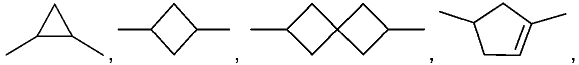 -C≡C-, -CF₂O-, -OCF₂-, 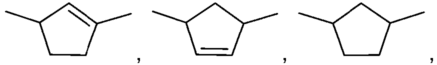 -CH=CH-, -O-, -CO-O- ou -O-CO- de telle sorte que les atomes de O ne soient pas liés directement les uns aux autres, et où, de plus, un ou plusieurs atomes de H peuvent être remplacés par halogène, désigne 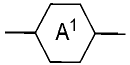 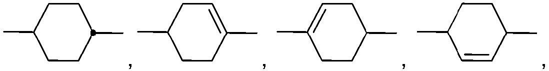 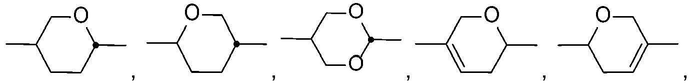 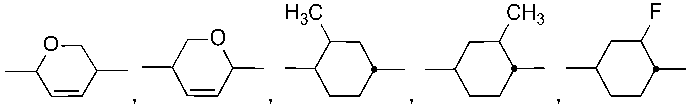 ou 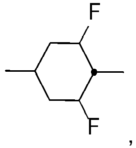
Y¹ désigne H ou CH₃,
n1 vaut 0 ou 1,
v vaut 1, 2, 3, 4, 5, ou 6 ;
et
b) un ou plusieurs composés choisis dans le groupe constitué par les composés de formules II et III 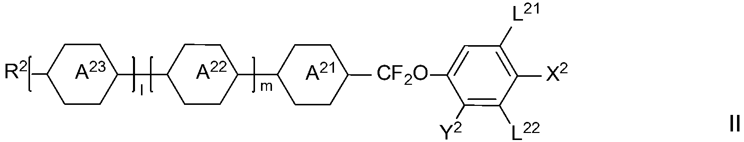 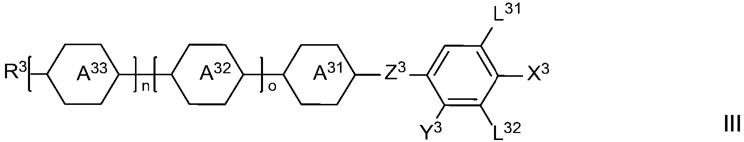 dans lesquelles
R² et R³, indépendamment l'un de l'autre, désignent un radical alkyle ou alcoxy à chaîne linéaire ou ramifiée qui est non substitué ou halogéné et possède de 1 à 15 atomes de C, où un ou plusieurs groupements CH₂ dans ces radicaux peuvent chacun être remplacés, indépendamment les uns des autres, par 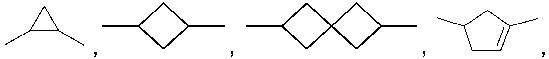 -C≡C-, -CF₂O-, -CH=CH-, -O-, -CO-O- ou -O-CO- de telle 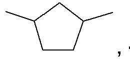 sorte que les atomes de O ne soient pas liés directement les uns aux autres, et 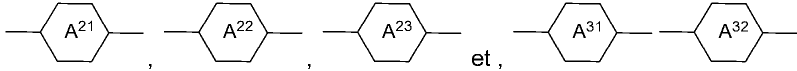 indépendamment les uns des autres désignent 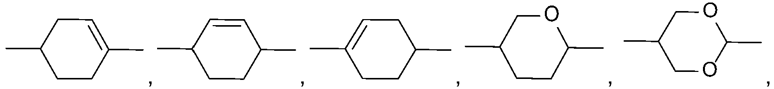 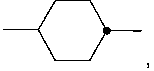 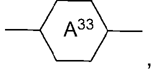
L²¹, 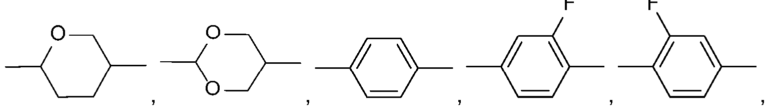 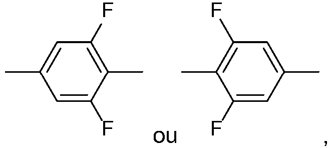 L²²,
L³¹ et L³² indépendamment les uns des autres, désignent H ou F,
Y² et Y³ désignent de manière identique ou différente H ou CH₃,
X² et X³ indépendamment l'un de l'autre, désignent halogène, alkyle halogéné ou alcoxy halogéné ayant de 1 à 3 atomes de C ou alcényle halogéné ou alcényloxy halogéné ayant 2 ou 3 atomes de C,
Z³ désigne -CH₂CH₂-, -CF₂CF₂-, -COO-, *trans*-CH=CH-, *trans*-CF=CF-, -CH₂O- ou une liaison simple, et
I, m, n et o valent, indépendamment les uns des autres, 0 ou 1,
**caractérisé en ce que** le milieu présente une anisotropie diélectrique positive.

2. Milieu cristallin liquide selon la revendication 1, dans lequel n1 vaut 1.

3. Milieu cristallin liquide selon la revendication 1 ou 2, le milieu comprenant un ou plusieurs composés de formule II choisis parmi les composés de formules II-1, II-2 et II-3 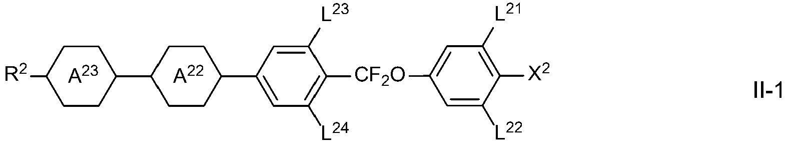 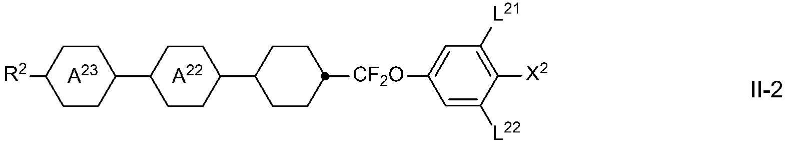 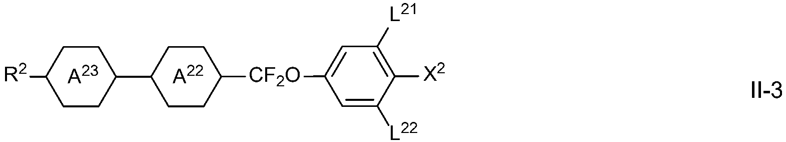 dans lesquelles
L²³ et L²⁴ désignent H ou F,
et les groupements restants revêtent les significations données pour la formule II selon la revendication 1.

4. Milieu cristallin liquide selon l'une ou plusieurs parmi les revendications 1 à 3, le milieu comprenant un ou plusieurs composés de formule III choisis parmi les composés de formules III-1 et III-2 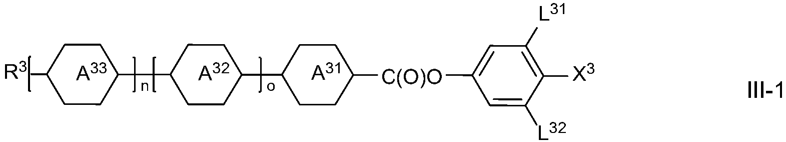 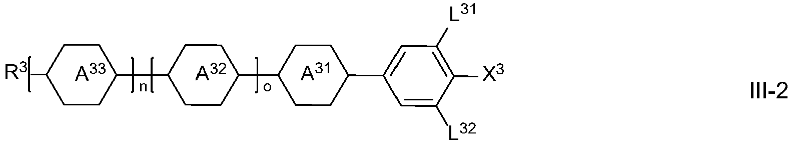 dans lesquelles R³, X³, L³¹, L³², les éléments de cycle A³¹, A³² et A³³, et n et o revêtent les significations définies selon la revendication 1 pour la formule III.

5. Milieu cristallin liquide selon l'une ou plusieurs parmi les revendications 1 à 4, le milieu comprenant un ou plusieurs composés choisis dans le groupe constitué par les composés de formules Y et B 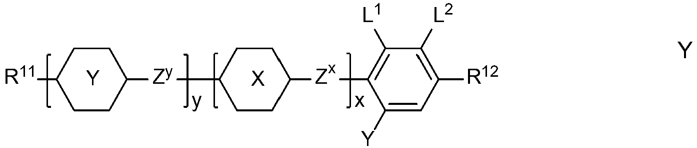 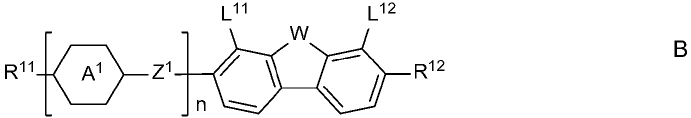 dans lesquelles 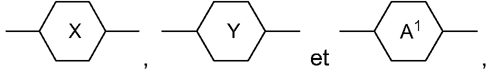 indépendamment les uns des autres, désignent 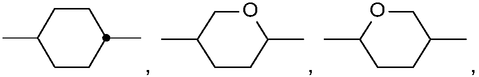 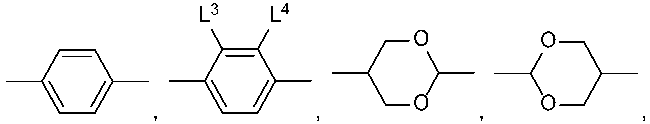 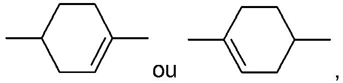
R¹¹, R¹² désignent de manière identique ou différente un radical alkyle ou alcoxy à chaîne linéaire ou ramifiée qui est non substitué ou halogéné et possède de 1 à 15 atomes de C, où un ou plusieurs groupements CH₂ dans ces radicaux peuvent chacun être remplacés, indépendamment les uns des autres, par 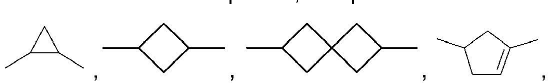 -C≡C-, -CF₂O-, -CH=CH-, -O-, -CO-O- ou -O-CO- de telle 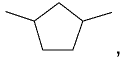 sorte que les atomes de O ne soient pas liés directement les uns aux autres, et R¹² désigne, de manière alternative, F,
Z^{x}, Z^{y} désignent de manière identique ou différente -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple,
Z¹ désigne -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple,
W désigne O ou S,
L¹, L², L¹¹, L¹² désignent de manière identique ou différente F ou Cl,
L³ et L⁴, désignent de manière identique ou différente H, F, Cl ou CH₃,
Y désigne H, F, Cl, CF₃, CHF₂ ou CH₃, et
x et y valent indépendamment 0, 1 ou 2, où x+y ≤3.

6. Milieu cristallin liquide selon l'une ou plusieurs parmi les revendications 1 à 5, le milieu comprenant un ou plusieurs composés de formule VII, 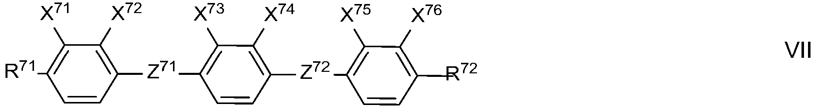 dans laquelle
R⁷¹ et R⁷² désignent H, F, alkyle ou alcoxy à chaîne linéaire ayant de 1 à 15 atomes de C, alcényle ou alcényloxy à chaîne linéaire ayant de 2 à 15 atomes de C ou alkyle, alcoxy, alcényle, alcényloxy ramifié ayant chacun de 3 à 15 atomes de C, où un ou plusieurs groupements CH₂ dans ces radicaux peuvent chacun être remplacés, indépendamment les uns des autres, par 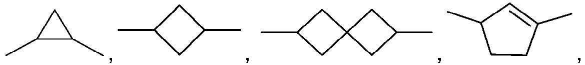 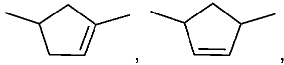 -C≡C-, -CF₂O-, -OCF₂-, -CH=CH-, -O-, -CO-O- ou -O-CO- de telle sorte que les atomes de O ne soient pas liés directement les uns aux autres, et où un ou plusieurs atomes de H peuvent être remplacés par halogène,
X⁷¹, X⁷², X⁷³, X⁷⁴, X⁷⁵ et X⁷⁶, désignent de manière identique ou différente H ou F,
Z⁷¹ et Z⁷², désignent de manière identique ou différente CH₂CH₂ ou une liaison simple.

7. Milieu cristallin liquide selon l'une ou plusieurs parmi les revendications 1 à 6, le milieu comprenant un ou plusieurs composés de formule IV 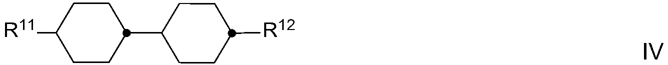 dans laquelle
R¹¹ désigne un radical alkyle à chaîne linéaire ayant de 1 à 12 atomes de C ou un radical alkyle ramifié ou cyclique ayant de 3 à 12 atomes de C, ou un radical alcényle à chaîne linéaire ayant de 2 à 12 atomes de C ou un radical alcényle ramifié ayant de 3 à 12 atomes de C ou un radical alcényle cyclique ayant de 5 à 12 atomes de C, où un ou plusieurs atomes de H sont éventuellement remplacés par fluor,
R¹² désigne un radical alkyle ou alcoxy à chaîne linéaire ayant de 1 à 12 atomes de C ou un radical alkyle ou alcoxy ramifié ou cyclique ayant de 3 à 12 atomes de C, ou un radical alcényle à chaîne linéaire ayant de 2 à 12 atomes de C ou un radical alcényle ramifié ayant de 3 à 12 atomes de C ou un radical alcényle cyclique ayant de 5 à 12 atomes de C, où un ou plusieurs atomes de H sont éventuellement remplacés par fluor.

8. Milieu cristallin liquide selon l'une ou plusieurs parmi les revendications 1 à 7, le milieu comprenant un ou plusieurs composés de formule IVa et/ou IVb, 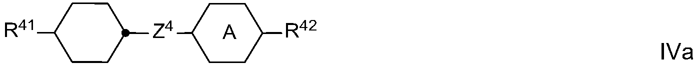 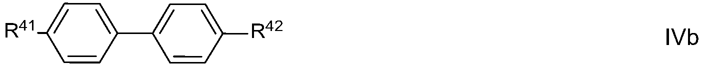 dans lesquelles
R⁴¹ et R⁴² désignent chacun, indépendamment l'un de l'autre, un radical alkyle, alcoxy, alcényle, alcoxyalkyle ou alcényloxy à chaîne linéaire ayant jusqu'à 12 atomes de C, désigne 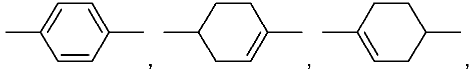 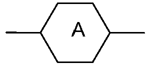 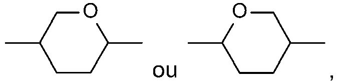
Z⁴ désigne une liaison simple, -CH₂CH₂-, -CH=CH-, -CF₂O-, -OCF₂-, -CH₂O-, -OCH₂-, -COO-, -OCO-, -C₂F₄-, -C₄H₈-, ou -CF=CF-.

9. Milieu cristallin liquide selon l'une ou plusieurs parmi les revendications 1 à 8, le milieu comprenant un ou plusieurs composés de formule V 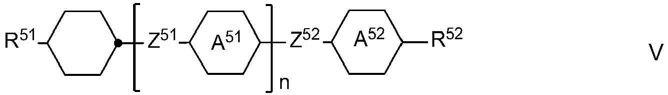 dans laquelle
R⁵¹, R⁵² désignent alkyle ayant de 1 à 7 atomes de C, alcoxy ayant de 1 à 7 atomes de C, ou alcoxyalkyle, alcényle ou alcényloxy ayant de 2 à 7 atomes de C, 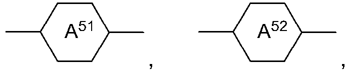 désignent de manière identique ou différente 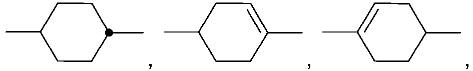 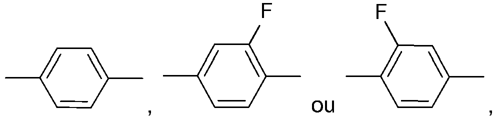
Z⁵¹, Z⁵² désignent chacun, indépendamment l'un de l'autre, -CH₂-CH₂-, -CH₂-O-, -CH=CH-, -C=C-, -COO- ou une liaison simple, et
n vaut 1 ou 2.

10. Milieu cristallin liquide selon l'une ou plusieurs parmi les revendications 1 à 9, le milieu comprenant un ou plusieurs composés de formule VIII 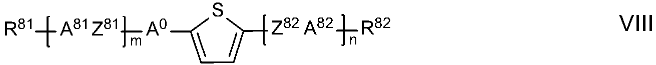 dans laquelle
R⁸¹ et R⁸², désignent de manière identique ou différente H, halogène, CN, SCN, alkyle ou alcoxy à chaîne linéaire ayant de 1 à 15 atomes de C, alcényle ou alcényloxy à chaîne linéaire ayant de 2 à 15 atomes de C ou alkyle, alcoxy, alcényle ou alcényloxy ramifié ayant de 3 à 15 atomes de C, où un ou plusieurs groupements CH₂ dans ces radicaux peuvent chacun être remplacés, indépendamment les uns des autres, par 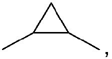 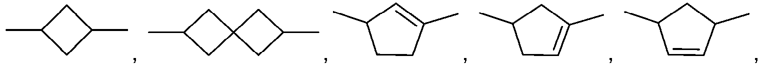 -C≡C-, -CF₂O-, -OCF₂-, -CH=CH-, par -O-, -CO-O- ou 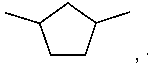 -O-CO- de telle sorte que les atomes de O ne soient pas liés directement les uns aux autres, et où un ou plusieurs atomes de H peuvent être remplacés par halogène,
A⁰, A⁸¹, et A⁸², désignent chacun, indépendamment les uns des autres, phénylène-1,4-diyle, où un ou deux groupements CH peuvent être remplacés par N et un ou plusieurs atomes de H peuvent être remplacés par halogène, CN, CH₃, CHF₂, CH₂F, CF₃, OCH₃, OCHF₂ ou OCF₃, cyclohexane-1,4-diyle, où un ou deux groupements CH₂ non adjacents peuvent être remplacés, indépendamment l'un de l'autre, par O et/ou S et un ou plusieurs atomes de H peuvent être remplacés par F, cyclohexène-1,4-diyle, bicyclo[1.1.1]pentane-1,3-diyle, bicyclo[2.2.2]octane-1,4-diyle, spiro[3.3]heptane-2,6-diyle, tétrahydropyran-2,5-diyle ou 1,3-dioxane-2,5-diyle ;
Z⁸¹ et Z⁸², désignent chacun, indépendamment l'un de l'autre, -CF₂O-, -OCF₂-, -CH₂O-, -OCH₂-, -CO-O-, -O-CO-, -C₂H₄-, -C₂F₄ , -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C=C- ou une liaison simple ;
n désigne 0, 1, 2 ou 3, et
m désigne 0, 1, 2 ou 3.

11. Milieu cristallin liquide selon l'une ou plusieurs parmi les revendications 1 à 10, le milieu comprenant en outre un ou plusieurs stabilisants.

12. Affichage à cristaux liquides, **caractérisé en ce qu'**il comprend un milieu cristallin liquide selon l'une ou plusieurs parmi les revendications 1 à 11.

13. Affichage à cristaux liquides selon la revendication 12, l'affichage étant configuré pour fonctionner en mode IPS ou FFS.

14. Utilisation du milieu cristallin liquide selon l'une ou plusieurs parmi les revendications 1 à 11, dans un affichage à cristaux liquides.

15. Procédé de préparation d'un milieu cristallin liquide selon l'une ou plusieurs parmi les revendications 1 à 11, **caractérisé en ce qu'**un ou plusieurs composés de formule I sont mélangés avec un ou plusieurs composés de formules II et/ou III et éventuellement avec un ou plusieurs composés de formules B et/ou Y.
